# EUROPÄISCHE PATENTSCHRIFT

(11) **EP 0 808 338 B1**
(45) Veröffentlichungstag und Bekanntmachung des Hinweises auf die Patenterteilung: **17.11.1999**
(21) Anmeldenummer: 96900982.8
(22) Anmeldetag: 29.01.1996
(51) Int. Cl.: C08G 61/00

(54) **POLYMERISIERBARE ZUSAMMENSETZUNG, VERFAHREN ZUR HERSTELLUNG VERNETZTER POLYMERE UND VERNETZBARE POLYMERE**
POLYMERISABLE COMPOSITION, PROCESS FOR PRODUCING CROSS-LINKED POLYMERS, AND CROSS-LINKABLE POLYMERS
COMPOSITION POLYMERISABLE, PROCEDE DE PREPARATION DE POLYMERES RETICULES, ET POLYMERES RETICULABLES

(30) Priorität: 09.02.1995 CH 40595
(43) Veröffentlichungstag der Anmeldung: 26.11.1997
(73) Patentinhaber: Ciba Specialty Chemicals Holding Inc., 4057 Basel (CH)
(72) Erfinder: MÜHLEBACH, Andreas, CH-1782 Belfaux (CH); HAFNER, Andreas, CH-3177 Laupen (CH); VAN DER SCHAAF, Paul, Adriaan, CH-1700 Fribourg (CH)
(86) Internationale Anmeldenummer: EP9600344
(87) Internationale Veröffentlichungsnummer: WO9624629

(56) Entgegenhaltungen:
- EP-A- 0 467 115
- MACROMOLECULAR CHEMISTRY AND PHYSICS, Bd. 195, 1994, BASEL CH, Seiten 2875-2885, XP000461355 GRUTKE S. ET ALL.: "Poly(phenylene oxide) macromonomers for graft copolymer synthesis via ring-opening olefin metathesis polymerization."

## Beschreibung

Die vorliegende Erfindung betrifft eine Zusammensetzung aus ungesättigten Polymeren mit wiederkehrenden Strukturelementen, die einen über eine bivalente Brückengruppe gebundenen gespannten Cycloalkenylrest enthält, und einem Einkomponenten-Katalysator für die thermisch oder durch aktinische Strahlung induzierte Metathesepolymerisation; ein Verfahren zur Polymerisation der Zusammensetzung; mit der Zusammensetzung oder der polymerisierten Zusammensetzung beschichtete Materialien und Formkörper aus den vernetzten Polymeren; und vernetzbare Polymere.

Die thermisch induzierte Ringöffnungs-Metathese-Polymerisation unter Verwendung katalytischer Mengen von Metallkatalysatoren ist schon seit längerem bekannt und vielfach in der Literatur beschrieben [siehe zum Beispiel Ivin, K.J., Olefin Metathesis 1-12, Academic Press, London (1983)]. So erhältliche Polymere werden industriell hergestellt und sind kommerziell erhältlich, zum Beispiel unter dem Handelsnamen Vestenamer®. Die industrielle Herstellung erfolgt unter Verwendung von hochreaktiven Zweikomponenten-Katalysatoren, in der Regel Übergangsmetallhalogeniden wie zum Beispiel WCl₆ und Metallalkylenen wie zum Beispiel Zink-, Aluminium- oder Zinnalkylen. Die Polymerisation beziehungsweise Gelierung setzt unmittelbar nach der Vereinigung eines Cycloolefins mit beiden Katalysatorkomponenten ein. Die Mischungen aus Cycloolefin und Katalysator weisen daher ausserordentlich kurze Topfzeiten auf, und sie eignen sich praktisch nur in Reaktionsinjektions-Formgebungsverfahren (RIM-Prozess). Nachteilig ist auch die starke Erhitzung des Reaktionsgemisches durch die Reaktionswärme, die sehr hohe technische Anforderungen an eine kontrollierte Reaktionstemperatur stellt. Die Einhaltung einer Polymerspezifikation ist daher schwierig.

In der WO 93/13171 werden luft- und wasserstabile Einkomponenten- und Zweikomponenten-Katalysatoren auf der Basis von Carbonylgruppen enthaltenden Molybdän- und Wolframverbindungen sowie Ruthenium- und Osmiumverbindungen mit mindestens einem Polyenliganden für die thermische Metathesepolymerisation und eine photoaktivierte Metathesepolymerisation von gespannten Cycloolefinen, besonders Norbornen beschrieben. Andere polycyclische - vor allen Dingen nicht-kondensierte polycyclische Cycloolefine werden nicht erwähnt. Die verwendeten Einkomponenten-Katalysatoren der Rutheniumverbindungen, nämlich [Ru(Cumen)Cl₂]₂ und [(C₆H₆)Ru(CH₃CN)₂Cl]⁺PF₆⁻ können zwar durch UV-Bestrahlung aktiviert werden; die Lagerstabilität der Zusammensetzungen mit Norbornen sind jedoch völlig unzureichend. Diese Katalysatoren vermögen die bekannten Zweikomponenten-Katalysatoren nur unzureichend zu ersetzen.

Demonceau et al. [Demonceau, A., Noels, A.F., Saive, E., Hubert, A.J., J. Mol. Catal. 76:123-132 (1992)] beschreiben (p-Cumen)RuCl₂P(C₆H₁₁)₃, (C₆H₅)₃]₃PRuCl₂ und (C₆H₅)₃]₃PRuHCl als thermische Katalysatoren für die ringöffnende Metathesepolymerisation von Norbornen, einem kondensierten Polycycloolefin. Diese Katalysatoren haben sich auf Grund der zu geringen Aktivität bei der industriellen Herstellung nicht durchsetzen können. Es wird daher vorgeschlagen, die Aktivität durch den Zusatz von Diazoestern zu steigern. Es wird auch erwähnt, dass lediglich (p-Cumen)RuCl₂P(C₆H₁₁)₃ Norbornen in relativ kurzer Zeit bei 60°C zu polymerisieren vermag. Als weiteres Monomer wird noch Cycloocten erwähnt. Andere Cycloolefine für die Methatesepolymerisation werden nicht erwähnt.

Petasis und Fu [Petasis, N. A., Fu, D., J. Am. Chem. Soc. 115:7208-7214 (1993)] beschreiben die thermische ringöffnende Metathesepolymerisation von Norbornen unter Verwendung von Biscyclopentadienyl-bis(trimethylsilyl)methyl-titan(IV) als thermisch aktiven Katalysator. Andere Cycloolefine für die Metathesepolymerisation werden nicht erwähnt.

Andere reaktivere Einkomponenten-Katalysatoren sind noch nicht bekannt geworden. Es ist ferner auch nicht bekannt, Polymere mit einem gespannten Cycloalkenylen im Polymerrückgrat zur Herstellung vernetzter Polymere zu verwenden. Diese Vernetzung stellt ein neues Prinzip dar.

Es wurde nun gefunden, dass sich Polymere mit über Brückengruppen an ein Polymerrückgrat gebundenen gespannten Cycloalkenylresten unter Einwirkung von besonders Einkomponenten-Katalysatoren hervorragend zur Herstellung vernetzter Polymere eignen. Die Zusammensetzungen aus vernetzbarem Polymer und Katalysator sind lagerstabil und je nach verwendeten Katalysatoren sogar luft- und sauerstoffunempfindlich, was eine Verarbeitung ohne besondere Schutzmassnahmen erlaubt. Die Verarbeitung ist einfach und die Verarbeitungsmöglichkeiten sind vielfältig, da keine besonderen Vorkehrungen wegen einer zu hohen Reaktivität getroffen werden müssen. Die Polymere eignen sich sowohl zur Herstellung von massiven Formkörpern als auch Beschichtungen mit besonders hohen Haftfestigkeiten. Ferner können die Polymere zur Herstellung von Abbildungen mittels Bestrahlung unter einer Photomaske und anschliessende Entwicklung der unbelichteten Anteile mit einem geeigneten Lösungsmittel verwendet werden.

Ein erster Gegenstand der Erfindung ist eine Zusammensetzung, enthaltend (a) katalytische Mengen eines Einkomponenten-Katalysators für die Metathesepolymerisation und (b) mindestens ein Polymer mit wiederkehrenden Strukturelementen, die einen über eine bivalente Brückengruppe gebundenen gespannten Cycloalkenylrest enthalten, alleine oder in Mischung mit Strukturelementen von gespannten Cycloolefinen.

Ein anderer Gegenstand der Erfindung sind auch die neuen Polymere mit wiederkehrenden Strukturelementen, die einen über eine bivalente Brückengruppe gebundenen gespannten Cycloalkenylrest enthalten, alleine oder mit Strukturelementen von gespannten Cycloolefinen. Für die Polymere gelten ebenfalls die nachfolgenden Definitionen und Bevorzugungen.

Bei dem gespannten Cycloolefinring kann es sich um monocyclische oder polycyclische kondensierte und/oder überbrückte Ringsysteme, zum Beispiel mit zwei bis 6, bevorzugt zwei bis vier, und besonders bevorzugt 2 oder 3 Ringen handeln, die unsubstituiert oder substituiert sind und Heteroatome wie zum Beispiel O, S, N oder Si in einem oder mehreren Ringen und/oder kondensierte aromatische oder heteroaromatische Ringe wie zum Beispiel o-Phenylen, o-Naphthylen, o-Pyridinylen oder o-Pyrimidinylen enthalten können. Die einzelnen cyclischen Ringe können 3 bis 16, bevorzugt 4 bis 12 und besonders bevorzugt 5 bis 8 Ringglieder enthalten. Die cyclischen Olefine können weitere nichtaromatische Doppelbindungen enthalten, je nach Ringgrösse bevorzugt 2 bis 4 solcher zusätzlichen Doppelbindungen. Bei den Ringsubstituenten handelt es sich um solche, die inert sind, das heisst, die die chemische Stabilität der Einkomponenten-Katalysatoren nicht beeinträchtigen.

Ankondensierte alicyclische Ringe enthalten bevorzugt 3 bis 8, besonders bevorzugt 4 bis 7 und insbesondere bevorzugt 5 oder 6 Ring-C-Atome. Bei ankondensierten Aromaten handelt es sich bevorzugt um Naphthylen und besonders um Phenylen.

In einer bevorzugten Ausführungsform entsprechen die Cycloalkenylreste der Formel A 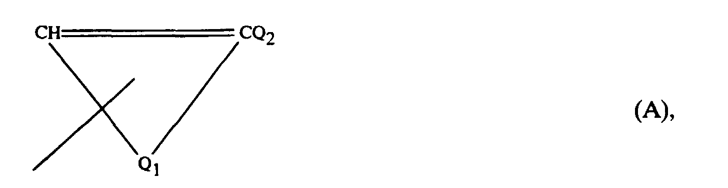 worin
- Q₁: ein Rest mit mindestens einem Kohlenstoffatom ist, der zusammen mit der -CH=CQ₂-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Hydroxyalkyl C₁-C₂₀-Halogenalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₄-X- substituiert ist; oder bei dem zwei benachbarte C-Atome mit -CO-O-CO- oder -CO-NR₅-CO- substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, -NO₂, R₆R₇R₈Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Halogenalkyl, C₁-C₂₀-Hydroxyalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₁₃-X₁- substituiert ist;
- X und X₁: unabhängig voneinander für -O-, -S-, -CO-, -SO-, -SO₂-, -O-C(O)-, -C(O)-O-, -C(O)-NR₅-, -NR₁₀-C(O)-, -SO₂-O- oder -O-SO₂- stehen;
- R₁, R₂ und R₃: unabhängig voneinander C₁-C₁₂-Alkyl, C₁-C₁₂-Perfluoralkyl, Phenyl oder Benzyl bedeuten;
- R₄ und R₁₃: unabhängig C₁-C₂₀-Alkyl, C₁-C₂₀-Halogenalkyl, C₁-C₂₀-Hydroxyalkyl, C₃-C₈-Cydoalkyl, C₆-C₁₆-Aryl, C₇-C₁₆-Aralkyl bedeuten;
- R₅ und R₁₀: unabhängig voneinander Wasserstoff, C₁-C₁₂-Alkyl, Phenyl oder Benzyl bedeuten, wobei die Alkylgruppen ihrerseits unsubstituiert oder mit C₁-C₁₂-Alkoxy oder C₃-C₈-Cycloalkyl substituiert sind;
- R₆, R₇ und R₈: unabhängig voneinander C₁-C₁₂-Alkyl, C₁-C₁₂-Perfluoralkyl, Phenyl oder Benzyl bedeuten;
- M: für ein Alkalimetall und M₁ für ein Erdalkalimetall stehen; und
- u: für 0 oder 1 steht;
wobei der mit Q₁ gebildete alicyclische Ring gegebenenfalls weitere nicht-aromatische Doppelbindungen enthält;
- Q₂: Wasserstoff, C₁-C₂₀-Alkyl, C₁-C₂₀-Halogenalkyl, C₁-C₁₂-Alkoxy, Halogen, -CN, R₁₁-X₂- darstellt;
- R₁₁: C₁-C₂₀-Alkyl, C₁-C₂₀-Halogenalkyl, C₁-C₂₀-Hydroxyalkyl, C₃-C₈-Cycloalkyl, C₆-C₁₆-Aryl oder C₇-C₁₆-Aralkyl bedeutet;
- X₂: -C(O)-O- oder -C(O)-NR₁₂- ist;
- R₁₂: Wasserstoff, C₁-C₁₂-Alkyl, Phenyl oder Benzyl darstellt;
wobei die vorgenannten Cycloalkyl-, Heterocycloalkyl-, Aryl-, Heteroaryl-, Aralkyl- und Heteroaralkylgruppen unsubstituiert oder mit C₁-C₁₂-Alkyl, C₁-C₁₂-Alkoxy, -NO₂, -CN oder Halogen substituiert sind, und wobei die Heteroatome der vorgenannten Heterocycloalkyl-, Heteroaryl- und Heteroaralkylgruppen aus der Gruppe -O-, -S-, -NR₉- und -N= ausgewählt sind; und
- R₉: Wasserstoff, C₁-C₁₂-Alkyl, Phenyl oder Benzyl darstellt.

Es ist dem Fachmann bekannt, dass Cyclohexen nur schwer oder gar nicht durch Metathese polymerisiert werden kann. Cyclohexenreste der Formel A sind daher nicht bevorzugt. Bevorzugt sind Struktureinheiten der Formel A, in der R₀₁ und R₀₂ zusammen keine Doppelbindung bilden.

Die Stellung der Doppelbindung im Ring der Formel A zur freien Bindung hängt im wesentlichen von der Ringgrösse und Herstellungsmethode der Verbindungen der Formel A ab.

Ist in den Verbindungen der Formel A ein asymmetrisches Zentrum vorhanden, so hat dies zur Folge, daß die Verbindungen in optisch isomeren Formen auftreten können. Einige Verbindungen der Formel A können in tautomeren Formen (z.B. Keto-Enol-Tautomerie) vorkommen. Liegt eine aliphatische C=C-Doppelbindung vor, so kann auch geometrische Isomerie (E-Form oder Z-Form) auftreten. Ferner sind auch Exo-Endo-Konfigurationen möglich. Die Formel A umfaßt somit alle möglichen Stereoisomeren, die in Form von Enantiomeren, Tautomeren, Diastereomeren, E/Z-Isomeren oder deren Gemische vorliegen.

In den Definitionen der Substituenten können die Alkyl-, Alkenyl- und Alkinylgruppen geradkettig oder verzweigt sein. Dasselbe gilt auch für den bzw. jeden Alkylteil von Alkoxy-, Alkylthio-, Alkoxycarbonyl- und von weiteren Alkyl-enthaltenden Gruppen. Diese Alkylgruppen enthalten bevorzugt 1 bis 12, bevorzugter 1 bis 8 und besonders bevorzugt 1 bis 4 C-Atome. Diese Alkenyl- und Alkinylgruppen enthalten bevorzugt 2 bis 12, bevorzugter 2 bis 8 und besonders bevorzugt 2 bis 4 C-Atome.

Alkyl umfaßt beispielsweise Methyl, Ethyl, Isopropyl, n-Propyl, n-Butyl, iso-Butyl, sek-Butyl, tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Hydroxyalkyl umfaßt beispielsweise Hydroxymethyl, Hydroxyethyl, 1-Hydroxyisopropyl, 1-Hydroxy-n-Propyl, 2-Hydroxy-n-Butyl, 1-Hydroxy-iso-Butyl, 1-Hydroxy-sek-Butyl, 1-Hydroxy-tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Alkane, wie zum Beispiel Isopropyl-, n-Propyl-, n-Butyl-, iso-Butyl-, sek-Butyl-, tert-Butyl-, und der verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylradikale.

Alkenyl umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl, n-Octadec-2-enyl und n-Octadec-4-enyl.

Beim Cycloalkyl handelt es sich bevorzugt um C₅-C₈-Cycloalkyl, besonders um C₅- oder C₆-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Cyanoalkyl umfaßt beispielsweise Cyanomethyl (Methylnitril), Cyanoethyl (Ethylnitril), 1-Cyanoisopropyl, 1-Cyano-n-propyl, 2-Cyano-n-butyl, 1-Cyano-iso-butyl, 1-Cyano-sek-butyl, 1-Cyano-tert-butyl sowie die verschiedenen isomeren Cyanopentyl- und -hexylreste.

Aralkyl enthält bevorzugt 7 bis 12 C-Atome und besonders bevorzugt 7 bis 10 C-Atome.

Es kann sich zum Beispiel um Benzyl, Phenethyl, 3-Phenylpropyl, α-Methylbenzyl, Phenbutyl oder α,α-Dimethylbenzyl handeln.

Aryl enthält bevorzugt 6 bis 10 C-Atome. Es kann sich beispielsweise um Phenyl, Pentalin, Inden, Naphtalin, Azulin oder Anthracen handeln.

Heteroaryl enthält bevorzugt 4 oder 5 C-Atome und ein oder zwei Heteroatome aus der Gruppe O, S und N. Es kann sich beispielsweise um Pyrrol, Furan, Thiophen, Oxazol, Thiazol, Pyridin, Pyrazin, Pyrimidin, Pyridazin, Indol, Purin oder Chinolin handeln.

Heterocycloalkyl enthält bevorzugt 4 oder 5 C-Atome und ein oder zwei Heteroatome aus der Gruppe O, S und N. Es kann sich beispielsweise um Oxiran, Azirin, 1,2-Oxathiolan, Pyrazolin, Pyrrolidin, Piperidin, Piperazin, Morpholin, Tetrahydrofuran oder Tetrahydrothiophen handeln.

Alkoxy ist beispielsweise Methoxy, Ethoxy, Propyloxy, i-Propyloxy, n-Butyloxy, i-Butyloxy, sek.-Butyloxy oder t-Butyloxy.

Unter Alkalimetall ist im Rahmen der vorliegenden Erfindung Lithium, Natrium, Kalium, Rubidium und Cäsium, insbesondere Lithium, Natrium und Kalium zu verstehen.

Unter Erdalkalimetall ist im Rahmen der vorliegenden Erfindung Beryllium, Magnesium, Calcium, Strontium und Barium, insbesondere Magnesium und Calcium zu verstehen.

In den obigen Definitionen ist unter Halogen Fluor, Chlor, Brom und Jod vorzugsweise Fluor, Chlor und Brom zu verstehen.

In den Resten der Formel A bedeutet Q₂ bevorzugt Wasserstoff.

Ferner sind Verbindungen mit Resten der Formel A bevorzugt, worin der alicyclische Ring, den Q₁ zusammen mit der -CH=CQ₂- Gruppe bildet, 3 bis 16, bevorzugter 3 bis 12 und besonders bevorzugt 3 bis 8 Ringatome aufweist, und wobei es sich um ein monocyclisches oder um ein bicyclisches, tricyclisches oder tetracyclisches kondensiertes Ringsystem handeln kann.

Mit besonderem Vorteil enthalten die erfindungsgemässen Zusammensetzungen Reste der Formel A, worin
- Q₁: ein Rest mit mindestens einem Kohlenstoffatom ist, der zusammen mit der -CH=CQ₂-Gruppe einen 3- bis 20-gliedrigen alicyclischen Ring bildet, welcher gegebenenfalls ein oder mehrere Heteroatome ausgewählt aus der Gruppe Silicium, Sauerstoff, Stickstoff und Schwefel enthält; und der unsubstituiert oder mit Halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₁₂-Alkyl, C₁-C₁₂-Halogenalkyl, C₁-C₁₂-Hydroxyalkyl, C₁-C₄-Cyanoalkyl, C₃-C₆-Cycloalkyl, C₆-C₁₂-Aryl, C₇-C₁₂-Aralkyl, C₃-C₆-Heterocycloalkyl, C₃-C₁₂-Heteroaryl, C₄-C₁₂-Heteroaralkyl oder R₄-X- substituiert ist; oder bei dem zwei benachbarte C-Atome in diesem Rest Q₁ mit -CO-O-CO- oder -CO-NR₅-CO- substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, -NO₂, R₆R₇R₈Si-, -COOM, -SO₃M, -PO₃M, -COO(M₁)_{1/2}, -SO₃(M₁)_{1/2}, -PO₃(M₁)_{1/2}, C₁-C₁₂-Alkyl, C₁-C₁₂-Halogenalkyl, C₁-C₁₂-Hydroxyalkyl, C₁-C₄-Cyanoalkyl, C₃-C₆-Cycloalkyl, C₆-C₁₂-Aryl, C₇-C₁₂-Aralkyl, C₃-C₆-Heterocycloalkyl, C₃-C₁₂-Heteroaryl, C₄-C₁₂-Heteroaralkyl oder R₁₃-X₁- substituiert ist;
- X und X₁: unabhängig voneinander für -O-, -S-, -CO-, -SO-, -SO₂-, -O-C(O)-, -C(O)-O-, -C(O)-NR₅-, -NR₁₀-C(O)-, -SO₂-O- oder -O-SO₂- stehen;
- R₁, R₂ und R₃: unabhängig voneinander C₁-C₆-Alkyl, C₁-C₆-Perfluoralkyl, Phenyl oder Benzyl bedeuten;
- M: für ein Alkalimetall und M₁ für ein Erdalkalimetall stehen;
- R₄ und R₁₃: unabhängig voneinander C₁-C₁₂-Alkyl, C₁-C₁₂-Halogenalkyl, C₁-C₁₂-Hydroxyalkyl, C₃-C₈-Cycloalkyl, C₆-C₁₂-Aryl, C₇-C₁₂-Aralkyl bedeuten;
- R₅ und R₁₀: unabhängig voneinander Wasserstoff, C₁-C₆-Alkyl, Phenyl oder Benzyl bedeutet, wobei die Alkylgruppen ihrerseits unsubstituiert oder mit C₁-C₆-Alkoxy oder C₃-C₆-Cycloalkyl substituiert sind;
- R₆, R₇ und R₈: unabhängig voneinander C₁-C₆-Alkyl, C₁-C₆-Perfluoralkyl, Phenyl oder Benzyl darstellen;
- u: für 0 oder 1 steht;
wobei der mit Q₁ gebildete alicyclische Ring gegebenenfalls weitere nichtaromatische Doppelbindungen enthält;
- Q₂: Wasserstoff, C₁-C₁₂-Alkyl, C₁-C₁₂-Halogenalkyl, C₁-C₆-Alkoxy, Halogen, -CN, R₁₁-X₂- bedeutet;
- R₁₁: C₁-C₁₂-Alkyl, C₁-C₁₂-Halogenalkyl, C₁-C₁₂-Hydroxyalkyl, C₃-C₆-Cycloalkyl, C₆-C₁₂-Aryl oder C₇-C₁₂-Aralkyl darstellt;
- X₂: -C(O)-O- oder -C(O)NR₁₂- ist; und
- R₁₂: Wasserstoff, C₁-C₆-Alkyl, Phenyl oder Benzyl bedeutet;
wobei die Cycloalkyl-, Heterocycloalkyl-, Aryl-, Heteroaryl-, Aralkyl- und Heteroaralkylgruppen unsubstituiert oder mit C₁-C₆-Alkyl, C₁-C₆-Alkoxy, -NO₂, -CN oder Halogen substituiert sind, und wobei die Heteroatome der Heterocycloalkyl-, Heteroaryl- und Heteroaralkylgruppen aus der Gruppe -O-, -S-, -NR₉- und -N= ausgewählt sind; und
- R₉: Wasserstoff, C₁-C₆-Alkyl, Phenyl oder Benzyl bedeutet.

Aus dieser Gruppe sind diejenigen Verbindungen mit einem Rest der Formel A bevorzugt, worin
- Q₁: ein Rest mit mindestens einem Kohlenstoffatom ist, der zusammen mit der -CH=CQ₂-Gruppe einen 3- bis 10-gliedrigen alicyclischen Ring bildet, der gegebenenfalls ein Heteroatom ausgewählt aus der Gruppe Silicium, Sauerstoff, Stickstoff und Schwefel enthält, und der unsubstituiert oder mit Halogen, -CN, -NO₂, R₁R₂R₃Si-, -COOM, -SO₃M, -PO₃M, -COO(M₁)_{1/2}, -SO₃(M₁)_{1/2}, -PO₃(M₁)_{1/2}, C₁-C₆-Alkyl, C₁-C₆-Halogenalkyl, C₁-C₆-Hydroxyalkyl, C₁-C₄-Cyanoalkyl, C₃-C₆-Cycloalkyl, Phenyl, Benzyl oder R₄-X- substituiert ist; oder bei dem an benachbarten Kohlenstoffatomen gegebenenfalls ein alicyclischer, aromatischer oder heteroaromatischer Ring ankondensiert ist, welcher unsubstituiert oder durch Halogen, -CN, -NO₂, R₆R₇R₈Si-, -COOM, -SO₃M, -PO₃M, -COO(M₁)_{1/2}, -SO₃(M₁)_{1/2},-PO₃(M₁)_{1/2}, C₁-C₆-Alkyl, C₁-C₆-Halogenalkyl, C₁-C₆-Hydroxyalkyl, C₁-C₄-Cyanoalkyl, C₃-C₆-Cycloalkyl, Phenyl, Benzyl oder R₁₃-X₁- substituiert ist;
- R₁, R₂ und R₃: unabhängig voneinander C₁-C₄-Alkyl, C₁-C₄-Perfluoralkyl, Phenyl oder Benzyl bedeuten;
- M: für ein Alkalimetall und M₁ für ein Erdalkalimetall stehen;
- R₄ und R₁₃: unabhängig voneinander C₁-C₆-Alkyl, C₁-C₆-Halogenalkyl, C₁-C₆-Hydroxyalkyl oder C₃-C₆-Cycloalkyl bedeuten;
- X und X₁: unabhängig voneinander für -O-, -S-, -CO-, -SO- oder -SO₂- stehen;
- R₆, R₇ und R₈: unabhängig voneinander C₁-C₄-Alkyl, C₁-C₄-Perfluoralkyl, Phenyl oder Benzyl darstellen;
und Q₂ Wasserstoff bedeutet.

In einer besonders vorteilhaften Ausgestaltung der erfindungsgemässen Zusammensetzung handelt es sich bei dem Cycloalkenylrest der Formel A um C₃-C₁₂-, bevorzugter C₃-C₈-Cycloalkenyl, 2,2,2-Bicyclooctenyl oder Norbornenyl. Beispiele sind Cyclopropenyl, Cyclobutenyl, Cyclopentenyl, Cycloheptenyl, Cycloheptadienyl, Cyclooctenyl, Cyclooctadienyl, Cyclononenyl, Cyclodecenyl, Cycldodecenyl, 2,2,2-Bicyclooctenyl und Norbornenyl.

Besonders bevorzugt handelt es sich bei dem Cycloalkenylrest der Formel A um unsubstituiertes oder substituiertes Cyclopropenyl, Cyclobutenyl, Cyclopentenyl, Cycloheptenyl, Cyclooctenyl, Cyclopentadienyl, Cyclohexadienyl, Cycloheptadienyl, Cyclooctadienyl und Norbornenyl oder Norbornenylderivate wie zum Beispiel 7-Oxa-2,2,1-cycloheptenyl sowie die entsprechenden Benzoderivate. Substituenten sind bevorzugt C₁-C₄-Alkyl und C₁-C₄-Alkoxy.

Insbesondere geeignet sind als Reste der Formel A Norbornenyl und Norbornenylderivate. Von diesen Norbornenylderivaten sind diejenigen besonders bevorzugt, die entweder der Formel B entsprechen, 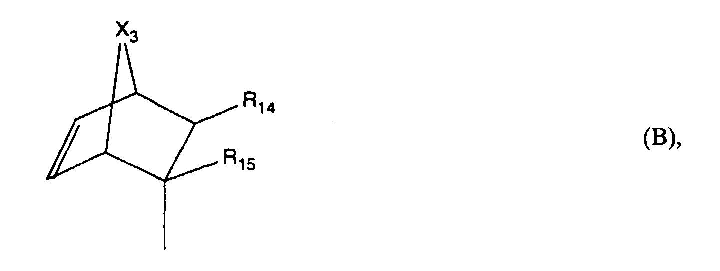 worin
- X₃: -CHR₁₆-, Sauerstoff oder Schwefel;
- R₁₄ und R₁₅: unabhängig voneinander Wasserstoff, -CN, Trifluormethyl, (CH₃)₃Si-O-, (CH₃)₃Si- oder -COOR₁₇; und
- R₁₆ und R₁₇: unabhängig voneinander Wasserstoff, C₁-C₁₂-Alkyl, Phenyl oder Benzyl bedeuten;
oder der Formel C entsprechen, 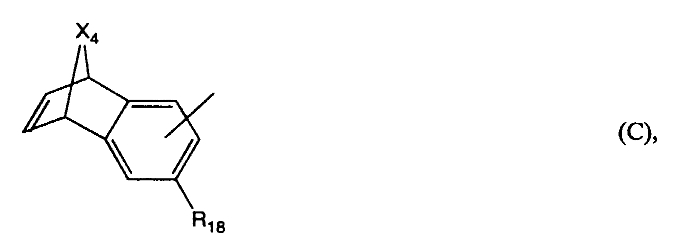 worin
- X₄: -CHR₁₉-, Sauerstoff oder Schwefel;
- R₁₉: Wasserstoff, C₁-C₁₂-Alkyl, Phenyl oder Benzyl; und
- R₁₈: Wasserstoff, C₁-C₆-Alkyl oder Halogen bedeuten.

Besonders bevorzugt handelt es sich bei dem Cycloalkenylrest der Formel I um Norbornenyl der Formel D oder Methylnorbornenyl der Formel E

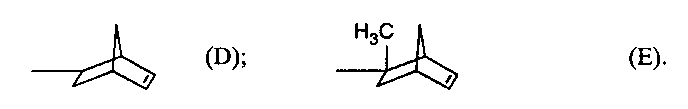

Die bivalente Brückengruppe kann zum Beispiel ein zweiwertiger gegebenenfalls mit -O- unterbrochener Kohlenwasserstoffrest mit 1 bis 100, bevorzugt 2 bis 50, besonders bevorzugt 2 bis 20 C-Atomen sein, der direkt oder über eine Ether-, Thioether-, Amin-, Ester-, Amid-, Urethan- oder Harnstoffgruppe an das Polymerrückgrat und der direkt oder über eine Ether-, Thioether-, Amin-, Ester-, Amid-, Urethan- oder Harnstoffgruppe an das Cycloolefin gebunden ist; oder die Brückengruppe kann eine Ether-, Thioether-, Amin-, Ester-, Amid-, Urethan- oder Harnstoffgruppe sein.

Die bivalente Brückengruppe kann zum Beispiel der Formel F entsprechen,

-(X₁₀₀)_{g}-(R₀₁)ₕ-(X₁₀₁)ᵢ- (F),

worin
g, h und i unabhängig voneinander für 0 oder 1 stehen, und g und i nicht gleichzeitig 0 sind;
X₁₀₀ und X₁₀₁ unabhängig voneinander -O-, -S-, -NH-, -N(C₁-C₄-Alkyl)-, -C(O)O-, -O(O)C-, -NH(O)C-, -C(O)NH-, -N(C₁-C₄-Alkyl)-(O)C-, -C(O)-N(C₁-C₄-Alkyl)-, -O-C(O)O-, -NH-C(O)O-, -O-C(O)-NH-, -N(C₁-C₄-Alkyl)(O)C-O- oder -O-C(O)-N(C₁-C₄-Alkyl)- darstellen; und
R₀₁ eine direkte Bindung, C₁-C₁₈-Alkylen, Polyoxaalkylen mit 2 bis 12 Oxaalkyleneinheiten und 2 bis 6 C-Atomen im Oxaalkylen, unsubstituiertes oder mit C₁-C₄- oder C₁-C₄-Alkoxy substituiertes C₅-C₈-Cycloalkylen, unsubstituiertes oder mit C₁-C₄- oder C₁-C₄-Alkoxy substituiertes C₅-C₈-Cycloalkylen-CH₂-, unsubstituiertes oder mit C₁-C₄- oder C₁-C₄-Alkoxy substituiertes -CH₂-(C₅-C₈-Cycloalkylen)-CH₂-, unsubstituiertes oder mit C₁-C₄- oder C₁-C₄-Alkoxy substituiertes Heterocycloalkylen mit 5 oder 6 Ringgliedern und Heteroatomen ausgewählt aus der Gruppe -O-, -S- und N, unsubstituiertes oder mit C₁-C₄- oder C₁-C₄-Alkoxy substituiertes Phenylen, Benzylen oder Xylylen, oder unsubstituiertes oder mit C₁-C₄- oder C₁-C₄-Alkoxy substituiertes Heteroarylen mit 5 oder 6 Ringgliedern und Heteroatomen ausgewählt aus der Gruppe -O-, -S- und N bedeutet.

R₀₁ bedeutet als Alkylen bevorzugt C₁-C₁₂- und besonders bevorzugt C₁-C₆-Alkylen, das linear oder verzweigt sein kann. Beispiele sind Methylen, Ethylen, 1,2- oder 1,3-Propylen, 1,2-, 1,3- oder 1,4 Butylen, Pentylen, Hexylen, Heptylen, Octylen, Nonylen, Decylen, Undecylen, Dodecylen, Tetradecylen, Hexadecylen und Octadecylen.

R₀₁ enthält als Polyoxaalkylen bevorzugt 2 bis 6 und besonders bevorzugt 2 bis 4 Oxaalkyleneinheiten und 2 oder 3 C-Atome im Oxaalkylen.

R₀₁ bedeutet als Cycloalkylen und in den Cycloalkylen enthaltenden Resten bevorzugt C₅- oder C₆-Cycloalkylen, zum Beispiel Pentylen und Hexylen.

R₀₁ bedeutet als Heterocycloalkylen und Heteroarylen bevorzugt 5- oder 6-gliedriges Cycloalkylen mit einem Heteroatom aus der Gruppe N und 0.

In einer bevorzugten Ausführungsform handelt es sich bei R₀₁ um C₁-C₁₂-Alkylen, Polyoxaalkylen mit 2 bis 6 Oxaalkyleneinheiten und 2 C-Atomen im Oxaalkylen, unsubstituiertes oder mit C₁-C₄- oder C₁-C₄-Alkoxy substituiertes Cyclopentylen, Cyclohexylen, Cyclohexylen-CH₂-, -CH₂-Cyclohexylen-CH₂-, Phenylen, Benzylen oder Xylylen.

Besonders bevorzugte Brückengruppen sind zum Beispiel 1,4-C₆H₄-[O-(O)C]₂-, -C(O)-O-C₂-C₆-Alkylen-O-(O)C- und -C(O)-O-CH₂-.

Das Polymerrückgrat der erfindungsgemäss zu verwendenden Polymere kann unterschiedlich aufgebaut sein. Es kann sich um Homo- oder Copolymere handeln, wobei Strukturelemente mit einem über eine bivalente Brückengruppe an die Monomereinheit gebundenen gespannten Cycloalkenylrest mindestens zu 1 und vorteilhaft mindestens 5 Mol-%, bevorzugt 5 bis 100 Mol-%, bevorzugter 10 bis 100 Mol-%, noch bevorzugter 20 bis 100 Mol-%, besonders bevorzugt 20 bis 80 Mol-%, und insbesondere bevorzugt 20 bis 70 Mol-% enthalten sind, bezogen auf das Polymer. Bei den Polymeren kann es sich um statistische Polymere oder Blockcopolymere handeln.

Die in der erfindungsgemässen Zusammensetzung verwendeten Polymere umfassen Oligomere und Polymere. Die Anzahl sich wiederholender Struktureinheiten kann demgemäss 2 bis 10000, bevorzugt 5 bis 5000, besonders bevorzugt 10 bis 1000 und insbesondere bevorzugt 20 bis 500 betragen.

Das Polymerrückgrat kann sich zum Beispiel von Polymeren ableiten, die mit -OH, -NH₂, -NH(C₁-C₄-Alkyl), -C(O)OH, -C(O)-NH₂ oder -C(O)-NH(C₁-C₄-Alkyl) funktionalisiert sind.

Das Polymerrückgrat kann zum Beispiel von Polymeren aus der Gruppe Homo- und Copolymere von olefinisch ungesättigten Alkoholen wie zum Beispiel Allylalkohol, Homo- und Copolymere von Vinylalkohol, Homo- und Copolymere von ungesättigten Carbonsäuren wie zum Beispiel Acrylsäure, Methacrylsäure, Maleinsäure, Maleinsäureanhydrid und deren Ester- und Amidderivate, Homo- und Copolymere von Hydroxystyrol oder Aminostyrol oder Styrolsulfon- oder Carbonsäuren, Homo- und Copolymere von hydroxyliertem Butadien, Homo- und Copolymere von Vinylpyrrolidon, Polysiloxanen mit Hydroxy- oder Aminoalkylseitenketten, und Homo- und Copolymere von Polyepoxiden, oder von Polysacchariden wie zum Beispiel Cellulose, Celluloseester oder Celluloseether, Stärke oder Chitosan gebildet werden.

In einer bevorzugten Ausführungsform enthalten die erfindungsgemäss zu verwendenden Polymere 1 bis 100 Mol-%, bezogen auf das Polymer, Strukturelemente der Formel G, 99 bis 0 Mol-% Strukturelemente der Formel H, und 100 bis 0 Mol-% Strukturelemente der Formel I, 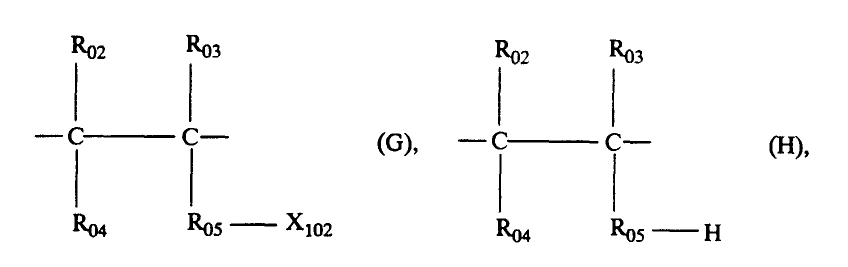 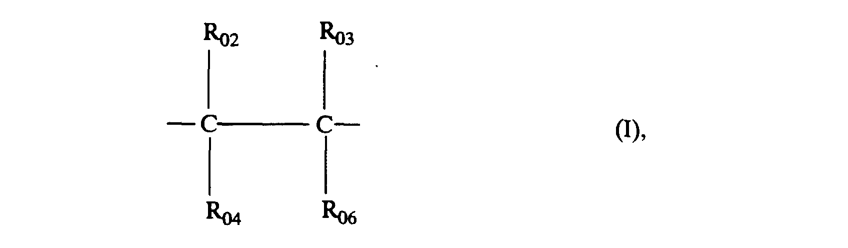 worin
die R₀₂ unabhängig voneinander H, F oder C₁-C₁₂-Alkyl darstellen;
die R₀₃ unabhängig voneinander H, F, Cl, CN oder C₁-C₁₂-Alkyl darstellen;
die R₀₄ unabhängig voneinander H, F, C₁-C₁₂-Alkyl, -COOH, -C(O)O-C₁-C₁₂-Alkyl, -C(O)-NH₂ oder -C(O)-NH-C₁-C₁₂-Alkyl bedeuten;
R₀₅ eine bivalente Brückengruppe bedeutet;
R₀₆ für H, F, Cl, CN, C₁-C₁₂-Alkyl, C₁-C₁₂-Alkoxy, unsubstituiertes oder mit Cl, Br, C₁-C₄-Alkyl, C₁-C₄-Alkoxy, -C(O)OC₁-C₁₂-Alkyl, -C(O)-NH₂, C(O)-NH-C₁-C₁₂-Alkyl, -SO₃H oder -SO₃-C₁-C₁₂-Alkyl substituiertes Phenyl, -C(O)OH, -C(O)O-C₂-C₁₂-Hydroxyalkyl, -C(O)O-C₁-C₁₂-Alkyl, -C(O)-NH₂ oder -C(O)-NH-C₁-C₁₂-Alkyl steht;
R₀₄ und R₀₆ zusammen -O-CH₂-O- oder -O-C₂-C₁₂-Alkyliden-O- darstellen; und X₁₀₂ einen Rest der Formel I darstellt.

Bei X₁₀₂ handelt es sich besonders bevorzugt um Norbornenyl, das unsubstituiert oder mit C₁-C₄-Alkyl substituiert ist.

Der Gehalt an Strukturelementen richtet sich im wesentlichen nach der angestrebten Verwendung. Die Strukturlemente der Formel G sind bevorzugt in einer Menge von 100 bis 1, bevorzugter 100 bis 5, besonders bevorzugt 80 bis 10 und insbesondere bevorzugt 70 bis 20 Mol-%, die Strukturelemente der Formel H bevorzugt in einer Menge von 0 bis 99, bevorzugter 0 bis 95, besonders bevorzugt 20 bis 90 und insbesondere bevorzugt 30 bis 80 Mol-%, und die Strukturelemente der Formel I bevorzugt in einer Menge von 0 bis 99, bevorzugter 0 bis 95, besonders bevorzugt 20 bis 90 und insbesondere bevorzugt 30 bis 80 Mol-% enthalten, bezogen auf 1 Mol des Polymers. Die Prozente addieren sich auf 100 %.

R₀₂ bedeutet bevorzugt H, C₁-C₄-Alkyl oder F. R₀₃ steht bevorzugt für H, F, Cl oder C₁-C₄-Alkyl. R₀₄ bedeutet bevorzugt H, F, C₁-C₄-Alkyl, -COOH oder -C(O)-C₁-C₆-Alkyl. R₀₆ stellt bevorzugt H, F, Cl, CN, C₁-C₄-Alkyl, C₁-C₄-Alkoxy, unsubstituiertes oder mit Cl, Br, C₁-C₄-Alkyl, C₁-C₄-Alkoxy, -COOH, -C(O)OC₁-C₁₄-Alkyl, -C(O)-NH₂, C(O)-NH-C₁-C₄-Alkyl, -SO₃H oder -SO₃-C₁-C₄-Alkyl substituiertes Phenyl, -COOH, -C(O)O-C₁-C₄-Alkyl, -C(O)-NH₂ oder -C(O)-NH-C₁-C₄-Alkyl dar.

R₀₄ und R₀₆ zusammen bedeuten bevorzugt -O-CH₂-O- oder -O-C₂-C₆-Alkyliden-O-, zum Beispiel Ethyliden, Propyliden, Butyliden, Pentyliden, Hexyliden, Cyclopentyliden oder Cyclohexyliden.

R₀₅ entspricht bevorzugt der Formel A, und für R₀₁, X₁₀₀ und X₁₀₁ gelten die zuvor beschriebenen Bevorzugungen.

In einer besonders bevorzugten Ausführungsform bedeuten in den Formeln (G) und (H) die R₀₂ H, die R₀₃ unabhängig voneinander H oder Methyl, R₀₄ H, -C(O)-O-C₁-C₄-Alkyl oder -C(O)-OH, R₀₅ p-C₆H₄-O-, -C(O)-O-C₂-C₆-Alkylen-O-C(O)- oder -C(O)-O-CH₂-, und X₁₀₂ einen Rest der Formel A, und besonders Norbornenyl oder 1-Methyl-norbornen-1-yl.

In einer anderen besonders bevorzugten Ausgestaltung bedeuten in den Formeln (G) und (H) die R₀₂ H, die R₀₃ H oder Methyl, R₀₄ H, R₀₅ -(CH₂)_{d}-O-C(O)- mit d gleich 0 oder einer ganzen Zahl von 1 bis 12, bevorzugt 1 bis 6, -(CH₂)_{d}-O-(CₑH₂ₑ-O-)_{f}C(O)- mit e gleich einer ganzen Zahl von 2 bis 6, bevorzugt 2 oder 3, und f gleich einer Zahl von 1 bis 12, bevorzugt 1 bis 4, und X₁₀₂ einen Rest der Formel A, und besonders Norbornenyl oder 1-Methyl-norbornen-1-yl.

Die Polyepoxide können aus Diepoxiden als Comonomeren (α) mit bevorzugt 6 bis 40 und besonders bevorzugt 8 bis 30 C-Atomen und Diolen als Comonomeren (β) mit bevorzugt 2 bis 200, bevorzugter 2 bis 100 und besonders bevorzugt 2 bis 50 C-Atomen aufgebaut sein. Diepoxide mit einem gespannten Cycloolefinring enthalten bevorzugt 6 bis 40 und besonders bevorzugt 10 bis 30 C-Atome. Bei den Diepoxiden handelt es sich bevorzugt um die einfach herstellbaren Diglycidylether. Bei den monomeren Diepoxiden kann es sich zum Beispiel um die Diglycidylether von aliphatischen, cycloaliphatischen, aromatischen oder araliphatischen Diolen handeln. Diole mit einem gespannten Cycloolefinring enthalten bevorzugt 5 bis 40 und besonders bevorzugt 7 bis 30 C-Atome. Bei den Diolen kann es sich zum Beispiel um aliphatische, cycloaliphatische, aromatische oder araliphatische Diole handeln. Diole und Diepoxide sind dem Fachmann geläufig und werden hier nicht aufgezählt. Unter den Diepoxiden sind die Diglycidylether und Diglycidylester bevorzugt.

Die Polyepoxide können zum Beispiel wiederkehrende Strukturelemente ausgewählt aus der Gruppe von Strukturelementen der Formeln J, K, L und M enthalten,

-CH₂-CH(OH)-CH₂-O-R₀₉-O-CH₂-CH(O-R₀₁₀-X₁₀₂)-CH₂-O- (J),

-R₀₆-O- (K),

-CH₂-CH(OH)-CH₂-O-R₀₇-O-CH₂-CH(OH)-CH₂-O- (L),

-R₀₈-O- (M),

mit der Massgabe, dass mindestens Strukturelemente der Formeln J und K enthalten sind, worin R₀₇ und R₀₉ unabhängig voneinander ein um die Glycidyloxygruppen verminderter bivalenter Rest eines Diglycidylethers und R₀₆ und R₀₈ unabhängig voneinander ein um die Hydroxylgruppen verminderter bivalenter Rest eines Diols sind, R₀₁₀ eine bivalente Brückengruppe bedeutet, und X₁₀₂ einen Rest der Formel A darstellt.

Bezogen auf 1 Mol des Polymers können je bis zu 50 Mol-% der Strukturelemente der Formeln J und K im Polymer enthalten sein. Sind Strukturelemente der Formeln L und M zugegen, so sind vorteilhafte Mischverhältnisse 2,5 bis 47,5, bevorzugt 5 bis 40 Mol-% Strukturelemente der Formel L beziehungsweise M, bezogen auf 1 Mol des Polymers.

Bei R₀₆ und R₀₈ handelt es sich bevorzugt um C₂-C₁₈-, bevorzugt C₂-C₁₂-Alkylen, Polyoxaalkylen mit 2 bis 50, bevorzugt 2 bis 10 Oxaalkyleneinheiten und 2 bis 6, bevorzugt 2 bis 4 C-Atomen im Oxyalkylen, C₃-C₁₂-, bevorzugt C₅-C₈-Cycloalkylen, C₅-C₈-Cycloalkylen-CH₂-, -CH₂-(C₅-C₈-Cycloalkylen)-CH₂-, C₆-C₁₄-Arylen, Bisphenylen, Benzylen, Xylylen, -C₆H₄-X₀₁-C₆H₄- mit X₀₁ gleich O, S, SO, SO₂, CO, CO₂, NH, N(C₁-C₄-Alkyl), Alkyliden mit 1 bis 18, bevorzugt 1 bis 12 C-Atomen, oder C₅-C₇-Cycloalkyliden. Einige Beispiele sind Ethylen, Propylen, Butylen, Di-, Tri- und Tetraoxaethylen, Cyclopentylen, Cyclohexylen, Cyclohexylen-CH₂-, -CH₂-Cyclohexylen-CH₂-, Phenylen, -C₆H₄-O-C₆H₄-, -C₆H₄-C₆H₁₀-C₆H₄-, -C₆H₄-CH(CH₃)-C₆H₄-, -C₆H₄-C(CH₃)₂-C₆H₄- und -C₆H₄-CH₂-C₆H₄-.

Bei R₀₇ und R₀₉ handelt es sich bevorzugt um C₂-C₁₈-, bevorzugt C₂-C₁₂-Alkylen, Polyoxaalkylen mit 2 bis 50, bevorzugt 2 bis 10 Oxaalkyleneinheiten und 2 bis 6, bevorzugt 2 bis 4 C-Atomen im Oxyalkylen, C₃-C₁₂-, bevorzugt C₅-C₈-Cycloalkylen, C₅-C₈-Cycloalkylen-CH₂-, -CH₂-(C₅-C₈-Cycloalkylen)-CH₂-, C₆-C₁₄-Arylen, Bisphenylen, Benzylen, Xylylen, -C₆H₄-X₀₁-C₆H₄- mit X₀₁ gleich O, S, SO, SO₂, CO, CO₂, NH, N(C₁-C₄-Alkyl), Alkyliden mit 1 bis 18, bevorzugt 1 bis 12 C-Atomen, oder C₅-C₇-Cycloalkyliden. Einige Beispiele sind Ethylen, Propylen, Butylen, Di-, Tri- und Tetraoxaethylen, Cyclopentylen, Cyclohexylen, Cyclohexylen-CH₂-, -CH₂-Cyclohexylen-CH₂-, Phenylen, -C₆H₄-O-C₆H₄-, -C₆H₄-CH(CH₃)-C₆H₄-, -C₆H₄-C(CH₃)₂-C₆H₄-, -C₆H₄-C₆H₁₀-C₆H₄- und -C₆H₄-CH₂-C₆H₄-.

X₁₀₂ bedeutet besonders bevorzugt einen Norbornenyl- oder 1-Methyl-norbornen-1-ylrest.

Bei der bivalenten Brückengruppe R₀₁₀ handelt es sich bevorzugt um einen Rest der Formel -(CₑH₂ₑ-O-)_{f}C(O)- mit e gleich 0 oder einer ganzen Zahl von 2 bis 6, bevorzugt 2 oder 3, und f gleich einer Zahl von 1 bis 12, bevorzugt 1 bis 4.

Die erfindungsgemässen neuen Polymere können nach bekannten Verfahren hergestellt werden, zum Beispiel durch eine Polymerisation der entsprechenden Monomeren mit Cycloalkenylresten und gegebenenfalls Comonomeren. Vorteilhafter ist die nachträgliche Umsetzung von funktionelle Gruppen enthaltenden Polymeren mit reaktiven gespannten Cycloolefinen, zum Beispiel Alkoholen, Aminen, Carbonsäuren oder deren ester- oder amidbildenden Derivaten oder Isocyanaten. Funktionelle Polymere können zuvor mit Diisocyanaten oder Carbonsäureanhydriden modifiziert und dann erst mit dem gespannten Cycloolefin umgesetzt werden.

Die Wahl der erfindungsgemäss zu verwendenden Polymere richtet sich hauptsächlich nach dem Verwendungszweck und den gewünschten Eigenschaften. Die grosse Auswahl durch Modifikationen der Poymere ermöglicht die Bereitstellung massgeschneiderter Polymere für unterschiedlichste Anwendungen. Eine weitere Modifikationsmöglichkeit ergibt sich aus der Mitverwendung von zur Metathesepolymerisation befähigten gespannten Cycloolefinen, wodurch man insgesamt auf gewünschte Anwendungen spezifische Anpassungen vornehmen kann. Wenn man gespannte Cycloolefine mit wenigstens 2 Doppelbindungen mitverwendet, kann man oft eine höhere Vernetzungsdichte nach der Polymerisation der erfindungsgemässen Zusammensetzung beobachten.

Gespannte Cycloolefine, die als Comonomere in der erfindungsgemässen Zusammensetzung enthalten sein können, sind in grossser Vielzahl bekannt.

Bei den cyclischen Olefinen kann es sich um monocyclische oder polycyclische kondensierte und/oder überbrückte Ringsysteme, zum Beispiel mit zwei bis vier Ringen, handeln, die unsubstituiert oder substituiert sind und Heteroatome wie zum Beispiel O, S, N oder Si in einem oder mehreren Ringen und/oder kondensierte aromatische oder heteroaromatische Ringe wie zum Beispiel o-Phenylen, o-Naphthylen, o-Pyridinylen oder o-Pyrimidinylen enthalten können. Die einzelnen cyclischen Ringe können 3 bis 16, bevorzugt 3 bis 12 und besonders bevorzugt 3 bis 8 Ringglieder enthalten. Die cyclischen Olefine können weitere nichtaromatische Doppelbindungen enthalten, je nach Ringgrösse bevorzugt 2 bis 4 solcher zusätzlichen Doppelbindungen. Bei den Ringsubstituenten handelt es sich um solche, die inert sind, das heisst, die die chemische Stabilität und die Thermostabilität der Katalysatoren nicht beeinträchtigen. Bei den Cycloolefinen handelt es sich um gespannte Ringe beziehungsweise Ringsysteme.

Ankondensierte alicyclische Ringe enthalten bevorzugt 3 bis 8, besonders bevorzugt 4 bis 7 und insbesondere bevorzugt 5 oder 6 Ring-C-Atome.

In einer bevorzugten Ausführungsform entsprechen die comonomeren gespannten Cycloolefine der Formel I' 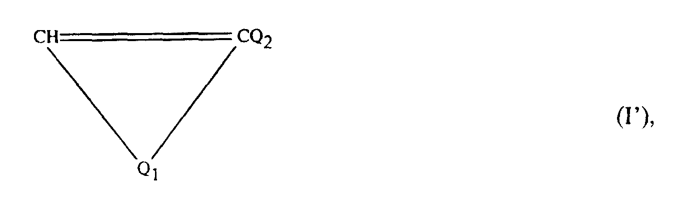 worin
Q₁ und Q₂ die Bedeutungen und Bevorzugungen wie für Formel A definiert haben.

Insbesondere eignet sich die erfindungsgemäße Zusammensetzung zur Polymerisation von Norbornen und Norbornenderivaten. Von diesen Norbornenderivaten sind diejenigen besonders bevorzugt, die entweder der Formel II 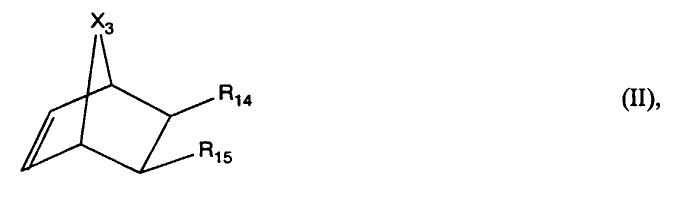 worin
- X₃: -CHR₁₆-, Sauerstoff oder Schwefel;
- R₁₄ und R₁₅: unabhängig voneinander Wasserstoff, -CN, Trifluormethyl, (CH₃)₃Si-O-, (CH₃)₃Si- oder -COOR₁₇; und
- R₁₆ und R₁₇: unabhängig voneinander Wasserstoff, C₁-C₁₂-Alkyl, Phenyl oder Benzyl bedeuten;
oder der Formel III 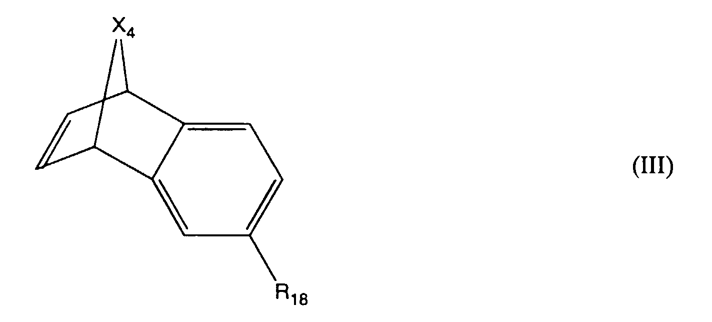 worin
- X₄: -CHR₁₉-, Sauerstoff oder Schwefel;
- R₁₉: Wasserstoff, C₁-C₁₂-Alkyl, Phenyl oder Benzyl; und
- R₁₈: Wasserstoff, C₁-C₆-Alkyl oder Halogen bedeuten;
oder der Formel IV 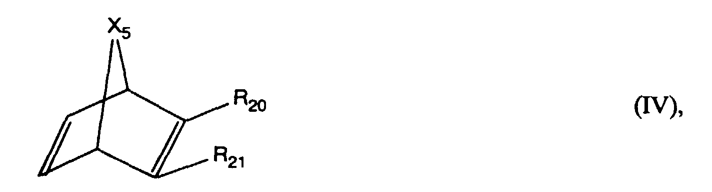 worin
- X₅: -CHR₂₂-, Sauerstoff oder Schwefel;
- R₂₂: Wasserstoff, C₁-C₁₂-Alkyl, Phenyl oder Benzyl;
- R₂₀ und R₂₁: unabhängig voneinander Wasserstoff, CN, Trifluormethyl, (CH₃)₃Si-O-, (CH₃)₃Si- oder -COOR₂₃; und
- R₂₃: Wasserstoff, C₁-C₁₂-Alkyl, Phenyl oder Benzyl bedeuten;
oder der Formel V entsprechen, 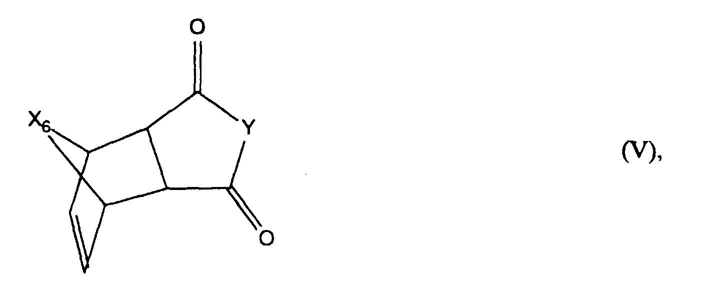 worin
- X₆: -CHR₂₄-, Sauerstoff oder Schwefel;
- R₂₄: Wasserstoff, C₁-C₁₂-Alkyl, Phenyl oder Benzyl;
- Y: Sauerstoff oder 〉N-R₂₅; und
- R₂₅: Wasserstoff, Methyl, Ethyl oder Phenyl bedeuten.

Folgende Verbindungen der Formel I sind besonders gut geeignet, wobei bi- und polycyclische Systeme durch Diels-Alder-Reaktionen zugänglich sind:

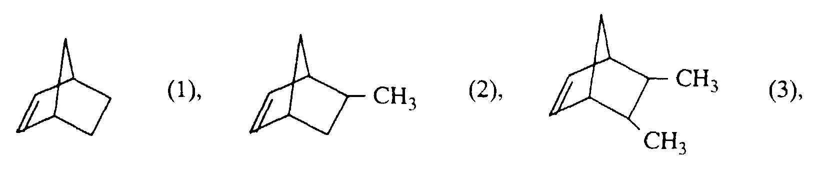

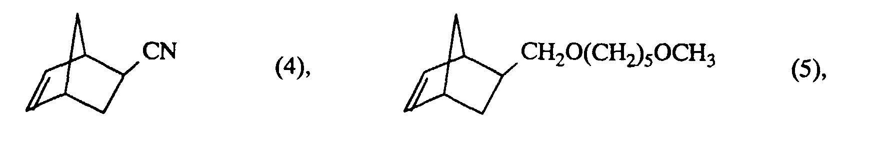

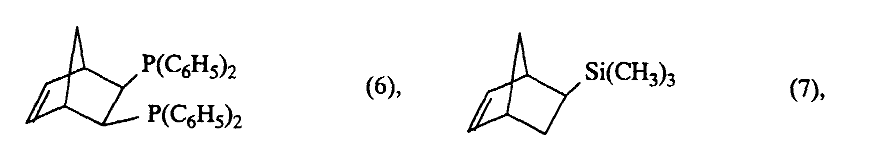

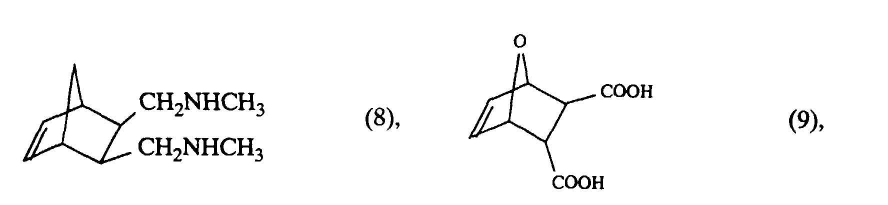

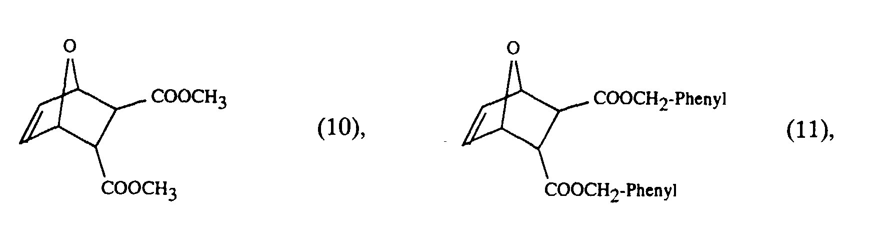

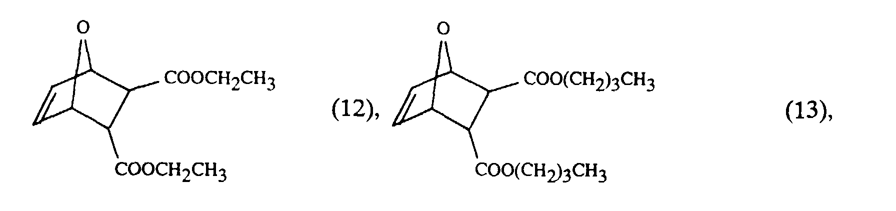

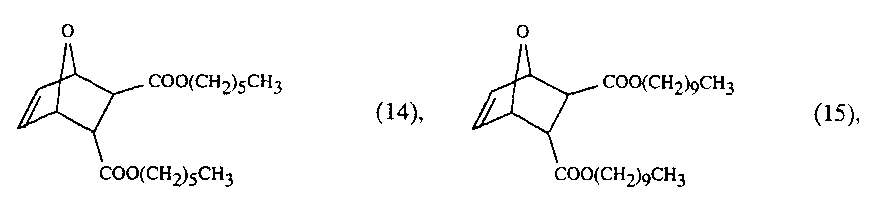

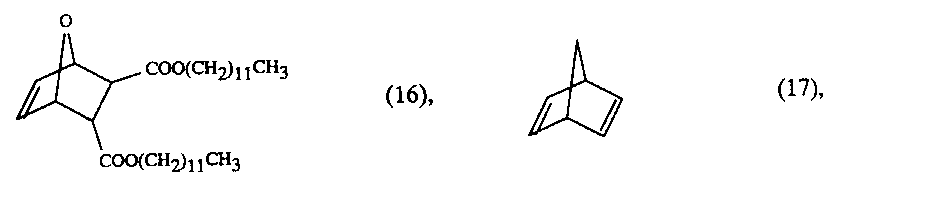

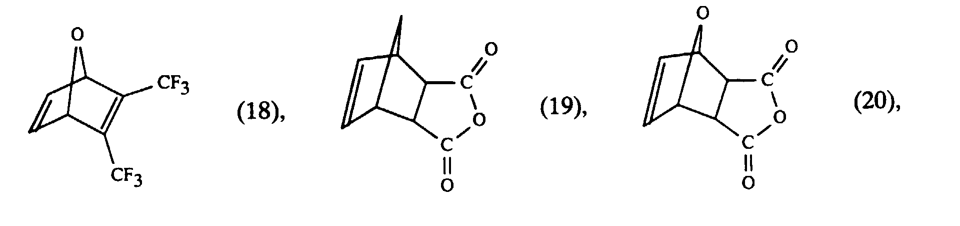

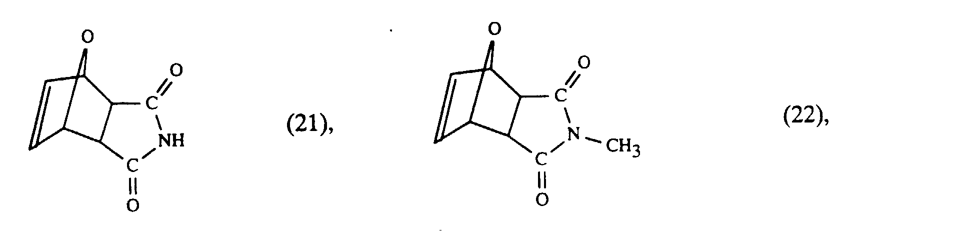

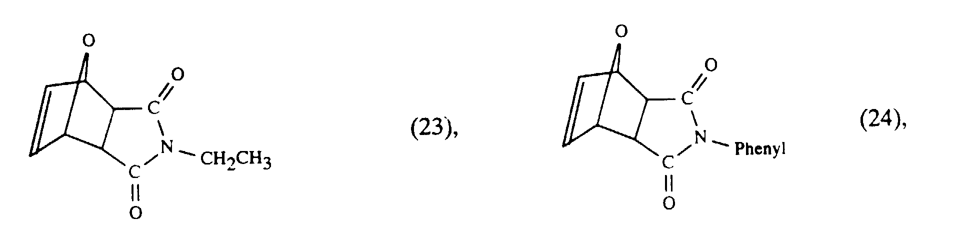

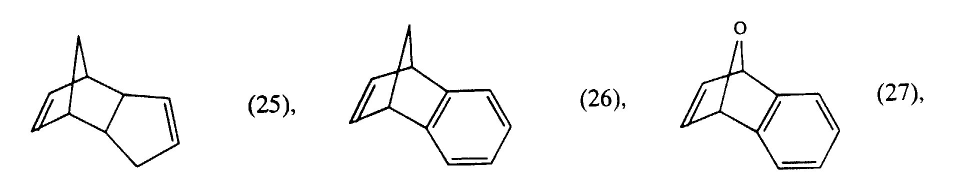

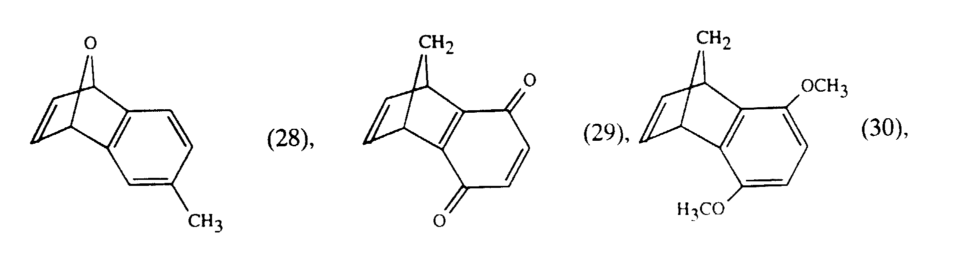

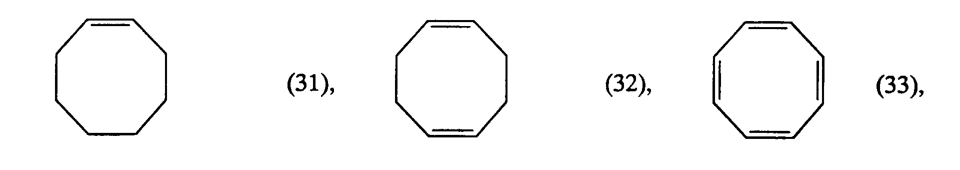

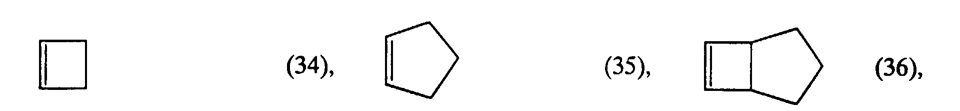

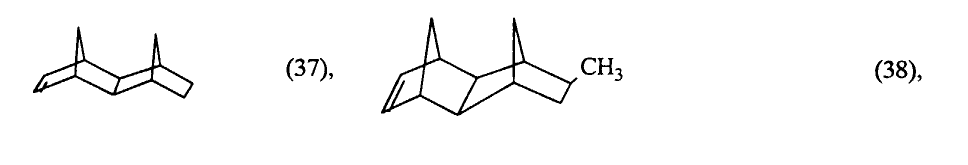

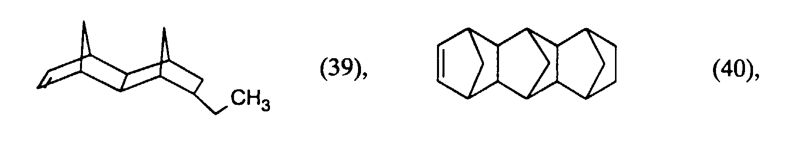

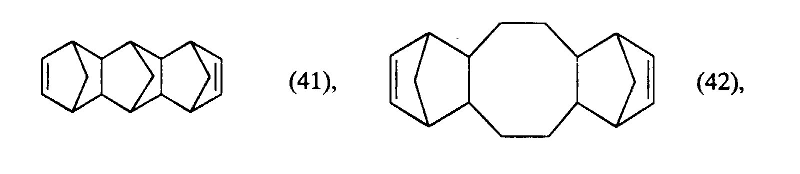

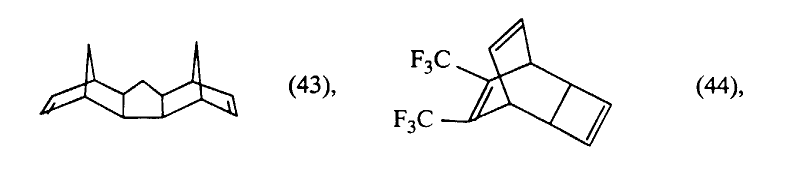

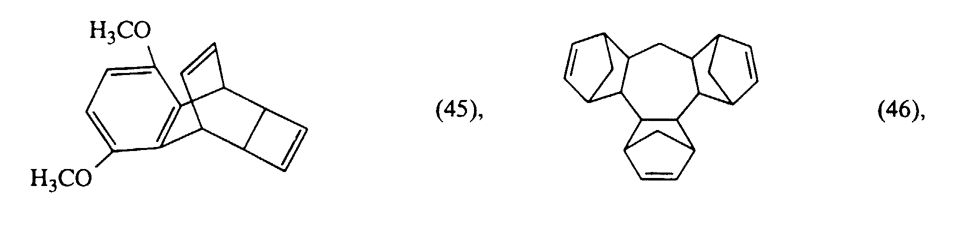

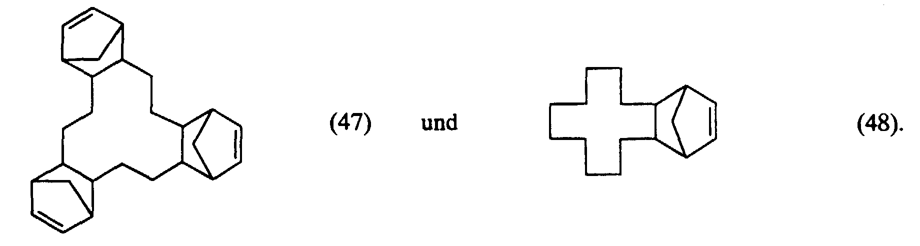

Bei den comonomeren polyfunktionellen gespannten Cycloolefinen kann es sich um Verbindungen der Formel (fl) handeln,

(T)ₙ-U (f1),

worin T den Rest eines gespannten Cycloolefins bedeutet, U für eine direkte Bindung oder eine n-wertige Brückengruppe steht, und n eine ganze Zahl von 2 bis 8 darstellt.

Bei den cyclischen Olefinen kann es sich um monocyclische oder polycyclische kondensierte und/oder überbrückte Ringsysteme, zum Beispiel mit zwei bis vier Ringen handeln, die unsubstituiert oder substituiert sind und Heteroatome wie zum Beispiel O, S, N oder Si in einem oder mehreren Ringen und/oder kondensierte alicyclische, aromatische oder heteroaromatische Ringe wie zum Beispiel o-Cyclopentylen, o-Phenylen, o-Naphthylen, o-Pyridinylen oder o-Pyrimidinylen enthalten können. Die einzelnen cyclischen Ringe können 3 bis 16, bevorzugt 3 bis 12 und besonders bevorzugt 3 bis 8 Ringglieder enthalten. Die cyclischen Olefine können weitere nichtaromatische Doppelbindungen enthalten, je nach Ringgrösse bevorzugt 2 bis 4 solcher zusätzlichen Doppelbindungen. Bei den Ringsubstituenten handelt es sich um solche, die inert sind, das heisst, die die chemische Stabilität der Einkomponenten-Katalysatoren nicht beeinträchtigen.

Ankondensierte alicyclische Ringe enthalten bevorzugt 3 bis 8, besonders bevorzugt 4 bis 7 und insbesondere bevorzugt 5 oder 6 Ring-C-Atome.

In einer bevorzugten Ausführungsform entsprechen die Reste T in Formel (f1) Cycloolefinresten der Formel (f2) 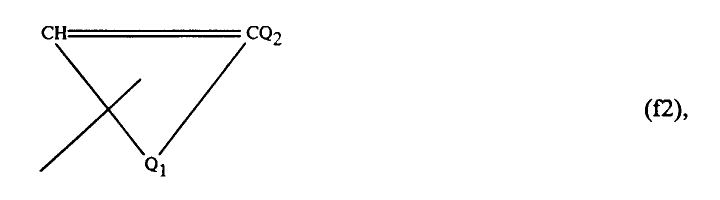 worin Q₁ und Q₂ die zuvor angegebenen Bedeutungen haben, einschliesslich der Bevorzugungen.

Die Stellung der Doppelbindung im Ring der Formel (f2) zur freien Bindung hängt im wesentlichen von der Ringgrösse und Herstellungsmethode der Verbindungen der Formel I ab.

Besonders bevorzugt handelt es sich bei dem Cycloalkenylrest der Formel (f2) um unsubstituiertes oder substituiertes Cyclopropenyl, Cyclobutenyl, Cyclopentenyl, Cycloheptenyl, Cyclooctenyl, Cyclopentadienyl, Cyclohexadienyl, Cycloheptadienyl, Cyclooctadienyl und Norbornenyl oder Norbornenylderivate wie zum Beispiel 7-Oxa-2,2,2-cyclohepten sowie die entsprechenden Benzoderivate. Substituenten sind bevorzugt C₁-C₄-Alkyl und C₁-C₄-Alkoxy.

Insbesondere geeignet sind als Reste der Formel (f2) Norbornenyl und Norbornenylderivate. Von diesen Norbornenylderivaten sind diejenigen besonders bevorzugt, die entweder der Formel (f3) 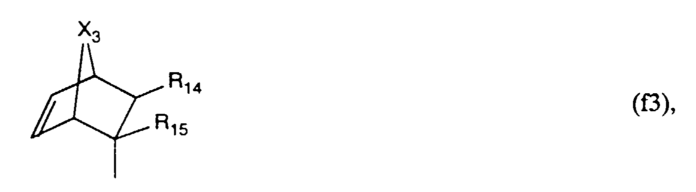 worin
X₃ -CHR₁₆-, Sauerstoff oder Schwefel;
R₁₄ und R₁₅ unabhängig voneinander Wasserstoff, -CN, Trifluormethyl, (CH₃)₃Si-O-, (CH₃)₃Si- oder -COOR₁₇; und
R₁₆ und R₁₇ unabhängig voneinander Wasserstoff, C₁-C₁₂-Alkyl, Phenyl oder Benzyl bedeuten;
oder der Formel (f4) entsprechen 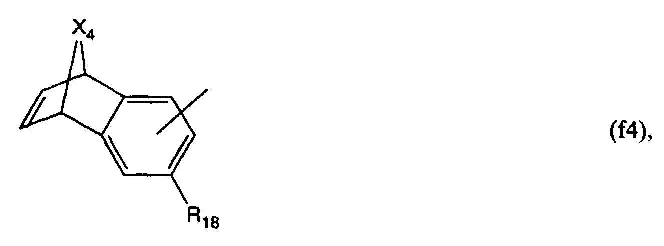 worin
- X₄: -CHR₁₉-, Sauerstoff oder Schwefel;
- R₁₉: Wasserstoff, C₁-C₁₂-Alkyl, Phenyl oder Benzyl; und
- R₁₈: Wasserstoff, C₁-C₆-Alkyl oder Halogen bedeuten.

Besonders bevorzugt handelt es sich bei dem Cycloalkenylrest T in der Formel (f1) um Norbornenyl der Formel (nr₄)

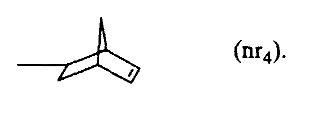

In Formel (f1) steht n bevorzugt für eine ganze Zahl von 2 bis 6, besonders bevorzugt 2 bis 4 und insbesondere bevorzugt 2 oder 3.

In Formel (t) bedeutet U bevorzugt eine n-wertige Brückengruppe.

Als zweiwertige Brückengruppen kommen zum Beispiel solche der Formel (f5) in Frage,

-X₅-R₀₂₈-X₆- (f5),

worin
X₅ und X₆ unabhängig voneinander eine direkte Bindung, -O-, -CH₂-O-, -C(O)O-, -O(O)C-, -CH₂-O(O)C-, -C(O)-NR₀₂₉-, -R₀₂₉N-(O)C-, -NH-C(O)-NR₀₂₉-, -O-C(O)-NH-, -CH₂-O-C(O)-NH- oder -NH-C(O)-O- bedeuten, und
R₀₂₈ C₂-C₁₈-Alkylen, unsubstituiertes oder mit C₁-C₄-Alkyl oder C₁-C₄-Alkoxy substituiertes C₅-C₈-Cycloalkylen, unsubstituiertes oder mit C₁-C₄-Alkyl oder C₁-C₄-Alkoxy substituiertes C₆-C₁₈-Arylen oder C₇-C₁₉-Aralkylen, oder Polyoxaalkylen mit 2 bis 12 Oxaalkyleneinheiten und 2 bis 6 C-Atomen im Alkylen darstellt, und
R₀₂₉ H oder C₁-C₆-Alkyl ist.

R₀₂₈ enthält als Alkylen bevorzugt 2 bis 12 und besonders bevorzugt 2 bis 8 C-Atome. Das Alkylen kann linear oder verzweigt sein. Bevorzugtes Cycloalkylen ist Cyclopentylen und besonders Cyclohexylen. Einige Beispiele für Arylen sind Phenylen, Naphthylen, Biphenylen, Biphenylenether und Anthracenylen. Ein Beispiel für Aralkylen ist Benzylen. Das Polyoxaalkylen enthält bevorzugt 2 bis 6 und besonders bevorzugt 2 bis 4 Einheiten, und bevorzugt 2 oder 3 C-Atome im Alkylen.

In einer bevorzugten Ausführungsform stehen in Formel (f5)
a) X₅ und X₆ für eine direkte Bindung und R₀₂₈ für C₂-C₁₈-Alkylen, bevorzugter C₂-C₁₂-Alkylen, oder
b) X₅ und X₆ für -O-, -CH₂-O-, -C(O)O-, -O(O)C-, -CH₂-O(O)C-, -CH₂-O-C(O)-NH-, -C(O)-NR₀₂₉- oder -O-C(O)-NH- und
R₀₂₈ für C₂-C₁₂-Alkylen, unsubstituiertes oder mit C₁-C₄-Alkyl oder C₁-C₄-Alkoxy substituiertes Phenylen, Naphthylen oder Benzylen, oder für -R₀₃₀-(O-R₀₃₀-)_{X}-OR₀₃₀-, worin x eine Zahl von 2 bis 4 ist und R₀₃₀ -C₂-C₄-Alkylen bedeutet.

Einige Beispiele für Verbindungen der Formel (f1) mit einer zweiwertigen Brückengruppe sind 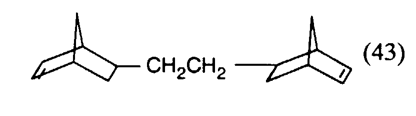 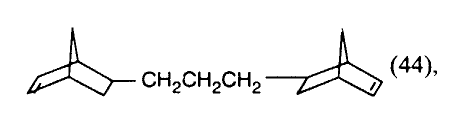 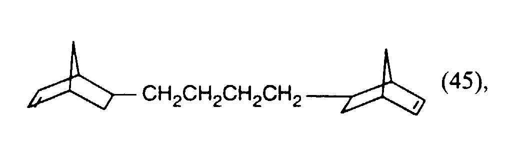 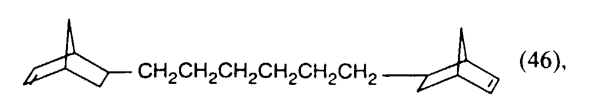 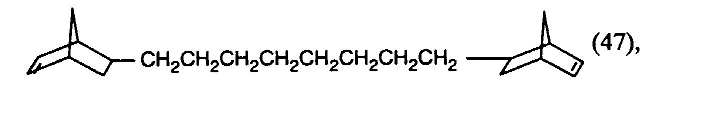 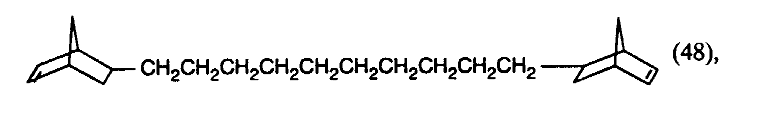 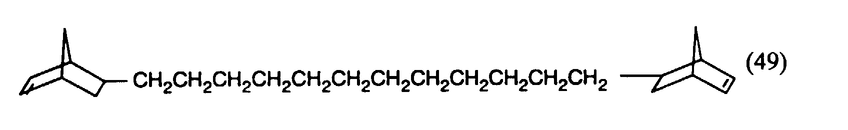 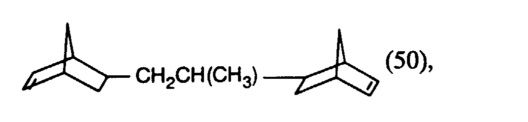 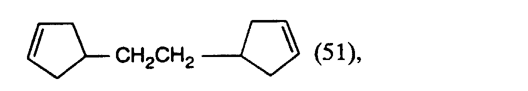 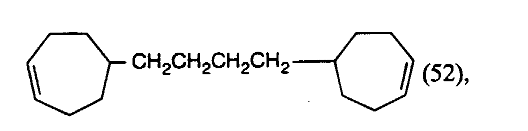 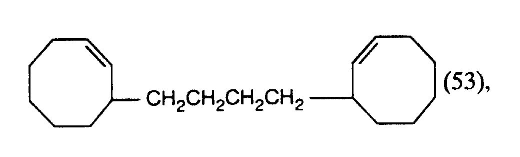 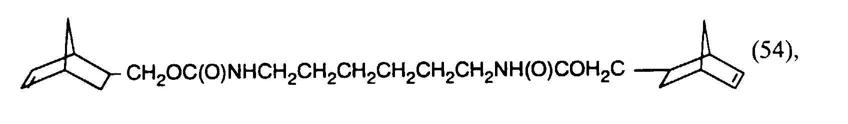 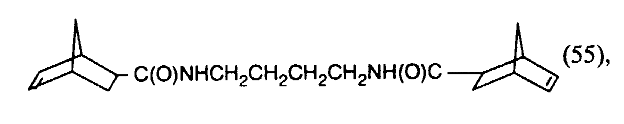 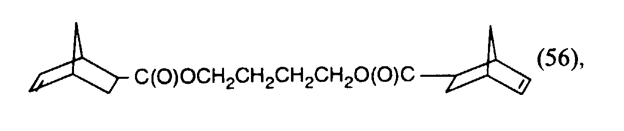 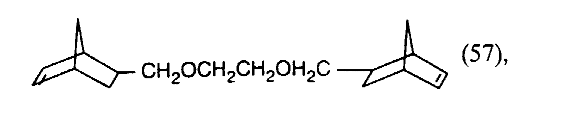 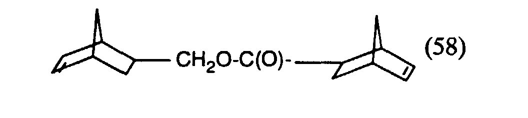 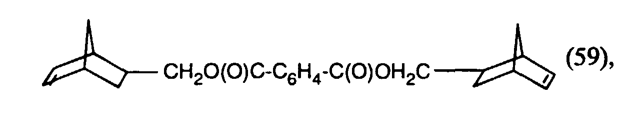 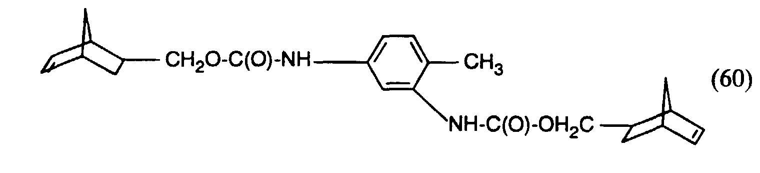 und

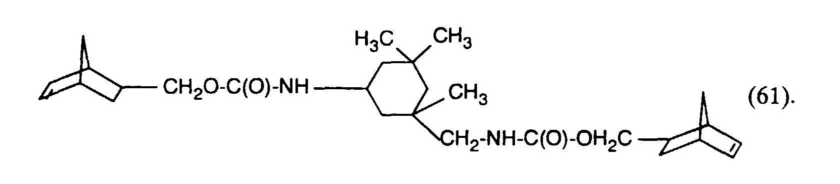

Die Verbindungen der Formel (fl) mit einer Brückengruppe der Formel (f5), die eine reine Kohlenwasserstoffbrücke darstellt, sind zum Beispiel mittels Diels-Alder Reaktion eines cyclischen Diens mit einem linearen oder verzweigten aliphatischen Dien erhältlich (siehe auch EP 287,762), wobei oft Stoffgemische entstehen, die entweder direkt weiterverwendet oder zuvor mittels üblicher Methoden getrennt werden. Verbindungen der Formel (f1) mit einer Brückengruppe der Formel (f5), worin X₅ und X₆ keine direkte Bindung darstellen, sind aus den entsprechenden Halogeniden oder Dihalogeniden, Alkoholen oder Diolen, Aminen oder Diaminen, Carbonsäuren oder Dicarbonsäuren, oder Isocyanaten oder Diisocyanaten in an sich bekannter Weise über Veretherungs-, Veresterungs- beziehungsweise Amidierungsreaktionen erhältlich.

Als dreiwertige Brückengruppen kommen zum Beispiel solche der Formel (f6) in Frage, 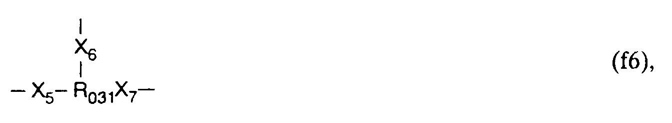 worin
X₅, X₆ und X₇ -O-, -CH₂-O-, -C(O)O-, -O(O)C-, -CH₂-O(O)C-, -C(O)-NR₀₂₉-, -R₀₂₉N-(O)C-, -NH-C(O)-NR₀₂₉-, -O-C(O)-NH-, -CH₂-O-C(O)-NH- oder -NH-C(O)-O- bedeuten, und
R₀₃₁ einen dreiwertigen aliphatischen Kohlenwasserstoffrest mit 3 bis 20, bevorzugt 3 bis 12 C-Atomen, einen dreiwertigen unsubstituierten oder mit C₁-C₄-Alkyl oder C₁-C₄-Alkoxy substituierten cycloaliphatischen Rest mit 3 bis 8, vorzugsweise 5 oder 6 Ring-C-Atomen, oder einen dreiwertigen unsubstituierten oder mit C₁-C₄-Alkyl oder C₁-C₄-Alkoxy substituierten aromatischen Rest mit 6 bis 18, vorzugsweise 6 bis 12 C-Atomen, einen unsubstituierten oder mit C₁-C₄-Alkyl oder C₁-C₄-Alkoxy substituierten dreiwertigen araliphatischen Rest mit 7 bis 19, bevorzugt 7 bis 12 C-Atomen, oder einen unsubstituierten oder mit C₁-C₄-Alkyl oder C₁-C₄-Alkoxy substituierten dreiwertigen heteroaromatischen Rest mit 3 bis 13 C-Atomen und 1 bis 3 Heteroatomen aus der Gruppe -O-, -N- und -S- darstellt, und
R₀₃₁ H oder C₁-C₆-Alkyl ist.

In einer bevorzugten Ausführungsform stellen X₅, X₆ und X₇ -O-, -CH₂-O-, -C(O)O-, -O(O)C-, -CH₂-O(O)C-, -C(O)-NR₀₂₉-, -O-C(O)NH- oder -CH₂-O-C(O)-NH- dar.

Bevorzugte Reste R₀₃₁ leiten sich zum Beispiel von Triolen wie Glycerin, Trimethylolpropan, Butantriol, Pentantriol, Hexantriol, Trihydroxycyclohexan, Trihydroxybenzol und Cyanursäure; Triaminen wie Diethylentriamin; Tricarbonsäuren wie Cyclohexantricarbonsäure oder Trimellithsäure; und Triisocyanaten wie Benzoltriisocyanat oder Cyanurtriisocyanat ab.

Einige Beispiele für Verbindungen der Formel (fl) mit einer dreiwertigen Brückengruppe sind 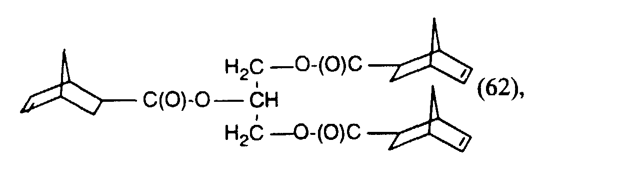 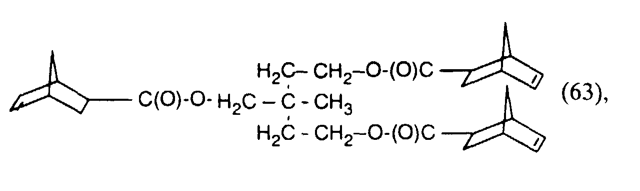 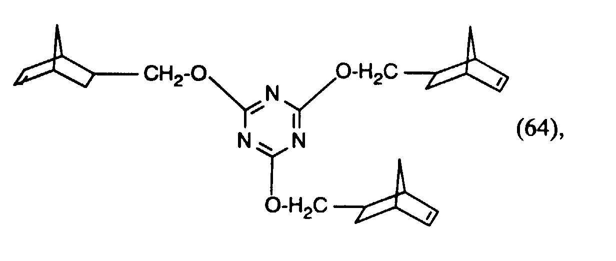 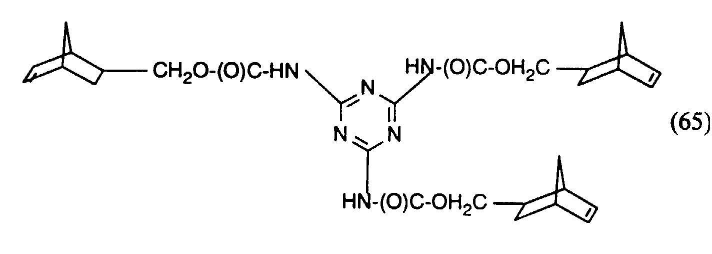 und

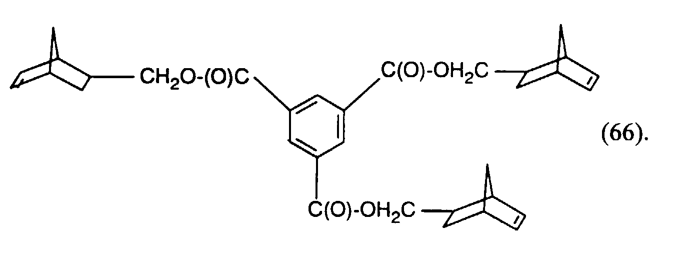

Als vierwertige Brückengruppen kommen zum Beispiel solche der Formel (f7) in Frage, 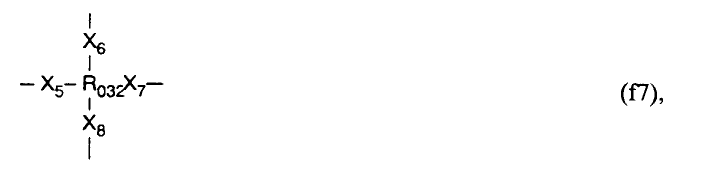 worin
X₅, X₆, X₇ und X₈ -C(O)O-, -CH₂-O(O)C- oder -C(O)-NR₀₂₉- bedeuten, und
R₀₃₂ einen vierwertigen aliphatischen Kohlenwasserstoffrest mit 4 bis 20, bevorzugt 4 bis 12 C-Atomen, einen vierwertigen unsubstituierten oder mit C₁-C₄-Alkyl oder C₁-C₄-Alkoxy substituierten cycloaliphatischen Rest mit 4 bis 8, vorzugsweise 5 oder 6 Ring-C-Atomen, oder einen vierwertigen unsubstituierten oder mit C₁-C₄-Alkyl oder C₁-C₄-Alkoxy substituierten aromatischen Rest mit 6 bis 18, vorzugsweise 6 bis 12 C-Atomen, einen vierwertigen unsubstituierten oder mit C₁-C₄-Alkyl oder C₁-C₄-Alkoxy substituierten araliphatischen Rest mit 7 bis 19, bevorzugt 7 bis 12 C-Atomen, oder einen vierwertigen unsubstituierten oder mit C₁-C₄-Alkyl oder C₁-C₄-Alkoxy substituierten heteroaromatischen Rest mit 3 bis 13 C-Atomen und 1 bis drei Heteroatomen aus der Gruppe -O-, -N- und -S- darstellt, und
R₀₂₉ H oder C₁-C₆-Alkyl ist.

Einige Beispiele von tetrafunktionellen Verbindungen, von denen sich R₀₃₂ ableiten kann, sind Pentaerythrit, Pyromellithsäure und 3,4,3',4'-Biphenyltetracarbonsäure.

Als Herstellungsmethoden können die gleichen Methoden angewendet werden wie zur Herstellung der zuvorgenannten Verbindungen mit einem zwei- oder dreiwertigen Rest.

Beispiele für Verbindungen der Formel (fl) mit einer vierwertigen Brückengruppe sind 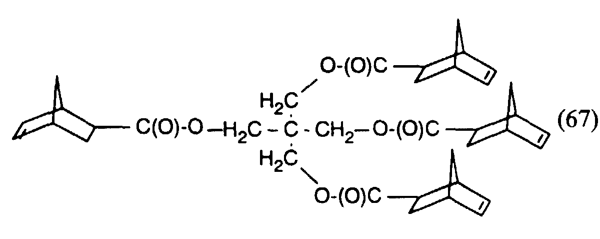 und

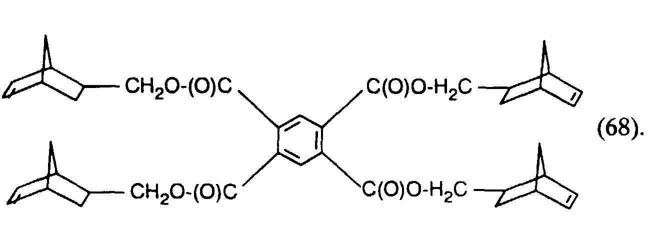

Als Beispiel für mehr als vierwertige Verbindungen, von denen sich die Brückengruppe ableiten kann, seien Polyole wie Dipentaerythrit oder Hexahydroxyhexan genannt, die mit entsprechenden Cycloolefinmonocarbonsäuren umgesetzt werden können.

Erfindungsgemäss besonders bevorzugt werden Polymere und Comonomere verwendet, die nur Kohlenstoff und Wasserstoff enthalten. Ganz besonders bevorzugt ist Norbornen als Comonomer in Mengen von zum Beispiel 20 bis 60 Gew.-% enthalten.

Die comonomeren Cycloolefine können in einer Menge von 0,01 bis 99 Gew.-%, bevorzugt 0,1 bis 95 Gew.-%, besonders bevorzugt 1 bis 90 Gew.-%, und insbesondere bevorzugt 5 bis 80 Gew.-% enthalten sein, bezogen auf die in der Zusammensetzung vorhandenen Polymeren und Monomeren.

Die erfindungsgemässe Zusammensetzung kann Lösungsmittel enthalten, besonders wenn sie zur Herstellung von Beschichtungen verwendet wird.

Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactam, ε-Caprolactarn, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Die Wahl der Lösungsmittel richtet sich hauptsächlich nach den Eigenschaften der Einkomponenten-Katalysatoren, die durch die verwendeten Lösungsmittel nicht desaktiviert werden dürfen. Ruthenium- und Osmiumkatalysatoren können zusammen mit polaren protischen Lösungsmitteln wie zum Beispiel Wasser oder Alkanolen verwendet werden. Diese Katalysatoren sind auch luft-, sauerstoff- und feuchtigkeitsunempfindlich, und entsprechende vernetzbare Zusammensetzungen können ohne besondere Schutzvorkehrungen verarbeitet werden. Bei den anderen Einkomponenten-Katalysatoren empfiehlt sich der Ausschluss von Sauerstoff und Feuchtigkeit. Die Zusammensetzungen sind lagerstabil, wobei wegen der Lichtempfindlichkeit eine Lagerung im Dunkeln zu empfehlen ist.

Die erfindungsgemässe Zusammensetzung kann Formulierungshilfstoffe und Zusätze zur Verbesserung der physikalischen bzw. mechanischen Eigenschaften enthalten. Als solche sind die oben als Lösungsmittel angegebenen Verbindungen geeignet. Bekannte Hilfsstoffe sind Stabilisatoren wie zum Beispiel Antioxidantien und Lichtschutzmittel, Weichmacher, Farbstoffe, Pigmente, Tixotropiemittel, Zähigkeitsverbesserer, Antistatika, Gleitmittel und Entformungshilfsmittel.

Die erfindungsgemässen Zusammensetzungen können selbst dann polymerisiert werden, wenn sie Füllstoffe oder Verstärkerfüllstoffe auch in höheren Mengen enthält. Diese Füllstoffe können in Mengen von 0,1 bis 90 Gew.-%, bevorzugt 0,5 bis 80 Gew.-%, bevorzugter 1 bis 70 Gew.-%, besonders bevorzugt 5 bis 60 Gew.-% und besonders bevorzugt 10 bis 50 Gew.-% enthalten sein, bezogen auf die anwesenden Monomeren.

Geeignete Verstärkerfüllstoffe sind besonders solche mit einem Längen- zu Breitenverhältnis von mindestens 2. Häufig handelt es sich um faser- oder nadelförmige Füllstoffe. Einige Beispiele sind Kunststoffasern, Kohlenstoffasem, Glasfasern, silikatische Fasern wie Asbest, Whisker und Holzfasern.

Geeignete Füllstoffe sind Metallpulver, Holzmehl, Glaspulver, Glaskugeln, Halbmetall- und Metalloxide wie zum Beispiel SiO₂ (Aerosile, Quarz), Korund und Titanoxid, Halbmetall- und Metallnitride wie zum Beispiel Siliziumnitrid, Bornitrid und Aluminiumnitrid, Halbmetall- und Metallcarbide (SiC), Metallcarbonate (Dolomit, CaCO₃), Metallsulfate (Baryt, Gips), Gesteinsmehle und natürliche oder synthetische Mineralien hauptsächlich aus der Silikatreihe wie zum Beispiel Talk, Wollastonit, Bentonit und andere.

Katalytische Mengen für den Einkomponentenkatalysator bedeutet im Rahmen der vorliegenden Erfindung bevorzugt eine Menge von 0,001 bis 20 Mol-%, bevorzugter 0,01 bis 15 Mol-%, besonders bevorzugt 0,01 bis 10 Mol-%, und ganz besonders bevorzugt 0,01 bis 5 Mol-%, bezogen auf die Menge des Monomers. Auf Grund der hohen photokatalytischen Aktivität bei Phosphingruppen enthaltenden Ruthenium- und Osmiumkatalysatoren sind in diesem Fall Mengen von 0,001 bis 2 Gew.-% ganz besonders bevorzugt.

Vorteilhaft enthalten die erfindungsgemässen Zusammensetzungen die nachfolgenden neuen thermischen und/oder photochemischen Einkomponenten-Katalysatoren: 1. Strahlungsaktivierbare, thermostabile Ruthenium- oder Osmiumverbindungen, die mindestens einen photolabilen an das Ruthenium- oder Osmiumatom gebundenen Liganden besitzen, und deren restliche Koordinationsstellen mit nicht-photolabilen Liganden abgesättigt sind.

Thermostabilität bedeutet im Rahmen der Erfindung, dass die photokatalytisch aktiven Metallverbindungen unter Erwärmen keine aktiven Spezies für die Ringöffnungs-Metathese-Polymerisation bilden. Der Katalysator kann zum Beispiel bei Raumtemperatur bis leicht erhöhter Temperatur wie etwa + 40°C innerhalb von Wochen unter Lichtausschluß keine Ringöffnungs-Metathese-Polymerisation initiieren. Während dieser Zeit wird nur eine unbedeutende Menge an Monomer (weniger als 0,2 Gew.-%) umgesetzt. Die Thermostabilität kann zum Beispiel bestimmt werden, indem man eine Toluol-Lösung mit 20 Gew.-% Monomer und 0,33 Gew.-% Metallkatalysator bei 50°C 96 Stunden in der Dunkelheit lagert und eine eventuell gebildete Polymermenge, erkennbar am Viskositätsaufbau und durch Ausfällen in einem Fällungsmittel, beispielsweise Ethanol, Filtration und Trocknen quantitativ bestimmbar, nicht mehr als 0,5 Gew.-% und bevorzugt nicht mehr als 0,2 Gew.-% beträgt.

Als Liganden für die erfindungsgemäss zu verwendenden Ruthenium- und Osmiumverbindungen werden organische oder anorganische Verbindungen, Atome oder Ionen bezeichnet, die an ein Metallzentrum koordiniert sind.

Photolabiler Ligand bedeutet im Rahmen der vorliegenden Erfindung, daß bei Bestrahlung des Katalysators durch Licht im sichtbaren oder ultravioletten Spektralbereich der Ligand vom Katalysator dissoziiert und eine katalytisch aktive Spezies für die Metathesepolymerisation bildet. Erfindungsgemäß bevorzugt sind nicht-ionische photolabile Liganden.

Bei den photolabilen Liganden kann es sich zum Beispiel um Stickstoff (N₂), um unsubstituierte oder mit OH, C₁-C₄-Alkyl, C₁-C₄-Alkoxy, C₆-C₁₂-Aryl oder Halogen substituierte monocyclische, polycyclische oder kondensierte Arene mit 6 bis 24, bevorzugt 6 bis 18 und besonders bevorzugt 6 bis 12 C-Atomen oder um unsubstituierte oder mit C₁-C₄-Alkyl, C₁-C₄-Alkoxy oder Halogen substituierte monocyclische Heteroarene, kondensierte Heteroarene oder kondensierte Aren-Heteroarene mit 3 bis 22, bevorzugt 4 bis 16 und besonders 4 bis 10 C-Atomen und 1 bis 3 Heteroatomen ausgewählt aus der Gruppe O, S und N; oder um unsubstituierte oder mit C₁-C₄-Alkyl, C₁-C₄-Alkoxy oder Halogen substituierte aliphatische, cycloaliphatische, aromatische oder araliphatische Nitrile mit 1 bis 22, bevorzugt 1 bis 18, besonders bevorzugt 1 bis 12 und ganz besonders bevorzugt 1 bis 7 C-Atomen handeln. Die bevorzugten Substituenten sind Methyl, Ethyl, Methoxy, Ethoxy, Fluor, Chlor und Brom. Die Arene und Heteroarene sind bevorzugt mit ein oder zwei Resten substituiert und besonders bevorzugt unsubstituiert. Unter den Heteroarenen sind die elektronenreichen Heteroarene bevorzugt. Die Arene und Heteroarene können sowohl π- als auch σ-gebunden sein; im letzten Fall handelt es sich dann um die entsprechenden Aryl- und Heteroarylreste. Das Aryl enthält bevorzugt 6 bis 18, besonders bevorzugt 6 bis 12 C-Atome. Das Heteroaryl enthält bevorzugt 4 bis 16 C-Atome.

Einige Beispiele für Arene und Heteroarene sind Benzol, p-Cumen, Biphenyl, Naphthalin, Anthracen, Acenaphthen, Fluoren, Phenanthren, Pyren, Chrysen, Fluoranthren, Furan, Thiophen, Pyrrol, Pyridin, γ-Pyran, γ-Thiopyran, Pyrimidin, Pyrazin, Indol, Cumaron, Thionaphthen, Carbazol, Dibenzofuran, Dibenzothiophen, Pyrazol, Imidazol, Benzimidazol, Oxazol, Thiazol, Isoxazol, Isothiazol, Chinolin, Isochinolin, Acridin, Chromen, Phenazin, Phenoxazin, Phenothiazin, Triazine, Thianthren und Purin. Bevorzugte Arene und Heteroarene sind Benzol, Naphthalin, Thiophen und Benzthiophen. Ganz besonders bevorzugt ist das Aren Benzol und das Heteroaren Thiophen.

Die Nitrile können zum Beispiel mit Methoxy, Ethoxy, Fluor oder Chlor substituiert sein; bevorzugt sind die Nitrile unsubstituiert. Die Alkylnitrile sind bevorzugt linear. Einige Beispiele für Nitrile sind Acetonitril, Propionitril, Butyronitril, Pentylnitril, Hexylnitril, Cyclopentyl- und Cyclohexylnitril, Benzonitril, Methylbenzonitril, Benzylnitril und Naphthylnitril. Bei den Nitrilen handelt es sich bevorzugt um lineare C₁-C₄-Alkylnitrile oder Benzonitril. Von den Alkylnitrilen ist Acetonitril besonders bevorzugt.

In einer bevorzugten Untergruppe handelt es sich bei den photolabilen Liganden um N₂, unsubstituiertes oder mit ein bis drei C₁-C₄-Alkyl substituiertes Benzol, Thiophen, Benzonitril oder Acetonitril.

Nicht-photolabiler Ligand (auch als stark koordinierender Ligand bezeichnet) bedeutet im Rahmen der vorliegenden Erfindung, daß der Ligand bei Bestrahlung des Katalysators im sichtbaren oder nahen ultravioletten Spektralbereich nicht oder nur in unwesentlichem Ausmaß vom Katalysator dissoziiert.

Bei den nicht-photolabilen Liganden kann es sich zum Beispiel um die Heteroatome O, S oder N enthaltende und solvatisierende anorganische und organische Verbindungen, die häufig auch als Lösungsmittel verwendet werden, oder um unsubstituiertes oder mit C₁-C₄-Alkyl, C₁-C₄-Alkoxy, (C₁-C₄-Alkyl)₃Si oder (C₁-C₄-Alkyl)₃SiO- substituiertes Cyclopentadienyl oder Indenyl handeln. Beispiele für solche Verbindungen sind H₂O, H₂S, NH₃; gegebenenfalls halogenierte, besonders fluorierte oder chlorierte aliphatische oder cycloaliphatische Alkohole oder Merkaptane mit 1 bis 18, bevorzugt 1 bis 12 und besonders bevorzugt 1 bis 6 C-Atomen, aromatische Alkohole oder Thiole mit 6 bis 18, bevorzugt 6 bis 12 C-Atomen, araliphatische Alkohole oder Thiole mit 7 bis 18, bevorzugt 7 bis 12 C-Atomen; aliphatische, cycloaliphatische, araliphatische oder aromatische Ether, Thioether, Sulfoxide, Sulfone, Ketone, Aldehyde, Carbonsäureester, Lactone, gegebenenfalls N-C₁-C₄-mono- oder -dialkylierte Carbonsäureamide mit 2 bis 20, bevorzugt 2 bis 12 und besonders 2 bis 6 C-Atomen, und gegebenenfalls N-C₁-C₄-alkylierte Lactame; aliphatische, cycloaliphatische, araliphatische oder aromatische, primäre, sekundäre und tertiäre Amine mit 1 bis 20, bevorzugt 1 bis 12 und besonders bevorzugt 1 bis 6 C-Atomen; und gegebenenfalls substituierte Cyclopentadienyle wie zum Beispiel Cyclopentadienyl, Indenyl, ein- oder mehrfach methylierte oder trimethylsilylierte Cyclopentadienyle oder Indenyle.

Beispiele für solche nicht-photolabilen Liganden sind Methanol, Ethanol, n- und i-Propanol, n-, i- und t-Butanol, 1,1,1-Trifluorethanol, Bistrifluormethylmethanol, Tristrifluormethylmethanol, Pentanol, Hexanol, Methyl- oder Ethylmerkaptan, Cyclopentanol, Cyclohexanol, Cyclohexylmerkaptan, Phenol, Methylphenol, Fluorphenol, Phenylmerkaptan, Benzylmerkaptan, Benzylalkohol, Diethylether, Dimethylether, Diisopropylether, Di-n- oder Di-t-butylether, Tetrahydrofuran, Tetrahydropyran, Dioxan, Diethylthioether, Tetrahydrothiophen, Dimethylsulfoxid, Diethylsulfoxid, Tetra- und Pentamethylensulfoxid, Dimethylsulfon, Diethylsulfon, Tetra- und Pentamethylensulfon, Aceton, Methylethylketon, Diethylketon, Phenylmethylketon, Methylisobutylketon, Benzylmethylketon, Acetaldehyd, Propionaldehyd, Trifluoracetaldehyd, Benzaldehyd, Essigsäureethylester, Butyrolacton, Dimethylformamid, Dimethylacetamid, Pyrrolidon und N-Methylpyrrolidon, Indenyl, Cyclopentadienyl, Methyl- oder Dimethyl- oder Pentamethylcyclopentadienyl und Trimethylsilylcyclopentadienyl.

Die primären Amine können der Formel R₂₅NH₂, die sekundären Amine der Formel R₂₅R₂₆NH und die tertiären Amine der Formel R₂₅R₂₆R₂₇N entsprechen, worin R₂₅ C₁-C₁₈-Alkyl, unsubstituiertes oder mit C₁-C₄-Alkyl oder C₁-C₄-Alkoxy substituiertes C₅- oder C₆-Cycloalkyl, oder unsubstituiertes oder mit C₁-C₄-Alkyl oder C₁-C₄-Alkoxy substituiertes C₆-C₁₈-Aryl oder C₇-C₁₂-Aralkyl darstellt, R₂₆ unabhängig die Bedeutung von R₂₅ hat oder R₂₅ und R₂₆ gemeinsam Tetramethylen, Pentamethylen, 3-Oxa-1,5-pentylen oder -CH₂-CH₂-NH-CH₂-CH₂- oder -CH₂-CH₂-N(C₁-C₄-Alkyl)CH₂-CH₂- bedeuten, R₂₅ und R₂₆ unabhängig voneinander die zuvor angegebenen Bedeutungen haben und R₂₇ unabhängig die Bedeutung von R₂₅ hat. Das Alkyl enthält bevorzugt 1 bis 12 und besonders bevorzugt 1 bis 6 C-Atome. Das Aryl enthält bevorzugt 6 bis 12 C-Atome und das Aralkyl enthält bevorzugt 7 bis 9 C-Atome. Beispiele für Amine sind Methyl-, Dimethyl-, Trimethyl-, Ethyl-, Diethyl-, Triethyl-, Methyl-ethyl-, Dimethyl-ethyl, n-Propyl-, Di-n-propyl-, Tri-n-butyl-, Cyclohexyl-, Phenyl- und Benzylamin, sowie Pyrrolidin, N-Methylpyrrolidin, Piperidin, Piperazin, Morpholin und N-Methylmorpholin.

In einer bevorzugten Untergruppe handelt es sich bei den nicht-photolabilen Liganden um H₂O, NH₃ und unsubstituierte oder teilweise oder vollständig fluorierte C₁-C₄-Alkanole. Ganz besonders bevorzugt sind H₂O, NH₃, Cyclopentadienyl, Methanol und Ethanol.

Bei den erfindungsgemäss zu verwendenden Ruthenium- und Osmiumverbindungen kann es sich um ein- oder mehrkernige, zum Beispiel solche mit zwei oder drei Metallzentren handeln. Die Metallatome können hierbei über eine Brückengruppe oder Metall-Metall-Bindungen verbunden sein. Unter den Verbindungen mit mehr Metallzentren sind solche der Formel VIIIa oder VIIIb 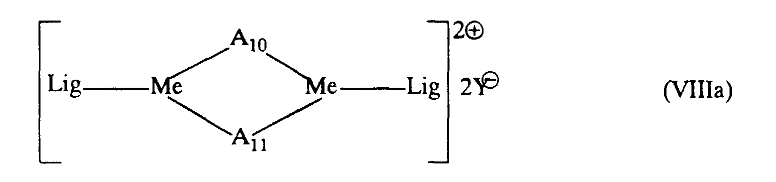 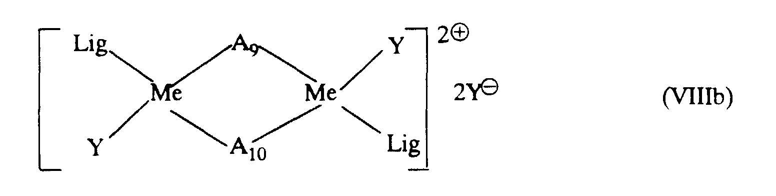 bevorzugt, worin Lig für einen photolabilen Liganden und Me für Ru oder Os stehen, A₉, A₁₀ und A₁₁ eine bivalente Brückengruppe darstellen, und Y^{⊖} ein einwertiges nicht koordinierendes Anion bedeutet. Die Brückengruppe ist bevorzugt ionisch und besonders bevorzugt ein Halogenid, ganz besonders bevorzugt Chlorid, Bromid oder Iodid. Bei dem photolabilen Liganden handelt es sich bevorzugt um gleiche oder verschiedene Arene und Y^{⊖} kann die nachfolgend aufgeführten Anionen und ganz besonders Chlorid, Bromid oder Iodid darstellen. Ein Beispiel für solche Komplexe ist (C₆H₆)ClRu(Cl)₂Ru(C₆H₆)Cl.

Bevorzugte erfindungsgemäße Katalysatoren entsprechen der Formel IX

[(Me⁺ⁿ)(L₁^{z1})ₘ(L₂^{z2})ₒ(L₃^{z3})ₚ(L₄^{z4})_{q}(L₅^{z5})ᵣ(L₆^{z6})ₛ](L₇^{z7})ₜ (IX)

worin
Me Ruthenium oder Osmium;
n 2;
L₁ einen photolabilen Liganden;
L₂, L₃, L₄, L₅ und L₆ unabhängig voneinander einen nicht-photolabilen oder einen photolabilen Liganden;
m 1;
o, p, q, r, und s unabhängig voneinander 1
z₁, z₂, z₃, z₄, z₅, z₆ 0 und z₇ - 1;
L₇ ein nicht koordinierendes Kation oder Anion bedeutet; wobei die Summe von m + o + p + q + r + s eine ganze Zahl von 2 bis 6 und t den Quotienten aus (n + m • z₁ + o • z₂ + p •z₃ + q • z₄ + r • z₅ + s • z₆)/z₇ bedeutet.

In der Formel IX steht L₇ bevorzugt für Halogen (zum Beispiel Cl, Br und I), das Anion einer Sauerstoffsäure, BF₄, PF₆, SiF₆ oder AsF₆.

Bei den Anionen von Sauerstoffsäuren kann es sich zum Beispiel um Sulfat, Phosphat, Perchlorat, Perbromat, Periodat, Antimonat, Arsenat, Nitrat, Carbonat, das Anion einer C₁-C₈-Carbonsäure wie zum Beispiel Formiat, Acetat, Propionat, Butyrat, Benzoat, Phenylacetat, Mono-, Di- oder Trichlor- oder -fluoracetat, Sulfonate wie zum Beispiel Methylsulfonat, Ethylsulfonat, Propylsulfonat, Butylsulfonat, Trifluormethylsulfonat (Triflat), gegebenenfalls mit C₁-C₄-Alkyl, C₁-C₄-Alkoxy oder Halogen, besonders Fluor, Chlor oder Brom substituiertes Phenylsulfonat oder Benzylsulfonat, wie zum Beispiel Tosylat, Mesylat, Brosylat, p-Methoxy- oder p-Ethoxyphenylsulfonat, Pentafluorphenylsulfonat oder 2,4,6-Triisopropylsulfonat, und Phosphonate wie zum Beispiel Methylphosphonat, Ethylphosphonat, Propylphosphonat, Butylphosphonat, Phenylphosphonat, p-Methylphenylphosphonat oder Benzylphosphonat handeln.

Vorzugsweise steht in der Formel IX Me für Ruthenium, besonders für Ru²⁺.

Eine besonders hervorzuhebende Gruppe von Verbindungen der Formel IX ist jene, worin die Liganden L₁, L₂, L₃, L₄, L₅ und L₆ unabhängig voneinander unsubstituierte oder mit C₁-C₄-Alkyl, C₁-C₄-Alkoxy oder Halogen substituierte aliphatische, cycloaliphatische, aromatische oder araliphatische Nitrile mit 1 bis 22 C-Atomen oder C₆-C₁₈-Aryl bedeuten; oder L₁, L₂ und L₃ gemeinsam unsubstituierte oder mit -OH, C₁-C₄-Alkyl, C₁-C₄-Alkoxy, C₆-C₁₂-Aryl oder Halogen substituierte monocyclische, polycyclische oder kondensierte Arene mit 6 bis 24, bevorzugt 6 bis 18 und besonders bevorzugt 6 bis 12 C-Atomen oder unsubstituierte oder mit -OH, C₁-C₄-Alkyl, C₁-C₄-Alkoxy oder Halogen substituierte monocyclische Heteroarene, kondensierte Heteroarene oder kondensierte Aren-Heteroarene mit 4 bis 22 C-Atomen und 1 bis 3 Heteroatomen ausgewählt aus der Gruppe O, S und N darstellen, und L₄, L₅ und L₆ gemeinsam die gleiche Bedeutung haben, oder einzeln unabhängig voneinander N₂ oder besagtes Nitril oder besagtes C₆-C₁₈-Aryl darstellen.

Eine bevorzugte Untergruppe der obigen Verbindungen der Formel IX sind solche, worin die Liganden L₁, L₂, L₃, L₄, L₅ und L₆ unabhängig voneinander N₂, C₁-C₂₀-Alkylnitril, C₆-C₁₂-Arylnitril, C₇-C₁₂-Aralkylnitril, C₆-C₁₂-Aryl oder L₁, L₂ und L₃ je gemeinsam die Gruppen A₁ oder A₂ bedeuten 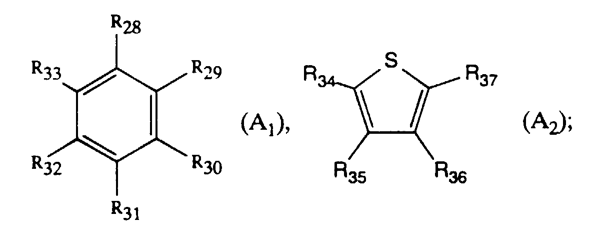 worin
R₂₈, R₂₉, R₃₀, R₃₁, R₃₂, R₃₃, R₃₄, R₃₅, R₃₆ und R₃₇ unabhängig voneinander Wasserstoff, C₁-C₂₀-Alkyl, C₁-C₂₀-Alkoxy, Aryl oder SiR₃₈R₃₉R₄₀, wobei bei den Gruppen A₁ und A₂ an benachbarten Kohlenstoffatomen ein aromatischer oder heteroaromatischer Ring, dessen Heteroatome aus Sauerstoff, Schwefel und Stickstoff ausgewählt sind, ankondensiert sein kann, bedeuten; und R₃₈, R₃₉ und R₄₀ unabhängig voneinander C₁-C₁₂-Alkyl, Phenyl oder Benzyl, vorzugsweise C₁-C₈-Alkyl, Phenyl oder Benzyl, besonders bevorzugt C₁-C₄-Alkyl, Phenyl oder Benzyl bedeuten.

L₁, L₂, L₃, L₄, L₅ und L₆ unabhängig voneinander C₁-C₁₂-Alkylnitril, C₆-C₁₂-Arylnitril oder L₁, L₂ und L₃ je gemeinsam die Gruppen A₁ oder A₂ bedeuten und L₄, L₅ und L₆ ebenfalls gemeinsam diese Bedeutung haben oder je einzeln N₂, besagte Nitrile oder besagtes Aren oder Heteroaren der Formeln A₁ und A₂ darstellen, worin R₂₈, R₂₉, R₃₀, R₃₁, R₃₂, R₃₃, R₃₄, R₃₅, R₃₆ und R₃₇ unabhängig voneinander für Wasserstoff, C₁-C₆-Alkyl, C₁-C₆-Alkoxy, SiR₃₈R₃₉R₄₀ oder Phenyl stehen, wobei bei den Gruppen A₁ und A₂ an benachbarten Kohlenstoffatomen ein Benzolring ankondensiert sein kann, und R₃₈, R₃₉ und R₄₀ Methyl, Ethyl oder Phenyl sind.

In einer ganz besonders bevorzugten Ausführungsform des erfindungsgemäßen Verfahrens entspricht der verwendete Katalysator der Formel IX, worin
L₁, L₂, L₃, L₄, L₅ und L₆ unabhängig voneinander Methylnitril, Ethylnitril oder Phenylnitril, oder L₁, L₂ und L₃ je gemeinsam die Gruppen A₁ oder A₂ bedeuten und L₄, L₅ und L₆ ebenfalls gemeinsam diese Bedeutung haben oder je einzeln besagte Nitrile darstellen, worin R₂₈, R₂₉, R₃₀, R₃₁, R₃₂, R₃₃, R₃₄, R₃₅, R₃₆ und R₃₇ unabhängig voneinander für Wasserstoff, Methyl, Methoxy oder Phenyl stehen, wobei bei den Gruppen A₁ und A₂ an benachbarten Kohlenstoffatomen ein Benzolring ankondensiert sein kann.

Eine andere besonders bevorzugte Untergruppe der Verbindungen der Formel IX sind solche, worin L₁, L₂ und L₃ gemeinsam unsubstituierte oder mit C₁-C₄-Alkyl, C₁-C₄-Alkoxy, C₆-C₁₂-Aryl oder Halogen substituierte monocyclische, polycyclische oder kondensierte Arene mit 6 bis 24, bevorzugt 6 bis 18 und besonders bevorzugt 6 bis 12 C-Atomen oder unsubstituierte oder mit C₁-C₄-Alkyl, C₁-C₄-Alkoxy oder Halogen substituierte monocyclische Heteroarene, kondensierte Heteroarene oder kondensierte Aren-Heteroarene mit 4 bis 22, bevorzugt 4 bis 16 und besonders 4 bis 10 C-Atomen und 1 bis 3 Heteroatomen ausgewählt aus der Gruppe O, S und N darstellen, und L₄, L₅ und L₆ einen nicht-photolabilen Liganden bedeuten, wobei die vorherigen Bevorzugungen auch hier gelten.

L₁, L₂ und L₃ stellen in dieser Untergruppe bevorzugt Benzol oder Naphthalin dar, und der nicht-photolabile Ligand bedeutet bevorzugt H₂O, NH₃, unsubstituiertes oder mit Fluor substituiertes C₁-C₄-Alkanol oder -Alkanthiol, aliphatische Ether, Thioether, Sulfoxide oder Sulfone mit 2 bis 8 C-Atomen, Dimethylformamid oder N-Methylpyrrolidon.

In einer weiteren bevorzugten Untergruppe von Verbindungen der Formel X handelt es sich um Ruthenium- und Osmiumverbindungen der Formel X

[L₁Me(L₈)₅]^{2⊕}[Y₁^{x⊖}]_{2/x} (X),

worin L₁ ein photolabiler Ligand und L₈ ein nicht-photolabiler Ligand sind, Me Ru oder Os bedeutet, Y₁ ein nicht koordinierendes Anion darstellt und x für die Zählen 1, 2 steht. Für die photolabilen Liganden, nicht-photolabilen Liganden, Me und Y₁ gelten die vorher aufgeführten Bevorzugungen. Besonders bevorzugt ist L₁ N₂ oder ein Nitril wie zum Beispiel C₁-C₄-Alkylnitril (Acetonitril), Benzonitril oder Benzylnitril, L₈ NH₃ oder ein Amin mit 1 bis 12 C-Atomen, Y₁ ein nicht koordinierendes Anion und x die Zahl 1 oder 2.

Für die vorliegende Erfindung besonders geeignete Katalysatoren sind (tos bedeutet Tosylat und tis bedeutet 2,4,6-Triisopropylphenylsulfonat): Ru(CH₃CN)₆(tos)₂, Ru(CH₃CH₂CN)₆(tos)₂, Ru(CH₃CN)₆(CF₃SO₃)₂, Ru(CH₃CH₂CN)₆(CF₃SO₃)₂, Ru(C₆H₆)₂(tos)₂, [Ru(C₆H₆)(C₆H₅OCH₃)](BF₄)₂, [Ru(C₆H₆)(C₆H₅i-propyl)](BF₄)₂, [Ru(C₆H₆)(1,3,5-trimethylphenol)](BF₄)₂, [Ru(C₆H₆)(hexamethylbenzol)](BF₄)₂, [Ru(C₆H₆)(biphenyl)](BF₄)₂, [Ru(C₆H₆)(chrysen)](BF₄)₂, [Ru(C₆H₆)(naphthalin)](BF₄)₂, [Ru(cyclopentadienyl)(4-methylcumyl)]PF₆, [Ru(cyanophenyl)₆](tos)₂, [Ru(cyanophenyl)₆](CF₃SO₃)₂, [Ru(C₆H₆)(tetramethylthiophen)₃](tos)₂, [Ru(C₆H₆)(CH₃CN)₃](tos)₂, [Ru(C₆H₆)(tetramethylthiophen)₃](CF₃SO₃)₂, sowie [Ru(C₆H₆)(CH₃CN)₃](CF₃SO₃)₂, [Ru(C₆H₆)(CH₃OH)₃](tos)₂, [Ru(Cumol)(CH₃OH)₃](tis)₂, [Os(NH₃)₅N₂](PF₆)₂, [Ru(NH₃)₅N₂](PF₆)₂, [Ru(NH₃)₅(CH₃CN)]BF₄, [Ru(C₆H₆(NH₃)₃](tis)₂, [Ru(C₆H₆(Tetrahydrothiophen)₃](CF₃SO₃)₂, [Ru((CH₃)₂S)₃C₆H₆](tos)₂, [Ru(Dimethylsulfoxid)₃C₆H₆](PF₆)₂, [Ru(Dimethylformamid)₃C₆H₆](PF₆)₂, [Ru(C₆H₆)Cl₂]₂ und [Os(C₆H₆)Cl₂]₂.

Erfindungsgemäß zu verwendende Ruthenium- und Osmium-Katalysatoren sind entweder bekannt und teilweise im Handel erhältlich oder analog bekannter Verfahren herstellbar. Derartige Katalysatoren und ihre Herstellung werden beispielsweise in Gilkerson und Jackson [Gilkerson, W.R., Jackson, M.D., J. Am. Chem. Soc. 101:4096-411 (1979)], Bennett und Matheson [Bennett, M.A., Matheson, T.W., J. Organomet. Chem. 175:87-93 (1979)], Bennett und Smith [Bennett, M.A., Smith, A.K., J.C.S. Dalton Trans. 233-24 (1974)] und Luo et al. [Luo, S., Rauchfuss, T.B., Wilson, S.R., J. Am. Chem. Soc. 114:8515-8520 (1992)] beschrieben.

2. Thermisch oder mit Strahlung aktivierbare thermostabile Molybdän(VI)- oder Wolfram(VI)verbindungen, die mindestens zwei Methylgruppen oder zwei monosubstituierte Methylgruppen am Metall gebunden haben, wobei der Substituent kein Wasserstoffatom in α-Stellung enthält.

Die übrigen Valenzen des Molybdän- und Wolframs sind bevorzugt mit thermostabilen Neutralliganden abgesättigt, die in grosser Vielzahl bekannt sind. Die Zahl der Neutralliganden kann auch die stöchiometrisch mögliche Zahl überschreiten (Solvate). Thermostabilität ist vom erläutert worden. Bei Temperaturen über 50°C, zum Beispiel 60 bis 300°C, werden diese Molybdän- und Wolframverbindungen auch thermisch aktiviert.

Bei den erfindungsgemäss zu verwendenden Molybdän- und Wolframverbindungen kann es sich um solche handeln, die ein Metallatom oder zwei über eine Einfach-, Doppel- oder Dreifachbindung verbundene Metallatome enthalten. Die am Metall gebundene Methylgruppe oder monosubstituierte Methylgruppe ist mindestens zweimal, besonders bevorzugt zwei- bis sechsmal und insbesondere bevorzugt zwei- bis viermal als Ligand gebunden. Dieser Ligand entspricht bevorzugt der Formel XI,

-CH₂-R (XI),

worin R H, -CF₃, -SiR₃₈R₃₉R₄₀, -CR₄₁R₄₂R₄₃, unsubstituiertes oder mit C₁-C₆-Alkyl oder C₁-C₆-Alkoxy substituiertes C₆-C₁₆-Aryl oder C₄-C₁₅-Heteroaryl mit 1 bis 3 Heteroatomen aus der Gruppe O, S und N darstellt; und
R₄₁, R₄₂ und R₄₃ unabhängig voneinander C₁-C₁₀- Alkyl bedeuten, das unsubstituiert oder mit C₁-C₁₀-Alkoxy substituiert ist, oder R₄₁ und R₄₂ diese Bedeutung haben und R₄₃ C₆-C₁₀-Aryl oder C₄-C₉-Heteroaryl ist, das unsubstituiert oder mit C₁-C₆-Alkyl oder C₁-C₆-Alkoxy substituiert ist; und
R₃₈, R₃₉ und R₄₀ die oben angegebenen Bedeutungen haben.

Bedeuten R₃₈ bis R₄₃ Alkyl, so kann dieses linear oder verzweigt sein und bevorzugt 1 bis 8 und besonders bevorzugt 1 bis 4 C-Atome enthalten. Bedeuten R₃₈ bis R₄₃ Aryl, so handelt es sich bevorzugt um Phenyl oder Naphthyl.

Bedeutet R in Formel XI Aryl, so handelt es sich bevorzugt um Phenyl oder Naphthyl. Bedeutet R in Formel XI Heteroaryl, so handelt es sich bevorzugt um Pyridinyl, Furanyl, Thiophenyl oder Pyrrolyl.

Bevorzugte Substituenten für R₃₈ bis R₄₃ sind im Rahmen der Definitionen Methyl, Ethyl, Methoxy und Ethoxy. Beispiele für die Reste R₃₈ bis R₄₃ sind zuvor angegeben worden.

In einer bevorzugten Ausführungsform bedeutet die Gruppe R in Formel XI H, -C(CH₃)₃, -C(CH₃)₂C₆H₅, unsubstituiertes oder mit Methyl, Ethyl, Methoxy oder Ethoxy substituiertes Phenyl, -CF₃ oder -Si(CH₃)₃.

Die übrigen Valenzen der Mo(VI)- und W(VI)-Atome sind gegebenenfalls mit gleichen oder verschiedenen Liganden aus der Gruppe =O, =N-R₄₄, sekundäre Amine mit 2 bis 18 C-Atomen, R₄₅O-, R₄₅S-, Halogen, gegebenenfalls substituiertes Cyclopentadienyl, überbrücktes Biscyclopentadienyl, tridentate monoanionische Liganden und Neutralliganden wie zum Beispiel Ethern, Nitrilen, CO und tertiären Phosphinen und Aminen abgesättigt, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl oder Halogen substituiertes Benzyl oder Phenylethyl darstellen; und R₄₄ unsubstituiertes oder mit C₁-C₆-Alkoxy substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl, oder Halogen substituiertes Phenyl, oder unsubstituiertes oder mit C₁-C₆-Alkyl, C₁-C₆-Alkoxy, C₁-C₆-Alkoxymethyl-, C₁-C₆-Alkoxyethyl- oder Halogen substituiertes Benzyl oder Phenylethyl bedeutet.

Sekundäre Amine sind bevorzugt solche der Formel R₄₆R₄₇N-, worin R₄₆ und R₄₇ unabhängig voneinander lineares oder verzweigtes C₁-C₁₈-Alkyl; C₅- oder C₆-Cycloalkyl; unsubstituiertes oder mit C₁-C₆-Alkoxy, oder Halogen substituiertes Benzyl oder Phenylethyl oder (C₁-C₆-alkyl)₃Si; oder R₄₆ und R₄₇ zusammen Tetramethylen, Pentamethylen oder 3-Oxapentan-1,5-diyl bedeuten. Das Alkyl enthält bevorzugt 1 bis 12 und besonders bevorzugt 1 bis 6 C-Atome. Einige Beispiele sind Dimethyl-, Diethyl-, Di-n-propyl-, Di-i-propyl-, Di-n-butyl-, Methyl-ethyl-, Dibenzyl-, Benzyl-methyl-, Diphenyl-, Phenylmethylamino und Di(trimethylsilyl)amino.

Halogen als Ligand oder Substituent ist bevorzugt F oder Cl und besonders bevorzugt Cl.

Das Cyclopentadienyl kann unsubstituiert oder mit ein bis fünf C₁-C₄-Alkyl, besonders Methyl, oder -Si(C₁-C₄-Alkyl), besonders -Si(CH₃)₃ substituiert sein. Überbrückte Cyclopentadienyle sind besonders solche der Formel R₄₈-A-R₄₈, worin R₄₈ unsubstituiertes oder mit ein bis fünf C₁-C₄-Alkyl, besonders Methyl, oder -Si(C₁-C₄-Alkyl), besonders -Si(CH₃)₃ substituiertes Cyclopentadienyl darstellt und A für -CH₂-, -CH₂-CH₂-, -Si(CH₃)₂-, -Si(CH₃)₂-Si(CH₃)₂- oder -Si(CH₃)₂-O-Si(CH₃)₂- steht.

Bei Ethern als Neutralliganden kann es sich um Dialkylether mit 2 bis 8 C-Atomen oder cyclische Ether mit 5 oder 6 Ringgliedern handeln. Einige Beispiele sind Diethylether, Methylethylether, Diethylether, Di-n-propylether, Di-i-propylether, Di-n-butylether, Ethylenglykoldimethylether, Tetrahydroforan und Dioxan.

Bei Nitrilen als Neutralliganden kann es sich um aliphatische oder aromatische Nitrile mit 1 bis 12, vorzugsweise 1 bis 8 C-Atomen handeln. Einige Beispiele sind Acetonitril, Propionitril, Butylnitril, Benzonitril und Benzylnitril.

Bei tertiären Aminen und Phosphinen als Neutralliganden kann es sich um solche mit 3 bis 24, vorzugsweise 3 bis 18 C-Atomen handeln. Einige Beispiele sind Trimethylamin und -phosphin, Triethylamin und -phosphin, Tri-n-propylamin und -phosphin, Tri-n-butylamin und -phosphin, Triphenylamin und -phosphin, Tricyclohexylamin und -phosphin, Phenyldimethylamin und -phosphin, Benzyldimethylamin und -phosphin, 3,5-Dimethylphenyl-dimethylamin und -phosphin.

Bei den tridentaten monoanionischen Liganden kann es sich zum Beispiel um Hydro(trispyrazol-1-yl)borate oder Alkyl(trispyrazol-1-yl)borate, die unsubstituiert oder mit ein bis drei C₁-C₄-Alkyl substituiert sind [siehe Trofimenko, S., Chem. Rev., 93:943-980 (1993)], oder um [C₅(R'₅)Co(R₅₀R₅₁P=O)₃]^{⊖}, worin R' H oder Methyl und R₅₀ sowie R₅₁ unabhängig voneinander C₁-C₄-Alkyl, C₁-C₄-Alkoxy oder Phenyl bedeuten [siehe Kläui, W., Angew. Chem. 102:661-670 (1990)], handeln.

Bei Halogen als Substituent für die Reste R₄₄ und R₄₅ handelt es sich bevorzugt um Fluor und besonders bevorzugt um Chlor. Die Substituenten Alkyl, Alkoxy oder Alkoxy im Alkoxymethyl oder -ethyl enthalten bevorzugt 1 bis 4 und besonders 1 oder 2 C-Atome. Beispiele sind Methyl, Ethyl, n- und i-Propyl, n-, i- und t-Butyl, Methoxy, Ethoxy, n- und i-Propyloxy und n-, i- und t-Butyloxy.

R₄₄ und R₄₅ enthalten als Alkyl bevorzugt 1 bis 12, besonders bevorzugt 1 bis 8, und insbesondere bevorzugt 1 bis 4 C-Atome. Bevorzugt handelt es sich um verzweigtes Alkyl. Einige Beispiele für R₄₄ sind Methoxy, Ethoxy, n- und i-Propyloxy, n-, i- und t-Butyloxy, Hexafluor-i-propyloxy und Hexa- sowie Perfluorbutyloxy.

Einige Beispiele für substituiertes Phenyl und Benzyl für R₄₄ und R₄₅ sind p-Methylphenyl oder Benzyl, p-Fluor- oder p-Chlorphenyl oder -benzyl, p-Ethylphenyl oder -benzyl, p-n- oder i-Propylphenyl oder -benzyl, p-i-Butylphenyl oder -benzyl, 3-Methylphenyl oder -benzyl, 3-i-Propylphenyl oder -benzyl, 2,6-Dimethylphenyl oder -benzyl, 2,6-Di-i-propylphenyl oder -benzyl, 2,6-Di-n- oder -t-butylphenyl und -benzyl. R₄₅ steht besonders bevorzugt für unsubstituiertes oder mit C₁-C₄-Alkyl oder C₁-C₄-Alkoxy substituiertes Phenyl.

In einer bevorzugten Ausführungsform entsprechen die Molybdän- und Wolframverbindungen besonders einer der Formeln XII bis XIIc 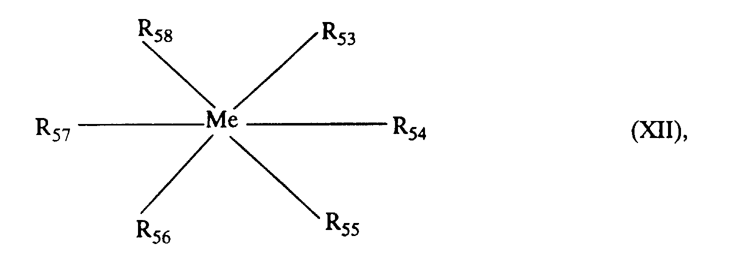 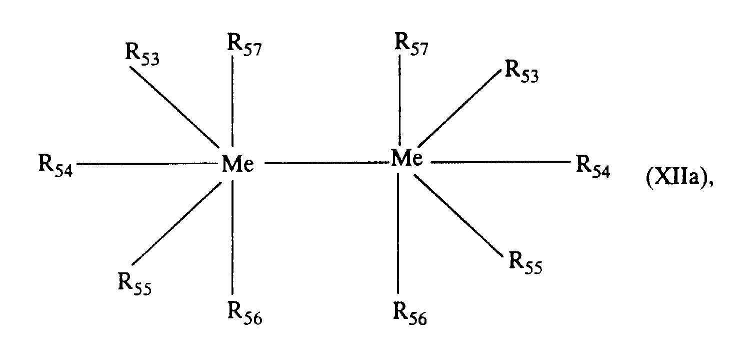 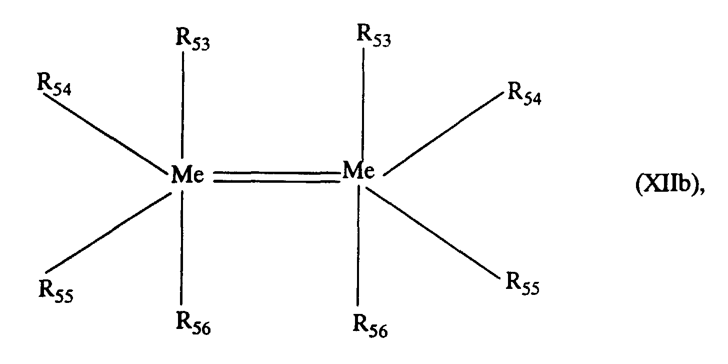 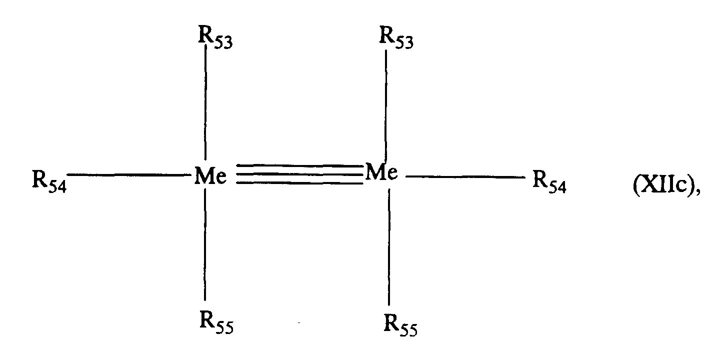 worin
Me für Mo(VI) oder W(VI) steht;
mindestens zwei, bevorzugt 2 bis 4, der Reste R₅₃ bis R₅₈ einen Rest -CH₂-R der Formel XI bedeuten, worin R die oben angegebenen Bedeutungen hat;
je zwei der übrigen Reste von R₅₃ bis R₅₈ =O oder =N-R₄₄ bedeuten, und R₄₄ die oben angegebenen Bedeutungen hat; und/oder
die übrigen Reste von R₅₃ bis R₅₈ Sekundäramino mit 2 bis 18 C-Atomen, R₄₅O- oder R₄₅S-, Halogen, Cyclopentadienyl oder überbrücktes Biscyclopentadienyl oder einen Neutralliganden bedeuten, worin R₄₅ die oben angegebenen Bedeutungen hat. Für die Reste R, R₄₄ und R₄₅ gelten die zuvor angegebenen Bevorzugungen.

In einer besonders bevorzugten Ausführungsform werden in der erfindungsgemässen Zusammensetzung Molybdän- oder Wolframverbindungen der Formel XII verwendet, worin
a) R₅₃ bis R₅₈ einen Rest der Formel XI -CH₂-R bedeuten, oder
b) R₅₃ und R₅₄ einen Rest der Formel XI -CH₂-R darstellen, R₅₅ und R₅₆ zusammen den Rest =N-R₄₄ bedeuten, und R₅₇ und R₅₈ zusammen unabhängig voneinander R₄₅-O- oder Halogen darstellen, oder
c) R₅₃ und R₅₄ zusammen und R₅₅ und R₅₆ zusammen den Rest =N-R₄₄ bedeuten, und R₅₇ und R₅₈ einen Rest der Formel XI -CH₂-R darstellen,
wobei R, R₄₄ und R₄₅ die voranstehenden Bedeutungen haben. Für R, R₄₄ und R₄₅ gelten die voranstehenden Bevorzugungen.

Unter den Verbindungen der Formel XIIc sind besonders jene bevorzugt, worin R₅₃, R₅₄ und R₅₅ einen Rest der Formel XI darstellen, wobei es sich bei dem Rest der Formel XI besonders bevorzugt um -CH₂-Si(C₁-C₄-Alkyl)₃ handelt.

Ganz besonders bevorzugt werden in der erfindungsgemässen Zusammensetzung Molybdän- oder Wolframverbindungen der Formeln XIII, XIIIa oder XIIIb verwendet, 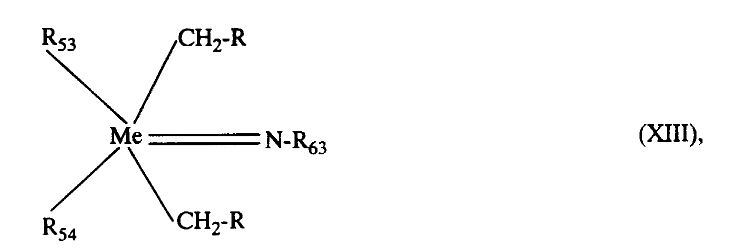 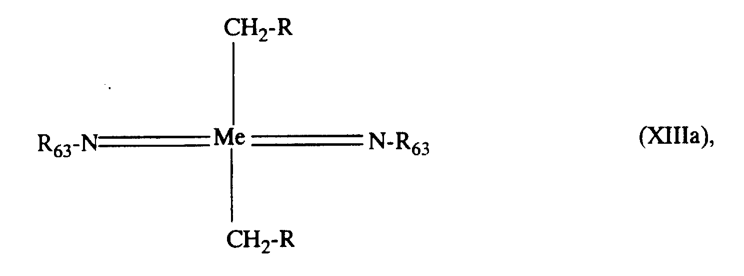 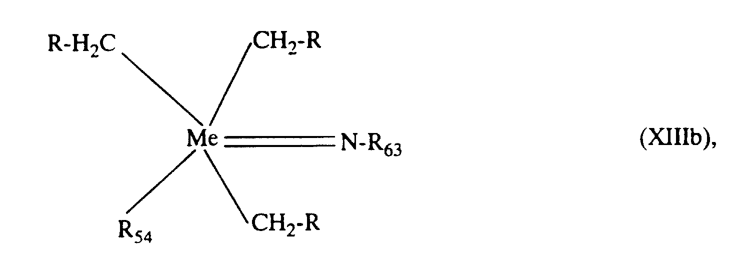 worin
Me für Mo(VI) oder W(VI) steht,
R H, -C(CH₃)₃, -C(CH₃)₂-C₆H₅, -C₆H₅ oder -Si(C₁-C₄-Alkyl)₃ darstellt,
R₆₃ Phenyl oder mit 1 bis 3 C₁-C₄-Alkyl oder C₁-C₄-Alkoxy substituiertes Phenyl bedeutet,
R₅₃ unsubstituiertes oder mit Fluor substituiertes lineares oder verzweigtes C₁-C₄-Alkoxy darstellt, und
R₅₄ die gleiche Bedeutung wie R₅₃ hat oder für F, Cl oder Br steht. R₅₃ stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpopyloxy und Nonafluorpropyloxy. Bei R₅₄ handelt es sich bevorzugt um Cl.

Einige Beispiele für Molybdän- und Wolframverbindungen sind:
Mo₂[CH₂Si(CH₃)₃]₆, W(=N-C₆H₅)(OC(CH₃)₃)(Cl)[(CH₂Si(CH₃)₃)]₂,
W(=N-C₆H₅)(OC(CH₃)(CF₃)₂)₂[(CH₂Si(CH₃)₃)]₂,
Mo(=N-3,5-diisopropylC₆H₅)₂[(CH₂C(CH₃)₂-C₆H₅)]₂,
Mo(=N-3,5-diisopropylC₆H₅)₂[(CH₂-C₆H₅)]₂, Mo(=N-3,5-dimethylC₆H₅)₂[(CH₂-C₆H₅)]₂,
Mo(=N-3,5-dimethylC₆H₅)₂(CH₃)₂(Tetrahydrofuran),
[(CH₃)₃SiCH₂]₃Mo=Mo[CH₂Si(CH₃)₃]₃, W(=NC₆H₅)[CH₂Si(CH₃)₃]₃Cl.

Die erfindungsgemäss zu verwendenden Molybdän- und Wolfram-Katalysatoren sind bekannt oder nach bekannten und analogen Verfahren ausgehend von den Metallhalogeniden mittels Grignardreaktionen herstellbar [siehe zum Beispiel Huq, F., Mowat, W., Shortland, A., Skapski, A.C., Wilkinson, G., J. Chem. Soc., Chem. Commun. 1079-1080 (1971) oder Schrock, R.R., Murdzeck, J.S., Bazan, G.C., Robbins, J., DiMare, M., O'Regan, M., J. Am. Chem. Soc., 112:3875-3886 (1990)].

3. Thermostabile Titan(IV), Niob(V)-, Tantal(V)-, Molybdän(VI)- oder Wolfram(VI)verbindungen, in der eine Silylmethylgruppe und mindestens ein Halogen am Metall gebunden sind. Diese Einkomponentenkatalysatoren sind besonders photokatalytisch aktiv.

Bei den erfindungsgemäss zu verwendenden Titan(IV)-, Niob(V)- und Tantal(V)verbindungen handelt es sich um solche, die ein Metallatom enthalten. Bei den erfindungsgemäss zu verwendenden Molybdän(VI)- und Wolfram(VI)verbindungen kann es sich um solche handeln, die ein Metallatom oder zwei über eine Einfach-, Doppel- oder Dreifachbindung verbundene Metallatome enthalten. Die übrigen Valenzen des Titans, Niobs, Tantals, Molybdäns und Wolframs sind bevorzugt mit thermostabilen Neutralliganden abgesättigt, wobei die Definition der Thermostabilität eingangs gegeben wurde. Bei dem an das Metallatom gebundenen Halogen handelt es sich bevorzugt um F, Cl, Br und I, bevorzugter um F, Cl und Br und besonders bevorzugt um F oder Cl. Der Silylmethylligand entspricht bevorzugt der Formel XIV,

-CH₂-SiR₃₈R₃₉R₄₀ (XIV),

worin
R₃₈, R₃₉ und R₄₀ unabhängig voneinander C₁-C₁₈-Alkyl, C₅- oder C₆-Cycloalkyl oder unsubstituiertes oder mit C₁-C₆-Alkyl oder C₁-C₆-Alkoxy substituiertes Phenyl oder Benzyl bedeuten.

Bedeuten R₃₈ bis R₄₀ Alkyl, so kann dieses linear oder verzweigt sein und bevorzugt 1 bis 12, besonders bevorzugt 1 bis 8 und insbesondere 1 bis 4 C-Atome enthalten. Besonders bevorzugtes Alkyl ist Methyl und Ethyl.

Bevorzugte Substituenten für R₃₈ bis R₄₀ als Phenyl und Benzyl sind im Rahmen der Definitionen Methyl, Ethyl, Methoxy und Ethoxy.

In einer bevorzugten Ausführungsform bedeuten in der Gruppe der Formel XIV R₃₈ bis R₄₀ C₁-C₄-Alkyl, Phenyl oder Benzyl.

Einige Beispiele für die Gruppe der Formel XIV sind -CH₂-Si(CH₃)₃, -CH₂-Si(C₂H₅)₃, -CH₂-Si(n-C₃H₇)₃, -CH₂-Si(n-C₄H₉)₃, -CH₂-Si(CH₃)₂(n-C₄H₉), -CH₂-Si(CH₃)₂(t-C₄H₉), -CH₂-Si(CH₃)₂(C₂H₅), -CH₂-Si(CH₃)₂[C(CH₃)₂CH(CH₃)₂], -CH₂-Si(CH₃)₂(n-C₁₂H₂₅), -CH₂-Si(CH₃)₂(n-C₁₈H₃₇), -CH₂-Si(C₆H₅)₃, -CH₂-Si(CH₂-C₆H₅)₃, -CH₂-Si(C₆H₅)(CH₃)₂ und -CH₂-Si(CH₂-C₆H₅)(CH₃)₂. Ganz besonders bevorzugt ist -CH₂-Si(CH₃)₃.

Die übrigen Valenzen der Ti(IV), Nb(V)-, Ta(V)-, Mo(VI)- und W(VI)-Atome sind gegebenenfalls mit gleichen oder verschiedenen neutralen Liganden abgesättigt, beispielsweise ausgewählt aus der Gruppe bestehend aus =O, =N-R₄₄, sekundären Aminen mit 2 bis 18 C-Atomen, R₄₅O-, R₄₅S-, Halogen, gegebenenfalls substituiertem Cyclopentadienyl, überbrücktem Biscyclopentadienyl, tridentaten monoanionischen Liganden und Neutralliganden wie zum Beispiel Ethern, Nitrilen, CO und tertiären Phosphinen und Aminen, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl oder Halogen substituiertes Benzyl oder Phenylethyl darstellen; und R₄₄ unsubstituiertes oder mit C₁-C₆-Alkoxy substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl, oder Halogen substituiertes Phenyl, oder unsubstituiertes oder mit C₁-C₆-Alkyl, C₁-C₆-Alkoxy, C₁-C₆-Alkoxymethyl-, C₁-C₆-Alkoxyethyl- oder Halogen substituiertes Benzyl oder Phenylethyl bedeutet, mit der Massgabe, dass im Fall der Titanverbindungen der Ligand nicht =O oder =N-R₄₄ ist.

Die Bedeutungen und Bevorzugungen von R₄₄ und R₄₅, von sekundären Aminen, von Halogen als weiterem Liganden an den Metallatomen oder als Substituent, von Cyclopentadienyl, Ethern, Nitrilen, tertiären Aminen und Phosphinen als Neutralliganden und von tridentaten monoanionischen Liganden sind zuvor angegeben worden. Ebenfalls zuvor angegeben worden sind die Bedeutungen und Bevorzugungen von Alkyl, Alkoxy oder Alkoxy als Substituenten im Alkoxymethyl oder -ethyl.

In einer bevorzugten Ausführungsform entsprechen die Metallverbindungen besonders den Formeln XV, XVa oder XVb, 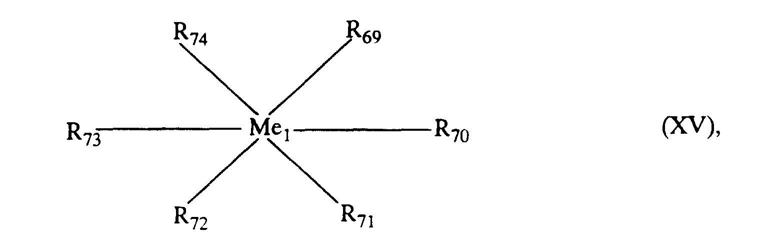 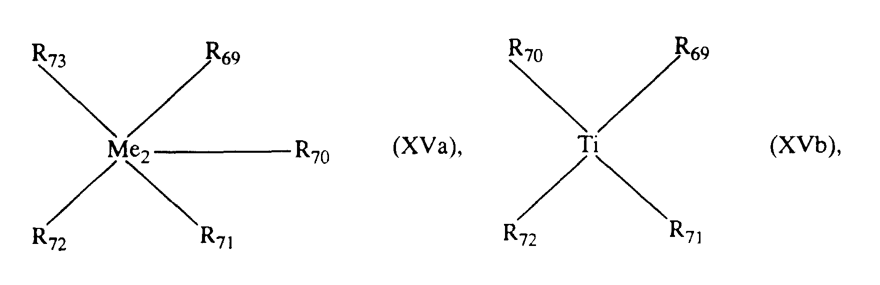 worin
Me₁ für Mo(VI) oder W(VI) steht;
Me₂ für Nb(V) oder Ta(V) steht;
einer der Reste R₆₉ bis R₇₄ einen Rest -CH₂-SiR₃₈R₃₉R₄₀ der Formel XIV bedeutet;
wenigstens einer der Reste R₆₉ bis R₇₄ F, Cl oder Br darstellt;
R₃₈, R₃₉ und R₄₀ unabhängig voneinander C₁-C₆-Alkyl, C₅- oder C₆-Cycloalkyl, oder unsubstituiertes oder mit C₁-C₆-Alkyl oder C₁-C₆-Alkoxy substituiertes Phenyl oder Benzyl bedeuten;
in Formel XV zwei oder jeweils zwei und in Formel XVa zwei der übrigen Reste von R₆₉ bis R₇₄ je zusammen =O oder =N-R₄₄ bedeuten, und R₄₄ unsubstituiertes oder mit C₁-C₆-Alkoxy substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellt, und
die übrigen Reste Sekundäramino mit 2 bis 18 C-Atomen, R₄₅O- oder R₄₅S-, Halogen, unsubstituiertes oder substituiertes Cyclopentadienyl oder überbrücktes Biscyclopentadienyl oder einen Neutralliganden bedeuten, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)-amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)-amino, Di(C₁-C₆-alkyl)amino-C₁-C₃-alkyl oder Halogen substituiertes Benzyl oder Phenylethyl darstellen; oder
in den Formeln XV, XVa und XVb die übrigen Reste unabhängig voneinander Sekundäramino mit 2 bis 18 C-Atomen, R₄₅O- oder R₄₅S-, Halogen, unsubstituiertes oder substituiertes Cyclopentadienyl oder überbrücktes Biscyclopentadienyl oder einen Neutralliganden bedeuten, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellen.

Für die Reste R₆₉ bis R₇₄ gelten die zuvor angegebenen Bevorzugungen.

In einer besonders bevorzugten Ausführungsform werden im erfindungsgemässen Verfahren Metallverbindungen der Formeln XV, XVa oder XVb verwendet, worin R₆₉ einen Rest der Formel XIV -CH₂-SiR₃₈R₃₉R₄₀ und R₇₀ F, Cl oder Br darstellen; und
(a) in Formel XV R₇₁ und R₇₂ sowie R₇₃ und R₇₄ jeweils zusammen den Rest =N-R₄₄ bedeuten, oder R₇₁ und R₇₂ zusammen den Rest =N-R₄₄ bedeuten, und R₇₃ und R₇₄ unabhängig voneinander unsubstituiertes oder substituiertes Cyclopentadienyl, R₄₅-O- oder Halogen darstellen, oder
b) in Formel XVa R₇₁ und R₇₂ zusammen den Rest =N-R₄₄ bedeuten, und R₄₄ unsubstituiertes oder substituiertes Cyclopentadienyl, R₄₅-O- oder Halogen bedeuten, oder in Formel XVa R₇₁, R₇₂ und R₇₃ unabhängig voneinander unsubstituiertes oder substituiertes Cyclopentadienyl, R₄₅-O- oder Halogen bedeuten, oder
c) in Formel XVb R₇₁ und R₇₂ unabhängig voneinander unsubstituiertes oder substituiertes Cyclopentadienyl, R₄₅-O- oder Halogen bedeuten,
wobei R₃₈ bis R₄₄ die voranstehenden Bedeutungen haben. Für R₃₈, R₃₉, R₄₀, R₄₄ und R₄₅ gelten die voranstehenden Bevorzugungen.

Ganz besonders bevorzugt werden im erfindungsgemässen Verfahren Metallverbindungen der Formeln XVI, XVIa, XVIb, XVIc oder XVId verwendet, 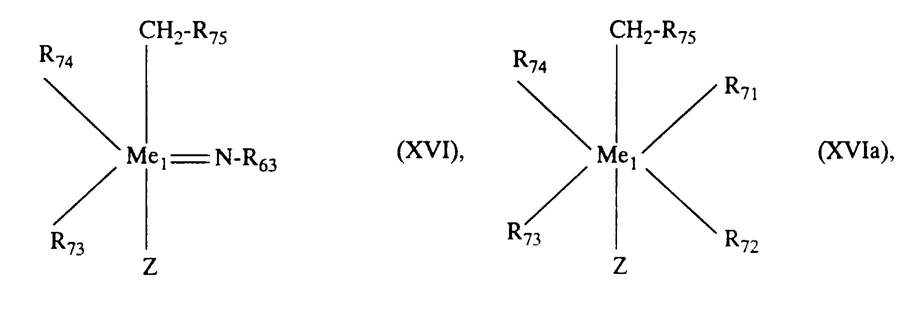 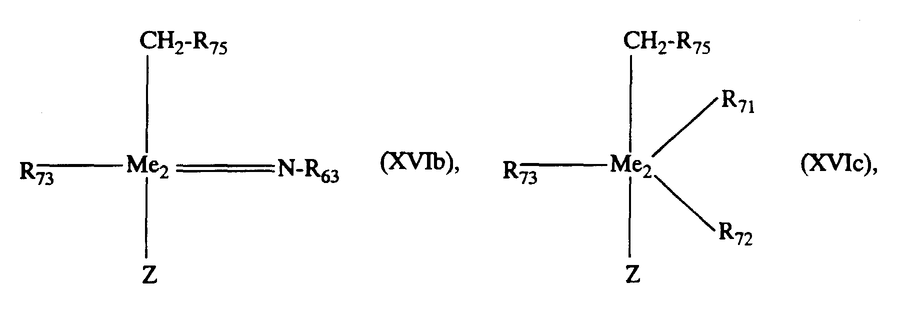 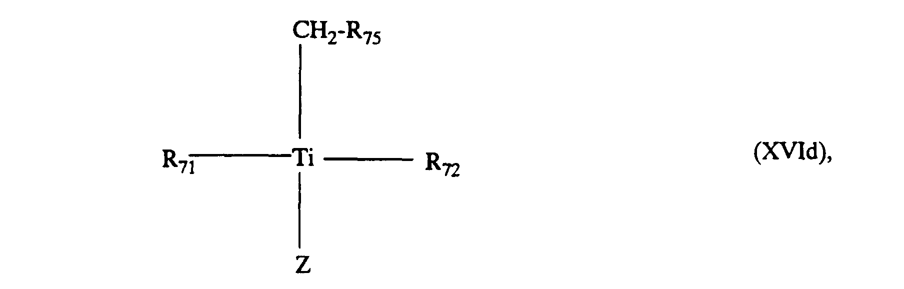 worin
- Me₁: für Mo(VI) oder W(VI) steht;
- Me₂: für Nb(V) oder Ta(V) steht;
- R₇₅: -Si(C₁-C₄-Alkyl)₃ darstellt;
- Z: für F, Cl oder Br steht;
- R₆₃: Phenyl oder mit 1 bis 3 C₁-C₄-Alkyl oder C₁-C₄-Alkoxy substituiertes Phenyl bedeutet,

(a) R₇₃ und R₇₄ in Formel XVI zusammen die Gruppe =NR₆₃ oder einzeln unabhängig voneinander F, Cl, Br, unsubstituiertes oder mit Fluor substituiertes lineares oder verzweigtes C₁-C₄-Alkoxy, unsubstituiertes oder mit C₁-C₄-Alkyl oder C₁-C₄-Alkoxy substituiertes Phenyloxy oder unsubstituiertes oder mit C₁-C₄-Alkyl substituiertes Cyclopentadienyl darstellen;
(b) R₇₁, R₇₂, R₇₃ und R₇₄ in Formel XVIa unabhängig voneinander F, Cl, Br, unsubstituiertes oder mit Fluor substituiertes lineares oder besonders verzweigtes C₁-C₄-Alkoxy, unsubstituiertes oder mit C₁-C₄-Alkyl oder C₁-C₄-Alkoxy substituiertes Phenyloxy oder unsubstituiertes oder mit C₁-C₄-Alkyl substituiertes Cyclopentadienyl bedeuten;
(c) R₇₃ in Formel XVIb F, Cl, Br, unsubstituiertes oder mit Fluor substituiertes lineares oder verzweigtes C₁-C₄-Alkoxy, unsubstituiertes oder mit C₁-C₄-Alkyl oder C₁-C₄-Alkoxy substituiertes Phenyloxy oder unsubstituiertes oder mit C₁-C₄-Alkyl substituiertes Cyclopentadienyl darstellt;
(d) R₇₁, R₇₂ und R₇₃ in Formel XVIc unabhängig voneinander F, Cl, Br, unsubstituiertes oder mit Fluor substituiertes lineares oder besonders verzweigtes C₁-C₄-Alkoxy, unsubstituiertes oder mit C₁-C₄-Alkyl oder C₁-C₄-Alkoxy substituiertes Phenyloxy oder unsubstituiertes oder mit C₁-C₄-Alkyl substituiertes Cyclopentadienyl darstellen; und
(e) R₇₁ und R₇₂ in Formel XVId unabhängig voneinander F, Cl, Br, unsubstituiertes oder mit Fluor substituiertes lineares oder besonders verzweigtes C₁-C₄-Alkoxy, unsubstituiertes oder mit C₁-C₄-Alkyl oder C₁-C₄-Alkoxy substituiertes Phenyloxy oder unsubstituiertes oder mit C₁-C₄-Alkyl substituiertes Cyclopentadienyl darstellen. Das Alkoxy stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpopyloxy und Nonafluorpropyloxy. Bei dem Phenyloxyrest handelt es sich besonders um in den 2,6-Stellungen mit C₁-C₄-Alkyl substituiertes Phenyloxy, zum Beispiel 2,6-Dimethylphenyloxy. Beispiele für substituierte Cyclopentadienylreste sind Mono- bis Pentamethylcyclopentadienyl und Trimethylsilylcyclopentadienyl. R₆₃ stellt bevorzugt Phenyl oder mit C₁-C₄-Alkyl substituiertes Phenyl dar, besonders Phenyl, 3,5-Dimethyl-, 2,6-Dimethyl-, 3,5-Diethyl- und 2,6-Diethylphenyl.

Ganz besonders bevorzugte Verbindungen im erfindungsgemässen Verfahren sind solche der Formeln XVII, XVIIa, XVIIb, XVIIc und XVIId

(R₆₃-N=)₂Me₁XₐCH₂Si(CH₃)₃ (XVII),

(R₆₃-N=)R₇₁Me₁Xₐ(OR₆₂)CH₂Si(CH₃)₃ (XVIIa),

R₇₂R₇₃Me₂Xₐ(OR₆₂)CH₂Si(CH₃)₃ (XVIIb),

R₆₃-N=Me₂Xₐ(OR₆₂)CH₂Si(CH₃)₃ (XVIIc),

R₇₁-TiXₐ(OR₆₂)CH₂Si(CH₃)₃ (XVIId),

worin
- Me₁: für Mo(VI) oder W(VI) steht;
- Me₂: für Nb(V) oder Ta(V) steht;
- Xₐ: für F oder Cl steht;
- R₆₃: Phenyl oder mit 1 oder 2 C₁-C₄-Alkylgruppen substituiertes Phenyl bedeutet;
- R₆₂: verzweigtes gegebenenfalls teilweise oder vollständig mit Fluor substituiertes C₃-oder C₄-Alkyl oder Phenyloxy oder mit 1 bis 3 Methyl- oder Ethylgruppen substituiertes Phenyloxy darstellt;
- R₇₂ und R₇₃: unabhängig voneinander unsubstituiertes oder mit 1 bis 5 Methylgruppen substituiertes Cyclopentadienyl, Xₐ oder R₆₂O- bedeuten; und
- R₇₁: unsubstituiertes oder mit 1 bis 5 Methylgruppen substituiertes Cyclopentadienyl, Xₐ oder R₇₂O- darstellt.

Einige Beispiele für Titan(IV)-, Niob(V)-, Tantal(V)-, Molybdän(VI)- und Wolfram(VI)- verbindungen sind [Cp bedeutet Cyclopentadienyl und Me bedeutet Nb(V) oder Ta(V)]: Cp₂Ti[CH₂Si(CH₃)₃]Cl, (C₆H₅O)CpTi[CH₂Si(CH₃)₃]Cl, Cp₂Me(CH₃)[(CH₂Si(CH₃)₃]Cl, (C₆H₅O)₂CpMe[(CH₂Si(CH₃)₃]Cl, Cp₂Ti[CH₂Si(CH₃)₃]F, CpTi[CH₂Si(CH₃)₃]F₂, (2,6-(CH₃)₂-C₆H₃O)₂Ti[CH₂Si(CH₃)₃]Cl, [(CH₃)₃CO]CpTi[CH₂Si(CH₃)₃]Cl, (2,6-(CH₃)₂-C₆H₃O)Ti[CH₂Si(CH₃)₃]₂Br, [(CH₃)₂CHO]₂Ti[CH₂Si(CH₃)₃]Cl, CpMe[OC(CH₃)(CF₃)₂]₂[(CH₂Si(CH₃)₃]Cl, [(CF₃)₂CHO]₂Ti[CH₂Si(CH₃)₃]Cl, CpMe[OC(CH₃)(CF₃)₂]₂[(CH₂Si(CH₃)₃]Cl, [OC(CH₃)₃]₂Me[CH₂Si(CH₃)₃]Cl₂, (2,6-(CH₃)₂-C₆H₃O)CpTi[CH₂Si(CH₃)₃]Cl, [(CF₃)₂CHO]CpTi[CH₂Si(CH₃)₃]Cl, W(=N-C₆H₅)[(OC(CH₃)₃][CH₂-Si(CH₃)₃]Cl₂, [(CH₃)₂CHO]CpTi[CH₂Si(CH₃)₃]Cl, W(=N-C₆H₅)[(OC(CH₃)₃]₂[CH₂-Si(CH₃)₃]Cl, Cp₂Me[OC(CH₃)₃][(CH₂Si(CH₃)₃]Cl, Me(=N-C₆H₅)[OCH(CH₃)₂][(CH₂Si(CH₃)₃]Cl, Cp₂Me[OC(CH₃)₃][(CH₂Si(CH₃)₃]Cl, Me(=N-C₆H₅)[OCH(CF₃)₂][(CH₂Si(CH₃)₃]Cl, [(CF₃)₂(CH₃)CO]CpTi[CH₂Si(CH₃)₃]Cl, (=N-2,6-(CH₃)₂C₆H₃)CpMe[(CH₂Si(CH₃)₃]Cl, Me[CH₂Si(CH₃)₃][OCH(CH₃)](CF₃O)₂Cl, Mo(=N-2,6-di-i-C₃H₇-C₆H₃)₂[CH₂-Si(CH₃)₃)Cl, CpMe[OC(CH₃)₃]₂[(CH₂Si(CH₃)₃]Br, CpMe[OC(CH₃)₃]₂[(CH₂Si(CH₃)₃]Cl, Me(=N-2,6-di-i-C₃H₇-C₆H₃)[(CH₂Si(CH₃)₃]Cl₂, Me(2,6-di-i-C₃H₇-phenyloxy)₂Me[CH₂Si(CH₃)₃]Cl₂, [(CH₃)₂CHO]₂Ti[CH₂Si(CH₃)₃]F, Mo(=N-C₆H₅)₂[CH₂-Si(CH₃)₃]Cl, Me(2,6-(CH₃)₂phenyloxy)(CH₃O)₂[(CH₂Si(CH₃)₃]Cl, Me(=N-2,6-di-i-C₃H₇-C₆H₃)[(CH₃)₃CO][(CH₂Si(CH₃)₃]Cl, Cp₂Ti[CH₂Si(CH₃)₃]Br, Cp₂Me[(CH₂Si(CH₃)₃]Cl₂, Me(=N-2,6-(CH₃)₂C₆H₃)((CF₃)₂C(CH₃)O)[CH₂Si(CH₃)₃]Cl, Me(=N-2,6-(CH₃)₂C₆H₃)(2,6-(CH₃)₂-C₆H₃O)[CH₂Si(CH₃)₃]Cl, CpTi[CH₂Si(CH₃)₃]Cl₂, (=N-2,6-(CH₃)₂C₆H₃)Me[2,6-(CH₃)₂C₆H₃O)][(CH₂Si(CH₃)₃)]Cl, Ti[CH₂Si(CH₃)₃]Cl₃, Ti[CH₂Si(CH₃)₃]Br₃, Mo(=N-2,6-di-i-C₃H₇-C₆H₃)[(OCH₂C(CH₃)₃]₂[CH₂-Si(CH₃)₃]Cl.

Die erfindungsgemäss zu verwendenden Titan-, Niob-, Tantal-, Molybdän- und Wolframverbindungen sind bekannt oder nach bekannten und analogen Verfahren ausgehend von gegebenenfalls entsprechend substituierten Metallhalogeniden mittels Grignardreaktionen herstellbar [Schrock, R.R., Murdzeck, J.S., Bazan, G.C., Robbins, J., DiMare, M., O'Regan, M., J. Am. Chem. Soc., 112:3875-3886 (1990)].

4. Weitere geeignete photoaktive Einkomponentenkatalysatoren sind Niob(V)- oder Tantal(V)verbindungen, die mindestens zwei Methylgruppen oder zwei monosubstituierte Methylgruppen am Metall gebunden haben, wobei der Substituent kein Wasserstoffatom in α-Stellung enthält. Diese Verbindungen sind auch thermische Katalysatoren.

Die erfindungsgemäss zu verwendenden Niob(V)- und Tantal(V)verbindungen enthalten ein Metallatom. Die am Metall gebundene Methylgruppe oder monosubstituierte Methylgruppe ist mindestens zweimal, besonders bevorzugt zwei- bis fünfmal und insbesondere bevorzugt zwei- oder dreimal als Ligand gebunden. Dieser Ligand entspricht bevorzugt der Formel XI

-CH₂-R (XI),

worin R die zuvor angegebenen Bedeutungen und Bevorzugungen hat.

Die übrigen Valenzen des Niob- und Tantalatoms sind bevorzugt mit thermostabilen Neutralliganden abgesättigt, die in grosser Vielzahl bekannt sind. Die Zahl der Neutralliganden kann auch die stöchiometrisch mögliche Zahl überschreiten (Solvate). Die Definition der Thermostabilität wurde eingangs gegeben.

Die übrigen Valenzen der Nb(V)- und Ta(V)-Atome sind gegebenenfalls mit gleichen oder verschiedenen neutralen Liganden abgesättigt, beispielsweise ausgewählt aus der Gruppe bestehend aus =O, =N-R₄₄, sekundären Aminen mit 2 bis 18 C-Atomen, R₄₅O-, R₄₅S-, Halogen, gegebenenfalls substituiertem Cyclopentadienyl, überbrücktem Biscyclopentadienyl, tridentaten monoanionischen Liganden und Neutralliganden wie zum Beispiel Ethern, Nitrilen, CO und tertiären Phosphinen und Aminen, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl oder Halogen substituiertes Benzyl oder Phenylethyl darstellen; und R₄₄ unsubstituiertes oder mit C₁-C₆-Alkoxy substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl, oder Halogen substituiertes Phenyl, oder unsubstituiertes oder mit C₁-C₆-Alkyl, C₁-C₆-Alkoxy, C₁-C₆-Alkoxymethyl-, C₁-C₆-Alkoxyethyl- oder Halogen substituiertes Benzyl oder Phenylethyl bedeutet.

Die Bedeutungen und Bevorzugungen von R₄₄ und R₄₅, von sekundären Aminen, von Halogen als weiterem Liganden an den Metallatomen oder als Substituent, von Cyclopentadienyl, Ethern, Nitrilen, tertiären Aminen und Phosphinen als Neutralliganden und von tridentaten monoanionischen Liganden sind zuvor angegeben worden. Ebenfalls zuvor angegeben worden sind die Bedeutungen und Bevorzugungen von Alkyl, Alkoxy oder Alkoxy als Substituenten im Alkoxymethyl oder -ethyl.

In einer bevorzugten Ausführungsform entsprechen die Niob- und Tantalverbindungen besonders der Formel XVIII, 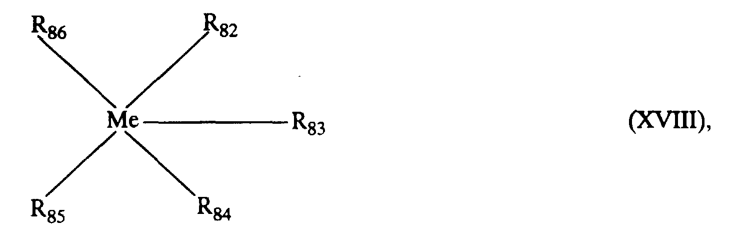 worin
Me für Nb(V) oder Ta(V) steht,
mindestens zwei, bevorzugt 2 oder 3, der Reste R₈₂ bis R₈₆ einen Rest -CH₂-R der Formel XI bedeuten, worin R die zuvor angegebenen Bedeutungen und Bevorzugungen hat;
zwei der übrigen Reste von R₈₂ bis R₈₆ zusammen =O oder =N-R₄₄ bedeuten, und R₄₄ unsubstituiertes oder mit C₁-C₆-Alkoxy substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellt; und/oder
die übrigen Reste von R₈₂ bis R₈₆ unabhängig voneinander Sekundäramino mit 2 bis 18 C-Atomen, R₄₅O-_{,} R₄₅S-, Halogen, Cyclopentadienyl oder überbrücktes Biscyclopentadienyl oder einen Neutralliganden bedeuten, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellen.

In einer besonders bevorzugten Ausführungsform werden Niob- und Tantalverbindungen der Formel XVIII verwendet, worin
a) R₈₂ bis R₈₆ je einen Rest der Formel XI -CH₂-R bedeuten, oder
b) R₈₂ und R₈₃ je einen Rest der Formel XI -CH₂-R darstellen, R₈₄ und R₈₅ zusammen den Rest =N-R₄₄ bedeuten und R₈₆ unsubstituiertes oder substituiertes Cyclopentadienyl, R₄₅-O- oder Halogen darstellt, oder
c) R₈₂, R₈₃ und R₈₄ je einen Rest der Formel XI -CH₂-R darstellen, und R₈₅ und R₈₆ zusammen den Rest =N-R₄₄ bedeuten, oder
R₈₂, R₈₃, R₈₄ und R₈₅ einen Rest der Formel XI -CH₂-R darstellen und R₈₆ unsubstituiertes oder substituiertes Cyclopentadienyl, R₄₅-O- oder Halogen bedeutet,
wobei R, R₄₄ und R₄₅ die voranstehenden Bedeutungen haben. Für R, R₄₄ und R₄₅ gelten die voranstehenden Bevorzugungen.

Ganz besonders bevorzugt werden im erfindungsgemässen Verfahren Niob- und Tantalverbindungen der Formeln IXX, IXXa oder IXXb verwendet, 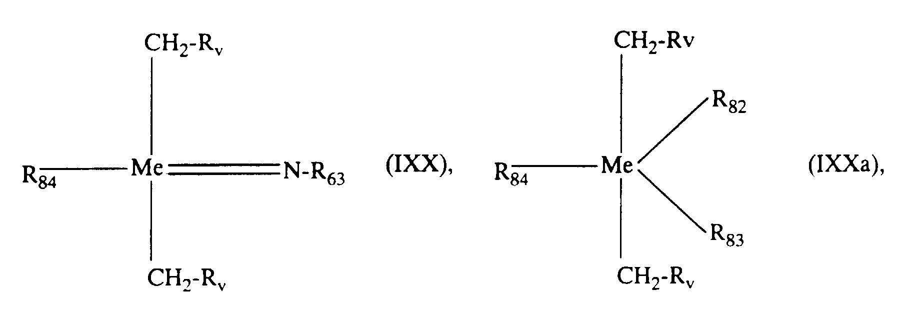 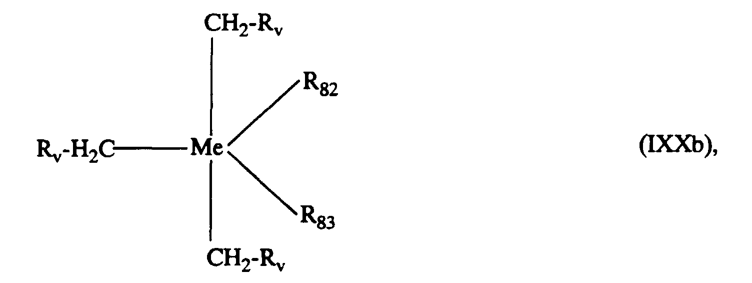 worin
Me für Nb(V) oder Ta(V) steht,
Rᵥ H, -C(CH₃)₃, -C(CH₃)₂-C₆H₅, -C₆H₅ oder -Si(C₁-C₄-Alkyl)₃ darstellt,
R₆₃ Phenyl oder mit 1 bis 3 C₁-C₄-Alkyl oder C₁-C₄-Alkoxy substituiertes Phenyl bedeutet,
R₈₄ in Formel IXX die Gruppe -CH₂-R oder F, Cl, Br, unsubstituiertes oder mit Fluor substituiertes lineares oder besonders verzweigtes C₁-C₄-Alkoxy, unsubstituiertes oder mit C₁-C₄-Alkyl oder C₁-C₄-Alkoxy substituiertes Phenyloxy oder unsubstituiertes oder mit C₁-C₄-Alkyl substituiertes Cyclopentadienyl darstellt;
R₈₂, R₈₃ und R₈₄ in Formel IXXa unabhängig voneinander F, Cl, Br, unsubstituiertes oder mit Fluor substituiertes lineares oder besonders verzweigtes C₁-C₄-Alkoxy, unsubstituiertes oder mit C₁-C₄-Alkyl oder C₁-C₄-Alkoxy substituiertes Phenyloxy oder unsubstituiertes oder mit C₁-C₄-Alkyl substituiertes Cyclopentadienyl bedeuten; und
R₈₆ und R₈₃ in Formel IXXb unabhängig voneinander F, Cl, Br, unsubstituiertes oder mit Fluor substituiertes lineares oder besonders verzweigtes C₁-C₄-Alkoxy, unsubstituiertes oder mit C₁-C₄-Alkyl oder C₁-C₄-Alkoxy substituiertes Phenyloxy oder unsubstituiertes oder mit C₁-C₄-Alkyl substituiertes Cyclopentadienyl darstellen. Das Alkoxy stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpopyloxy oder Nonafluorpropyloxy.

Einige Beispiele für Niob(V)- und Tantal(V)verbindungen sind [Cp bedeutet Cyclopentadienyl und Me bedeutet Nb(V) oder Ta(V)]: Cp₂Me[(CH₂C(CH₃)₂-C₆H₅)]₃, Me[CH₂Si(CH₃)₃]₃[OCH(CH₃)₂]₂, CpMe[OCH(CH₃)₂]₂[(CH₂-C₆H₅)]₂, CpMe[OCH(CF₃)₂]₂[(CH₂-C₆H₅)]₂, Cp₂Me[(CH₂Si(CH₃)₃)]₃, Cp₂Me(CH₃)₂[OC(CH₃)₃], Me(2,6-(CH₃)₂phenyloxy)₂(CH₃)₃, Me[CH₂Si(CH₃)₃]₃[OCH₂C(CH₃)₃]₃, Me(=N-2,6-(CH₃)₂C₆H₃)[(CH₂-C₆H₅)]₃, Cp₂Me(CH₃)₃, Cp₂Me[(CH₂-C₆H₅)]₃, Me(=N-C₆H₅)[OC(CH₃)₃][(CH₂Si(CH₃)₃)]₂, Me[CH₂Si(CH₃)₃]₅, Me[CH₂Si(CH₃)₃]₃Cl₂, Me(=N-2,6-di-i-C₃H₇-C₆H₃)[(CH₂-C₆H₅)]₃, Me(=N-2,6-(CH₃)₂C₆H₃)[(CH₂-C₆H₅)]₃, Cp₂Me[3,5-(CH₃)₂C₆H₃O)][(CH₂Si(CH₃)₃)]₂, Me(2,6-di-i-C₃H₇-phenyloxy)₂(CH₃)₃, Me(=N-C₆H₅)[OC(CH₃)(CF₃)₂][(CH₂Si(CH₃)₃)]₂, CpMe[OCH(CH₃)₂]₂[(CH₂Si(CH₃)₃)]₂, Me(=N-2,6-di-i-C₃H₇-C₆H₃)[(CH₂C(CH₃)₂-C₆H₅)]₂Cl, Me(=N-2,6-(CH₃)₂C₆H₃)(CH₃)₃.

Die erfindungsgemäss zu verwendenden Niob- und Tantalverbindungen sind bekannt oder nach bekannten und analogen Verfahren ausgehend von den gegebenenfalls substituierten Metallhalogeniden über Grignardreaktionen und/oder Substitutionsreaktionen herstellbar [Schrock, R.R., Murdzeck, J.S., Bazan, G.C., Robbins, J., DiMare, M., O'Regan, M., J. Am. Chem. Soc., 112:3875-3886 (1990); Schrock, R.R., J. Am. Chem. Soc. 100:3359 (1978)].

5. Weitere geeignete photoaktive Einkomponentenkatalysatoren sind Titan(IV)verbindungen, die mindestens zwei Methylgruppen oder zwei monosubstituierte Methylgruppen am Metall gebunden enthalten, wobei der Substituent kein Wasserstoffatom in α-Stellung enthält. Diese Verbindungen sind auch thermische Katalysatoren.

Die erfindungsgemäss zu verwendenden Titan(IV)verbindungen enthalten ein Metallatom. Die am Metall gebundene Methylgruppe oder monosubstituierte Methylgruppe ist mindestens zweimal, besonders bevorzugt zwei- bis viermal und insbesondere bevorzugt zwei- oder dreimal als Ligand gebunden. Dieser Ligand entspricht bevorzugt der Formel XI,

-CH₂-R (XI),

worin R die zuvor genannten Bedeutungen und Bevorzugungen hat.

Die übrigen Valenzen des Titanatoms sind bevorzugt mit thermostabilen Neutralliganden abgesättigt, die in grosser Vielzahl bekannt sind. Die Zahl der Neutralliganden kann auch die stöchiometrisch mögliche Zahl überschreiten (Solvate). Die Definition der Thermostabilität wurde eingangs gegeben.

Die übrigen Valenzen der Ti(IV)-Atome sind gegebenenfalls mit gleichen oder verschiedenen neutralen Liganden abgesättigt, beispielsweise ausgewählt aus der Gruppe bestehend aus sekundären Aminen mit 2 bis 18 C-Atomen, R₄₅O-, R₄₅S-, Halogen, gegebenenfalls substituiertem Cyclopentadienyl, überbrücktem Biscyclopentadienyl, tridentaten monoanionischen Liganden und Neutralliganden wie zum Beispiel Ethern, Nitrilen, CO und tertiären Phosphinen und Aminen, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl oder Halogen substituiertes Benzyl oder Phenylethyl darstellen.

Die Bedeutungen und Bevorzugungen von R₄₅, von sekundären Aminen, von Halogen als weiterem Liganden an den Metallatomen oder als Substituent, von Cyclopentadienyl, Ethern, Nitrilen, tertiären Aminen und Phosphinen als Neutralliganden und von tridentaten monoanionischen Liganden sind zuvor angegeben worden. Ebenfalls zuvor angegeben worden sind die Bedeutungen und Bevorzugungen von Alkyl, Alkoxy oder Alkoxy als Substituenten im Alkoxymethyl oder -ethyl.

In einer bevorzugten Ausführungsform entsprechen die Titan(IV)verbindungen besonders der Formel XX, 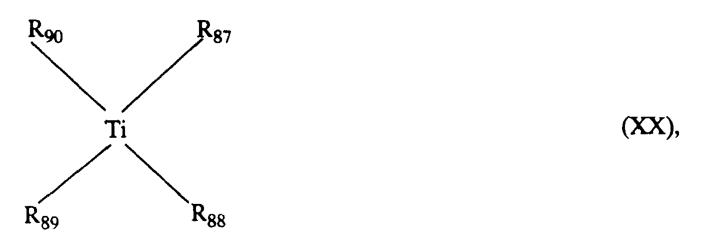 worin
mindestens zwei, bevorzugt 2 oder 3 der Reste R₈₇ bis R₉₀ einen Rest -CH₂-R der Formel XI bedeuten, worin R die zuvor genannten Bedeutungen und Bevorzugungen hat; und die übrigen Reste R₈₇ bis R₉₀ Sekundäramino mit 2 bis 18 C-Atomen, R₄₅O-, R₄₅S-, Halogen, Cyclopentadienyl oder überbrücktes Biscyclopentadienyl oder einen Neutralliganden bedeuten, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellen.

In einer besonders bevorzugten Ausführungsform werden im erfindungsgemässen Verfahren Titan(IV)verbindungen der Formel XX verwendet, worin
a) R₈₇ bis R₉₀ einen Rest der Formel XI -CH₂-R bedeuten, oder
b) R₈₇ und R₈₈ einen Rest der Formel XI -CH₂-R darstellen, und R₈₉ und R₉₀ unabhängig voneinander unsubstituiertes oder substituiertes Cyclopentadienyl, R₄₅-O- oder Halogen bedeuten, oder
c) R₈₇, R₈₈ und R₈₉ einen Rest der Formel XI -CH₂-R darstellen, und R₉₀ unsubstituiertes oder substituiertes Cyclopentadienyl, R₄₅-O- oder Halogen bedeutet,
wobei R und R₄₅ die voranstehenden Bedeutungen haben. Für R und R₄₅ gelten die voranstehenden Bevorzugungen.

Ganz besonders bevorzugt werden im erfindungsgemässen Verfahren Titan(IV)verbindungen der Formeln XXIa oder XXIb verwendet, 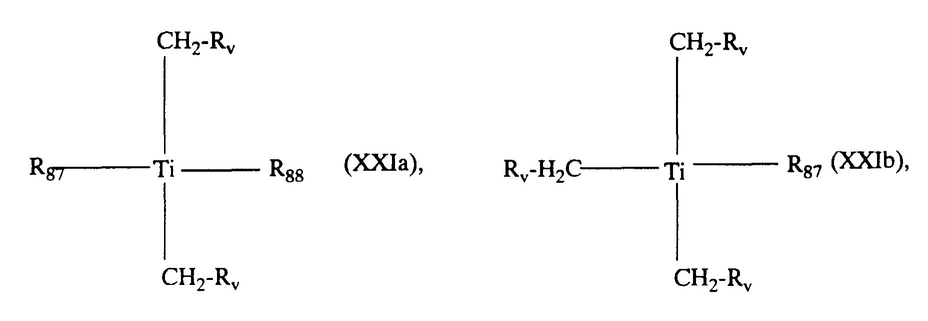 worin
Rᵥ H, -C(CH₃)₃, -C(CH₃)₂-C₆H₅, -C₆H₅ oder -Si(C₁-C₄-Alkyl)₃ darstellt, und
R₈₇ und R₈₈ unabhängig voneinander F, Cl, Br, unsubstituiertes oder mit Fluor substituiertes lineares oder besonders verzweigtes C₁-C₄-Alkoxy, unsubstituiertes oder mit C₁-C₄-Alkyl oder C₁-C₄-Alkoxy substituiertes Phenyloxy oder unsubstituiertes oder mit C₁-C₄-Alkyl substituiertes Cyclopentadienyl darstellen. Das Alkoxy stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpropyloxy und Nonafluorpropyloxy.

In einer bevorzugten Ausführungsform der Erfindung enthalten die Titan(IV)verbindungen ein an das Titan gebundenes Halogenatom, besonders F, Cl oder Br, wenn in der Gruppe -CH₂-R der Rest R für -SiR₃₈R₃₉R₄₀ steht. Ganz besonders bevorzugt sind dann die Verbindungen der Formel XXII, 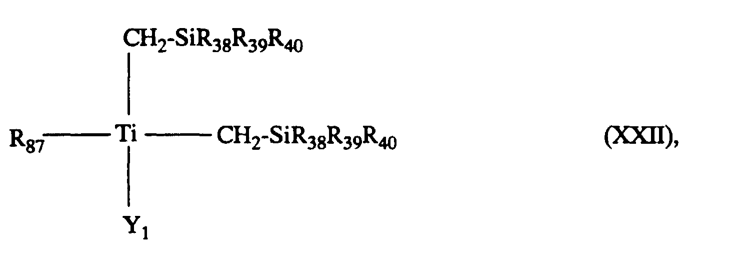 worin
Y₁ für F, Cl oder Br steht,
R₃₈, R₃₉ und R₄₀ unabhängig voneinander C₁-C₁₈-Alkyl, C₅- oder C₆-Cycloalkyl oder unsubstituiertes oder mit C₁-C₆-Alkyl oder C₁-C₆-Alkoxy substituiertes Phenyl oder Benzyl bedeuten; und
R₈₇ die Gruppe -CH₂-SiR₃₈R₃₉R₄₀, F, Cl, Br, unsubstituiertes oder mit Fluor substituiertes lineares oder besonders verzweigtes C₁-C₄-Alkoxy, unsubstituiertes oder mit C₁-C₄-Alkyl oder C₁-C₄-Alkoxy substituiertes Phenyloxy oder unsubstituiertes oder mit C₁-C₄-Alkyl substituiertes Cyclopentadienyl darstellt. R₃₈, R₃₉ und R₄₀ bedeuten bevorzugt C₁-C₄-Alkyl, Phenyl oder Benzyl, und R₈₇ stellt bevorzugt Cl, unsubstituiertes oder mit Fluor substituiertes C₃- oder C₄-Alkyl oder unsubstituiertes oder mit C₁-C₄-Alkyl oder C₁-C₄-Alkoxy substituiertes Phenyl oder Benzyl dar.

Einige Beispiele für Titan(IV)verbindungen sind [Cp bedeutet Cyclopentadienyl]: Ti[CH₂Si(CH₃)₃]₄, Ti[OCH(CF₃)₂]₂[(CH₂Si(CH₃)₃)]₂, CpTi[(CH₂C(CH₃)₂-C₆H₅)]₂Cl, CpTi[(CH₂-C₆H₅)]₃, TiCl₂[CH₂Si(CH₃)₃)]₂, [OCH(CF₃)₂]Ti[(CH₂-C₆H₅)]₃, CpBrTi[(CH₂C(CH₃)₂-C₆H₅)]₂, CpTi[3,5-dimethylC₆H₃O)][(CH₂Si(CH₃)₃)]₂, Ti[OCH(CH₃)₂]₂[(CH₂-C₆H₅)]₂, ClTi[OCH(CH₃)₂][(CH₂Si(CH₃)₃)]₂, CpTi[OCH(CF₃)₂][(CH₂-C₆H₅)]₂, CpTi(Methyl)₃, CpTi(Methyl)₂[OCH(CH₃)₂], Ti[CH₂Si(CH₃)₃]₂Br₂, Ti(2,6-Dimethylphenyloxy)₂(CH₃)₂, Ti[CH₂Si(CH₃)₃]₃[OCH(CH₃)], Ti(2,6-Diisopropylphenyloxy)₂(CH₃)₂, Cp₂Ti[CH₂Si(CH₃)₃)₂, Cp₂Ti[CH₂-C₆H₅]₂.

Die erfindungsgemäss zu verwendenden Titan(IV)verbindungen sind bekannt oder nach bekannten und analogen Verfahren ausgehend von den Metallhalogeniden über Grignardreaktionen oder andere bekannte Substitutionsreaktionen herstellbar [siehe Clauss, K., Bestian, H., Justus Liebigs Ann. Chem. 654:8-19 (1962)].

6. Andere geeignete photokatalytisch aktive Verbindungen sind Ruthenium- oder Osmiumverbindungen, die mindestens eine Phosphingruppe, mindestens einen photolabilen Liganden, und gegebenenfalls Neutralliganden an das Metallatom gebunden enthalten, wobei insgesamt 2 bis 5 Liganden gebunden sind, und die Säureanionen zum Ladungsausgleich enthalten. Insgesamt bedeutet im Rahmen der Erfindung die Summe der Phosphingruppen, photolabilen Liganden und Neutralliganden. Die Neutralliganden werden auch als nicht-photolabile Liganden bezeichnet. Insgesamt sind bevorzugt 2 bis 4, und besonders bevorzugt 2 oder 3 Liganden gebunden.

Die Osmiumverbindungen sind auch thermisch wirksame Katalysatoren. Auch die Rutheniumverbindungen sind thermische Katalysatoren, wenn die Phosphingruppe keine linearen Alkyl- oder Alkoxygruppen enthält, sondern raumerfüllende Gruppen, zum Beispiel sekundäre und tertiäre Alkyl- oder Alkoxygruppen (i-Propyl, i- und t-Butyl), oder Cycloalkylgruppen, oder unsubstituierte oder mit 1 bis 3 C₁-C₄-Alkyl oder -Alkoxy substituierte Phenylgruppen oder Phenyloxygruppen.

Bei der Phosphingruppe handelt es sich bevorzugt um tertiäre Phosphine und Phosphite mit 3 bis 40, bevorzugter 3 bis 30 und besonders bevorzugt 3 bis 24 C-Atomen.

Die übrigen Valenzen des Rutheniums und Osmiums sind bevorzugt mit thermostabilen Neutralliganden abgesättigt, die in grosser Vielzahl bekannt sind. Die Zahl der Neutralliganden kann auch die stöchiometrisch mögliche Zahl überschreiten (Solvate).

Bei den erfindungsgemäss zu verwendenden Ruthenium- und Osmiumverbindungen kann ein Monophosphin ein bis dreimal und bevorzugt zwei oder dreimal, und ein Diphosphin einmal an das Metallatom gebunden sein. In den Ruthenium- und Osmiumkatalysatoren sind bevorzugt 1 bis 2 photolabile Liganden gebunden. Die Phosphinliganden entsprechen bevorzugt den Formeln XXIII und XXIIIa,

PR₉₁R₉₂R₉₃ (XXIII),

R₉₁R₉₂P-Z₁-PR₉₁R₉₂ (XXIIIa),

worin R₉₁, R₉₂ und R₉₃ unabhängig voneinander H, C₁-C₂₀-Alkyl, C₁-C₂₀-Alkoxy, unsubstituiertes oder mit C₁-C₆-Alkyl, C₁-C₆-Halogenalkyl oder C₁-C₆-Alkoxy substituiertes C₄-C₁₂-Cycloalkyl oder Cycloalkoxy, oder unsubstituiertes oder mit C₁-C₆-Alkyl, C₁-C₆-Halogenalkyl oder C₁-C₆-Alkoxy substituiertes C₆-C₁₆-Aryl oder C₆-C₁₆-Aryloxy, oder unsubstituiertes oder mit C₁-C₆-Alkyl, C₁-C₆-Halogenalkyl oder C₁-C₆-Alkoxy substituiertes C₇-C₁₆-Aralkyl oder C₇-C₁₆-Aralkyloxy darstellen; die Reste R₉₁ und R₉₂ gemeinsam unsubstituiertes oder mit C₁-C₆-Alkyl, C₁-C₆-Halogenalkyl oder C₁-C₆-Alkoxy substituiertes Tetra- oder Pentamethylen, oder Tetra- oder Pentamethylendioxyl bedeuten, oder unsubstituiertes oder mit C₁-C₆-Alkyl, C₁-C₆-Halogenalkyl oder C₁-C₆-Alkoxy substituiertes und mit 1 oder 2 1,2-Phenylen kondensiertem Tetra- oder Pentamethylen, oder Tetra- oder Pentamethylendioxyl darstellen, oder unsubstituiertes oder mit C₁-C₆-Alkyl, C₁-C₆-Halogenalkyl oder C₁-C₆-Alkoxy substituiertes und in den 1,2- und 3,4-Stellungen mit 1,2-Phenylen kondensiertes Tetramethylendioxyl darstellen, und R₉₃ die zuvor angegebene Bedeutung hat; und
Z₁ lineares oder verzweigtes, unsubstituiertes oder mit C₁-C₄-Alkoxy substituiertes C₂-C₁₂-Alkylen, unsubstituiertes oder mit C₁-C₄-Alkyl oder C₁-C₄-Alkoxy substituiertes 1,2- oder 1,3-Cycloalkylen mit 4 bis 8 C-Atomen, oder unsubstituiertes oder mit C₁-C₄-Alkyl oder C₁-C₄-Alkoxy substituiertes 1,2 oder 1,3-Heterocycloalkylen mit 5 oder 6 Ringgliedern und einem Heteroatom aus der Gruppe O oder N bedeutet.

Bei den Resten R₉₁, R₉₂ und R₉₃ handelt es sich bevorzugt um gleiche Reste.

Sofern R₉₁, R₉₂ und R₉₃ substituiert sind, handelt es sich bei den Substituenten bevorzugt um C₁-C₄-Alkyl, C₁-C₄-Halogenalkyl oder C₁-C₄-Alkoxy. Halogen bedeutet bevorzugt Cl und besonders bevorzugt F. Beispiele für bevorzugte Substituenten sind Methyl, Methoxy, Ethyl, Ethoxy und Trifluormethyl. R₉₁, R₉₂ und R₉₃ sind bevorzugt mit 1 bis 3 Substituenten substituiert.

R₉₁, R₉₂ und R₉₃ kann als Alkyl linear oder verzweigt sein und bevorzugt 1 bis 12, bevorzugter 1 bis 8, und besonders bevorzugt 1 bis 6 C-Atome enthalten. Beispiele für Alkyl sind Methyl, Ethyl, n- und i-Propyl, n-, i- und t-Butyl, die Isomeren von Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl und Eicosyl. Bevorzugte Beispiele sind Methyl, Ethyl, n- und i-Propyl, n-, i- und t-Butyl, 1-, 2- oder 3-Pentyl und 1-, 2-, 3- oder 4-Hexyl.

R₉₁, R₉₂ und R₉₃ kann als Alkoxy linear oder verzweigt sein und bevorzugt 1 bis 12, bevorzugter 1 bis 8, und besonders bevorzugt 1 bis 6 C-Atome enthalten. Beispiele für Alkoxy sind Methoxy, Ethoxy, n- und i-Propyloxy, n-, i- und t-Butyloxy, die Isomeren von Pentyloxy, Hexyloxy, Heptyloxy, Octyloxy, Nonyloxy, Decyloxy, Undecyloxy, Dodecyloxy, Tridecyloxy, Tetradecyloxy, Pentadecyloxy, Hexadecyloxy, Heptadecyloxy, Octadecyloxy und Eicosyloxy. Bevorzugte Beispiele sind Methoxy, Ethoxy, n- und i-Propyloxy, n-, i- und t-Butyloxy, 1-, 2- oder 3-Pentyloxy und 1-, 2-, 3- oder 4-Hexyloxy.

Bedeuten R₉₁, R₉₂ und R₉₃ Cycloalkyl, so handelt es sich bevorzugt um C₅-C₈-Cycloalkyl, und besonders bevorzugt um C₅- oder C₆-Cycloalkyl. Einige Beispiele sind Cyclobutyl, Cycloheptyl, Cyclooctyl und besonders Cyclopentyl und Cyclohexyl. Beispiele für substituiertes Cycloalkyl sind Methyl-, Dimethyl-, Trimethyl-, Methoxy-, Dimethoxy-, Trimethoxy-, Trifluormethyl-, Bistrifluormethyl und Tristrifluormethylcyclopentyl und -cyclohexyl.

Bedeuten R₉₁, R₉₂ und R₉₃ Cycloalkyloxy, so handelt es sich bevorzugt um C₅-C₈-Cycloalkyloxy, und besonders bevorzugt um C₅- oder C₆-Cycloalkyloxy. Einige Beispiele sind Cyclobutyloxy, Cycloheptyloxy, Cyclooctyloxy und besonders Cyclopentyloxy und Cyclohexyloxy. Beispiele für substituiertes Cycloalkyl sind Methyl-, Dimethyl-, Trimethyl-, Methoxy-, Dimethoxy-, Trimethoxy-, Trifluormethyl-, Bistrifluormethyl und Tristrifluormethylcyclopentyloxy und -cyclohexyloxy.

Bedeuten R₉₁, R₉₂ und R₉₃ Aryl, so handelt es sich bevorzugt um C₆-C₁₂-Aryl und besonders bevorzugt um Phenyl oder Naphthyl. Beispiele für substituiertes Aryl sind Methyl-, Dimethyl-, Trimethyl-, Methoxy-, Dimethoxy-, Trimethoxy-, Trifluormethyl-, Bistrifluormethyl und Tristrifluormethylphenyl.

Bedeuten R₉₁, R₉₂ und R₉₃ Aryloxy, so handelt es sich bevorzugt um C₆-C₁₂-Aryloxy und besonders bevorzugt um unsubstituiertes oder substituiertes Phenyloxy oder Naphthyloxy.

Beispiele für substituiertes Aryloxy sind Methyl-, Dimethyl-, Trimethyl-, Methylisopropyl-, Isopropyl-, Diisopropyl-, Triisopropyl-, Tertiärbutyl-, Methyltertiärbutyl-, Ditertiärbutyl-, Tritertiärbutyl-, Methoxy-, Dimethoxy-, Trimethoxy-, Trifluormethyl-, Bistrifluormethyl und Tristrifluormethylphenyloxy.

Bedeuten R₉₁, R₉₂ und R₉₃ Aralkyl, so handelt es sich bevorzugt um C₇-C₁₃-Aralkyl, wobei die Alkylengruppe im Aralkyl bevorzugt Methylen darstellt. Besonders bevorzugt stellt das Aralkyl Benzyl dar. Beispiele für substituiertes Aralkyl sind Methyl-, Dimethyl-, Trimethyl-, Methoxy-, Dimethoxy-, Trimethoxy-, Trifluormethyl-, Bistrifluormethyl und Tristrifluormethylbenzyl.

Bedeuten R₉₁, R₉₂ und R₉₃ Aralkyloxy, so handelt es sich bevorzugt um unsubstituiertes oder substituiertes C₇-C₁₃-Aralkyloxy, wobei die Alkylengruppe im Aralkyloxy bevorzugt Methylen darstellt. Besonders bevorzugt stellt das Aralkyloxy unsubstituiertes oder substituiertes Benzyloxy dar. Beispiele für substituiertes Aralkyloxy sind Methyl-, Dimethyl-, Trimethyl-, Methoxy-, Dimethoxy-, Trimethoxy-, Trifluormethyl-, Bistrifluormethyl und Tristrifluormethylbenzyloxy.

Beispiele für an das P-Atom gebundenes, gegebenenfalls substituiertes beziehungsweise kondensiertes Tetra- oder Pentamethylen sind

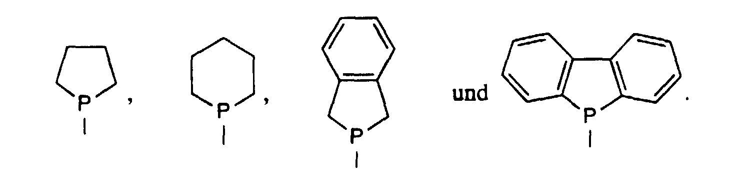

Andere geeignete Phosphine sind mit einer =PRa-Gruppe überbrückte Cycloaliphate mit 6 bis 8 Ringkohlenstoffatomen, zum Beispiel 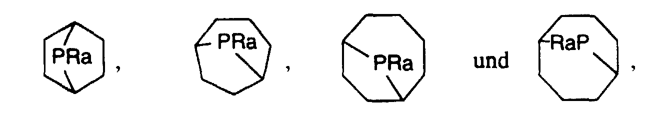 worin Ra C₁-C₆-Alkyl, Cyclohexyl, Benzyl, unsubstituiertes oder mit 1 oder 2 C₁-C₄-Alkyl substituiertes Phenyl bedeutet.

Bei Z₁ als linearem oder verzweigtem Alkylen handelt es sich bevorzugt um 1,2-Alkylen oder 1,3-Alkylen mit vorzugsweise 2 bis 6 C-Atomen, zum Beispiel um Ethylen, 1,2-Propylen oder 1,2-Butylen.

Beispiele für Z₁ als Cycloalkylen sind 1,2- und 1,3-Cyclopentylen und 1,2- oder 1,3-Cyclohexylen. Beispiele für Z₁ als Heterocycloalkylen sind 1,2- und 1,3-Pyrrolidin, 1,2- und 1,3-Piperidin, und 1,2- und 1,3-Tetrahydrofuran.

In einer bevorzugten Ausführungsform entsprechen die Phosphinliganden der Formel XXIII, worin R₉₁, R₉₂ und R₉₃ unabhängig voneinander H, C₁-C₆-Alkyl, unsubstituiertes oder mit C₁-C₄-Alkyl substituiertes Cyclopentyl oder Cyclohexyl, oder unsubstituiertes oder mit C₁-C₄-Alkyl, C₁-C₄-Alkoxy oder Trifluormethyl substituiertes Phenyl oder unsubstituiertes oder mit C₁-C₄-Alkyl, C₁-C₄-Alkoxy oder Trifluormethyl substituiertes Benzyl darstellen. Besonders bevorzugte Beispiele für Phosphinliganden der Formel XXIII sind (C₆H₅)₃P, (C₆H₅CH₂)₃P, (C₅H₁₁)₃P, (CH₃)₃P, (C₂H₅)₃P, (n-C₃H₇)₃P, (i-C₃H₇)₃P, (n-C₄H₉)₃P, (C₆H₅)₂HP, (C₆H₅CH₂)₂HP, (C₅H₁₁)₂HP, (C₂H₅)₂HP, (n-C₃H₇)₂HP, (i-C₃H₇)₂HP, (n-C₄H₉)₂HP, (C₆H₅)H₂P, (n-C₄H₉)H₂P, (C₆H₅CH₂)H₂P, (C₅H₁₁)H₂P, (CH₃)H₂P, (CH₃)₂HP, (C₂H₅)H₂P, (n-C₃H₇)H₂P, (i-C₃H₇)H₂P, PH₃, (2-Methyl-C₆H₄)₃P, (3-CH₃-C₆H₄)₃P, (4-C₂H₅-C₆H₄)₃P, (4-CH₃-C₆H₄)₃P, (2,4-Di-CH₃-C₆H₃)₃P, (2,6-Di-CH₃-C₆H₃)₃P, (2-C₂H₅-C₆H₄)₃P, (3-C₂H₅-C₆H₄)₃P, (2-n-C₃H₇-C₆H₄)₃P, (3-n-C₃H₇-C₆H₄)₃P, (4-n-C₃H₇-C₆H₄)₃P, (2-i-C₃H₇-C₆H₄)₃P, (3-i-C₃H₇-C₆H₄)₃P, (4-i-C₃H₇-C₆H₄)₃P, (2-n-C₄H₉-C₆H₄)₃P, (3-n-C₄H₉-C₆H₄)₃P, (4-n-C₄H₉-C₆H₄)₃P, (2-i-C₄H₉-C₆H₄)₃P, (3-i-C₄H₉-C₆H₄)₃P, (4-i-C₄H₉-C₆H₄)₃P, (2-t-C₄H₉-C₆H₄)₃P, (3-t-C₄H₉-C₆H₄)₃P, (4-t-C₄H₉-C₆H₄)₃P, (2-CH₃-6-t-C₄H₉-C₆H₃)₃P, (3-CH₃-6-t-C₄H₉-C₆H₃)₃P, (3-CH₃-6-t-C₄H₉-C₆H₃)₃P, (2,6-Di-t-C₄H₉-C₆H₃)₃P, (2,3-Di-t-C₄H₉-C₆H₃)₃P, (C₆H₁₁)₃P, (C₆H₁₁)₂HP, (C₅H₉)P, (C₅H₉)₂HP und (2,4-Di-t-C₄H₉-C₆H₃)₃P.

In einer anderen bevorzugten Ausführungsform entsprechen die Phosphinliganden der Formel XXIII, worin R₉₁, R₉₂ und R₉₃ unabhängig voneinander H, C₁-C₆-Alkoxy, unsubstituiertes oder mit C₁-C₄-Alkyl substituiertes Cyclopentyloxy oder Cyclohexyloxy, oder unsubstituiertes oder mit C₁-C₄-Alkyl, C₁-C₄-Alkoxy oder Trifluormethyl substituiertes Phenyloxy oder Phenyl oder unsubstituiertes oder mit C₁-C₄-Alkyl, C₁-C₄-Alkyl, C₁-C₄-Alkoxy oder Trifluormethyl substituiertes Benzyloxy darstellen.

Beispiele für Phosphite sind (CH₃O)₃P, (C₂H₅O)₃P, (n-C₃H₇O)₃P, (i-C₃H₇O)₃P, (n-C₄H₉O)₃P, (i-C₄H₉O)₃P, (t-C₄H₉O)₃P, (C₆H₅O)₃P, (2-CH₃-C₆H₄O)₃P, (3-CH₃-C₆H₄O)₃P, (4-CH₃-C₆H₄O)₃P, (2,4-Di-CH₃-C₆H₃O)₃P, (2,6-Di-CH₃-C₆H₃O)₃P, (2-C₂H₅-C₆H₄O)₃P, (3-C₂H₅-C₆H₄O)₃P, (4-C₂H₅-C₆H₄O)₃P, (2-n-C₃H₇-C₆H₄O)₃P, (3-n-C₃H₇C₆H₄O)₃P, (4-n-C₃H₇C₆H₄O)₃P, (2-i-C₃H₇-C₆H₄O)₃P, (3-i-C₃H₇-C₆H₄O)₃P, (4-i-C₃H₇-C₆H₄O)₃P, (2-n-C₄H₉-C₆H₄O)₃P, (3-n-C₄H₉-C₆H₄O)₃P, (4-n-C₄H₉-C₆H₄O)₃P, (2-i-C₄H₉-C₆H₄O)₃P, (3-i-C₄H₉-C₆H₄O)₃P, (4-i-C₄H₉-C₆H₄O)₃P, (2-t-C₄H₉-C₆H₄O)₃P, (3-t-C₄H₉-C₆H₄O)₃P, (4-t-C₄H₉-C₆H₄O)₃P, (2-CH₃-6-t-C₄H₉-C₆H₃O)₃P, (3-CH₃-6-t-C₄H₉-C₆H₃O)₃P, (3-CH₃-6-t-C₄H₉-C₆H₃O)₃P, (2,6-Di-t-C₄H₉-C₆H₃O)₃P, (2,3-Di-t-C₄H₉-C₆H₃O)₃P, (2,4-Di-t-C₄H₉-C₆H₃O)₃P, und Phosphite der Formel 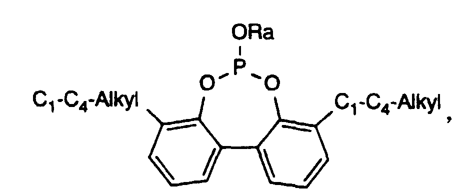 worin Ra C₁-C₆-Alkyl, Cyclohexyl, Benzyl, unsubstituiertes oder mit 1 oder 2 C₁-C₄-Alkyl substituiertes Phenyl bedeutet.

Beispiele für Phosphinliganden der Formel XXIIIa sind (C₆H₅)₂P(CH₂)ₙP(C₆H₅) mit n gleich einer Zahl von 1 bis 4; (C₆H₁₁)₂P(CH₂)P(C₆H₁₁)₂ und (CH₃)₂P(CH₂)ₙP(CH₃)₂ mit n gleich einer Zahl von 1 bis 4.

Als Liganden für die erfindungsgemäss zu verwendenden Ruthenium- und Osmiumverbindungen werden organische oder anorganische Verbindungen, Atome oder Ionen bezeichnet, die an ein Metallzentrum koordiniert sind.

Die Bedeutungen und Bevorzugungen von photolabilen Liganden und nicht-photolabilen Liganden (auch als stark koordinierende Liganden bezeichnet) sind zuvor genannt worden.

In einer bevorzugten Ausführungsform enthalten die erfindungsgemäss zu verwendenden Ru- und Os-Katalysatoren nur photolabile Liganden, Phosphingruppen und Anionen zum Ladungsausgleich. Ganz besonders bevorzugt sind die Katalysatoren, die eine Arengruppe als photolabilen Liganden, eine tertiäre Phosphingruppe und ein- oder zweiwertige Anionen zum Ladungsausgleich enthalten.

Geeignete Anionen von anorganischen oder organischen Säuren sind zum Beispiel Hydrid (H^{⊖}), Halogenid (zum Beispiel F^{⊖}, Cl^{⊖}, Br^{⊖} und I^{⊖}), das Anion einer Sauerstoffsäure, und BF₄^{⊖} , PF₆^{⊖}, SbF₆^{⊖} oder AsF₆^{⊖}. Es ist zu erwähnen, dass das zuvor erwähnte Cyclopentadienyl Ligand und Anion ist.

Weitere geeignete Anionen sind C₁-C₁₂-, bevorzugt C₁-C₆- und besonders bevorzugt C₁-C₄-Alkoholate, die insbesondere verzweigt sind, zum Beispiel der Formel RₓR_{y}R_{z}C-O^{⊖} entsprechen, worin Rₓ H oder C₁-C₁₀-Alkyl, R_{y} C₁-C₁₀-Alkyl und R_{z} C₁-C₁₀-Alkyl oder Phenyl darstellen, und die Summe der C-Atome von Rₓ,R_{y} und R_{z} 11 beträgt. Beispiele sind besonders i-Propyloxy und t-Butyloxy.

Andere geeignete Anionen sind C₃-C₁₈-, bevorzugt C₅-C₁₄- und besonders bevorzugt C₅-C₁₂-Acetylide, die der Formel R_{w}-C≡C^{⊖} entsprechen können, worin R_{w} C₁-C₁₆-Alkyl, bevorzugt α-verzweigtes C₃-C₁₂-Alkyl, zum Beispiel der Formel RₓR_{y}R_{z}C-, bedeutet, oder unsubstituiertes oder mit 1 bis 3 C₁-C₄-Alkyl oder C₁-C₄-Alkoxy substituiertes Phenyl oder Benzyl darstellen. Einige Beispiele sind i-Propyl-, i- und t-Butyl-, Phenyl-, Benzyl-, 2-Methyl-, 2,6-Dimethyl-, 2-i-Propyl-, 2-i-Propyl-6-methyl-, 2-t-Butyl-, 2,6-Di-t-butyl- und 2-Methyl-6-t-butylphenylacetylid.

Die Bedeutungen und Bevorzugungen von Anionen von Sauerstoffsäuren sind zuvor genannt worden.

Besonders bevorzugt sind H^{⊖}, F^{⊖}, Cl^{⊖}, Br^{⊖}, BF₄^{⊖}, PF₆^{⊖} , SbF₆^{⊖}, AsF₆^{⊖}, CF₃SO₃^{⊖}, C₆H₅-SO₃^{⊖} , 4-Methyl-C₆H₅-SO₃^{⊖}, 2,6-Dimethyl-C₆H₅-SO₃^{⊖}, 2,4,6-Trimethyl-C₆H₅-SO₃^{⊖} und 4-CF₃-C₆H₅-SO₃^{⊖} sowie Cyclopentadienyl (Cp^{⊖}).

Die Anzahl der nicht-photolabilen Liganden hängt von der Anzahl der Phosphingruppen, der Grösse der nicht-photolabilen Liganden und der Anzahl der photolabilen Liganden ab.

In einer bevorzugten Ausführungsform entsprechen die Ruthenium- und Osmiumverbindungen besonders bevorzugt einer der Formeln XXIV bis XXIVf

R₉₇L₈Me²⁺(Zⁿ⁻)_{2/n} (XXIV),

R₉₇L₉L₁₀Me²⁺(Zⁿ⁻)_{2/n} (XXIVa),

(R₉₇)₂L₉Me²⁺(Zⁿ⁻)_{2/n} (XXIVb),

(R₉₇)₃L₉Me²⁺(Zⁿ⁻)_{2/n} (XXIVc),

R₉₇L₈L₉Me²⁺(Zⁿ⁻)_{2/n} (XXIVd),

R₉₇L₉L₉Me²⁺(Zⁿ⁻)_{2/n} (XXIVe),

R₉₇L₈L₁₀Me²⁺(Zⁿ⁻)_{2/n} (XXIVf),

worin
R₉₇ ein tertiäres Phosphin der Formel XXIII oder XXIIIa ist;
Me für Ru oder Os steht;
n für die Zahlen 1, 2 oder 3 steht;
Z das Anion einer anorganischen oder organischen Säure ist;
(a) L₈ einen Aren- oder Heteroarenliganden bedeutet;
(b) L₉ einen von L₈ verschiedenen einwertigen photolabilen Liganden darstellt; und
(c) L₁₀ einen einwertigen nicht-photolabilen Liganden bedeutet.

Für R₉₇, L₈, L₉ und L₁₀ gelten die zuvor für die einzelnen Bedeutungen angegebenen Bevorzugungen.

In den Formeln XXIV bis XXIVf steht n bevorzugt für 1 oder 2 und ganz besonders für 1. Für R₉₇ gelten die für die Phosphinliganden der Formel XXIII angegebenen Bevorzugungen, insbesondere handelt es sich um tertiäre Phosphine.

Ganz besonders bevorzugt werden im erfindungsgemässen Verfahren Ruthenium- und Osmiumverbindungen einer der Formeln XXV bis XXVf verwendet,

(R₉₄R₉₅R₉₆P)L₈Me²⁺(Z¹⁻)₂ (XXV),

(R₉₄R₉₅R₉₆P)₂L₉Me²⁺(Z¹⁻)₂ (XXVa),

(R₉₄R₉₅R₉₆P)L₉L₁₀Me²⁺(Z¹⁻)₂ (XXVb),

(R₉₄R₉₅R₉₆P)₃L₉Me²⁺(Z¹⁻)₂ (XXVc),

(R₉₄R₉₅R₉₆P)L₉L₉Me²⁺(Z¹⁻)₂ (XXVd),

(R₉₄R₉₅R₉₆P)L₈L₁₀Me²⁺(Z¹⁻)₂ (XXVe),

(R₉₄R₉₅R₉₆P)L₈(L₉)ₘMe²⁺(Z¹⁻)₂ (XXVf),

worin
Me für Ru oder Os steht;
Z in Formeln XXV bis XXVe H^{⊖}, Cyclopentadienyl, Cl^{⊖}, Br^{⊖}, BF₄^{⊖}, PF₆^{⊖}, SbF₆^{⊖}, AsF₆^{⊖}, CF₃SO₃^{⊖}, C₆H₅-SO₃^{⊖}, 4-Methyl-C₆H₅-SO₃^{⊖} , 3,5-Dimethyl-C₆H₅-SO₃^{⊖}, 2,4,6-Trimethyl-C₆H₅-SO₃^{⊖} und 4-CF₃-C₆H₅-SO₃^{⊖} und in Formel XXVf H^{⊖} , Cyclopentadienyl, BF₄^{⊖}, PF₆^{⊖}, SbF₆^{⊖}, AsF₆^{⊖}, CF₃SO₃^{⊖}, C₆H₅-SO₃^{⊖}, 4-Methyl-C₆H₅-SO₃^{⊖}, 2,6-Dimethyl-C₆H₅-SO₃^{⊖}, 2,4,6-Trimethyl-C₆H₅-SO₃^{⊖} oder 4-CF₃-C₆H₅-SO₃^{⊖} bedeutet;
R₉₄, R₉₅ und R₉₆ unabhängig voneinander C₁-C₆-Alkyl, unsubstituiertes oder mit 1 bis 3 C₁-C₄-Alkyl substituiertes Cyclopentyl oder Cyclohexyl oder Cyclopentyloxy oder Cyclohexyloxy, oder unsubstituiertes oder mit 1 bis 3 C₁-C₄-Alkyl substituiertes Phenyl oder Benzyl oder Phenyloxy oder Benzyloxy darstellen;
L₈ unsubstituiertes oder mit 1 bis 3 C₁-C₄-Alkyl, C₁-C₄-Alkoxy, -OH, -F oder Cl substituiertes C₆-C₁₆-Aren oder C₅-C₁₆-Heteroaren darstellt;
L₉ C₁-C₆-Alkyl-CN, Benzonitril oder Benzylnitril bedeutet; und
L₁₀ H₂O oder C₁-C₆-Alkanol ist.

Bevorzugte Arene und Heteroarene sind Benzol, Toluol, Xylol, Trimethylbenzol, Naphthalin, Biphenyl, Anthracen, Acenaphthen, Fluoren, Phenanthren, Pyren, Chrysen, Fluoranthren, Furan, Thiophen, Pyrrol, Pyridin, γ-Pyran, γ-Thiopyran, Pyrimidin, Pyrazin, Indol, Cumaron, Thionaphthen, Carbazol, Dibenzofuran, Dibenzothiophen, Pyrazol, Imidazol, Benzimidazol, Oxazol, Thiazol, Isoxazol, Isothiazol, Chinolin, Isochinolin, Acridin, Chromen, Phenazin, Phenoxazin, Phenothiazin, Triazine, Thianthren und Purin. Bevorzugtere Arene und Heteroarene sind Benzol, Naphthalin, Cumen, Thiophen und Benzthiophen. Ganz besonders bevorzugt ist das Aren Benzol oder ein mit C₁-C₄-Alkyl substituiertes Benzol wie zum Beispiel Toluol, Xylol, Isopropylbenzol, Tertiärbutylbenzol oder Cumen und das Heteroaren ist bevorzugt Thiophen.

Wenn die Herstellung der Ruthenium- und Osmiumkatalysatoren in Lösungsmitteln vorgenommen wird, die an ein Metallatom koordinieren können, wie zum Beispiel Alkanolen, so können sich solvatierte Ru/Os-Kationkomplexe bilden, die im Rahmen der Verwendung gemäss der Erfindung mitumfasst werden.

Einige Beispiele für gemäss der Erfindung zu verwendende Ruthenium- und Osmiumverbindungen sind [Tos ist gleich Tosylat]: (C₆H₁₁)₃P(p-Cumen)Ru(PF₆)₂(C₂H₅OH)₂, (CH₃)₃P(p-Cumen)Os(Cl)₂, (C₆H₁₁)₃P(C₁₀H₈)Ru(Tos)₂, (C₆H₁₁)₃P(Chrysen)Ru(Tos)₂, (C₆H₁₁)₃P(C₆H₆)Ru(Tos)₂, (C₆H₁₁)₃P(p-Cumen)RuCl₂, (C₆H₁₁)₃P(p-Cumen)Ru(Tos)₂, (CH₃)₃P(p-Cumen)Ru(Cl)₂, (C₆H₁₁)₃P(p-Cumen)OsCl₂, (C₆H₁₁)₃P(Biphenyl)Ru(Tos)₂, (C₆H₁₁)₂HP(p-Cumen)RuCl₂, (C₆H₅)₃P(p-Cumen)Os(Cl)₂, [(C₆H₁₁)₃P](CH₃-CN)₂RuCl₂, (C₆H₁₁)₃P(p-Cumen)Ru(Br)₂, (C₆H₁₁)₃P(p-Cumen)Ru(BF₄)₂(C₂H₅OH)₂, (i-C₃H₇)₃P(p-Cumen)Os(Cl)₂, [(C₆H₁₁)₃P]₂Ru(CH₃-CN)(Tos)₂, (i-C₃H₇)₃P(p-Cumen)Os(Cl)₂, (n-C₄H₉)₃P(p-Cumen)Ru(Cl)₂, (i-C₃H₇)₃P(p-Cumen)Ru(Cl)₂, (C₆H₁₁)₃P(CH₃-C₆H₅)Ru(Tos)₂, (C₆H₁₁)₃P(Anthracen)Ru(Tos)₂, (C₆H₁₁)₃P(i-C₃H₇-C₆H₅)Ru(Tos)₂ und [(C₆H₁₁)₃P]Ru(CH₃-CN)(C₂H₅-OH)(Tos)₂.

Die erfindungsgemäss zu verwendenden Ruthenium- und Osmiumverbindungen sind bekannt oder nach bekannten und analogen Verfahren ausgehend von den Metallhalogeniden (zum Beispiel MeX₃ oder [MeArenX₂]₂ und Reaktion mit Phosphinen und Ligandenbildnern herstellbar.

7. Weitere geeignete Einkomponenten-Katalysatoren sind zweiwertig-kationische Ruthenium- oder Osmiumverbindungen mit einem Metallatom, woran 1 bis 3 tertiäre Phosphinliganden mit im Fall der Rutheniumverbindungen sterisch anspruchsvollen Substituenten, gegebenenfalls nicht-photolabile Neutralliganden und Anionen zum Ladungsausgleich gebunden sind, handelt, mit der Massgabe, dass in Ruthenium(trisphenylphosphin)dihalogeniden oder -hydrid-halogeniden die Phenylgruppen mit C₁-C₁₈-Alkyl, C₁-C₁₈-Halogenalkyl oder C₁-C₁₈-Alkoxy substituiert sind.

Die Ruthenium- und Osmiumverbindungen enthalten bevorzugt 2 oder 3 tertiäre Phosphingruppen. Unter Phosphingruppen werden im Rahmen der Erfindung tertiäre Phosphine und Phosphite verstanden. Die Anzahl zusätzlicher nicht photolabiler Neutralliganden richtet sich zum einen nach der Anzahl der Phosphin- und Phosphitliganden, und zum anderen nach der Wertigkeit der Neutralliganden. Einbindige oder zweibindige Neutralliganden sind bevorzugt.

In einer bevorzugten Ausführungsform enthalten die erfindungsgemäss zu verwendenden zweiwertig-kationischen Ruthenium- und Osmiumverbindungen 3 Phosphin- oder Phosphitgruppen und zwei einwertige Anionen zum Ladungsausgleich; oder 3 Phosphin- oder Phosphitgruppen, zwei einbindige oder einen zweibindigen nicht-photolabilen Neutralliganden, und zwei einwertige Anionen zum Ladungsausgleich; oder 2 Phosphin- oder Phosphitgruppen, einen monoanionischen, zusätzlich einbindigen nicht-photolabilen Neutralliganden, und ein einwertiges Anion zum Ladungsausgleich.

Die Bedeutungen und Bevorzugungen von nicht-photolabilen Liganden (auch als stark koordinierende Liganden bezeichnet) sind zuvor genannt worden.

Unter sterisch anspruchsvollen Substituenten werden im Rahmen der Erfindung solche verstanden, die die Ruthenium- und Osmiumatome sterisch abschirmen. So wurde überraschend gefunden, dass lineare Alkylgruppen als Substituenten in den Phosphin- und Phosphitliganden Rutheniumverbindungen ohne jede thermische Aktivität für die Metathesepolymerisation von gespannten Cycloolefinen ergeben. Es wurde auch beobachtet, dass bei Osmiumverbindungen überraschend-lineare Alkylgruppen als Substituenten in den Phosphin- und Phosphitliganden eine ausgezeichnete thermokatalytische Aktivität für die Metathesepolymerisation von gespannten Cycloolefinen besitzen; bevorzugt verwendet man aber auch für die Osmiumverbindungen Phosphin- und Phosphitliganden mit sterisch anspruchsvollen Substituenten. Es wurde ferner gefunden, dass die sterische Abschirmung von Triphenylphosphinliganden bei Ruthenium-dihalogeniden und Ruthenium-hydridhalogeniden ungenügend ist und solche Katalysatoren nur eine mässige katalytische Aktivität für die Metathesepolymerisation von gespannten Cycloolefinen besitzen. Die katalytische Aktivität kann überraschend erheblich gesteigert werden, wenn die tertiären Phosphingruppen mit Alkyl oder Alkoxygruppen substituiertes Phenyl enthalten.

Die Bedeutungen und Bevorzugungen von Phosphinliganden sind zuvor genannt worden. Besonders bevorzugt handelt es sich bei R₉₁, R₉₂ und R₉₃ als Alkyl um α-verzweigtes Alkyl, zum Beispiel der Formel -CR_{b}R_{c}R_{d}, worin R_{b} H oder C₁-C₁₂-Alkyl, R_{c} C₁-C₁₂-Alkyl, und R_{d} C₁-C₁₂-Alkyl oder unsubstituiertes oder mit C₁-C₄-Alkyl oder C₁-C₄-Alkoxy substituiertes Phenyl darstellen, und die Summe der C-Atome im Rest -CR_{b}R_{c}R_{d} 3 bis 18 beträgt. Beispiele für Alkyl sind i-Propyl, i- und t-Butyl, 1-Methyl- oder 1,1-Dimethylprop-1-yl, 1-Methyl- oder 1,1-Dimethylbut-1-yl, 1-Methyl- oder 1,1-Dimethylpent-1-yl, 1-Methyl- oder 1,1-Dimethylhex-1-yl, 1-Methyl- oder 1,1-Dimethylhept1-1yl, 1-Methyl- oder 1,1-Dimethyloct-1-yl, 1-Methyl- oder 1,1-Dimethylnon-1-yl, 1-Methyl- oder 1,1-Dimethyldec-1-yl, 1-Methyl- oder 1,1-Dimethylundec-1-yl, 1-Methyl- oder 1,1-Dimethyldodec-1-yl, 1-Methyl- oder 1,1-Dimethyltridec-1-yl, 1-Methyl- oder 1,1-Dimethyltetradec-1-yl, 1-Methyl- oder 1,1-Dimethylpentadec-1-yl, 1-Methyl- oder 1,1-Dimethylhexadec-1-yl, 1-Methylheptadec-1-yl, Phenyl-dimethyl-methyl. Bevorzugte Beispiele sind i-Propyl, i- und t-Butyl.

Bei den verwendeten Osmiumverbindungen kann R₉₁, R₉₂ und R₉₃ auch lineares Alkyl mit 1 bis 18, bevorzugt 1 bis 12, bevorzugter 1 bis 8, und besonders bevorzugt 1 bis 6 C-Atomen darstellen, zum Beispiel Methyl, Ethyl, n-Propyl, n-Butyl, n-Pentyl, n-Hexyl, n-Heptyl und n-Octyl.

R₉₁, R₉₂ und R₉₃ kann als Alkoxy 3 bis 12, bevorzugter 3 bis 8, und besonders bevorzugt 3 bis 6 C-Atome enthalten. Besonders bevorzugt handelt es sich um α-verzweigtes Alkoxy, zum Beispiel der Formel -OCR_{b}R_{c}R_{d}, worin R_{b} H oder C₁-C₁₂-Alkyl, R_{c} C₁-C₁₂-Alkyl, und R_{d} C₁-C₁₂-Alkyl oder unsubstituiertes oder mit C₁-C₄-Alkyl oder C₁-C₄-Alkoxy substituiertes Phenyl darstellen, und die Summe der C-Atome im Rest -CR_{b}R_{c}R_{d} 3 bis 18 beträgt. Beispiele für Alkoxy sind i-Propyloxy, i- und t-Butyloxy, 1-Methyl- oder 1,1-Dimethylprop-1-oxyl, 1-Methyl- oder 1,1-Dimethylbut-1-oxyl, 1-Methyl- oder 1,1-Dimethylpent-1-oxyl, 1-Methyl- oder 1,1-Dimethylhex-1-oxyl, 1-Methyl- oder 1,1-Dimethylhept-1-oxyl, 1-Methyl- oder 1,1-Dimethyloct-1-oxyl, 1-Methyl- oder 1,1-Dimethylnon-1-oxyl, 1-Methyl- oder 1,1-Dimethyldec-1-oxyl, 1-Methyl- oder 1,1-Dimethylundec-1-oxyl, 1-Methyl- oder 1,1-Dimethyldodec-1-oxyl, 1-Methyl- oder 1,1-Dimethyltridec-1-oxyl, 1-Methyl- oder 1,1-Dimethyltetradec-1-oxyl, 1-Methyl- oder 1,1-Dimethylpentadec-1-oxyl, 1-Methyl- oder 1,1-Dimethylhexadec-1-oxyl, 1-Methyl-heptadec-1-oxyl, Phenyl-dimethyl-methyl. Bevorzugte Beispiele sind i-Propyloxy, i- und t-Butyloxy.

Bei den verwendeten Osmiumverbindungen kann R₉₁, R₉₂ und R₉₃ auch lineares Alkoxy mit 1 bis 18, bevorzugt 1 bis 12, bevorzugter 1 bis 8, und besonders bevorzugt 1 bis 6 C-Atomen darstellen, zum Beispiel Methoxy, Ethoxy, n-Propyloxy, n-Butyloxy, n-Pentyloxy, n-Hexyloxy, n-Heptyloxy und n-Octyloxy.

Bedeuten R₉₁, R₉₂ und R₉₃ Cycloalkyl, so handelt es sich bevorzugt um C₅-C₈-Cycloalkyl, und besonders bevorzugt um C₅- oder C₆-Cycloalkyl. Einige Beispiele sind Cyclobutyl, Cycloheptyl, Cyclooctyl und besonders Cyclopentyl und Cyclohexyl, die bevorzugt unsubstituiert oder mit 1 bis 3 Alkyl-, Halogenalkyl- oder Alkoxygruppen substituiert sind.

Bedeuten R₉₁, R₉₂ und R₉₃ Cycloalkyloxy, so handelt es sich bevorzugt um C₅-C₈-Cycloalkyloxy, und besonders bevorzugt um C₅- oder C₆-Cycloalkyloxy. Einige Beispiele sind Cyclobutyloxy, Cycloheptyloxy, Cyclooctyloxy und besonders Cyclopentyloxy und Cyclohexyloxy, die bevorzugt unsubstituiert oder mit 1 bis 3 Alkyl-, Halogenalkyl- oder Alkoxygruppen substituiert sind.

In einer bevorzugten Ausführungsform entsprechen die Phosphinliganden der Formel XXIII, worin R₉₁, R₉₂ und R₉₃ unabhängig voneinander α-verzweigtes C₃-C₈-Alkyl, unsubstituiertes oder mit C₁-C₄-Alkyl substituiertes Cyclopentyl oder Cyclohexyl, oder unsubstituiertes oder mit C₁-C₄-Alkyl, C₁-C₄-Alkyl C₁-C₄-Alkoxy oder Trifluormethyl substituiertes Phenyl darstellen. Besonders bevorzugte Beispiele für Phosphinliganden der Formel XXIII sind (C₆H₅)₃P, (C₅H₉)₃P, (C₆H₁₁)₃P, (i-C₃H₇)₃P, (i-C₄H₉)₃P, (t-C₄H₉)₃P, [C₂H₅-CH(CH₃)]₃P, [C₂H₅-C(CH₃)₂]₃P, (2-Methylphenyl)₃P, (2,3-Dimethylphenyl)₃P, (2,4-Dimethylphenyl)₃P, (2,6-Dimethylphenyl)₃P, (2-Methyl-4-i-propylphenyl)₃P, (2-Methyl-3-i-propylphenyl)₃P, (2-Methyl-5-i-propylphenyl)₃P, (2,4-Di-t-butylphenyl)₃P, (2-Methyl-6-i-propylphenyl)₃P, (2-Methyl-3-t-butylphenyl)₃P, (2,5-Di-t-butylphenyl)₃P, (2-Methyl-4-t-butylphenyl)₃P, (2-Methyl-5-i-butylphenyl)₃P, (2,3-Di-t-butylphenyl)₃P und (2,6-Di-t-butylphenyl)₃P.

In einer anderen bevorzugten Ausführungsform entsprechen die Phosphitliganden der Formel XXIII, worin R₉₁, R₉₂ und R₉₃ unabhängig voneinander α-verzweigtes C₃-C₈-Alkoxy, unsubstituiertes oder mit C₁-C₄-Alkyl substituiertes Cyclopentyloxy oder Cyclohexyloxy, oder unsubstituiertes oder mit C₁-C₄-Alkyl, C₁-C₄-Alkoxy oder Trifluormethyl substituiertes Phenyloxy darstellen. Beispiele für Phosphite sind vom genannt worden.

Beispiele und Bevorzugungen für geeignete Anionen sind zuvor genannt worden.

In einer bevorzugten Ausführungsform entsprechen die Ruthenium- und Osmiumverbindungen besonders bevorzugt den Formeln XXVI, XXVIa, XXVIb, XXVIc oder XXVId

Me^{2⊕}(L₁₁)₂(L₁₂)(Y₁^{⊖})₂ (XXVI),

Me^{2⊕}(L₁₁)₃(Y₁^{⊖})₂ (XXVIa),

Me^{2⊕}(L₁₁)₂L₁₃(Y₁^{⊖} ) (XXVIb),

Me^{2⊕}(L₁₁)₃L₁₄(Y₁^{⊖})₂ (XXVIc),

Me^{2⊕}L₁₁(L₁₂)₃(Y₁^{⊖})₂ (XXVId),

worin
Me für Ru oder Os steht;
Y₁ das Anion einer einbasigen Säure bedeutet;
L₁₁ ein Phosphin der Formel XXIII oder XXIIIa darstellt,
L₁₂ einen Neutralliganden bedeutet;
L₁₃ unsubstituiertes oder mit C₁-C₄-Alkyl substituiertes Cyclopentadienyl darstellt; und
L₁₄ für CO steht.

Für die einzelnen Bedeutungen von L₁₁, L₁₂, L₁₃ und Y₁ gelten die voranstehenden Bevorzugungen.

In einer besonders bevorzugten Ausführungsform stehen in Formel XXVI L₁₂ für ein C₁-C₄-Alkanol, in Formel XXVIb Y₁ für Cl oder Br, in Formel XXVIc Y₁ für H, und in den Formeln XXVI bis XXVIc L₁₁ für Tri-i-propylphosphin, Tricyclohexylphosphin, Triphenylphosphin oder in den Phenylgruppen mit 1 bis 3 C₁-C₄-Alkyl substituiertes Triphenylphosphin.

Einige Beispiele für gemäss der Erfindung zu verwendende Ruthenium- und Osmiumverbindungen sind [(C₆H₁₁)₃P]₂Ru(CH₃OH)₂(Tos)₂, [(C₆H₁₁)₃P]₂RuCl₂, [(C₆H₅)₃P)₃Ru(CO)H₂, [(C₆H₅)₃P]₂Ru(Cp)Cl₂, (C₆H₁₁)₃PRuCpCl₂, [(o-toluoyl)₃P]₃RuCl₂ und [(C₆H₁₁)₃P]₃Ru(CH₃OH)₂.

Die erfindungsgemäss zu verwendenden Ruthenium- und Osmiumverbindungen sind bekannt oder nach bekannten und analogen Verfahren ausgehend von den Metallhalogeniden (zum Beispiel MeX₃, [Me(Diolefin)X₂]₂ oder [MeArenX₂]₂ und Reaktion mit Phosphinen und Ligandenbildnern herstellbar.

Die erfindungsgemässen Zusammensetzungen sind überraschend lagerstabil und können als solche in den Handel gebracht werden. Es ist aber auch möglich, die einzelnen Komponenten vor der Verarbeitung zusammen zu mischen. Bei Verwendung von luft- und/oder feuchtigkeitsempfindlichen Katalysatoren empfiehlt sich eine Lagerung unter Ausschluss von Luft und Feuchtigkeit. Da das neue Vernetzungsprinzip nicht auf einer radikalischen, anionischen oder kationischen Reaktion beruht, wird bei Durchführung der Polymerisation an Luft praktisch kein Reaktionsabbruch oder -verlangsam beobachtet, was erhebliche Vorteile bei der Verarbeitung bietet, zum Beispiel keine aufwendigen Schutzvorkehrungen. Ein grosser überraschender Vorteil ist die Möglichkeit der Verwendung lösungsmittelfreier Systeme bei flüssigen Polymeren mit niedrigem Molekulargewicht oder bei Lösungen mit reaktiven zur Metathesepolymerisation befähigten gespannten Cycloolefinen als Comonomeren.

Ein weiterer Gegenstand der Erfindung ist ein Verfahren zur Herstellung vernetzter Polymerisate durch Metathesepolymerisation, das dadurch gekennzeichnet ist, dass man eine Zusammensetzung aus
(a) einer katalytischen Menge eines Einkomponenten-Katalysators für die Metathesepolymerisation und
(b) mindestens ein Polymer mit im Polymerrückgrat gebundenen gespannten Cycloalkenylenresten alleine oder in Mischung mit gespannten Cycloolefinen,
(c) durch Erwärmen polymerisiert,
(d) durch Bestrahlung polymerisiert,
(e) durch Erwärmung und Bestrahlung polymerisiert,
(f) durch kurzzeitige Erwärmung den Einkomponenten-Katalysator aktiviert und die Polymerisation durch Bestrahlung beendet, oder
(g) durch kurzzeitige Bestrahlung den Einkomponenten-Katalysator aktiviert und die Polymerisation durch Erwärmen beendet.

Erwärmen kann eine Temperatur von 50 bis 300°C, bevorzugt 60 bis 250°C, besonders bevorzugt 60 bis 200°C, und insbesondere bevorzugt 60 bis 150°C bedeuten. Die Polymerisationszeiten hängen im wesentlichen von der Katalysatoraktivität ab und die Zeiten können von mehreren Sekunden bis zu Minuten und Stunden reichen.

Es ist beim erfindungsgemässen Verfahren nicht notwendig, die Bestrahlung der Reaktionsmischung über die gesamte Reaktionsdauer aufrechtzuerhalten. Ist die Polymerisation einmal photochemisch initiiert, erfolgt der weitere Reaktionsverlauf selbst im Dunkeln selbstständig. Vorteilhafterweise wird die Bestrahlung mit Licht der Wellenlänge im Bereich von 50 nm bis 1000 nm, bevorzugt im Bereich von 200 nm bis 500 nm und ganz besonders bevorzugt im UV-Bereich durchgeführt. Die Bestrahlungsdauer ist von der Art der Lichtquelle abhängig. Als Bestrahlungsquellen eignen sich zum Beispiel die Sonne, Laser-, Röntgen- und besonders UV-Strahlungsquellen. Vorzugsweise werden erfindungsgemäß UV-Laser oder UV-Lampen eingesetzt. Die Bestrahlung des Katalysators kann sowohl vor, während, als auch nach der Monomerenzugabe erfolgen.

Geeignete Bestrahlungszeiten sind von einer Sekunden bis zu mehreren Stunden, insbesondere Minuten bis zu Stunden. Die Reihenfolge der Zugabe von Monomeren und Katalysator ist unkritisch. Das Monomer kann sowohl vorgelegt als auch nach Einbringen des Katalysators zugegeben werden. Ebenso kann der Katalysator vorbestrahlt und anschliessend das Monomer zugegeben werden. Ferner kann auch die Katalysator und Monomer enthaltende Lösung bestrahlt werden.

Das erfindungsgemäße Verfahren wird unter Verwendung photoaktiver Katalysatoren bei Bestrahlung bevorzugt bei Raumtemperatur bis leicht erhöhter Temperatur durchgeführt. Eine Temperaturerhöhung dient in diesem Fall im wesentlichen der Erhöhung der Reaktionsgeschwindigkeit. Bei den zur Reaktionsbeschleunigung gewählten Temperaturen findet daher auch überwiegend eine Photopolymerisation statt. Es ist aber zu erwähnen, dass die Katalysatoren durch ausreichende Bestrahlung oder erhöhter Temperatur in thermoaktive Katalysatoren umgewandelt werden können. Es ist ferner anzumerken, dass einige Katalysatoren die Metathesepolymerisation sowohl thermisch als auch Bestrahlung zu initiieren vermögen.

Insbesondere wird das erfindungsgemäße Verfahren unter Bestrahlung bevorzugt bei Temperaturen von -20 bis +110°C, besonders bevorzugt 20 bis 80°C durchgeführt.

Die Bestrahlungsdauer hängt im wesentlichen von der gewünschten Reaktionsführung ab. Eine kurzzeitige Bestrahlung wird zum Beispiel dann gewählt, wenn man die Polymerisation nur durch Bestrahiung initiieren und durch Erhitzen beenden will. Kurzzeitig kann eine Bestrahlungszeit bis zu 60 Sekunden, bevorzugt 5 bis 60 Sekunden und besonders bevorzugt 10 bis 40 Sekunden bedeuten. Eine längere Bestrahlungszeit wird zum Beispiel dann gewählt, wenn man die Polymerisation überwiegend unter Bestrahlung durchführen und die endgültige Polymerisation nur durch Nachtempern beenden will.

Ein ganz besonderer und überraschender Vorteil des erfindungsgemässen Verfahrens besteht darin, dass verwendete Einkomponenten-Katalysatoren nach der Bestrahlung als thermische Katalysatoren wirken. Daraus ergibt sich die Möglichkeit, die Polymerisation nach einer kurzen Bestrahlungszeit durch Wärmezufuhr fortzusetzen und zu beenden, was in verschiedenen Bereichen der Herstellung von Formkörpern oder Beschichtungen wirtschaftliche und technische Vorteile bietet.

Ein weiterer Gegenstand der vorliegenden Erfindung sind vernetzte Metathesepolymere aus einem Polymer mit im Polymerrückgrat gebundenen gespannten Cycloalkenylenresten alleine oder in Mischung mit gespannten Cycloolefinen.

Ein weiterer Gegenstand der vorliegenden Erfindung sind mit einem Einkomponenten-Katalysator vernetzte Metathesepolymerisate aus einer Zusammensetzung enthaltend
(a) eine katalytische Menge eines Einkomponenten-Katalysators für die Metathesepolymerisation und
(b) mindestens ein Polymer mit im Polymerrückgrat gebundenen gespannten Cycloalkenylenresten alleine oder in Mischung mit gespannten Cycloolefinen.

Mit dem erfindungsgemässen Verfahren können Werkstoffe zur spanabhebenden Herstellung von Formkörpern oder direkt Formkörper aller Art, sowie Beschichtungen und Reliefabbildungen hergestellt werden. Ein Gegenstand der Erfindung sind auch Formkörper aus vernetzten Metathesepolymerisaten der erfindungsgemässen Zusammensetzung.

Je nach verwendetem Monomer können die erfindungsgemäßen Polymere sehr verschiedene Eigenschaften aufweisen. Einige zeichnen sich durch sehr hohe Sauerstoffpermeabilität, tiefe Dielektrizitätskonstanten, gute Wärmestabilität und geringe Wasserabsorption aus. Andere haben hervorragende optische Eigenschaften wie zum Beispiel hohe Transparenz und niedrige Brechungsindices. Ferner ist insbesondere der geringe Schrumpf hervorzuheben. Daher können sie in sehr unterschiedlichen technischen Gebieten Verwendung finden.

Die erfindungsgemäßen Zusammensetzungen zeichnen sich als Schichten auf den Oberflächen von Trägermaterialien durch eine hohe Haftfestigkeit aus. Ferner zeichnen sich die beschichteten Materialien durch eine sehr hohe Oberflächenglätte und -glanz aus. Unter den guten mechanischen Eigenschaften ist insbesondere der geringe Schrumpf und die hohe Schlagzähigkeit hervorzuheben, aber auch die thermische Beständigkeit. Ferner ist die leichte Entformbarkeit bei der Verarbeitung in Formen und die hohe Lösungsmittelbeständigkeit zu erwähnen.

Diese Polymere eignen sich zur Herstellung von medizinischen Geräten, Implantaten oder Kontaktlinsen; zur Herstellung von elektronischen Bauteilen; als Bindemittel für Lacke; als photohärtbare Zusammensetzungen für den Modellbau oder als Klebstoffe zum Verkleben von Substraten mit niedrigen Oberflächenenergien (zum Beispiel Teflon, Polyethylen und Polypropylen, Silicongummi), sowie als photopolymerisierbare Zusammensetzung in der Stereolithographie. Die erfindungsgemäßen Zusammensetzungen können auch zur Herstellung von Lacken durch Photopolymerisation verwendet werden, wobei einerseits klare (transparente) und sogar pigmentierte Zusammensetzungen verwendet werden können. Es können sowohl Weiss- als auch Buntpigmente verwendet werden.

Die erfindungsgemäßen photohärtbaren Zusammensetzungen eignen sich besonders zur Herstellung von Schutzschichten und Reliefabbildungen. Ein weiterer Gegenstand der Erfindung ist eine Variante des erfindungsgemäßen Verfahrens zur Herstellung von beschichteten Materialien oder Reliefabbildungen auf Trägermaterialien, bei dem man eine erfindungsgemässe Zusammensetzung und gegebenenfalls Lösungsmittel als Schicht auf einem Träger aufbringt, zum Beispiel durch Tauch-, Streich-, Giess-, Walz-, Rakel- oder Schleudergießverfahren, gegebenenfalls das Lösungsmittel entfernt, und die Schicht zur Polymerisation bestrahlt oder erwärmt, oder die Schicht durch eine Photomaske bestrahlt und anschließend die nichtbestrahlten Anteile mit einem Lösungsmittel entfernt. Danach kann sich noch eine Temperung anschliessen. Mit diesem Verfahren können Oberflächen von Substraten modifiziert oder geschützt werden, oder es können zum Beispiel gedruckte Schaltungen, Druckplatten oder Druckwalzen hergestellt werden. Bei der Herstellung von gedruckten Schaltungen können die erfindungsgemäßen Zusammensetzungen auch als Lötstopplacke eingesetzt werden. Weitere Anwendungsmöglichkeiten sind die Herstellung von Siebdruckmasken, die Verwendung als strahlungshärtbare Druckfarben für den Offset-, Sieb- und Flexodruck. Die Scutzschichten auf Trägermaterialien eignen sich auf Grund der hohen Haftung und der geringen Wasseraufnahme ganz besonders für den Korrosionsschutz.

Gegenstand der vorliegenden Erfindung ist ferner ein beschichtetes Trägermaterial, das dadurch gekennzeichnet ist, daß auf einem Substrat eine Schicht aus einer erfindungsgemässen Zusammensetzung aufgebracht ist.

Gegenstand der vorliegenden Erfindung ist ebenfalls ein beschichtetes Substrat mit einer gehärteten Schicht aus einer erfindungsgemässen Zusammensetzung. Die ausserordentlich hohe Haftfestigkeit der Schichten sogar auf Metalloberflächen ist besonders hervorzuheben, selbst wenn es sich um reine Kohlenwasserstoffpolymerisate handelt.

Geeignete Substrate (Trägermaterialien) sind beispielsweise solche aus Glas, Mineralien, Keramiken, Kunststoffen, Holz, Halbmetallen, Metallen, Metalloxiden und Metallnitriden. Die Schichtdicken richten sich im wesentlichen nach der gewünschten Verwendung und können z.B. 0,1 bis 1000 µm, bevorzugt 0,5 bis 500 µm, besonders bevorzugt 1 bis 100 µm betragen. Die beschichteten Materialien zeichnen sich durch eine hohe Haftfestigkeit und gute thermische und mechanische Eigenschaften aus.

Die Herstellung der erfindungsgemässen beschichteten Materialen kann nach bekannten Methoden wie zum Beispiel Streichen, Rakeln, Giessverfahren wie Vorhanggiessen oder Schleudergiessen erfolgen.

Die erfindungsgemässen Zusammensetzungen können auch als thermisch oder mittels Strahlung härtbare Klebstoffe zur festen Verbindung von unterschiedlichsten Materialien verwendet werden, wobei hervorragende Schälfestigkeiten erzielt werden können.

Die erfindungsgemässen Polymerisate zeichnen sich neben den hohen Haftfestigkeiten, der hervorragenden Verarbeitbarkeit, den guten Oberflächeneigenschaften (Glätte, Glanz), der hohen Vernetzungsdichte und der Beständigkeit gegen Lösungsmittel und andere Flüssigkeiten besonders noch durch sehr gute physikalisch-mechanische Eigenschaften wie zum Beispiel hohe Temperaturbeständigkeit, Bruch- und Biegefestigkeit und Schlagzähigkeit und hervorragende elektrische Eigenschaften wie zum Beispiel niedrige Oberflächenspannungen und -ladungen (sehr niedrige ε- und tan δ- Werte) aus. Ferner sind die hohe Sauerstoffpermeabilität und die geringe Wasseraufnahme zu erwähnen. Nur aus Kohlenstoff und Wasserstoff aufgebaute Polymere sind ökologisch besonders wertvoll, da sie zum Beispiel durch Pyrrolyse beziehungsweise ohne Bildung von schädlichen Nebenprodukten verbrannt werden können. Diese Polymeren sind auf Grund ihrer hervorragenden elektrischen Eigenschaften besonders für Anwendungen auf dem Gebiet der Elektrik und Elektronik besonders als Isoliermaterialien (zum Beispiel Spulenverguss) geeignet.

Die nachfolgenden Beispiele erläutern die Erfindung näher.

### A) Herstellung von Polymeren mit gespannten Cycloolefinringen am Polymerrückgrat

### Beispiel A1: Herstellung von Polymeren mit Strukturelementen

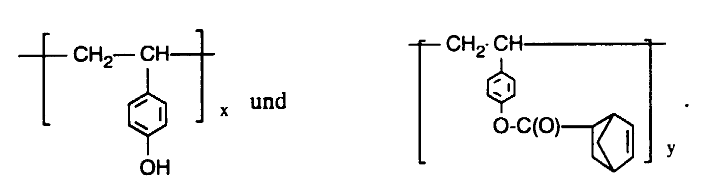

5,0 g (41,6 mmol) Poly-p-hydroxystyrol (Resin® M) werden in 10 ml Wasser und 45,8 ml 1 M NaOH gelöst. Dann werden tropfenweise 6,5 g ((41,6 mmol) 2-Norbornen-4-carbonsäurechlorid zugetropft. Danach wird der gebildete Niederschlag abfiltriert und mit Wasser und Ethanol gewaschen und dann bei 50°C über Nacht im Vakuum getrocknet. Ausbeute: 7,38 g Polymer (74 %).

Gemäss ¹H-NMR sind 60 % der phenolischen Gruppen umgesetzt (x = 0,4 und y = 0,6). Molekulargewicht mittels Gelpermeationschromatographie (Tetrahydrofuran, Polystyrol-Standards): Mₙ = 3800 g/mol; M_{w} = 5700 g/mol.

### Beispiel A2: Herstellung von Polymeren mit Strukturelementen

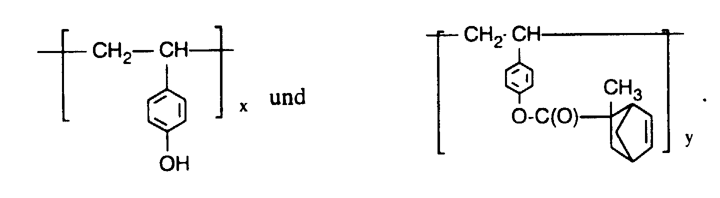

5,0 g (41,6 mmol) Poly-p-hydroxystyrol (Resin® M) werden in 10 ml Wasser und 45,8 ml 1 M NaOH gelöst. Dann werden tropfenweise 7,1 g ((41,6 mmol) 2-Norbornen-4-methyl-4-carbonsäurechlorid zugetropft. Danach wird der gebildete Niederschlag abfiltriert und mit Wasser und Ethanol gewaschen und dann bei 50°C über Nacht im Vakuum getrocknet. Ausbeute: 7,35 g Polymer (69,5 %).

Gemäss ¹H-NMR sind 90 % der phenolischen Gruppen umgesetzt (x = 0,1 und y = 0,9). Molekulargewicht mittels Gelpermeationschromatographie (Tetrahydrofuran, Polystyrol-Standards): Mₙ = 3700 g/mol; M_{w} = 5500 g/mol.

### Beispiel A3: Herstellung eines Polymeren mit Strukturelementen

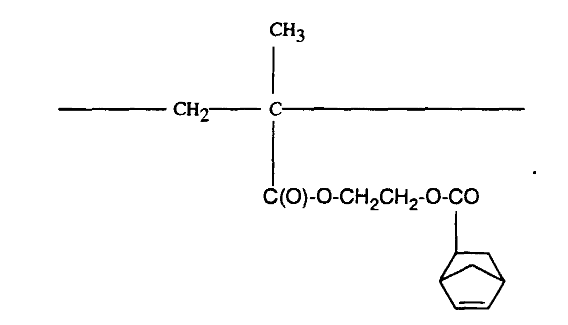

5,0 g (20 mmol) 2-Norbornen-4-ethyloxycarbonyl-methacrylat werden in 50 ml Dioxan gelöst und mit 75 mg Azobisisobutyronitril versetzt. Dann wird unter Stickstoffatmosphäre 24 h bei 80°C polymerisiert. Man lässt auf Raumtemperatur abkühlen und tropft die Reaktionsmischung dann in 500 ml Wasser/Methanol (1:3). Der Niederschlag wird abfiltriert und erst mit Wasser und dann mit Methanol gewaschen, und danach über Nacht im Vakuum bei 50°C getrocknet. Ausbeute: 2,57 g (51,4 %).
Mₙ = 5200 g/mol; M_{w} = 10300 g/mol.

### Beispiel A4: Herstellung eines Polymeren mit Strukturelementen

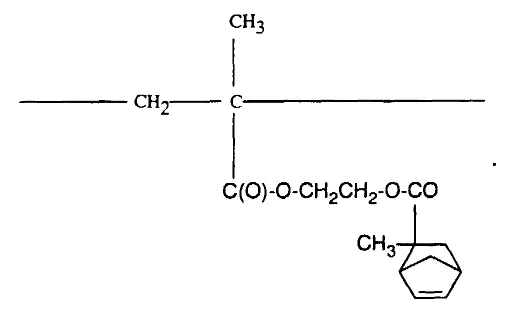

5,0 g (18,9 mmol) 2-Norbornen-4-methyl-4-ethyloxycarbonyl-methacrylat werden in 50 ml Dioxan gelöst und mit 75 mg Azobisisobutyronitril versetzt. Dann wird unter Stickstoffatmosphäre 24 h bei 80°C polymerisiert. Man lässt auf Raumtemperatur abkühlen und tropft die Reaktionsmischung dann in 500 ml Wasser/Methanol (1:3). Der Niederschlag wird abfiltriert und erst mit Wasser und dann mit Methanol gewaschen, und danach über Nacht im Vakuum bei 50°C getrocknet. Ausbeute: 3,55 g (71 %).
Mₙ = 8100 g/mol; M_{w} = 25100 g/mol.

### Beispiel A5: Herstellung eines Polymeren mit Strukturelementen

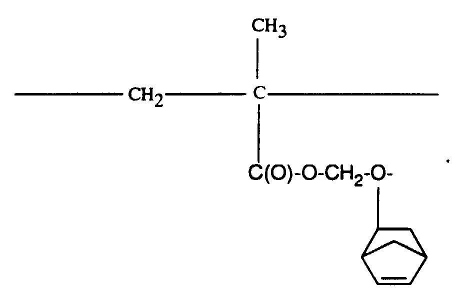

2,0 g (10,4 mmol) 2-Norbornen-4-methyl-methacrylat werden in 10 ml Dioxan gelöst und mit 200 mg Azobisisobutyronitril versetzt. Dann wird unter Stickstoffatmosphäre 24 h bei 80°C polymerisiert. Man lässt auf Raumtemperatur abkühlen und tropft die Reaktionsmischung dann in 70 ml Wasser/Methanol (1:3). Der Niederschlag wird abfiltriert und erst mit Wasser und dann mit Methanol gewaschen, und danach über Nacht im Vakuum bei 50°C getrocknet. Ausbeute: 0,7 g (35 %).
Mₙ = 1070 g/mol; M_{w} = 2580 g/mol.

### Beispiel A6:

(a) Herstellung von 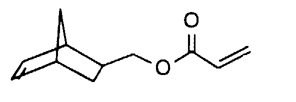 10,0 g (0,08 Mol Norbornen-methanol und 5.77 g (0,08 Mol) Acrylsäure werden in 100 ml Methylenchlorid gelöst. Nun werden unter Rühren und Stickstoff 15,51 g (0,08 Mol) Dicyclohexyl-carbodiimid zugegeben und 14 h getrocknet. Nach Abkühlen, Filtrieren und Einengen im Rotationsverdampfer erhält man 14,74 g Rohprodukt, das im Hochvakuum destilliert wird. Ausbeute: 8,46 g (59,3 %). Sdp.: 82°C (7,2 mbar); n_{D}²⁰:1,4939; IR (Film): ν(C=O): 1730 cm⁻¹ und 1710 cm⁻¹ (Acrylester); Elementaranalyse (C₁₁H₁₄O₂): berechnet: C 74,13, H 7,92; gefunden: C 73,84, H 9,04
(b) 2,0 g des in (a) erhaltenen Acrylsäureesters von Norbornen-5-methanol werden in 10 ml Dioxan gelöst und mit 200 mg Azobisisobutyronitril versetzt. Es wird unter Stickstoff 24 h bei 80°C polymerisiert, abgekühlt und das Polymer durch Eintropfen der Reaktionsmischung in 70 ml Wasser/Methanol (3:1) ausgefällt. Man filtriert, wäscht mit Wasser und Methanol und trocknet über Nacht im Hochvakuum bei 50°C. Ausbeute: 1,1 g (55 %). GPC (THF, PS-Standards): Mₙ = 10700 g/mol; M_{w} = 25800 g/mol.

### Beispiel A7: Herstellung eines Polymeren mit

Strukturelementen 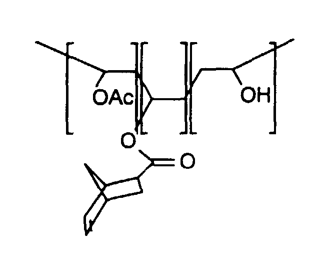 9,0 g (70 mMol) Norbornen-carbonsäure (hergestellt aus dem entsprechenden Säurechlorid durch Hydrolyse mit NaOH) werden in einer Mischung von 10 ml Wasser und 2,1 ml conc. HCI suspendiert, auf 60°C erwärmt. Es werden 9,0 g Mowiol 4-88 (Polyvinylalkohol mit 12 Mol% Acetatgruppen von Hoechst AG, Frankfurt, M_{w}=31000 g/Mol) portionenweise zugegeben. Man lässt 24 h bei 60°C reagieren, löst den Festkörper in DMSO und fällt in Aceton aus. Nach dem Trocknen (4 Tage bei 40°C im Hochvakuum) erhält man 10,14 g Polymer. ¹H-NMR (DMSO-d₆): 8 Mol% Acetat, 3 Mol% Norbornen, 89 Mol% freies OH.

### B) Anwendungsbeispiele

### Beispiel B1: Photopolymerisation

Auf einer Si-Halbleiterplatte (Wafer) wird mittels Schleudergiessen mit einer 10 %-igen Lösung des Polymeren gemäss Beispiel A4 und und 1 Gew.-% (bezogen auf das Polymer) Ru(CH₃CN)₆(Tos)₂ als Katalysator in Dioxan eine etwa 1 µm dicke Schicht aufgetragen. Man belichtet 200 s mit einer Oriel 350W UV-Lampe unter einer Resistmaske, erhitzt anschliessend 1 min bei 80°C, und entwickelt dann mit Dioxan. Man erhält ein Reliefbild mit einer hohen Auflösung.

Die auf gleiche Weise verarbeiteten Polymere gemäss den Beispielen A1 bis A3 und A5 ergeben gleiche Ergebnisse.

### Beispiel B2: Photopolymerisation

Auf einer Si-Halbleiterplatte (Wafer) wird mittels Schleudergiessen mit einer 10 %-igen Lösung des Polymeren gemäss Beispiel A6 und und 1 Gew.-% (bezogen auf das Polymer) TaCl₂(CH₂Si(CH₃)₃)₃ als Katalysator in Dioxan eine etwa 1 µm dicke Schicht aufgetragen. Man belichtet 100 s mit einer Oriel 350 W UV-Lampe unter einer Resistmaske und entwickelt dann mit Dioxan. Man erhält ein Reliefbild mit einer hohen Auflösung.

### Beispiel B3: Photopolymerisation

0,5 g des in Beispiel A7 erhaltenen Polymeren werden in 5 ml Wasser zusammen mit 5 mg [Ru(C₆H₆)₂](tos)₂ gelöst. Durch Giessen auf eine Glasplatte mittels Rakel werden ca. 30 µm dicke Filme hergestellt. Man belichtet diese 3 min unter einer UV-Lampe, wonach sich die klaren, transparenten Filme weder in DMSO noch in Wasser lösen lassen. T_{g} (DSC, 10°C/min): 80°C.

### Beispiel B4: Photopolymerisation

0,5 g des in Beispiel A7 erhaltenen Polymeren werden in 5 ml Wasser zusammen mit 5 mg [Ru(CH₃CN)₆](tos)₂ gelöst. Durch Giessen auf eine Glasplatte mittels Rakel werden ca. 30 µm dicke Filme hergestellt. Man belichtet diese 3 min unter einer UV-Lampe, wonach sich die klaren, transparenten Filme weder in DMSO noch in Wasser lösen lassen. T_{g} (DSC, 10°C/min): 80°C.

### Beispiel B5: Photopolymerisation

0,5 g des in Beispiel A7 erhaltenen Polymeren werden in 5 ml Wasser zusammen mit 5 mg [Ru(CH₃CH₂CN)₆](tos)₂ gelöst. Durch Giessen auf eine Glasplatte mittels Rakel werden ca. 30 µm dicke Filme hergestellt. Man belichtet diese 3 min unter einer UV-Lampe, wonach sich die klaren, transparenten Filme weder in DMSO noch in Wasser lösen lassen. T_{g} (DSC, 10°C/min): 80°C.

### Beispiel B6: Thermische Polymerisation

Auf einer Glasplatte werden mittels eines Rakels aus einer 10 %igen Lösung des Polymeren gemäss Beispiel A6 in Dioxan zusammen mit jeweils 1 % (bezogen auf das Polymer) des Katalysators (C₆H₁₁)₃PRu(p-Cumen)Cl₂ und nachfolgendes Abdampfen des Lösungsmittels bei 80°C 20 bis 60 µm dicke Polymerfilme hergestellt. Diese werden durch Erhitzen 1 h auf 120°C vernetzt. Nach Ablösung von der Glasplatte erhält man reissfeste Filme, die in Dioxan unlöslich sind.

## Patentansprüche

1. Zusammensetzung, enthaltend katalytische Mengen eines Einkomponenten-Katalysators für die Metathesepolymerisation und mindestens ein Polymer mit wiederkehrenden Strukturelementen, die einen über eine bivalente Brückengruppe gebundenen gespannten Cycloalkenylrest enthalten, allein oder in Mischung mit Strukturelementen von gespannten Cycloolefinen, dadurch gekennzeichnet, dass die Zusammensetzung als Einkomponenten-Katalysator
(a) eine Ruthenium- oder Osmiumverbindung der Formel
[(Me⁺ⁿ)(L₁^{z1})ₘ(L₂^{z2})ₒ(L₃^{z3})ₚ(L₄^{z4})_{q}(L₅^{z5})ᵣ(L₆^{z6})ₛ](L₇^{z7})ₜ (IX)
enthält, worin
Me Ruthenium oder Osmium; n 2, L₁, L₂ und L₃ gemeinsam unsubstituierte oder mit C₁-C₄-Alkyl, C₁-C₄-Alkoxy, C₆-C₁₂-Aryl oder Halogen substituierte monocyclische, polycyclische oder kondensierte Arene mit 6-24 C-Atomen oder unsubstituierte oder mit C₁-C₄-Alkyl, C₁-C₄-Alkoxy oder Halogen substituierte monocyclische Heteroarene, kondensierte Heteroarene oder kondensierte Aren-Heteroarene mit 4-22 C-Atomen und 1-3 Heteroatomen aus der Gruppe O, S und N und L₄, L₅ und L₆ einen nicht-photolabilen Liganden aus der Gruppe H₂O, NH₃, unsubstituiertes oder mit Fluor substituiertes C₁-C₄-Alkanol oder -Alkanthiol, aliphatische Ether, Thioether, Sulfoxide oder Sulfone mit 2-8 C-Atomen, Dimethylformamid und N-Methylpyrrolidon; m, o, p, q, r und s 1; z1 - z6 0, z7 -1 und L₇ ein nicht koordinierendes Anion bedeuten; oder eine Ruthenium- oder Osmiumverbindung der Formel
[L₁Me(L₈)₅]²⁺[Y₁^{x-}]_{2/x} (X),
enthält, worin L₁ N₂, C₁-C₄-Alkylnitril, Benzonitril oder Benzylnitril; L₈ NH₃ oder ein Amin mit 1-12 C-Atomen, Y₁ ein nicht-koordinierendes Anion und x die Zahl 1 oder 2 bedeuten;
(b) eine Molybdän(VI)- oder Wolfram(Vl)verbindung enthält, die mindestens zwei Methylgruppen oder zwei monosubstituierte Methylgruppen am Metall gebunden hat, wobei der Substituent kein Wasserstoffatom in α-Stellung enthält; oder
(c) eine Titan(lV)-, Niob(V)-, Tantal(V)-, Molybdän(VI)- oder Wolfram(VI)-Verbindung enthält, in der eine Silylmethylgruppe und mindestens ein Halogen am Metall gebunden sind; oder
(d) eine Niob(V)- oder Tantal(V)verbindung enthält, die mindestens zwei Methylgruppen oder zwei monosubstituierte Methylgruppen am Metall gebunden hat, wobei der Substituent kein Wasserstoffatom in α-Stellung enthält; oder
(e) eine Titan(lV)verbindung, die mindestens zwei Methylgruppen oder zwei monosubstituierte Methylgruppen am Metall gebunden hat, wobei der Substituent kein Wasserstoffatom in α-Stellung enthält; oder
(f) eine Ruthenium- oder Osmiumverbindung enthält, die mindestens eine Phosphingruppe, mindestens einen photolabilen Liganden, und gegebenenfalls Neutralliganden an das Metallatom gebunden haben, wobei insgesamt 2 bis 5 Liganden gebunden sind, und die Säureanionen zum Ladungsausgleich enthält; oder
(g) eine zweiwertig-kationische Ruthenium- oder Osmiumverbindung enthält, mit einem Metallatom, woran 1 bis 3 tertiäre Phosphinliganden mit im Fall der Rutheniumverbindung sterisch anspruchsvollen Substituenten, gegebenenfalls nicht-photolabile Neutralliganden und Anionen zum Ladungsausgleich gebunden

2. Zusammensetzung gemäss Anspruch 1, dadurch gekennzeichnet, dass es sich bei dem gespannten Cycloolefinring um monocyclische oder polycyclische kondensierte und/oder überbrückte Ringsysteme handelt.

3. Zusammensetzung gemäss Anspruch 2, dadurch gekennzeichnet, dass die polycyclischen kondensierten und/oder überbrückten Ringsysteme zwei bis 6 Ringe enthalten.

4. Zusammensetzung gemäss Anspruch 2, dadurch gekennzeichnet, dass die einzelnen cyclischen Ringe 3 bis 16 Ringglieder enthalten.

5. Zusammensetzung gemäss Anspruch 2, dadurch gekennzeichnet, dass die einzelnen cyclischen Ringe 4 bis 12 Ringglieder enthalten.

6. Zusammensetzung gemäss Anspruch 2, dadurch gekennzeichnet, dass die einzelnen cyclischen Ringe 5 bis 8 Ringglieder enthalten.

7. Zusammensetzung gemäss Anspruch 1, dadurch gekennzeichnet, dass die Cycloalkenylreste der Formel A entsprechen, 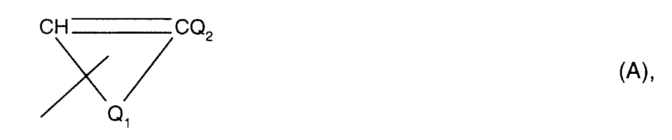 worin
Q₁ ein Rest mit mindestens einem Kohlenstoffatom ist, der zusammen mit der -CH=CQ₂-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Hydroxyalkyl C₁-C₂₀-Halogenalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₄-X-substituiert ist; oder bei dem zwei benachbarte C-Atome mit -CO-O-CO- oder -CO-NR₅-CO- substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, -NO₂, R₆R₇R₈Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Halogenalkyl, C₁-C₂₀-Hydroxyalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₁₃-X₁- substituiert ist;
X und X₁ unabhängig voneinander für -O-, -S-, -CO-, -SO-, -SO₂-, -O-C(O)-, -C(O)-O-, -C(O)-NR₅-, -NR₁₀-C(O)-, -SO₂-O- oder -O-SO₂- stehen;
R₁, R₂ und R₃ unabhängig voneinander C₁-C₁₂-Alkyl, C₁-C₁₂-Perfluoralkyl, Phenyl oder Benzyl bedeuten;
R₄ und R₁₃ unabhängig C₁-C₂₀-Alkyl, C₁-C₂₀-Halogenalkyl, C₁-C₂₀-Hydroxyalkyl, C₃-C₈-Cycloalkyl, C₆-C₁₆-Aryl, C₇-C₁₆-Aralkyl bedeuten;
R₅ und R₁₀ unabhängig voneinander Wasserstoff, C₁-C₁₂-Alkyl, Phenyl oder Benzyl bedeuten, wobei die Alkylgruppen ihrerseits unsubstituiert oder mit C₁-C₁₂-Alkoxy oder C₃-C₈-Cycloalkyl substituiert sind;
R₆, R₇ und R₈ unabhängig voneinander C₁-C₁₂-Alkyl, C₁-C₁₂-Perfluoralkyl, Phenyl oder Benzyl bedeuten;
M für ein Alkalimetall und M₁ für ein Erdalkalimetall stehen; und
u für 0 oder 1 steht;
wobei der mit Q₁ gebildete alicyclische Ring gegebenenfalls weitere nicht-aromatische Doppelbindungen enthält;
Q₂ Wasserstoff, C₁-C₂₀-Alkyl, C₁-C₂₀-Halogenalkyl, C₁-C₁₂-Alkoxy, Halogen, -CN, R₁₁-X₂- darstellt;
R₁₁ C₁-C₂₀-Alkyl, C₁-C₂₀-Halogenalkyl, C₁-C₂₀-Hydroxyalkyl, C₃-C₈-Cycloalkyl, C₆-C₁₆-Aryl oder C₇-C₁₆-Aralkyl bedeutet;
X₂ -C(O)-O- oder -C(O)-NR₁₂- ist;
R₁₂ Wasserstoff, C₁-C₁₂-Alkyl, Phenyl oder Benzyl darstellt;
wobei die vorgenannten Cycloalkyl-, Heterocycloalkyl-, Aryl-, Heteroaryl-, Aralkyl- und Heteroaralkylgruppen unsubstituiert oder mit C₁-C₁₂-Alkyl, C₁-C₁₂-Alkoxy, -NO₂, -CN oder Halogen substituiert sind, und wobei die Heteroatome der vorgenannten Heterocycloalkyl-, Heteroaryl- und Heteroaralkylgruppen aus der Gruppe -O-, -S-, -NR₉- und -N= ausgewählt sind; und
R₉ Wasserstoff, C₁-C₁₂-Alkyl, Phenyl oder Benzyl darstellt.

8. Zusammensetzung gemäss Anspruch 7, dadurch gekennzeichnet, dass der Rest der Formel A einen alicyclischen Ring darstellt, den Q₁ zusammen mit der -CH=CQ₂- Gruppe bildet, der 3 bis 8 Ringatome aufweist, und wobei es sich um ein monocyclisches, oder um ein bicyclisches, tricyclisches oder tetracyclisches kondensiertes Ringsystem handeln kann.

9. Zusammensetzung gemäss Anspruch 7, dadurch gekennzeichnet, dass im Rest der Formel A
Q₁ ein Rest mit mindestens einem Kohlenstoffatom ist, der zusammen mit der -CH=CQ₂-Gruppe einen 3- bis 20-gliedrigen alicyclischen Ring bildet, welcher gegebenenfalls ein oder mehrere Heteroatome ausgewählt aus der Gruppe Silicium, Sauerstoff, Stickstoff und Schwefel enthält; und der unsubstituiert oder mit Halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₁₂-Alkyl, C₁-C₁₂-Halogenalkyl, C₁-C₁₂-Hydroxyalkyl, C₁-C₄-Cyanoalkyl, C₃-C₆-Cycloalkyl, C₆-C₁₂-Aryl, C₇-C₁₂-Aralkyl, C₃-C₆-Heterocycloalkyl, C₃-C₁₂-Heteroaryl, C₄-C₁₂-Heteroaralkyl oder R₄-X- substituiert ist; oder bei dem zwei benachbarte C-Atome in diesem Rest Q₁ mit -CO-O-CO- oder -CO-NR₅-CO- substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, -NO₂, R₆R₇R₈Si-, -COOM, -SO₃M, -PO₃M, -COO(M₁)_{1/2}, -SO₃(M₁)_{1/2}, -PO₃(M₁)_{1/2}, C₁-C₁₂-Alkyl, C₁-C₁₂-Halogenalkyl, C₁-C₁₂-Hydroxyalkyl, C₁-C₄-Cyanoalkyl, C₃-C₆-Cycloalkyl, C₆-C₁₂-Aryl, C₇-C₁₂-Aralkyl, C₃-C₆-Heterocycloalkyl, C₃-C₁₂-Heteroaryl, C₄-C₁₂-Heteroaralkyl oder R₁₃-X₁- substituiert ist;
X und X₁ unabhängig voneinander für -O-, -S-, -CO-, -SO-, -SO₂-, -O-C(O)-, -C(O)-O-, -C(O)-NR₅-, -NR₁₀-C(O)-, -SO₂-O- oder -O-SO₂- stehen;
R₁, R₂ und R₃ unabhängig voneinander C₁-C₆-Alkyl, C₁-C₆-Perfluoralkyl, Phenyl oder Benzyl bedeuten;
M für ein Alkalimetall und M₁ für ein Erdalkalimetall stehen;
R₄ und R₁₃ unabhängig voneinander C₁-C₁₂-Alkyl, C₁-C₁₂-Halogenalkyl, C₁-C₁₂-Hydroxyalkyl, C₃-C₈-Cycloalkyl, C₆-C₁₂-Aryl, C₇-C₁₂-Aralkyl bedeuten;
R₅ und R₁₀ unabhängig voneinander Wasserstoff, C₁-C₆-Alkyl, Phenyl oder Benzyl bedeutet, wobei die Alkylgruppen ihrerseits unsubstituiert oder mit C₁-C₆-Alkoxy oder C₃-C₆-Cycloalkyl substituiert sind;
R₆, R₇ und R₈ unabhängig voneinander C₁-C₆-Alkyl, C₁-C₆-Perfluoralkyl, Phenyl oder Benzyl darstellen;
u für 0 oder 1 steht;
wobei der mit Q₁ gebildete alicyclische Ring gegebenenfalls weitere nicht-aromatische Doppelbindungen enthält;
Q₂ Wasserstoff, C₁-C₁₂-Alkyl, C₁-C₁₂-Halogenalkyl, C₁-C₆-Alkoxy, Halogen, -CN, R₁₁-X₂- bedeutet;
R₁₁ C₁-C₁₂-Alkyl, C₁-C₁₂-Halogenalkyl, C₁-C₁₂-Hydroxyalkyl, C₃-C₆-Cycloalkyl, C₆-C₁₂-Aryl oder C₇-C₁₂-Aralkyl darstellt;
X₂ -C(O)-O- oder -C(O)-NR₁₂- ist; und
R₁₂ Wasserstoff, C₁-C₆-Alkyl, Phenyl oder Benzyl bedeutet;
wobei die Cycloalkyl-, Heterocycloalkyl-, Aryl-, Heteroaryl-, Aralkyl- und Heteroaralkylgruppen unsubstituiert oder mit C₁-C₆-Alkyl, C₁-C₆-Alkoxy, -NO₂, -CN oder Halogen substituiert sind, und wobei die Heteroatome der Heterocycloalkyl-, Heteroaryl- und Heteroaralkylgruppen aus der Gruppe -O-, -S-, -NR₉- und -N= ausgewählt sind; und
R₉ Wasserstoff, C₁-C₆-Alkyl, Phenyl oder Benzyl bedeutet.

10. Zusammensetzung gemäss Anspruch 7, dadurch gekennzeichnet, dass im Rest der Formel A
Q₁ ein Rest mit mindestens einem Kohlenstoffatom ist, der zusammen mit der -CH=CQ₂-Gruppe einen 3- bis 10-gliedrigen alicyclischen Ring bildet, der gegebenenfalls ein Heteroatom ausgewählt aus der Gruppe Silicium, Sauerstoff, Stickstoff und Schwefel enthält, und der unsubstituiert oder mit Halogen, -CN, -NO₂, R₁R₂R₃Si-, -COOM, -SO₃M, -PO₃M, -COO(M₁)_{1/2}, -SO₃(M₁)_{1/2}, -PO₃(M₁)_{1/2}, C₁-C₆-Alkyl, C₁-C₆-Halogenalkyl, C₁-C₆-Hydroxyalkyl, C₁-C₄-Cyanoalkyl, C₃-C₆-Cycloalkyl, Phenyl, Benzyl oder R₄-X-substituiert ist; oder bei dem an benachbarten Kohlenstoffatomen gegebenenfalls ein alicyclischer, aromatischer oder heteroaromatischer Ring ankondensiert ist, welcher unsubstituiert oder durch Halogen, -CN, -NO₂, R₆R₇R₈Si-, -COOM, -SO₃M, -PO₃M, -COO(M₁)_{1/2}, -SO₃(M₁)_{1/2}, -PO₃(M₁)_{1/2}, C₁-C₆-Alkyl, C₁-C₆-Halogenalkyl, C₁-C₆-Hydroxyalkyl, C₁-C₄-Cyanoalkyl, C₃-C₆-Cycloalkyl, Phenyl, Benzyl oder R₁₃-X₁- substituiert ist;
R₁, R₂ und R₃ unabhängig voneinander C₁-C₄-Alkyl, C₁-C₄-Perfluoralkyl, Phenyl oder Benzyl bedeuten;
M für ein Alkalimetall und M₁ für ein Erdalkalimetall stehen;
R₄ und R₁₃ unabhängig voneinander C₁-C₆-Alkyl, C₁-C₆-Halogenalkyl, C₁-C₆-Hydroxyalkyl oder C₃-C₆-Cycloalkyl bedeuten;
X und X₁ unabhängig voneinander für -O-, -S-, -CO-, -SO- oder -SO₂- stehen;
R₆, R₇ und R₈ unabhängig voneinander C₁-C₄-Alkyl, C₁-C₄-Perfluoralkyl, Phenyl oder Benzyl darstellen;
und Q₂ Wasserstoff bedeutet.

11. Zusammensetzung gemäss Anspruch 1, dadurch gekennzeichnet, dass es sich bei dem Cycloalkenylrest um unsubstituiertes oder mit C₁-C₄-Alkyl substituiertes Cyclopropenyl, Cyclobutenyl, Cyclopentenyl, Cycloheptenyl, Cyclooctenyl, Cyclopentadienyl, Cyclohexadienyl, Cycloheptadienyl, Cyclooctadienyl und Norbornenyl oder Norbornenylderivate handelt.

12. Zusammensetzung gemäss Anspruch 11, dadurch gekennzeichnet, dass das Norbornenylderivat der Formel B 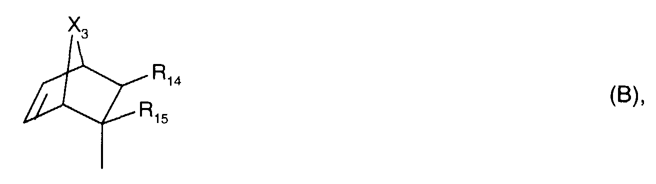 worin
X₃ -CHR₁₆-, Sauerstoff oder Schwefel;
R₁₄ und R₁₅ unabhängig voneinander Wasserstoff, -CN, Trifluormethyl, (CH₃)₃Si-O-, (CH₃)₃Si- oder -COOR₁₇; und
R₁₆ und R₁₇ unabhängig voneinander Wasserstoff, C₁-C₁₂-Alkyl, Phenyl oder Benzyl bedeuten;
oder der Formel C entspricht, 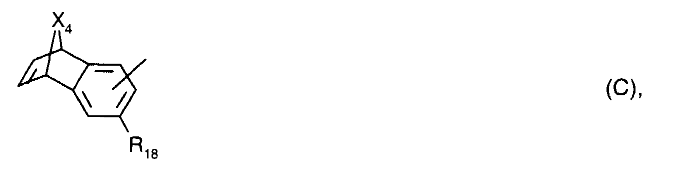 worin
X₄ -CHR₁₉-, Sauerstoff oder Schwefel;
R₁₉ Wasserstoff, C₁-C₁₂-Alkyl, Phenyl oder Benzyl; und
R₁₈ Wasserstoff, C₁-C₆-Alkyl oder Halogen bedeuten.

13. Zusammensetzung gemäss Anspruch 1, dadurch gekennzeichnet, dass der Cycloalkenylrest Norbornenyl der Formel D oder Methylnorbornenyl der Formel E ist

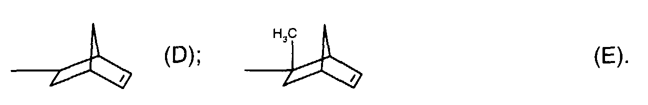

14. Zusammensetzung gemäss Anspruch 1, dadurch gekennzeichnet, dass es sich bei der bivalenten Brückengruppe um einen zweiwertigen gegebenenfalls mit -O- unterbrochenen Kohlenwasserstoffrest mit 1 bis 100 C-Atomen handelt, der direkt oder über eine Ether-, Thioether-, Amin-, Ester-, Amid-, Urethan- oder Harnstoffgruppe an das Polymerrückgrat und der direkt oder über eine Ether-, Thioether-, Amin-, Ester-, Amid-, Urethan- oder Harnstoffgruppe an das Cycloolefin gebunden ist; oder dass die Brückengruppe eine Ether-, Thioether-, Amin-, Ester-, Amid-, Urethan- oder Harnstoffgruppe ist.

15. Zusammensetzung gemäss Anspruch 1, dadurch gekennzeichnet, dass die bivalente Brückengruppe der Formel F entspricht,
-(X₁₀₀)_{g}-(R₀₁)ₕ-(X₁₀₁)ᵢ- (F),
worin
g, h und i unabhängig voneinander für 0 oder 1 stehen, und g und i nicht gleichzeitig 0 sind;
X₁₀₀ und X₁₀₁ unabhängig voneinander -O-, -S-, -NH-, -N(C₁-C₄-Alkyl)-, -C(O)O-, -O(O)C-, -NH(O)C-, -C(O)NH-, -N(C₁-C₄-Alkyl)-(O)C-, -C(O)-N(C₁-C₄-Alkyl)-, -O-C(O)-O-, -NH-C(O)-O-, -O-C(O)-NH-, -N(C₁-C₄-Alkyl)-(O)C-O- oder -O-C(O)-N(C₁-C₄-Alkyl)- darstellen; und
R₀₁ eine direkte Bindung, C₁-C₁₈-Alkylen, Polyoxaalkylen mit 2 bis 12 Oxaalkyleneinheiten und 2 bis 6 C-Atomen im Oxaalkylen, unsubstituiertes oder mit C₁-C₄- oder C₁-C₄-Alkoxy substituiertes C₅-C₈-Cycloalkylen, unsubstituiertes oder mit C₁-C₄- oder C₁-C₄-Alkoxy substituiertes C₅-C₈-Cycloalkylen-CH₂-, unsubstituiertes oder mit C₁-C₄- oder C₁-C₄-Alkoxy substituiertes -CH₂-(C₅-C₈-Cycloalkylen)-CH₂-, unsubstituiertes oder mit C₁-C₄- oder C₁-C₄-Alkoxy substituiertes Heterocycloalkylen mit 5 oder 6 Ringgliedern und Heteroatomen ausgewählt aus der Gruppe -O-, -S- und N, unsubstituiertes oder mit C₁-C₄- oder C₁-C₄-Alkoxy substituiertes Phenylen, Benzylen oder Xylylen, oder
unsubstituiertes oder mit C₁-C₄- oder C₁-C₄-Alkoxy substituiertes Heteroarylen mit 5 oder 6 Ringgliedern und Heteroatomen ausgewählt aus der Gruppe -O-, -S- und N bedeutet.

16. Zusammensetzung gemäss Anspruch 15, dadurch gekennzeichnet, dass R₀₁ als Alkylen C₁-C₁₂-Alkylen bedeutet.

17. Zusammensetzung gemäss Anspruch 15, dadurch gekennzeichnet, dass R₀₁ als Polyoxaalkylen 2 bis 6 Oxaalkyleneinheiten und 2 oder 3 C-Atome im Oxaalkylen enthält.

18. Zusammensetzung gemäss Anspruch 15, dadurch gekennzeichnet, dass R₀₁ als Cycloalkylen und in den Cycloalkylen enthaltenden Resten C₅- oder C₆-Cycloalkylen bedeutet.

19. Zusammensetzung gemäss Anspruch 15, dadurch gekennzeichnet, dass R₀₁ als Heterocycloalkylen und Heteroarylen ein 5- oder 6-gliedriges Cycloalkylen mit einem Heteroatom aus der Gruppe N oder O bedeutet.

20. Zusammensetzung gemäss Anspruch 15, dadurch gekennzeichnet, dass es sich bei R₀₁ um C₁-C₁₂-Alkylen, Polyoxaalkylen mit 2 bis 6 Oxaalkyleneinheiten und 2 C-Atomen im Oxaalkylen, unsubstituiertes oder mit C₁-C₄- oder C₁-C₄-Alkoxy substituiertes Cyclopentylen, Cyclohexylen, Cyclohexylen-CH₂-, -CH₂-Cyclohexylen-CH₂-, Phenylen, Benzylen oder Xylylen handelt.

21. Zusammensetzung gemäss Anspruch 1, dadurch gekennzeichnet, dass es sich bei der Brückengruppe um 1,4-C₆H₄-[O-(O)C]₂-, -C(O)-O-C₂-C₆-Alkylen-O-(O)C- oder -C(O)-O-CH₂- handelt.

22. Zusammensetzung gemäss Anspruch 1, dadurch gekennzeichnet, dass es sich bei den Polymeren um Homo- oder Copolymere handelt, wobei Strukturelemente mit einem über eine bivalente Brückengruppe an die Monomereinheit gebundenen gespannten Cycloalkenylrest mindestens zu 1 Mol-% enthalten sind, bezogen auf das Polymer.

23. Zusammensetzung gemäss Anspruch 22, dadurch gekennzeichnet, dass Strukturelemente mit einem über eine bivalente Brückengruppe an die Monomereinheit gebundenen gespannten Cycloalkenylrest zu mindestens 5 Mol-% enthalten sind.

24. Zusammensetzung gemäss Anspruch 22, dadurch gekennzeichnet, dass 5 bis 100 Mol-% Strukturelemente enthalten sind.

25. Zusammensetzung gemäss Anspruch 1, dadurch gekennzeichnet, dass die Anzahl sich wiederholender Struktureinheiten im Polymer 2 bis 10000 beträgt.

26. Zusammensetzung gemäss Anspruch 1, dadurch gekennzeichnet, dass sich das Polymerrückgrat von Polymeren ableitet, die mit -OH, -NH₂, -NH(C₁-C₄-Alkyl), -C(O)OH, -C(O)-NH₂ oder -C(O)-NH(C₁-C₄-Alkyl) funktionalisiert sind.

27. Zusammensetzung gemäss Anspruch 1, dadurch gekennzeichnet, dass das Polymerrückgrat von Polymeren aus der Gruppe Homo- und Copolymere von olefinisch ungesättigten Alkoholen, Homo- und Copolymere von ungesättigten Carbonsäuren, Homo- und Copolymere von Hydroxystyrol oder Aminostyrol oder Styrolsulfon- oder Carbonsäuren, Homo- und Copolymere von hydroxyliertem Butadien, Homo- und Copolymere von Vinylpyrrolidon, Polysiloxanen mit Hydroxy- oder Aminoalkylseitenketten, und Homo- und Copolymere von Diglycidylethern und Diolen, oder von Polysacchariden gebildet wird.

28. Zusammensetzung gemäss Anspruch 1, dadurch gekennzeichnet, dass das Polymer 1 bis 100 Mol-%, bezogen auf das Polymer, Strukturelemente der Formel G, 99 bis 0 Mol-% Strukturelemente der Formel H, und 100 bis 0 Mol-% Strukturelemente der Formel I, 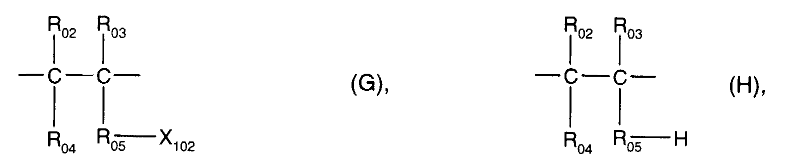 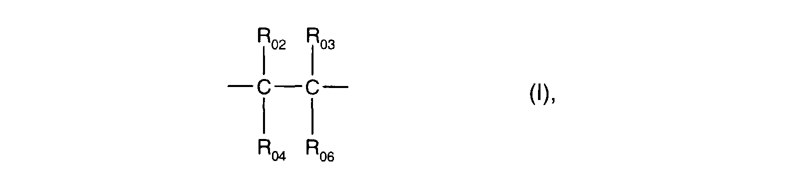 worin
die R₀₂ unabhängig voneinander H, F oder C₁-C₁₂-Alkyl darstellen;
die R₀₃ unabhängig voneinander H, F, Cl, CN oder C₁-C₁₂-Alkyl darstellen;
die R₀₄ unabhängig voneinander H, F, C₁-C₁₂-Alkyl, -COOH, -C(O)O-C₁-C₁₂-Alkyl, -C(O)-NH₂ oder -C(O)-NH-C₁-C₁₂-Alkyl bedeuten;
R₀₅ eine bivalente Brückengruppe bedeutet;
R₀₆ für H, F, Cl, CN, C₁-C₁₂-Alkyl, C₁-C₁₂-Alkoxy, unsubstituiertes oder mit Cl, Br, C₁-C₄-Alkyl, C₁-C₄-Alkoxy, -C(O)OC₁-C₁₂-Alkyl, -C(O)-NH₂, C(O)-NH-C₁-C₁₂-Alkyl, -SO₃H oder -SO₃-C₁-C₁₂-Alkyl substituiertes Phenyl, -C(O)OH,
-C(O)O-C₂-C₁₂-Hydroxyalkyl, -C(O)O-C₁-C₁₂-Alkyl, -C(O)-NH₂ oder -C(O)-NH-C₁-C₁₂-Alkyl steht;
R₀₄ und R₀₆ zusammen -O-CH₂-O- oder -O-C₂-C₁₂-Alkyliden-O- darstellen; und
X₁₀₂ einen Rest der Formel A gemäss Anspruch 7 darstellt.

29. Zusammensetzung gemäss Anspruch 28, dadurch gekennzeichnet, dass das es sich bei X₁₀₂ um Norbornenyl handelt, das unsubstituiert oder mit C₁-C₄-Alkyl substituiert ist.

30. Zusammensetzung gemäss Anspruch 28, dadurch gekennzeichnet, dass in den Formeln B und C die R₀₂ H, die R₀₃ unabhängig voneinander H oder Methyl, R₀₄ H, -C(O)-OH oder -C(O)-O-C₁-C₄-Alkyl, R₀₅ p-C₆H₄-O-, -C(O)-O-C₂-C₆-Alkylen-O-C(O)- oder -C(O)-O-CH₂-, und X₁₀₂ ein Rest der Formel A sind.

31. Zusammensetzung gemäss Anspruch 29, dadurch gekennzeichnet, dass in den Formeln B und C die R₀₂ H, die R₀₃ H oder Methyl, R₀₄ H, R₀₅ -(CH₂)_{d}-O-C(O)- mit d gleich einer ganzen Zahl von 1 bis 12, -(CH₂)_{d}-O-(CₑH₂ₑ-O-)_{f}C(O)- mit e gleich einer ganzen Zahl von 2 bis 6, und f gleich einer Zahl von 1 bis 12, und X₁₀₂ einen Rest der Formel A darstellen.

32. Zusammensetzung gemäss Anspruch 1, dadurch gekennzeichnet, dass es sich bei dem Polymer um Polyepoxide mit wiederkehrenden Strukturelementen ausgewählt aus der Gruppe von Strukturelementen der Formeln J, K, L und M handelt
-CH₂-CH(OH)-CH₂-O-R₀₉-O-CH₂-CH(O-R₀₁₀-X₁₀₂)-CH₂-O- (J),
-R₀₆-O- (K),
-CH₂-CH(OH)-CH₂-O-R₀₇-O-CH₂-CH(OH)-CH₂-O- (L),
-R₀₈-O- (M),
mit der Massgabe, dass mindestens Strukturelemente der Formeln J und K enthalten sind, worin R₀₇ und R₀₉ unabhängig voneinander ein um die Glycidyloxygruppen verminderter bivalenter Rest eines Diglycidylethers und R₀₆ und R₀₈ unabhängig voneinander ein um die Hydroxylgruppen verminderter bivalenter Rest eines Diols sind, R₀₁₀ eine bivalente Brückengruppe bedeutet, und X₁₀₂ einen Rest der Formel A gemäss Anspruch 7 darstellt.

33. Zusammensetzung gemäss Anspruch 32, dadurch gekennzeichnet, dass, bezogen auf 1 Mol des Polymers, je bis zu 50 Mol-% der Strukturelemente der Formeln J und K im Polymer enthalten sind.

34. Zusammensetzung gemäss Anspruch 32, dadurch gekennzeichnet, dass R₀₆ und R₀₈ unabhängig voneinander C₂-C₁₈-Alkylen, Polyoxaalkylen mit 2 bis 50 Oxaalkyleneinheiten und 2 bis 6 C-Atomen im Oxyalkylen, C₃-C₁₂-Cycloalkylen, C₅-C₈-Cycloalkylen-CH₂-, -CH₂-(C₅-C₈-Cycloalkylen)-CH₂-, C₆-C₁₄-Arylen, Bisphenylen, Benzylen, Xylylen, -C₆H₄-X₀₁-C₆H₄- mit X₀₁ gleich O, S, SO, SO₂, CO, CO₂, NH, N(C₁-C₄-Alkyl), Alkyliden mit 1 bis 18 C-Atomen oder C₅-C₇-Cycloalkyliden bedeuten.

35. Zusammensetzung gemäss Anspruch 32, dadurch gekennzeichnet, dass R₀₇ und R₀₉ unabhängig voneinander C₂-C₁₈-Alkylen, Polyoxaalkylen mit 2 bis 50 Oxaalkyleneinheiten und 2 bis 6 C-Atomen im Oxyalkylen, C₃-C₁₂-Cycloalkylen, C₅-C₈-Cycloalkylen-CH₂-, -CH₂-(C₅-C₈-Cycloalkylen)-CH₂-, C₆-C₁₄-Arylen, Bisphenylen, Benzylen, Xylylen, -C₆H₄-X₀₁-C₆H₄- mit X₀₁ gleich O, S, SO, SO₂, CO, CO₂, NH, N(C₁-C₄-Alkyl), Alkyliden mit 1 bis 18 C-Atomen oder C₅-C₇-Cycloalkyliden bedeuten.

36. Zusammensetzung gemäss Anspruch 32, dadurch gekennzeichnet, dass X₁₀₂ einen Norbornenyl- oder 1-Methyl-norbornen-1-yl-rest bedeutet.

37. Zusammensetzung gemäss Anspruch 32, dadurch gekennzeichnet, dass die bivalente Brückengruppe R₀₁₀ ein Rest der Formel -(CₑH₂ₑ-O-)_{f}C(O)- mit e gleich 0 oder einer ganzen Zahl von 2 bis 6, und f gleich einer Zahl von 1 bis 12 ist.

38. Zusammensetzung gemäss Anspruch 1, dadurch gekennzeichnet, dass die comonomeren gespannten Cycloolefine der Formel I entsprechen, 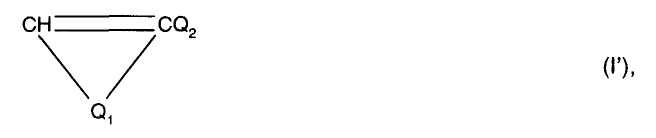 worin
Q₁ ein Rest mit mindestens einem Kohlenstoffatom ist, der zusammen mit der -CH=CQ₂-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Hydroxyalkyl C₁-C₂₀-Halogenalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₄-X-substituiert ist; oder bei dem zwei benachbarte C-Atome mit -CO-O-CO- oder -CO-NR₅-CO- substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, -NO₂, R₆R₇R₈Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀-Alkyl, C₁-C₂₀-Halogenalkyl, C₁-C₂₀-Hydroxyalkyl, C₁-C₆-Cyanoalkyl, C₃-C₈-Cycloalkyl, C₆-C₁₆-Aryl, C₇-C₁₆-Aralkyl, C₃-C₆-Heterocycloalkyl, C₃-C₁₆-Heteroaryl, C₄-C₁₆-Heteroaralkyl oder R₁₃-X₁- substituiert ist;
X und X₁ unabhängig voneinander für -O-, -S-, -CO-, -SO-, -SO₂-, -O-C(O)-, -C(O)-O-, -C(O)-NR₅-, -NR₁₀-C(O)-, -SO₂-O- oder -O-SO₂- stehen;
R₁, R₂ und R₃ unabhängig voneinander C₁-C₁₂-Alkyl, C₁-C₁₂-Perfluoralkyl, Phenyl oder Benzyl bedeuten;
R₄ und R₁₃ unabhängig C₁-C₂₀-Alkyl, C₁-C₂₀-Halogenalkyl, C₁-C₂₀-Hydroxyalkyl, C₃-C₈-Cycloalkyl, C₆-C₁₆-Aryl, C₇-C₁₆-Aralkyl bedeuten;
R₅ und R₁₀ unabhängig voneinander Wasserstoff, C₁-C₁₂-Alkyl, Phenyl oder Benzyl bedeuten, wobei die Alkylgruppen ihrerseits unsubstituiert oder mit C₁-C₁₂-Alkoxy oder C₃-C₈-Cycloalkyl substituiert sind;
R₆, R₇ und R₈ unabhängig voneinander C₁-C₁₂-Alkyl, C₁-C₁₂-Perfluoralkyl, Phenyl oder Benzyl bedeuten;
M für ein Alkalimetall und M₁ für ein Erdalkalimetall stehen; und
u für 0 oder 1 steht;
wobei der mit Q₁ gebildete alicyclische Ring gegebenenfalls weitere nicht-aromatische Doppelbindungen enthält;
Q₂ Wasserstoff, C₁-C₂₀-Alkyl, C₁-C₂₀-Halogenalkyl, C₁-C₁₂-Alkoxy, Halogen, -CN, R₁₁-X₂- darstellt;
R₁₁ C₁-C₂₀-Alkyl, C₁-C₂₀-Halogenalkyl, C₁-C₂₀-Hydroxyalkyl, C₃-C₈-Cycloalkyl, C₆-C₁₆-Aryl oder C₇-C₁₆-Aralkyl bedeutet;
X₂ -C(O)-O- oder -C(O)-NR₁₂- ist;
R₁₂ Wasserstoff, C₁-C₁₂-Alkyl, Phenyl oder Benzyl darstellt;
wobei die vorgenannten Cycloalkyl-, Heterocycloalkyl-, Aryl-, Heteroaryl-, Aralkyl- und Heteroaralkylgruppen unsubstituiert oder mit C₁-C₁₂-Alkyl, C₁-C₁₂-Alkoxy, -NO₂, -CN oder Halogen substituiert sind, und wobei die Heteroatome der vorgenannten Heterocycloalkyl-, Heteroaryl- und Heteroaralkylgruppen aus der Gruppe -O-, -S-, -NR₉- und -N= ausgewählt sind; und
R₉ Wasserstoff, C₁-C₁₂-Alkyl, Phenyl oder Benzyl darstellt.

39. Zusammensetzung gemäss Anspruch 1, dadurch gekennzeichnet, dass sie comonomere polyfunktionelle gespannte Cycloolefine enthält, die der Formel (f1) entsprechen,
(T)ₙ-U (f1),
worin T den Rest eines gespannten Cycloolefins bedeutet, U für eine direkte Bindung oder eine n-wertige Brückengruppe steht, und n eine ganze Zahl von 2 bis 8 darstellt.

40. Zusammensetzung gemäss Anspruch 39, dadurch gekennzeichnet, dass die Reste T in Formel (f1) Cycloolefinresten der Formel (f2) entsprechen, 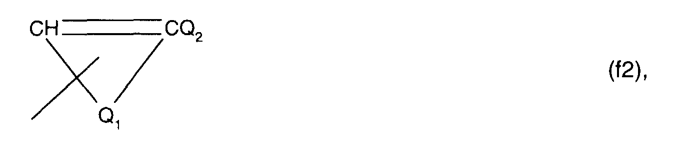 worin Q₁ und Q₂ die in Anspruch 7 angegebenen Bedeutungen haben.

41. Zusammensetzung gemäss Anspruch 39, dadurch gekennzeichnet, dass es sich bei T um Norbornenyl der Formel (nr₄) handelt

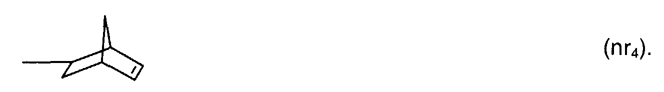

42. Zusammensetzung gemäss Anspruch 39, dadurch gekennzeichnet, dass U
(a) eine zweiwertige Brückengruppe der Formel (f5)
-X₅-R₀₂₈-X₆- (f5),
worin
X₅ und X₆ unabhängig voneinander eine direkte Bindung, -O-, -CH₂-O-, -C(O)O-, -O(O)C-, -CH₂-O(O)C-, -C(O)-NR₀₂₉-, -R₀₂₉N-(O)C-, -NH-C(O)-NR₀₂₉-, -O-C(O)-NH-, -CH₂-O-C(O)-NH- oder -NH-C(O)-O- bedeuten, und R₀₂₈ C₂-C₁₈-Alkylen, unsubstituiertes oder mit C₁-C₄-Alkyl oder C₁-C₄-Alkoxy substituiertes C₅-C₈-Cycloalkylen, unsubstituiertes oder mit C₁-C₄-Alkyl oder C₁-C₄-Alkoxy substituiertes C₆-C₁₈-Arylen oder C₇-C₁₉-Aralkylen, oder Polyoxaalkylen mit 2 bis 12 Oxaalkyleneinheiten und 2 bis 6 C-Atomen im Alkylen darstellt, und
R₀₂₉ H oder C₁-C₆-Alkyl ist; oder
(b) eine dreiwertige Brückengruppe der Formel (f6) 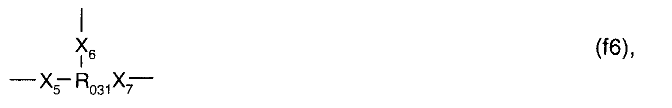 worin
X₅, X₆ und X₇ -O-, -CH₂-O-, -C(O)O-, -O(O)C-, -CH₂-O(O)C-, -C(O)-NR₀₂₉-, -R₀₂₉N-(O)C-, -NH-C(O)-NR₀₂₉-, -O-C(O)-NH-, -CH₂-O-C(O)-NH- oder -NH-C(O)-O- bedeuten, und
R₀₃₁ einen dreiwertigen aliphatischen Kohlenwasserstoffrest mit 3 bis 20 C-Atomen, einen dreiwertigen unsubstituierten oder mit C₁-C₄-Alkyl oder C₁-C₄-Alkoxy substituierten cycloaliphatischen Rest mit 3 bis 8 Ring-C-Atomen, oder einen dreiwertigen unsubstituierten oder mit C₁-C₄-Alkyl oder C₁-C₄-Alkoxy substituierten aromatischen Rest mit 6 bis 18 C-Atomen, einen unsubstituierten oder mit C₁-C₄-Alkyl oder C₁-C₄-Alkoxy substituierten dreiwertigen araliphatischen Rest mit 7 bis 19 C-Atomen, oder einen unsubstituierten oder mit C₁-C₄-Alkyl oder C₁-C₄-Alkoxy substituierten dreiwertigen heteroaromatischen Rest mit 3 bis 13 C-Atomen und 1 bis drei Heteroatomen aus der Gruppe -O-, -N- und -S- darstellt, und
R₀₃₁ H oder C₁-C₆-Alkyl ist; oder
(c) eine vierwertige Brückengruppe der Formel (f7) ist, 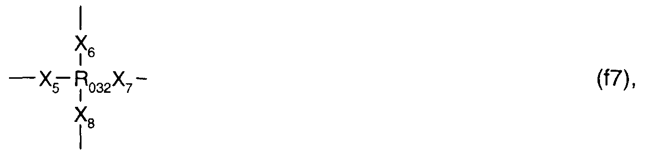 worin
X₅, X₆, X₇ und X₈ -C(O)O-, -CH₂-O(O)C- oder -C(O)-NR₀₂₉- bedeuten, und
R₀₃₂ einen vierwertigen aliphatischen Kohlenwasserstoffrest mit 4 bis 20 C-Atomen, einen vierwertigen unsubstituierten oder mit C₁-C₄-Alkyl oder C₁-C₄-Alkoxy substituierten cycloaliphatischen Rest mit 4 bis 8 Ring-C-Atomen, oder einen vierwertigen unsubstituierten oder mit C₁-C₄-Alkyl oder C₁-C₄-Alkoxy substituierten aromatischen Rest mit 6 bis 18 C-Atomen, einen vierwertigen unsubstituierten oder mit C₁-C₄-Alkyl oder C₁-C₄-Alkoxy substituierten araliphatischen Rest mit 7 bis 19 C-Atomen, oder einen vierwertigen unsubstituierten oder mit C₁-C₄-Alkyl oder C₁-C₄-Alkoxy substituierten heteroaromatischen Rest mit 3 bis 13 C-Atomen und 1 bis drei Heteroatomen aus der Gruppe -O-, -N- und -S- darstellt, und
R₀₂₉ H oder C₁-C₆-Alkyl ist.

43. Zusammensetzung gemäss Anspruch 1, dadurch gekennzeichnet, dass der Einkomponentenkatalysator in einer Menge von 0,001 bis 20 Mol-% enthalten ist, bezogen auf die Menge des Monomers.

44. Zusammensetzung gemäss Anspruch 43, dadurch gekennzeichnet, dass der Einkomponentenkatalysator in einer Menge von 0,01 bis 10 Mol-% enthalten ist, bezogen auf die Menge des Monomers.

45. Zusammensetzung gemäss Anspruch 43, dadurch gekennzeichnet, dass der Einkomponentenkatalysator in einer Menge von 0,01 bis 5 Mol-% enthalten ist, bezogen auf die Menge des Monomers.

46. Zusammensetzung gemäss Anspruch 1, dadurch gekennzeichnet, dass die gegebenenfalls monosubstituierten Methylgruppen der Formel XI entsprechen
-CH₂-R (XI),
worin R H, -CF₃, -SiR₃₈R₃₉R₄₀, -CR₄₁R₄₂R₄₃, unsubstituiertes oder mit C₁-C₆-Alkyl oder C₁-C₆-Alkoxy substituiertes C₆-C₁₆-Aryl oder C₄-C₁₅-Heteroaryl mit 1 bis 3 Heteroatomen aus der Gruppe O, S und N darstellt;
R₃₈, R₃₉ und R₄₀ unabhängig voneinander C₁-C₁₂-Alkyl, C₅- oder C₆-Cycloalkyl, oder unsubstituiertes oder mit C₁-C₆-Alkyl oder C₁-C₆-Alkoxy substituiertes Phenyl oder Benzyl; und
R₄₁, R₄₂ und R₄₃ unabhängig voneinander C₁-C₁₀- Alkyl bedeuten, das unsubstituiert oder mit C₁-C₁₀-Alkoxy substituiert ist, oder R₄₁ und R₄₂ diese Bedeutung haben und R₄₃ C₆-C₁₀-Aryl oder C₄-C₉-Heteroaryl ist, das unsubstituiert oder mit C₁-C₆-Alkyl oder C₁-C₆-Alkoxy substituiert ist.

47. Zusammensetzung gemäss Anspruch 1, dadurch gekennzeichnet, dass die Molybdän- oder Wolframverbindung einer der Formeln XII bis XIIc entspricht 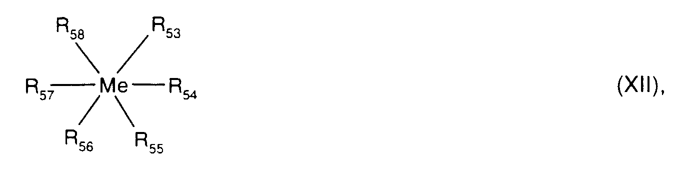 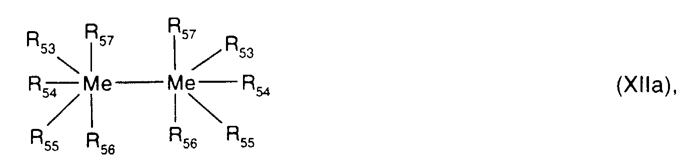 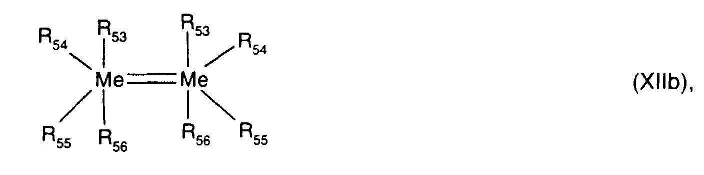 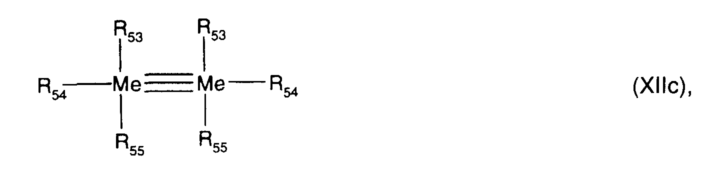 worin
Me für Mo(VI) oder W(VI) steht;
mindestens zwei der Reste R₅₃ bis R₅₈ einen Rest -CH₂-R der Formel XI gemäss Anspruch 50 bedeuten;
je zwei der übrigen Reste von R₅₃ bis R₅₈ =O oder =N-R₄₄ bedeuten, und R₄₄ unsubstituiertes oder mit C₁-C₆-Alkoxy substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl, oder Halogen substituiertes Phenyl, oder unsubstituiertes oder mit C₁-C₆-Alkyl, C₁-C₆-Alkoxy, C₁-C₆-Alkoxymethyl-, C₁-C₆-Alkoxyethyl- oder Halogen substituiertes Benzyl oder Phenylethyl bedeutet; und/oder
die übrigen Reste von R₅₃ bis R₅₈ Sekundäramino mit 2 bis 18 C-Atomen, R₄₅O- oder R₄₅S-, Halogen, Cyclopentadienyl oder überbrücktes Biscyclopentadienyl oder einen Neutralliganden bedeuten, worin R₄₅ unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl oder Halogen substituiertes Phenyl, oder
unsubstituiertes oder mit C₁-C₆-Alkyl, C₁-C₆-Alkoxy, C₁-C₆-Alkoxymethyl, C₁-C₆-Alkoxyethyl oder Halogen substituiertes Benzyl oder Phenylethyl darstellt.

48. Zusammensetzung gemäss Anspruch 1, dadurch gekennzeichnet, dass die Silylmethylgruppe der Formel XIV entspricht
-CH₂-SiR₃₈R₃₉R₄₀ (XIV),
worin
R₃₈, R₃₉ und R₄₀ unabhängig voneinander C₁-C₁₈-Alkyl, C₅- oder C₆-Cycloalkyl oder unsubstituiertes oder mit C₁-C₆-Alkyl oder C₁-C₆-Alkoxy substituiertes Phenyl oder Benzyl bedeuten.

49. Zusammensetzung gemäss Anspruch 1, dadurch gekennzeichnet, dass die Titan-, Niob-, Tantal-, Molybdän- oder Wolframverbindung einer der Formeln XV, XVa oder XVb entsprechen 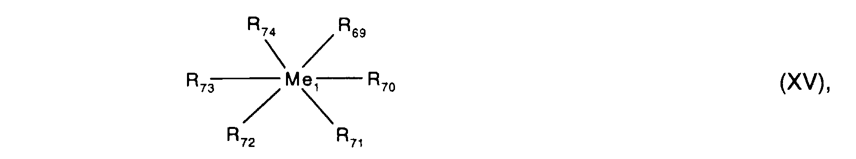 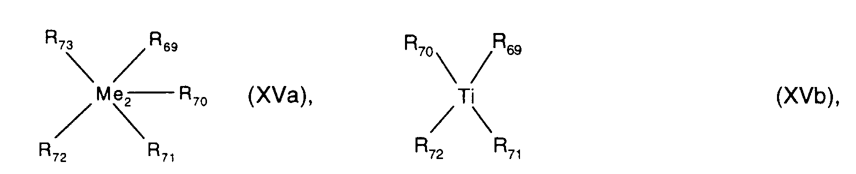 worin
Me₁ für Mo(VI) oder W(VI) steht;
Me₂ für Nb(V) oder Ta(V) steht;
einer der Reste R₆₉ bis R₇₄ einen Rest -CH₂-SiR₃₈R₃₉R₄₀ der Formel XIV gemäss Anspruch 52 bedeutet;
wenigstens einer der Reste R₆₉ bis R₇₄ F, Cl oder Br darstellt;
R₃₈, R₃₉ und R₄₀ unabhängig voneinander C₁-C₆-Alkyl, C₅- oder C₆-Cycloalkyl, oder unsubstituiertes oder mit C₁-C₆-Alkyl oder C₁-C₆-Alkoxy substituiertes Phenyl oder Benzyl bedeuten;
in Formel XV zwei oder jeweils zwei und in Formel XVa zwei der übrigen Reste von R₆₉ bis R₇₄ je zusammen =O oder =N-R₄₄ bedeuten, und R₄₄ unsubstituiertes oder mit C₁-C₆-Alkoxy substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellt, und
die übrigen Reste Sekundäramino mit 2 bis 18 C-Atomen, R₄₅O- oder R_{4S}S-, Halogen, unsubstituiertes oder substituiertes Cyclopentadienyl oder überbrücktes Biscyclopentadienyl oder einen Neutralliganden bedeuten, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellen; oder in den Formeln XV, XVa und XVb die übrigen Reste unabhängig voneinander Sekundäramino mit 2 bis 18 C-Atomen, R₄₅O- oder R₄₅S-, Halogen, unsubstituiertes oder substituiertes Cyclopentadienyl oder überbrücktes Biscyclopentadienyl oder einen Neutralliganden bedeuten, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellen.

50. Zusammensetzung gemäss Anspruch 1, dadurch gekennzeichnet, dass die Niob- oder Tantalverbindung der Formel XVIII entspricht 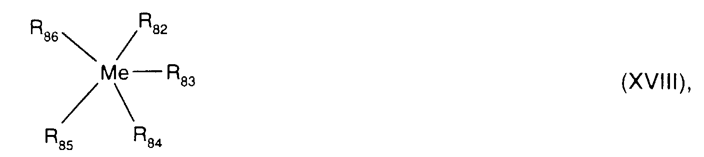 worin
Me für Nb(V) oder Ta(V) steht,
mindestens zwei der Reste R₈₂ bis R₈₆ einen Rest -CH₂-R der Formel XI gemäss Anspruch 50 bedeuten;
zwei der übrigen Reste von R₈₂ bis R₈₆ zusammen =O oder =N-R₄₄ bedeuten, und R₄₄ unsubstituiertes oder mit C₁-C₆-Alkoxy substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellt; und/oder
die übrigen Reste von R₈₂ bis R₈₆ unabhängig voneinander Sekundäramino mit 2 bis 18 C-Atomen, R₄₅O- R₄₅S-, Halogen, Cyclopentadienyl oder überbrücktes Biscyclopentadienyl oder einen Neutralliganden bedeuten, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellen.

51. Zusammensetzung gemäss Anspruch 1, dadurch gekennzeichnet, dass die Titan(lV)verbindung der Formel XX entspricht 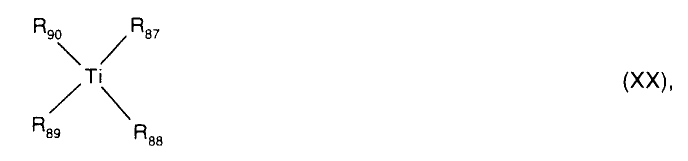 worin
mindestens zwei der Reste R₈₇ bis R₉₀ einen Rest -CH₂-R der Formel XI gemäss Anspruch 50 bedeuten; und
die übrigen Reste R₈₇ bis R₉₀ Sekundäramino mit 2 bis 18 C-Atomen, R₄₅O-, R₄₅S-, Halogen, Cyclopentadienyl oder überbrücktes Biscyclopentadienyl oder einen Neutralliganden bedeuten, worin die R₄₅ unabhängig voneinander unsubstituiertes oder mit C₁-C₆-Alkoxy oder Halogen substituiertes lineares oder verzweigtes C₁-C₁₈-Alkyl, unsubstituiertes oder mit C₁-C₆-Alkyl, C₁-C₆-Alkoxy oder Halogen substituiertes C₅- oder C₆-Cycloalkyl, unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Phenyl, oder unsubstituiertes oder mit C₁-C₆-Alkyl, C₁-C₆-Alkoxy, C₁-C₆-Alkoxymethyl, C₁-C₆-Alkoxyethyl, Di(C₁-C₆-alkyl)amino, Di(C₁-C₆-alkyl)amino-C₁-C₃-alkyl oder Halogen substituiertes Benzyl oder Phenylethyl darstellen.

52. Zusammensetzung gemäss Anspruch 1, dadurch gekennzeichnet, dass die Phosphinliganden den Formeln XXIII oder XXIIIa entsprechen
PR₉₁R₉₂R₉₃ (XXIII),
R₉₁R₉₂P-Z₁-PR₉₁R₉₂ (XXIIIa),
worin R₉₁, R₉₂ und R₉₃ unabhängig voneinander H, C₁-C₂₀-Alkyl, C₁-C₂₀-Alkoxy, unsubstituiertes oder mit C₁-C₆-Alkyl, C₁-C₆-Halogenalkyl oder C₁-C₆-Alkoxy substituiertes C₄-C₁₂-Cycloalkyl oder Cycloalkoxy, oder unsubstituiertes oder mit C₁-C₆-Alkyl, C₁-C₆-Halogenalkyl oder C₁-C₆-Alkoxy substituiertes C₆-C₁₆-Aryl oder C₆-C₁₆-Aryloxy, oder unsubstituiertes oder mit C₁-C₆-Alkyl, C₁-C₆-Halogenalkyl oder C₁-C₆-Alkoxy substituiertes C₇-C₁₆-Aralkyl oder C₇-C₁₆-Aralkyloxy darstellen; die Reste R₉₁ und R₉₂ gemeinsam unsubstituiertes oder mit C₁-C₆-Alkyl, C₁-C₆-Halogenalkyl oder C₁-C₆-Alkoxy substituiertes Tetra- oder Pentamethylen, oder Tetra- oder Pentamethylendioxyl bedeuten, oder unsubstituiertes oder mit C₁-C₆-Alkyl, C₁-C₆-Halogenalkyl oder C₁-C₆-Alkoxy substituiertes und mit 1 oder 2 1,2-phenylen kondensiertem Tetra- oder Pentamethylen, oder Tetra- oder Pentamethylendioxyl darstellen, oder unsubstituiertes oder mit C₁-C₆-Alkyl, C₁-C₆-Halogenalkyl oder C₁-C₆-Alkoxy substituiertes und in den 1,2- und 3,4-Stellungen
mit 1,2-Phenylen kondensiertes Tetramethylendioxyl darstellen, und R₉₃ die zuvor angegebene Bedeutung hat; und
Z₁ lineares oder verzweigtes, unsubstituiertes oder mit C₁-C₄-Alkoxy substituiertes C₂-C₁₂-Alkylen, unsubstituiertes oder mit C₁-C₄-Alkyl oder C₁-C₄-Alkoxy substituiertes 1,2- oder 1,3-Cycloalkylen mit 4 bis 8 C-Atomen, oder
unsubstituiertes oder mit C₁-C₄-Alkyl oder C₁-C₄-Alkoxy substituiertes 1,2 oder 1,3-Heterocycloalkylen mit 5 oder 6 Ringgliedern und einem Heteroatom aus der Gruppe O oder N bedeutet.

53. Zusammensetzung gemäss Anspruch 1, dadurch gekennzeichnet, dass die Ruthenium- oder Osmiumverbindung einer der Formeln XXV bis XXVf entspricht
(R₉₄R₉₅R₉₆P)L₈Me²⁺(Z¹⁻)₂ (XXV),
(R₉₄R₉₅R₉₆P)₂L₉Me²⁺(Z¹⁻)₂ (XXVa),
(R₉₄R₉₅R₉₆P)L₉L₁₀Me²⁺(Z¹⁻)₂ (XXVb),
(R₉₄R₉₅R₉₆P)₃L₉Me²⁺(Z¹⁻)₂ (XXVc),
(R₉₄R₉₅R₉₆P)L₉L₉Me²⁺(Z¹⁻)₂ (XXVd),
(R₉₄R₉₅R₉₆P)L₈L₁₀Me²⁺(Z¹⁻)₂ (XXVe),
(R₉₄R₉₅R₉₆P)L₈(L₉)ₘMe²⁺(Z¹⁻)₂ (XXVf),
worin
Me für Ru oder Os steht;
Z in Formeln XXV bis XXVe H⁻, Cyclopentadienyl, Cl⁻, Br⁻, BF₄⁻, PF₆⁻, SbF₆⁻, AsF₆⁻, CF₃SO₃⁻, C₆H₅-SO₃⁻, 4-Methyl-C₆H₅-SO₃⁻, 3,5-Dimethyl-C₆H₅-SO₃⁻, 2,4,6-Trimethyl-C₆H₅-SO₃⁻ und 4-CF₃-C₆H₅-SO₃⁻ und in Formel XXVf H⁻, Cyclopentadienyl, BF₄⁻, PF₆⁻, SbF₆⁻, ASF₆⁻, CF₃SO₃⁻, C₆H₅-SO₃⁻, 4-Methyl-C₆H₅-SO₃⁻, 2,6-Dimethyl-C₆H₅-SO₃⁻, 2,4,6-Trimethyl-C₆H₅-SO₃⁻ oder 4-CF₃-C₆H₅-SO₃⁻ bedeutet;
R₉₄, R₉₅ und R₉₆ unabhängig voneinander C₁-C₆-Alkyl, unsubstituiertes oder mit 1 bis 3 C₁-C₄-Alkyl substituiertes Cyclopentyl oder Cyclohexyl oder Cyclopentyloxy oder Cyclohexyloxy, oder unsubstituiertes oder mit 1 bis 3 C₁-C₄-Alkyl substituiertes Phenyl oder Benzyl oder Phenyloxy oder Benzyloxy darstellen;
L₈ unsubstituiertes oder mit 1 bis 3 C₁-C₄-Alkyl, C₁-C₄-Alkoxy, -OH, -F oder Cl substituiertes C₆-C₁₆-Aren oder C₅-C₁₆-Heteroaren darstellt;
L₉ C₁-C₆-Alkyl-CN, Benzonitril oder Benzylnitril bedeutet; und
L₁₀ H₂O oder C₁-C₆-Alkanol ist.

54. Zusammensetzung gemäss Anspruch 1, dadurch gekennzeichnet, dass die Ruthenium- oder Osmiumverbindung einer der Formeln XXVI, XXVla, XXVlb, XXVlc und XXVld entspricht
Me²⁺(L₁₁)₂(L₁₂)(Y₁⁻)₂ (XXVI),
Me²⁺(L₁₁)₃(Y₁⁻)₂ (XXVIa),
Me²⁺(L₁₁)₂L₁₃(Y₁⁻) (XXVIb),
Me²⁺(L₁₁)₃L₁₄(Y₁⁻)₂ (XXVIc),
Me²⁺L₁₁(L₁₂)₃(Y₁⁻)₂ (XXVId),
worin
Me für Ru oder Os steht;
Y₁ das Anion einer einbasigen Säure bedeutet;
L₁₁ ein Phosphin der Formel XXIII oder XXIIIa gemäss Anspruch 56 darstellt,
L₁₂ einen Neutralliganden bedeutet;
L₁₃ unsubstituiertes oder mit C₁-C₄-Alkyl substituiertes Cyclopentadienyl darstellt; und
L₁₄ für CO steht.

55. Verfahren zur Herstellung vernetzter Polymerisate gemäss Anspruch 1 durch Metathesepolymerisation, dadurch gekennzeichnet, dass man eine Zusammensetzung aus
(a) einer katalytischen Menge eines Einkomponenten-Katalysators für die Metathesepolymerisation und
(b) mindestens ein Polymer mit im Polymerrückgrat gebundenen gespannten Cycloalkenylenresten alleine oder in Mischung mit gespannten Cycloolefinen,
(c) durch Erwärmen polymerisiert,
(d) durch Bestrahlung polymerisiert,
(e) durch Erwärmung und Bestrahlung polymerisiert,
(f) durch kurzzeitige Erwärmung den Einkomponenten-Katalysator aktiviert und die Polymerisation durch Bestrahlung beendet, oder
(g) durch kurzzeitige Bestrahlung den Einkomponenten-Katalysator aktiviert und die Polymerisation durch Erwärmen beendet.

56. Verfahren gemäss Anspruch 58, dadurch gekennzeichnet, dass es bei einer Temperatur von 20 bis 300°C durchgeführt wird.

## Claims

1. A composition comprising catalytic amounts of a one-component catalyst for metathesis polymerization and at least one polymer with recurring structural elements which contain a strained cycloalkenyl radical bonded via a divalent bridge group, alone or mixed with structural elements of strained cycloolefins, wherein the composition as one-component catalyst
(a) comprises a ruthenium or osmium compound of the formula
[(Me⁺ⁿ)(L₁^{z1})ₘ(L₂^{z2})ₒ(L₃^{z3})ₚ(L₄^{z4})_{q}(L₅^{z5})ᵣ(L₆^{z6})ₛ](L₇^{z7})ₜ (IX)
in which
Me is ruthenium or osmium; n is 2, L₁, L₂ and L₃ together are unsubstituted or C₁-C₄alkyl-, C₁-C₄alkoxy-, C₆-C₁₂aryl- or halogen-substituted monocyclic, polycyclic or fused arenes having 6-24 carbon atoms or are unsubstituted or C₁-C₄alkyl-, C₁-C₄alkoxy- or halogen-substituted monocyclic heteroarenes, fused heteroarenes or fused arene-heteroarenes having 4-22 carbon atoms and 1-3 heteroatoms from the group O, S and N, and L₄, L₅ and L₆ are a non-photolabile ligand from the group H₂O, NH₃, unsubstituted or fluorine-substituted C₁-C₄alkanol or C₁-C₄alkanethiol, aliphatic ethers, thioethers, sulfoxides or sulfones having 2-8 carbon atoms, dimethylformamide and N-methylpyrrolidone; m, o, p, q, r and s are 1; z1-z6 are 0, z7 is -1 and L₇ is a non-coordinating anion;
or a ruthenium or osmium compound of the formula
[L₁Me(L₈)₅]²⁺[Y₁^{x})_{2/x} (X)
in which L₁ is N₂, C₁-C₄alkylnitrile, benzonitrile or benzylnitrile; L₈ is NH₃ or an amine having 1-12 carbon atoms, Y₁ is a non-coordinating anion and x is the number 1 or 2;
(b) comprises a molybdenum(VI) or tungsten(VI) compound which has at least two methyl groups or two monosubstituted methyl groups attached to the metal, the substituent not containing a hydrogen atom in position α; or
(c) comprises a titanium(IV), niobium(V), tantalum(V), molybdenum(VI) or tungsten(VI) compound in which a silylmethyl group and at least one halogen are attached to the metal; or
(d) comprises a niobium(V) or tantalum(V) compound which has at least two methyl groups or two monosubstituted methyl groups attached to the metal, the substituent containing no hydrogen atom in position α or
(e) comprises a titanium(IV) compound which has at least two methyl groups or two monosubstituted methyl groups attached to the metal, the substituent containing no hydrogen atom in position α; or
(f) comprises a ruthenium or osmium compound which has at least one phosphine group, at least one photolabile ligand and, if desired, neutral ligands attached to the metal atom, a total of from 2 to 5 ligands being attached, and comprises acid anions for charge compensation; or
(g) comprises a divalently cationic ruthenium or osmium compound having a metal atom to which 1 to 3 tertiary phosphine ligands, in the case of the ruthenium compound with sterically bulky substituents, and, if desired, non-photolabile neutral ligands, and anions for charge compensation, are attached.

2. A composition according to claim 1, wherein the strained cycloolefin ring comprises monocyclic or polycyclic condensed and/or bridged ring systems.

3. A composition according to claim 2, wherein the polycyclic condensed and/or bridged ring systems contain two to 6 rings.

4. A composition according to claim 2, wherein the individual cyclic rings contain 3 to 16 ring members.

5. A composition according to claim 2, wherein the individual cyclic rings contain 4 to 12 ring members.

6. A composition according to claim 2, wherein the individual cyclic rings contain 5 to 8 ring members.

7. A composition according to claim 1, wherein the cycloalkenyl radicals correspond to the formula A 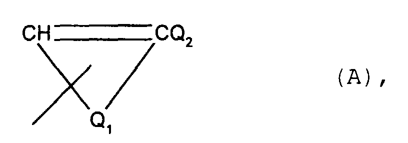 in which
Q₁ is a radical having at least one carbon atom which, together with the -CH=CQ₂- group, forms an at least 3-membered alicyclic ring which may contain one or more heteroatoms chosen from the group consisting of silicon, phosphorus, oxygen, nitrogen and sulfur; and which is unsubstituted or substituted by halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀alkyl, C₁-C₂₀hydroxyalkyl, C₁-C₂₀haloalkyl, C₁-C₆cyanoalkyl, C₃-C₈cycloalkyl, C₆-C₁₆aryl, C₇-C₁₆aralkyl, C₃-C₆heterocycloalkyl, C₃-C₁₆heteroaryl, C₄-C₁₆heteroaralkyl or R₄-X-; or in which two adjacent C atoms are substituted by -CO-O-CO- or -CO-NR₅-CO-; or in which an alicyclic, aromatic or heteroaromatic ring which is unsubstituted or substituted by halogen, -CN, -NO₂, R₆R₇R₈Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀alkyl, C₁-C₂₀haloalkyl, C₁-C₂₀hydroxyalkyl, C₁-C₆cyanoalkyl, C₃-C₈cycloalkyl, C₆-C₁₆aryl, C₇-C₁₆aralkyl, C₃-C₆heterocycloalkyl, C₃-C₁₆heteroaryl, C₄-C₁₆heteroaralkyl or R₁₃-X₁- may be fused onto adjacent carbon atoms of the alicyclic ring;
X and X₁ independently of one another are -O-, -S-, -CO-, -SO-, -SO₂-, -O-C(O)-, -C(O)-O-, -C(O)-NR₅-, -NR₁₀-C(O)-, -SO₂-O- or -O-SO₂-;
R₁, R₂ and R₃ independently of one another are C₁-C₁₂alkyl, C₁-C₁₂perfluoroalkyl, phenyl or benzyl;
R₄ and R₁₃ independently of one another are C₁-C₂₀alkyl, C₁-C₂₀haloalkyl, C₁-C₂₀hydroxyalkyl, C₃-C₈cycloalkyl, C₆-C₁₆aryl, C₇-C₁₆aralkyl;
R₅ and R₁₀ independently of one another are hydrogen, C₁-C₁₂alkyl, phenyl or benzyl, where the alkyl groups in their turn are unsubstituted or substituted by C₁-C₁₂alkoxy or C₃-C₈cycloalkyl;
R₆, R₇ and R₈ independently of one another are C₁-C₁₂alkyl, C₁-C₁₂perfluoroalkyl, phenyl or benzyl;
M is an alkali metal and M₁ is an alkaline earth metal; and
u is 0 or 1;
where the alicyclic ring formed with Q₁ may contain further non-aromatic double bonds;
Q₂ is hydrogen, C₁-C₂₀alkyl, C₁-C₂₀haloalkyl, C₁-C₁₂alkoxy, halogen, -CN, R₁₁-X₂-;
R₁₁ is C₁-C₂₀alkyl, C₁-C₂₀haloalkyl, C₁-C₂₀hydroxyalkyl, C₃-C₈cycloalkyl, C₆-C₁₆aryl or C₇-C₁₆aralkyl;
X₂ is -C(O)-O- or -C(O)-NR₁₂-;
R₁₂ is hydrogen, C₁-C₁₂alkyl, phenyl or benzyl;
where the abovementioned cycloalkyl, heterocycloalkyl, aryl, heteroaryl, aralkyl and heteroaralkyl groups are unsubstituted or substituted by C₁-C₁₂alkyl, C₁-C₁₂alkoxy, -NO₂, -CN or halogen and where the heteroatoms of the abovementioned heterocycloalkyl, heteroaryl and heteroaralkyl groups are chosen from the groups consisting of -O-, -S-, -NR₉- and -N=; and
R₉ is hydrogen, C₁-C₁₂alkyl, phenyl or benzyl.

8. A composition according to claim 7, wherein the radical of the formula A is an alicyclic ring which Q₁ forms together with the -CH = CQ₂- group and which contains 3 to 8 ring atoms, it being possible for this to be a monocyclic, or a bicyclic, tricyclic or tetracyclic condensed ring system.

9. A composition according to claim 7, wherein, in the radical of the formula A,
Q₁ is a radical having at least one carbon atom which, together with the -CH=CQ₂- group, forms a 3- to 20-membered alicyclic ring which may contain one or more heteroatoms chosen from the group consisting of silicon, oxygen, nitrogen and sulfur; and which is unsubstituted or substituted by halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₁₂alkyl, C₁-C₁₂haloalkyl, C₁-C₁₂hydroxyalkyl, C₁-C₄cyanoalkyl, C₃-C₆cycloalkyl, C₆-C₁₂aryl, C₇-C₁₂aralkyl, C₃-C₆heterocycloalkyl, C₃-C₁₂heteroaryl, C₄-C₁₂heteroaralkyl or R₄-X-; or in which two adjacent C atoms in this radical Q₁ are substituted by -CO-O-CO- or -CO-NR₅-CO-; or in which an alicyclic, aromatic or heteroaromatic ring which is unsubstituted or substituted by halogen, -CN, -NO₂, R₆R₇R₈Si-, -COOM, -SO₃M, -PO₃M, -COO(M₁)_{1/2}, -SO₃(M₁)_{1/2}, -PO₃(M₁)_{1/2}, C₁-C₁₂alkyl, C₁-C₁₂haloalkyl, C₁-C₁₂hydroxyalkyl, C₁-C₄cyanoalkyl, C₃-C₆cycloalkyl, C₆-C₁₂aryl, C₇-C₁₂aralkyl, C₃-C₆heterocycloalkyl, C₃-C₁₂heteroaryl, C₄-C₁₂heteroaralkyl or R₁₃-X₁- may be fused onto adjacent carbon atoms;
X and X₁ independently of one another are -O-, -S-, -CO-, -SO-, -SO₂-, -O-C(O)-, -C(O)-O-, -C(O)-NR₅-, -NR₁₀-C(O)-, -SO₂-O- or -O-SO₂-;
R₁, R₂ and R₃ independently of one another are C₁-C₆alkyl, C₁-C₆perfluoroalkyl, phenyl or benzyl;
M is an alkali metal and M1 is an alkaline earth metal;
R₄ and R₁₃ independently of one another are C₁-C₁₂alkyl, C₁-C₁₂haloalkyl, C₁-C₁₂hydroxyalkyl, C₃-C₈cycloalkyl, C₆-C₁₂aryl, C₇-C₁₂aralkyl;
R₅ and R₁₀ independently of one another are hydrogen, C₁-C₆alkyl, phenyl or benzyl, where the alkyl groups in their turn are unsubstituted or substituted by C₁-C₆alkoxy or C₃-C₆cycloalkyl;
R₆, R₇ and R₈ independently of one another are C₁-C₆alkyl, C₁-C₆perfluoroalkyl, phenyl or benzyl;
u is 0 or 1;
where the alicyclic ring formed with Q₁ may contain further non-aromatic double bonds;
Q₂ is hydrogen, C₁-C₁₂alkyl, C₁-C₁₂haloalkyl, C₁-C₆alkoxy, halogen, -CN, R₁₁-X₂-;
R₁₁ is C₁-C₁₂alkyl, C₁-C₁₂haloalkyl, C₁-C₁₂hydroxyalkyl, C₃-C₆cycloalkyl, C₆-C₁₂aryl or C₇-C₁₂aralkyl;
X₂ is -C(O)-O- or -C(O)-NR₁₂-; and
R₁₂ is hydrogen, C₁-C₆alkyl, phenyl or benzyl;
where the cycloalkyl, heterocycloalkyl, aryl, heteroaryl, aralkyl and heteroaralkyl groups are unsubstituted or substituted by C₁-C₆alkyl, C₁-C₆alkoxy, -NO₂, -CN or halogen, and where the heteroatoms of the heterocycloalkyl, heteroaryl and heteroaralkyl groups are chosen from the group consisting of -O-, -S-, -NR₉- and -N=; and
R₉ is hydrogen, C₁-C₆alkyl, phenyl or benzyl.

10. A composition according to claim 7, wherein, in the radical of the formula A,
Q₁ is a radical having at least one carbon atom which, together with the -CH=CQ₂- group, forms a 3- to 10-membered alicyclic ring which may contain a heteroatom chosen from the group consisting of silicon, oxygen, nitrogen and sulfur and is unsubstituted or substituted by halogen, -CN, -NO₂, R₁R₂R₃Si-, -COOM, -SO₃M, -PO₃M, -COO(M₁)_{1/2}, -SO₃(M₁)_{1/2}, -PO₃(M₁)_{1/2}, C₁-C₆alkyl, C₁-C₆haloalkyl, C₁-C₆hydroxyalkyl, C₁-C₄cyanoalkyl, C₃-C₆cycloalkyl, phenyl, benzyl or R₄-X-; or in which an alicyclic, aromatic or heteroaromatic ring which is unsubstituted or substituted by halogen, -CN, -NO₂, R₆R₇R₈Si-, -COOM, -SO₃M, -PO₃M, -COO(M₁)_{1/2}, -SO₃(M₁)_{1/2}, -PO₃(M₁)_{1/2}, C₁-C₆alkyl, C₁-C₆haloalkyl, C₁-C₆hydroxyalkyl, C₁-C₄cyanoalkyl, C₃-C₆cycloalkyl, phenyl, benzyl or R₁₃-X₁- may be fused onto adjacent carbon atoms;
R₁, R₂ and R₃ independently of one another are C₁-C₄alkyl, C₁-C₄perfluoroalkyl, phenyl or benzyl;
M is an alkali metal and M₁ is an alkaline earth metal;
R₄ and R₁₃ independently of one another are C₁-C₆alkyl, C₁-C₆haloalkyl, C₁-C₆hydroxyalkyl or C₃-C₆cycloalkyl;
X and X₁ independently of one another are -O-, -S-, -CO-, -SO- or -SO₂-;
R₆, R₇ and R₈ independently of one another are C₁-C₄alkyl, C₁-C₄perfluoroalkyl, phenyl or benzyl;
and Q₂ is hydrogen.

11. A composition according to claim 1, wherein the cycloalkenyl radical is unsubstituted or C₁-C₄alkyl-substituted cyclopropenyl, cyclobutenyl, cyclopentenyl, cycloheptenyl, cyclooctenyl, cyclopentadienyl, cyclohexadienyl, cycloheptadienyl, cyclooctadienyl and norbornenyl or norbornenyl derivatives.

12. A composition according to claim 11, wherein the norbornenyl derivative corresponds to the formula B 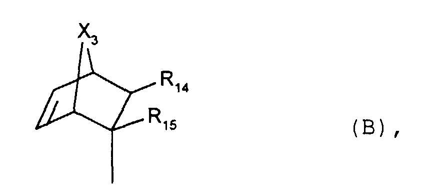 in which
X₃ is -CHR₁₆-, oxygen or sulfur;
R₁₄ and R₁₅ independently of one another are hydrogen, -CN, trifluoromethyl, (CH₃)₃Si-O-, (CH₃)₃Si- or -COOR₁₇; and
R₁₆ and R₁₇ independently of one another are hydrogen, C₁-C₁₂alkyl, phenyl or benzyl;
or corresponds to the formula C 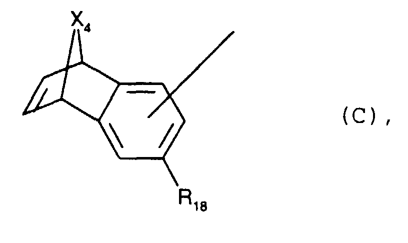 in which
X₄ is -CHR₁₉-, oxygen or sulfur;
R₁₉ s hydrogen, C₁-C₁₂alkyl, phenyl or benzyl; and
R₁₈ is hydrogen, C₁-C₆alkyl or halogen.

13. A composition according to claim 1, wherein the cycloalkenyl radical is norbornenyl of the formula D or methylnorbornenyl of the formula E

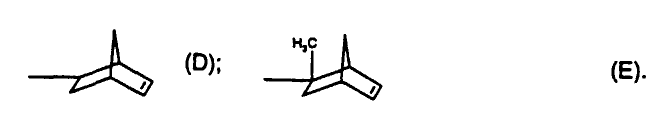

14. A composition according to claim 1, wherein the bivalent bridge group is a divalent hydrocarbon radical, uninterrupted or interrupted by -O-, having 1 to 100 C atoms, which is attached directly or by way of an ether, thioether, amine, ester, amide, urethane or urea group to the polymer backbone and which is attached directly or by way of an ether, thioether, amine, ester, amide, urethane or urea group to the cycloolefin; or wherein the bridge group is an ether, thioether, amine, ester, amide, urethane or urea group.

15. A composition according to claim 1, wherein the bivalent bridge group corresponds to the formula F
-(X₁₀₀)_{g}-(R₀₁)ₕ-(X₁₀₁)ᵢ- (F),
in which
g, h and i independently of one another are 0 or 1, and g and i are not simultaneously 0;
X₁₀₀ and X₁₀₁ independently of one another are -O-, -S-, -NH-, -N(C₁-C₄alkyl)-, -C(O)O-, -O(O)C-, -NH(O)C-, -C(O)NH-, -N(C₁-C₄alkyl)-(O)C-, -C(O)-N(C₁-C₄alkyl)-, -O-C(O)-O-, -NH-C(O)-O-, -O-C(O)-NH-, -N(C₁-C₄alkyl)-(O)C-O or -O-C(O) -N(C₁-C₄alkyl)-; and
R₀₁ is a direct bond, C₁-C₁₈alkylene, polyoxaalkylene having 2 to 12 oxaalkylene units and 2 to 6 C atoms in the oxaalkylene, unsubstituted or C₁-C₄[lacuna]- or C₁-C₄alkoxy-substituted C₅-C₈cycloalkylene, unsubstituted or C₁-C₄[lacuna]- or C₁-C₄alkoxy-substituted C₅-C₈cycloalkylene -CH₂-, unsubstituted or C₁-C₄[lacuna]- or C₁-C₄alkoxy-substittued -CH₂-(C₅-C₈cycloalkylene)-CH₂-, unsubstituted or C₁-C₄[lacuna]- or C₁-C₄alkoxy-substituted heterocycloalkylene having 5 or 6 ring members and heteroatoms selected from the group -O-, -S- and N, unsubstituted or C₁-C₄[lacuna]- or C₁-C₄alkoxy-substituted phenylene, benzylene or xylylene, or unsubstituted or C₁-C₄[lacuna]- or C₁-C₄alkoxy-substituted heteroarylene having 5 or 6 ring members and heteroatoms selected from the group -O-, -S- and N.

16. A composition according to claim 15, wherein R₀₁ as alkylene is C₁-C₁₂alkylene.

17. A composition according to claim 15, wherein R₀₁ as polyoxaalkylene contains 2 to 6 oxaalkylene units and 2 or 3 C atoms in the oxaalkylene.

18. A composition according to claim 15, wherein R₀₁ as cycloalkylene and in the cycloalkylene-containing radicals is C₅- or C₆cycloalkylene.

19. A composition according to claim 15, wherein R₀₁ as heterocycloalkylene and heteroarylene is a 5- or 6-membered cycloalkylene having a heteroatom from the group N or O.

20. A composition according to claim 15, wherein R₀₁ is C₁- or C₁₂alkylene, polyoxaalkylene having 2 to 6 oxaalkylene units and 2 C atoms in the oxaalkylene, unsubstituted or C₁-C₄[lacuna]- or C₁-C₄alkoxy-substituted cyclopentylene, cyclohexylene, cyclohexylene-CH₂-, -CH₂-cyclohexylene-CH₂-, phenylene, benzylene or xylylene.

21. A composition according to claim 1, wherein the bridge group is 1,4-C₆H₄-[O-(O)C]₂-, -C(O)-O-C₂-C₆alkylene-O-(O)C- or -C(O)-O-CH₂-.

22. A composition according to claim 1, wherein the polymers are homo- or copolymers, where structural elements having a strained cycloalkenyl radical attached to the monomer unit by way of a bivalent bridge group are present in an amount of at least 1 mol-%, based on the polymer.

23. A composition according to claim 22, wherein structural elements having a strained cycloalkenyl radical attached to the monomer unit by way of a bivalent bridge group are present in an amount of at least 5 mol-%.

24. A composition according to claim 22, wherein from 5 to 100 mol-% of structural elements are present.

25. A composition according to claim 1, wherein the number of recurring structural units in the polymer is from 2 to 10,000.

26. A composition according to claim 1, wherein the polymer backbone is derived from polymers which are functionalized with -OH, -NH₂, -NH(C₁-C₄alkyl), -C(O)OH, -C(O)-NH₂ or -C(O)-NH(C₁-C₄alkyl).

27. A composition according to claim 1, wherein the polymer backbone is formed by polymers from the group of homo- and copolymers with olefinically unsaturated alcohols, homo- and copolymers of unsaturated carboxylic acids, homo- and copolymers of hydroxystyrene or aminostyrene or styrenesulfonic or carboxylic acids, homo- and copolymers of hydroxylated butadiene, homo- and copolymers of vinylpyrrolidone, polysiloxanes having hydroxy- or aminoalkyl side chains, and homo- and copolymers of diglycidyl ethers and diols, or by polysaccharides.

28. A composition according to claim 1, wherein the polymer [lacuna] from 1 to 100 mol-%, based on the polymer, of structural elements of the formula G, from 99 to 0 mol-% of structural elements of the formula H, and from 100 to 0 mol-% of structural elements of the formula I, 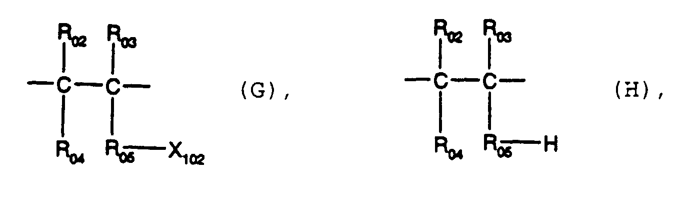 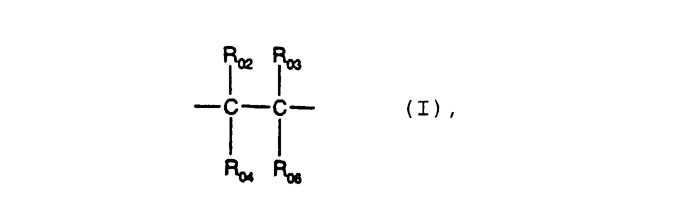 in which
the R₀₂s independently of one another are H, F or C₁-C₁₂alkyl;
the R₀₃s independently of one another are H, F, Cl, CN cr C₁-C₁₂alkyl;
the R₀₄s independently of one another are H, F, C₁-C₁₂alkyl, -COOH, -C(O)O-C₁-C₁₂-alkyl, -C(O)-NH₂ or -C(O)-NH-C₁-C₁₂alkyl;
R₀₅ is a bivalent bridge group;
R₀₆ is H, F, Cl, CN, C₁-C₁₂alkyl, C₁-C₁₂alkoxy, unsubstituted phenyl or phenyl which is substituted by Cl, Br, C₁-C₄alkyl, C₁-C₄alkoxy, -C(O)OC₁-C₁₂alkyl, -C(O)-NH₂, C(O)-NH-C₁-C₁₂alkyl, -SO₃H or -SO₃-C₁-C₁₂alkyl, or is -C(O)OH, -C(O)O-C₂-C₁₂hydroxyalkyl, -C(O)O-C₁-C₁₂alkyl, -C(O)-NH₂ or -C(O)-NH-C₁-C₁₂alkyl;
R₀₄ and R₀₆ together are -O-CH₂-O- or -O-C₂-C₁₂alkylidene-O-; and
X₁₀₂ is a radical of the formula A according to claim 7.

29. A composition according to claim 28, wherein X₁₀₂ is norbornenyl which is unsubstituted or substituted by C₁-C₄alkyl.

30. A composition according to claim 28, wherein in the formulae B and C the R₀₂ₛ are H, the R₀₃ₛ are independently of one another H or methyl, R₀₄ is H, -C(O)-OH or -C(O)-O-C₁-C₄alkyl, R₀₅ is p-C₆H₄-O-, -C(O)-O-C₂-C₆alkylene-O-C(O)- or -C(O)-O-CH₂-, and X₁₀₂ is a radical of the formula A.

31. A composition according to claim 29, wherein in the formulae B and C the R₀₂ₛ are H, the R₀₃ₛ are H or methyl, R₀₄ is H, R₀₅ is -(CH₂)_{d}-O-C(O)- with d equal to an integer from 1 to 12, -(CH₂)_{d}-O-(CₑH₂ₑ-O-)_{f}C(O)- with e equal to an integer from 2 to 6, and f equal to an integer from 1 to 12, and X₁₀₂ is a radical of the formula A.

32. A composition according to claim 1, wherein the polymer comprises polyepoxides with recurring structural elements selected from the group of structural elements of the formulae J, K, L and M
-CH₂-CH(OH)-CH₂-O-R₀₉-O-CH₂-CH(O-R₀₁₀-X₁₀₂)-CH₂-O- (J),
-R₀₆-O- (K),
-CH₂-CH(OH)-CH₂-O-R₀₇-O-CH₂-CH(OH)-CH₂-O- (L),
-R₀₈-O- (M),
with the proviso that at least structural elements of the formulae J and K are contained, in which R₀₇ and R₀₉ independently of one another are a divalent radical, reduced by the glycidyloxy groups, of a diglycidyl ether and R₀₆ and R₀₈ independently of one another are a divalent radical, reduced by the hydroxyl groups, of a diol, R₀₁₀ is a divalent bridge group, and X₁₀₂ is a radical of the formula A according to claim 7.

33. A composition according to claim 32, wherein the polymer contains in each case up to 50 mol-% of the structural elements of the formulae J and K per mole of the polymer.

34. A composition according to claim 32, wherein R₀₆ and R₀₈ independently of one another are C₂-C₁₈alkylene, polyoxaalkylene having 2 to 50 oxaalkylene units and 2 to 6 C atoms in the oxyalkylene, C₃-C₁₂cycloalkylene, C₅-C₈cycloalkylene -CH₂-, -CH₂-(C₅-C₈cycloalkylene)-CH₂-, C₆-C₁₄arylene, bisphenylene, benzylene, xylylene or -C₆H₄-X₀₁-C₆H₄-, where X₀₁ is O, S, SO, SO₂, CO, CO₂, NH, N(C₁-C₄alkyl), alkylidene having 1 to 18 C atoms or C₅-C₇cycloalkylidene.

35. A composition according to claim 32, wherein R₀₇ and R₀₉ independently of one another are C₂-C₁₈alkylene, polyoxaalkylene having 2 to 50 oxaalkylene units and 2 to 6 C atoms in the oxyalkylene, C₃-C₁₂cycloalkylene, C₅-C₈cycloalkylene-CH₂-, -CH₂-(C₅-C₈cycloalkylene)-CH₂-, C₆-C₁₄arylene, bisphenylene, benzylene, xylylene, -C₆H₄-X₀₁-C₆H₄-, where X₀₁ is O, S, SO, SO₂, CO, CO₂, NH, N(C₁-C₄alkyl) or alkylidene having 1 to 18 C atoms or C₅-C₇cycloalkylidene.

36. A composition according to claim 32, wherein X₁₀₂ is a norbornenyl or 1-methyl-norbornen-1-yl radical.

37. A composition according to claim 32, wherein the divalent bridge group R₀₁₀ is a radical of the formula -(CₑH₂ₑ-O-)_{f}C(O)- with e equal to O or an integer from 2 to 6, and f is equal to a number from 1 to 12.

38. A composition according to claim 1, wherein the comonomeric strained cycloolefins correspond to the formula I' 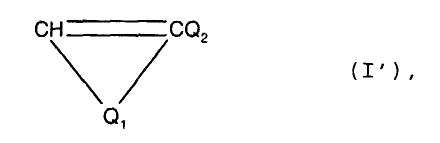 in which
Q₁ is a radical having at least one carbon atom which, together with the -CH=CQ₂- group, forms an at least 3-membered alicyclic ring which may contain one or more heteroatoms chosen from the group consisting of silicon, phosphorus, oxygen, nitrogen and sulfur; and which is unsubstituted or substituted by halogen, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀alkyl, C₁-C₂₀hydroxyalkyl, C₁-C₂₀haloalkyl, C₁-C₆cyanoalkyl, C₃-C₈cycloalkyl, C₆-C₁₆aryl, C₇-C₁₆aralkyl, C₃-C₆heterocycloalkyl, C₃-C₁₆heteroaryl, C₄-C₁₆heteroaralkyl or R₄-X-; or in which two adjacent C atoms are substituted by -CO-O-CO- or -CO-NR₅-CO-; or in which an alicyclic, aromatic or heteroaromatic ring which is unsubstituted or substituted by halogen, -CN, -NO₂, R₆R₇R₈Si-(O)ᵤ-, -COOM, -SO₃M, -PO₃M, -COO(M₁)_{1/2}, -SO₃(M₁)_{1/2}, -PO₃(M₁)_{1/2}, C₁-C₂₀alkyl, C₁-C₂₀haloalkyl, C₁-C₂₀hydroxyalkyl, C₁-C₆cyanoalkyl, C₃-C₈cycloalkyl, C₆-C₁₆aryl, C₇-C₁₆aralkyl, C₃-C₆heterocycloalkyl, C₃-C₁₆heteroaryl, C₄-C₁₆heteroaralkyl or R₁₃-X₁- may be fused onto adjacent carbon atoms of the alicyclic ring;
X and X₁ independently of one another are -O-, -S-, -CO-, -SO-, -SO₂-, -O-C(O)-, -C(O)-O-, -C(O)-NR₅-, -NR₁₀-C(O)-, -SO₂-O- or -O-SO₂-;
R₁, R₂ and R₃ independently of one another are C₁-C₁₂alkyl, C₁-C₁₂perfluoroalkyl, phenyl or benzyl;
R₄ and R₁₃ independently of one another are C₁-C₂₀alkyl, C₁-C₂₀haloalkyl, C₁-C₂₀hydroxyalkyl, C₃-C₈cycloalkyl, C₆-C₁₆aryl, C₇-C₁₆aralkyl;
R₅ and R₁₀ independently of one another are hydrogen, C₁-C₁₂alkyl, phenyl or benzyl, where the alkyl groups in their turn are unsubstituted or substituted by C₁-C₁₂alkoxy or C₃-C₈cycloalkyl;
R₆, R₇ and R₈ independently of one another are C₁-C₁₂alkyl, C₁-C₁₂perfluoroalkyl, phenyl or benzyl;
M is an alkali metal and M₁ is an alkaline earth metal; and
u is 0 or 1;
where the alicyclic ring formed with Q₁ may contain further non-aromatic double bonds;
Q₂ is hydrogen, C₁-C₂₀alkyl, C₁-C₂₀haloalkyl, C₁-C₁₂alkoxy, halogen, -CN, R₁₁-X₂-;
R₁₁ is C₁-C₂₀alkyl, C₁-C₂₀haloalkyl, C₁-C₂₀hydroxyalkyl, C₃-C₈cycloalkyl, C₆-C₁₆aryl or C₇-C₁₆aralkyl;
X₂ is -C(O)-O- or -C(O)-NR₁₂-;
R₁₂ is hydrogen, C₁-C₁₂alkyl, phenyl or benzyl;
where the abovementioned cycloalkyl, heterocycloalkyl, aryl, heteroaryl, aralkyl and heteroaralkyl groups are unsubstituted or substituted by C₁-C₁₂alkyl, C₁-C₁₂alkoxy, -NO₂, -CN or halogen and where the heteroatoms of the abovementioned heterocycloalkyl, heteroaryl and heteroaralkyl groups are chosen from the groups consisting of -O-, -S-, -NR₉- and -N=; and
R₉ is hydrogen, C₁-C₁₂alkyl, phenyl or benzyl.

39. A composition according to claim 1, which comprises comonomeric polyfunctional strained cycloolefins which are those of the formula (f1)
(T)ₙ-U (f1),
in which T is the radical of a strained cycloolefin, U is a direct bond or an n-valent bridge group and n is an integer from 2 to 8.

40. A composition according to claim 39, wherein the radicals T in formula (f1) correspond to cycloolefin radicals of the formula (f2) 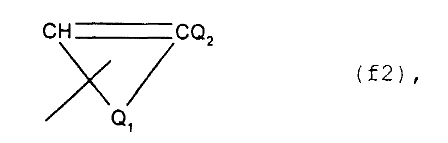 in which Q₁ and Q₂ have the meanings given in claim 7.

41. A composition according to claim 39, wherein T is norbornenyl of the formula (nr₄)

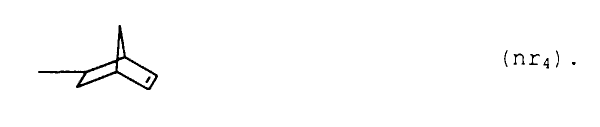

42. A composition according to claim 39, wherein U is
(a) a divalent bridge group of the formula (f5)
-X₅-R₀₂₈-X₆- (f5),
in which
X₅ and X₆ independently of one another are a direct bond, -O-, -CH₂-O-, -C(O)O-, -O(O)C-, -CH₂-O(O)C-, -C (O)-NR₀₂₉-, -R₀₂₉N-(O)C-, -NH-C(O)-NR₀₂₉-, -O-C(O)-NH-, -CH₂-O-C(O)-NH- or -NH-C(O)-O-, and
R₀₂₈ is C₂-C₁₈alkylene, C₅-C₈cycloalkylene which is unsubstituted or substituted by C₁-C₄alkyl or C₁-C₄alkoxy, C₆-C₁₈arylene or C₇-C₁₉aralkylene which are unsubstituted or substituted by C₁-C₄alkyl or C₁-C₄alkoxy, or polyoxaalkylene having 2 to 12 oxaalkylene units and 2 to 6 C atoms in the alkylene, and R₀₂₉ is H or C₁-C₆alkyl; or
(b) a trivalent bridge group of the formula (f6) 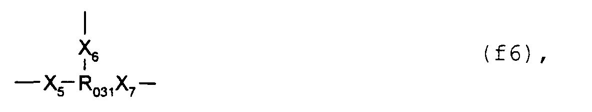 in which
X₅, X₆ and X₇ are -O-, -CH₂-O-, -C(O)O-, -O(O)C-, -CH₂-O(O)C-, -C(O)-NR₀₂₉-, -R₀₂₉N-(O)C-, -NH-C(O)-NR₀₂₉-, -O-C(O)-NH-, -CH₂-O-C(O)-NH- or -NH-C(O)-O-, and
R₀₃₁ is a trivalent aliphatic hydrocarbon radical having 3 to 20 C atoms, a trivalent cycloaliphatic radical which has 3 to 8 ring C atoms and is unsubstituted or substituted by C₁-C₄alkyl or C₁-C₄alkoxy, or a trivalent aromatic radical having 6 to 18 C atoms, which is unsubstituted or substituted by C₁-C₄alkyl or C₁-C₄alkoxy, a trivalent araliphatic radical having 7 to 19 C atoms, which is unsubstituted or substituted by C₁-C₄alkyl or C₁-C₄alkoxy, or a trivalent heteroaromatic radical having 3 to 13 C atoms and 1 to 3 heteroatoms from the group consisting of -O-, -N- and -S-, which is unsubstituted or substituted by C₁-C₄alkyl or C₁-C₄alkoxy, and
R₀₃₁ is H or C₁-C₆alkyl; or
(c) a tetravalent bridge group of the formula (f7) 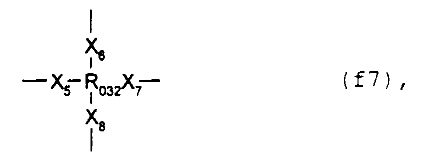 in which
X₅, X₆, X₇ and X₈ are -C(O)O-, -CH₂-O(O)C- or -C(O)-NR₀₂₉-, and
R₀₃₂ is a tetravalent aliphatic hydrocarbon radical having 4 to 20 C atoms, a tetravalent cycloaliphatic radical having 4 to 8 C atoms, which is unsubstituted or substituted by C₁-C₄alkyl or C₁-C₄alkoxy, or a tetravalent aromatic radical having 6 to 18 C atoms, which is unsubstituted or substituted by C₁-C₄alkyl or C₁-C₄alkoxy, a tetravalent araliphatic radical having 7 to 19 C atoms, which is unsubstituted or substituted by C₁-C₄alkyl or C₁-C₄alkoxy, or a tetravalent heteroaromatic radical having 3 to 13 C atoms and 1 to three heteroatoms from the group consisting of -O-, -N- and -S-, which is unsubstituted or substituted by C₁-C₄alkyl or C₁-C₄alkoxy, and
R₀₂₉ is H or C₁-C₆alkyl.

43. A composition according to claim 1, which comprises the one-component catalyst in an amount of 0.001 to 20 mol %, based on the amount of the monomer.

44. A composition according to claim 43, which comprises the one-component catalyst in an amount of 0.01 to 10 mol %, based on the amount of the monomer.

45. A composition according to claim 43, which comprises the one-component catalyst in an amount of 0.01 to 5 mol %, based on the amount of monomer.

46. A composition according to claim 1, wherein the unsubstituted or monosubstituted methyl groups are those of the formula XI
-CH₂-R (XI),
in which R is H, -CF₃, -SiR₃₈R₃₉R₄₀, -CR₄₁R₄₂R₄₃ or C₆-C₁₆aryl or C₄-C₁₅heteroaryl having 1 to 3 heteroatoms from the group consisting of O, S and N, which are unsubstituted or substituted by C₁-C₆alkyl or C₁-C₆alkoxy;
R₃₈, R₃₉ and R₄₀ independently of one another are C₁-C₁₂alkyl, C₅- or C₆cycloalkyl, or phenyl or benzyl which are unsubstituted or substituted by C₁-C₆alkyl or C₁-C₆alkoxy; and
R₄₁, R₄₂ and R₄₃ independently of one another are C₁-C₁₀alkyl, which is unsubstituted or substituted by C₁-C₁₀alkoxy, or R₄₁ and R₄₂ have this meaning and R₄₃ is C₆-C₁₀aryl or C₄-C₉heteroaryl, which is unsubstituted or substituted by C₁-C₆alkyl or C₁-C₆alkoxy.

47. A composition according to claim 1, wherein the molybdenum or tungsten compound is that of one of the formulae XII to XIIc 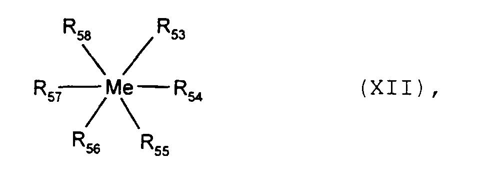 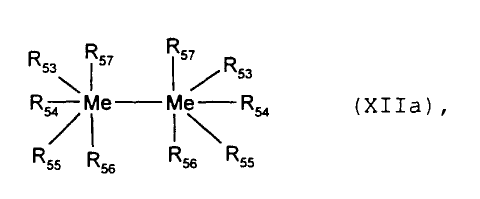 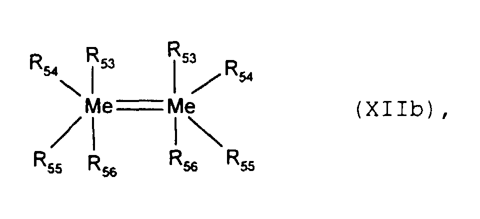 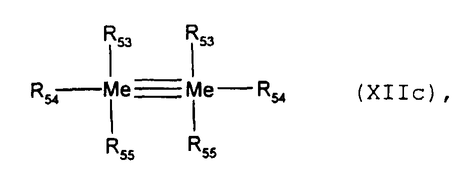 in which
Me is Mo(VI) or W(VI);
at least two of the radicals R₅₃ to R₅₈ are a radical -CH₂-R of the formula XI according to claim 46;
in each case two of the other radicals of R₅₃ to R₅₈ are =O or =N-R₄₄, and R₄₄ is linear or branched C₁-C₁₈alkyl which is unsubstituted or substituted by C₁-C₆alkoxy, C₅- or C₆cycloalkyl which is unsubstituted or substituted by C₁-C₆alkyl, C₁-C₆alkoxy or halogen, phenyl which is unsubstituted or substituted by C₁-C₆alkyl, C₁-C₆alkoxy, C₁-C₆alkoxymethyl, C₁-C₆alkoxyethyl, di(C₁-C₆alkyl)amino, di(C₁-C₆alkyl)amino-C₁-C₃alkyl or halogen, or benzyl or phenylethyl which are unsubstituted or substituted by C₁-C₆alkyl, C₁-C₆alkoxy, C₁-C₆alkoxymethyl, C₁-C₆alkoxyethyl or halogen; and/or the other radicals of R₅₃ to R₅₈ are secondary amino having 2 to 18 C atoms, R₄₅O- or R₄₅S-, halogen, cyclopentadienyl or bridged biscyclopentadienyl or a neutral ligand, in which R₄₅ is linear or branched C₁-C₁₈alkyl which is unsubstituted or substituted by C₁-C₆alkoxy or halogen, C₅- or C₆cycloalkyl which is unsubstituted or substituted by C₁-C₆alkyl, C₁-C₆alkoxy or halogen, phenyl which is unsubstituted or substituted by C₁-C₆alkyl, C₁-C₆alkoxy, C₁-C₆alkoxymethyl, C₁-C₆alkoxyethyl or halogen, or benzyl or phenylethyl which are unsubstituted or substituted by C₁-C₆alkyl, C₁-C₆alkoxy, C₁-C₆alkoxymethyl, C₁-C₆alkoxyethyl or halogen.

48. A composition according to claim 1, wherein the silylmethyl group is that of the formula XIV
-CH₂-SiR₃₈T₃₉R₄₀ (XIV),
in which
R₃₈, R₃₉ and R₄₀ independently of one another are C₁-C₁₈alkyl, C₅- or C₆cycloalkyl or phenyl or benzyl which are unsubstituted or substituted by C₁-C₆alkyl or C₁-C₆alkoxy.

49. A composition according to claim 1, wherein the titanium, niobium, tantalum, molybdenum or tungsten compound is that of one of the formulae XV, XVa or XVb 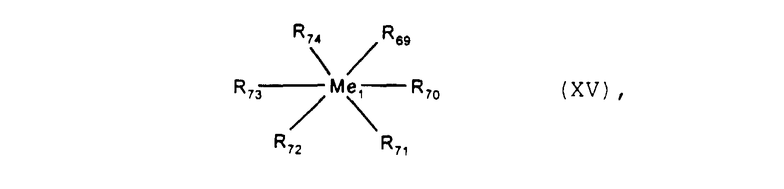 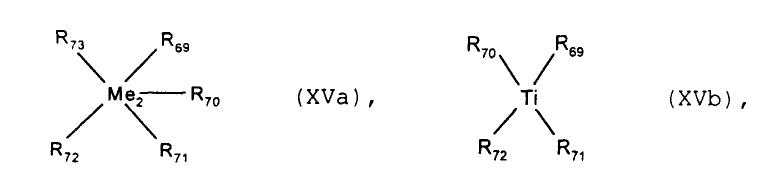 in which
Me₁ is Mo(VI) or W(VI);
Me₂ is Nb(V) or Ta(V);
one of the radicals R₆₉ to R₇₄ is a radical -CH₂-SiR₃₈R₃₉R₄₀ of the formula XIV according to claim 48; at least one of the radicals R₆₉ to R₇₄ F, Cl or Br;
R₃₈, R₃₉ and R₄₀ independently of one another are C₁-C₆alkyl, C₅- or C₆cycloalkyl, or phenyl or benzyl which are unsubstituted or substituted by C₁-C₆alkyl or C₁-C₆alkoxy;
in formula XV two or in each case two, and in formula XVa two of the other radicals of R₆₉ to R₇₄ each together are =O or =N-R₄₄ , and R₄₄ is linear or branched C₁-C₁₈alkyl which is unsubstituted or substituted by C₁-C₆alkoxy, C₅- or C₆cycloalkyl which is unsubstituted or substituted by C₁-C₆alkyl, C₁-C₆alkoxy or halogen, phenyl which is unsubstituted or substituted by C₁-C₆alkyl, C₁-C₆alkoxy, C₁-C₆alkoxymethyl, C₁-C₆alkoxyethyl, di(C₁-C₆alkyl)amino, di(C₁-C₆alkyl)amino-C₁-C₃alkyl or halogen, or benzyl or phenylethyl which are unsubstituted or substituted by C₁-C₆alkyl, C₁-C₆alkoxy, C₁-C₆alkoxymethyl, C₁-C₆alkoxyethyl, di(C₁-C₆alkyl)amino, di(C₁-C₆alkyl)amino-C₁-C₃alkyl or halogen, and
the other radicals are secondary amino having 2 to 18 C atoms, R₄₅O- or R₄₅S-, halogen, unsubstituted or substituted cyclopentadienyl or bridged biscyclopentadienyl or a neutral ligand, in which the R₄₅ independently of one another are linear or branched C₁-C₁₈alkyl which is unsubstituted or substituted by C₁-C₆alkoxy or halogen, C₅- or C₆cycloalkyl which is unsubstituted or substituted by C₁-C₆alkyl, C₁-C₆alkoxy or halogen, phenyl which is unsubstituted or substituted by C₁-C₆alkyl, C₁-C₆alkoxy, C₁-C₆alkoxymethyl, C₁-C₆alkoxyethyl, di (C₁-C₆-alkyl) amino, di (C₁-C₆-alkyl)amino-C₁-C₃alkyl or halogen, or benzyl or phenylethyl which are unsubstituted or substituted by C₁-C₆alkyl, C₁-C₆alkoxy, C₁-C₆alkoxymethyl, C₁-C₆alkoxyethyl, di(C₁-C₆-alkyl)amino, di(C₁-C₆-alkyl)amino-C₁-C₃alkyl or halogen; or
in the formulae XV, XVa and XVb, the other radicals independently of one another are secondary amino having 2 to 18 C atoms, R₄₅O- or R₄₅S-, halogen, unsubstituted or substituted cyclopentadienyl or bridged biscyclopentadienyl or a neutral ligand, in which the R₄₅ independently of one another are linear or branched C₁-C₁₈alkyl which is unsubstituted or substituted by C₁-C₆alkoxy or halogen, C₅- or C₆cycloalkyl which is unsubstituted or substituted by C₁-C₆alkyl, C₁-C₆alkoxy or halogen, phenyl which is unsubstituted or substituted by C₁-C₆alkyl, C₁-C₆alkoxy, C₁-C₆alkoxymethyl, C₁-C₆alkoxyethyl, di(C₁-C₆-alkyl)amino, di(C₁-C₆-alkyl)amino-C₁-C₃alkyl or halogen, or benzyl or phenylethyl which are unsubstituted or substituted by C₁-C₆alkyl, C₁-C₆alkoxy, C₁-C₆alkoxymethyl, C₁-C₆alkoxyethyl, di (C₁-C₆-alkyl)amino, di (C₁-C₆-alkyl)amino-C₁-C₃-alkyl or halogen.

50. A composition according to claim 1, wherein the niobium or tantalum compound is that of the formula XVIII 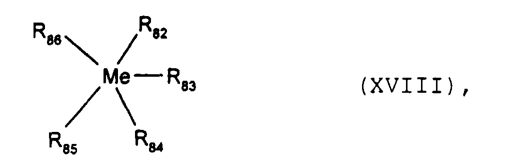 in which
Me is Nb(V) or Ta(V),
at least two of the radicals R₈₂ to R₈₆ are a radical -CH₂-R of the formula XI according to claim 46;
two of the other radicals of R₈₂ to R₈₆ together are =O or =N-R₄₄, and R₄₄ is linear or branched C₁-C₁₈alkyl which is unsubstituted or substituted by C₁-C₆-alkoxy, C₅- or C₆cycloalkyl which is unsubstituted or substituted by C₁-C₆alkyl, C₁-C₆alkoxy or halogen, phenyl which is unsubstituted or substituted by C₁-C₆alkyl, C₁-C₆alkoxy, C₁-C₆alkoxymethyl, C₁-C₆alkoxyethyl, di(C₁-C₆-alkyl)amino, di (C₁-C₆-alkyl)amino-C₁-C₃alkyl or halogen, or benzyl or phenylethyl which are unsubstituted or substituted by C₁-C₆alkyl, C₁-C₆alkoxy, C₁-C₆alkoxymethyl, C₁-C₆alkoxyethyl, di(C₁-C₆-alkyl)amino, di(C₁-C₆alkyl)amino-C₁-C₃alkyl or halogen; and/or
the other radicals of R₈₂ to R₈₆ independently of one another are secondary amino having 2 to 18 C atoms, R₄₅O-, R₄₅S-, halogen, cyclopentadienyl or bridged biscyclopentadienyl or a neutral ligand, in which the R₄₅ independently of one another are linear or branched C₁-C₁₈alkyl which is unsubstituted or substituted by C₁-C₆alkoxy or halogen, C₅- or C₆cycloalkyl which is unsubstituted or substituted by C₁-C₆alkyl, C₁-C₆alkoxy or halogen, phenyl which is unsubstituted or substituted by C₁-C₆alkyl, C₁-C₆alkoxy, C₁-C₆alkoxymethyl, C₁-C₆alkoxyethyl, di(C₁-C₆alkyl)amino, di(C₁-C₆alkyl)amino-C₁-C₃alkyl or halogen, or benzyl or phenylethyl which are unsubstituted or substituted by C₁-C₆alkyl, C₁-C₆alkoxy, C₁-C₆alkoxymethyl, C₁-C₆alkoxyethyl, di(C₁-C₆alkyl)amino, di(C₁-C₆alkyl)amino-C₁-C₃alkyl or halogen.

51. A composition according to claim 1, wherein the titanium(IV) compound is that of the formula XX 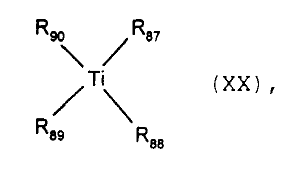 in which
at least two of the radicals R₈₇ to R₉₀ are a radical -CH₂-R of the formula XI according to claim 46; and
the other radicals R₈₇ to R₉₀ are secondary amino having 2 to 18 C atoms, R₄₅O-, R₄₅S-, halogen, cyclopentadienyl or bridged biscyclopentadienyl or a neutral ligand, in which the R₄₅ independently of one another are linear or branched C₁-C₁₈alkyl which is unsubstituted or substituted by C₁-C₆alkoxy or halogen, C₅- or C₆cycloalkyl which is unsubstituted or substituted by C₁-C₆alkyl, C₁-C₆alkoxy or halogen, phenyl which is unsubstituted or substituted by C₁-C₆alkyl, C₁-C₆alkoxy, C₁-C₆alkoxymethyl, C₁-C₆alkoxyethyl, di(C₁-C₆alkyl)amino, di(C₁-C₆alkyl)amino-C₁-C₃alkyl or halogen, or benzyl or phenylethyl which are unsubstituted or substituted by C₁-C₆alkyl, C₁-C₆alkoxy, C₁-C₆alkoxymethyl, C₁-C₆alkoxyethyl, di(C₁-C₆alkyl)amino, di(C₁-C₆alkyl)amino-C₁-C₃alkyl or halogen.

52. A composition according to claim 1, wherein the phosphine ligands are those of the formulae XXIII or XXIIIa
R₉₁R₉₂R₉₃ (XXIII),
R₉₁R₉₂P-Z₁-PR₉₁R₉₂ (XXIIIa),
in which R₉₁, R₉₂ and R₉₃ independently of one another are H, C₁-C₂₀-alkyl, C₁-C₂₀alkoxy, C₄-C₁₂cycloalkyl or cycloalkoxy which are unsubstituted or substituted by C₁-C₆alkyl, C₁-C₆haloalkyl or C₁-C₆alkoxy or C₆-C₁₆aryl or C₆-C₁₆aryloxy which are unsubstituted or substituted by C₁-C₆alkyl, C₁-C₆haloalkyl or C₁-C₆alkoxy, or C₇-C₁₆aralkyl or C₇-C₁₆aralkyloxy which are unsubstituted or substituted by C₁-C₆alkyl, C₁-C₆haloalkyl or C₁-C₆alkoxy; the radicals R₉₁ and R₉₂ together are tetra- or pentamethylene or tetra- or pentamethylenedioxyl which are unsubstituted or substituted by C₁-C₆alkyl, C₁-C₆haloalkyl or C₁-C₆alkoxy, or tetra- or pentamethylene or tetra- or pentamethylenedioxyl which are unsubstituted or substituted by C₁-C₆alkyl, C₁-C₆haloalkyl or C₁-C₆alkoxy and fused with 1 or 2 1,2-phenylene, or tetramethylenedioxyl which is unsubstituted or substituted by C₁-C₆alkyl, C₁-C₆haloalkyl or C₁-C₆alkoxy and is fused in the 1,2- and 3,4-positions with 1,2-phenylene, and R₉₃ has the abovementioned meaning; and
Z₁ is linear or branched C₂-C₁₂alkylene which is unsubstituted or substituted by C₁-C₄alkoxy, 1,2- or 1,3-cycloalkylene having 4 to 8 C atoms, which is unsubstituted or substituted by C₁-C₄alkyl or C₁-C₄alkoxy, or 1,2- or 1,3-heterocycloalkylene having 5 or 6 ring members and one heteroatom from the group consisting of O or N, which is unsubstituted or substituted by C₁-C₄alkyl or C₁-C₄alkoxy.

53. A composition according to claim 1, wherein the ruthenium or osmium compound is that of one of the formulae XXV to XXVf
(R₉₄R₉₅R₉₆P)L₈Me²⁺(Z¹⁻)₂ (XXV),
(R₉₄R₉₅R₉₆P)₂L₉Me²⁺(Z¹⁻)₂ (XXVa),
(R₉₄R₉₅R₉₆P)L₉L₁₀Me²⁺(Z¹⁻)₂ (XXVb),
(R₉₄R₉₅R₉₆P)₃L₉Me²⁺(Z¹⁻)₂ (XXVc),
(R₉₄R₉₅R₉₆P)L₉L₉Me²⁺(Z¹⁻)₂ (XXVd),
(R₉₄R₉₅R₉₆P)L₈L₁₀Me²⁺(Z¹⁻)₂ (XXVe),
(R₉₄R₉₅R₉₆P)L₈(L₉)ₘMe²⁺(Z¹⁻)₂ (XXVf),
in which
Me is Ru or Os;
Z in formulae XXV to XXVe is H⁻, cyclopentadienyl, Cl⁻, Br⁻, BF₄⁻, PF₆⁻, SbF₆⁻, AsF₆⁻, CF₃SO₃⁻, C₆H₅-SO₃⁻, 4-methyl-C₆H₅-SO₃⁻, 3,5-dimethyl-C₆H₅-SO₃⁻, 2,4,6-trimethyl-C₆H₅-SO₃⁻ and 4-CF₃-C₆H₅-SO₃⁻ and in formula XXVf is H⁻, cyclopentadienyl, BF₄⁻, PF₆⁻, SbF₆⁻, AsF₆⁻, CF₃SO₃⁻, C₆H₅-SO₃⁻, 4-methyl-C₆H₅-SO₃⁻, 2, 6-dimethyl-C₆H₅-SO₃⁻, 2,4,6-trimethyl-C₆H₅-SO₃⁻ or 4-CF₃-C₆H₅-SO₃⁻
R₉₄, R₉₅ and R₉₆ independently of one another are C₁-C₆alkyl, or cyclopentyl or cyclohexyl or cyclopentyloxy or cyclohexyloxy which are unsubstituted or substituted by 1 to 3 C₁-C₄alkyl, or phenyl or benzyl or phenyloxy or benzyloxy which are unsubstituted or substituted by 1 to 3 C₁-C₄alkyl;
L₈ is C₆-C₁₆arene or C₅-C₁₆heteroarene which are unsubstituted or substituted by 1 to 3 C₁-C₄alkyl, C₁-C₄alkoxy, -OH, -F or Cl;
L₉ is C₁-C₆alkyl-CN, benzonitrile or benzylnitrile; and L₁₀ is H₂O or C₁-C₆alkanol.

54. A composition according to claim 1, wherein the ruthenium or osmium compound is that of one of the formulae XXVI, XXVIa, XXVIb, XXVIc and XXVId
Me²⁺(L₁₁)₂(L₁₂) (Y₁⁻)₂ (XXVI),
Me²⁺(L₁₁)₃(Y₁⁻)₂ (XXVIa),
Me²⁺(L₁₁)₂L₁₃(Y₁⁻) (XXVIb),
Me²⁺(L₁₁)₃L₁₄(Y₁⁻)₂ (XXVIc),
Me²⁺L₁₁(L₁₂)₃(L₁⁻)₂ (XXVId),
in which
Me is Ru or Os;
Y₁ is the anion of a monobasic acid;
L₁₁ is a phosphine of the formula XXIII or XXIIIa according to claim 52,
L₁₂ is a neutral ligand;
L₁₃ is cyclopentadienyl which is unsubstituted or substituted by C₁-C₄alkyl; and
L₁₄ is CO.

55. A process for the preparation of crosslinked polymers according to claim 1 by metathesis polymerization, wherein a composition of
(a) a catalytic amount of a one-component catalyst for metathesis polymerization and
(b) at least one polymer with strained cycloalkenyl radicals bonded in the polymer backbone alone or mixed with strained cycloolefins,
(c) is polymerized by heating,
(d) is polymerized by irradiation,
(e) is polymerized by heating and irradiation,
(f) the one-component catalyst is activated by brief heating and the polymerization is brought to completion by irradiation, or
(g) the one-component catalyst is activated by brief irradiation and the polymerization is brought to completion by heating.

56. A process according to claim 55, wherein it is carried out at a temperature of 20 to 300°C.

## Revendications

1. Composition contenant des quantités catalytiques d'un catalyseur à un composant pour la polymérisation par métathèse et au moins un polymère avec des motifs de structure de répétition, qui contiennent un groupe cycloalcényle sous tension lié chimiquement par l'intermédiaire d'un groupement pontant bivalent, seule ou en mélange avec des éléments de structure de cyclooléfines sous tension, caractérisée en ce que la composition contient comme catalyseur à un composant
(a) un composé du ruthénium ou de l'osmium de formule
[(Me⁺ⁿ)(L₁^{z1})ₘ(L₂^{z2})ₒ(L₃^{z3})ₚ(L₄^{z4})_{q}(L₅^{z5})ᵣ(L₆^{z6})ₛ](L₇^{z7})ₜ (IX)
dans laquelle
Me représente le ruthénium ou l'osmium;
n 2;
L₁, L₂ et L₃ représentent ensemble des groupes arènes monocycliques, polycycliques ou condensés non substitués ou substitués avec un groupe alkyle en C₁-C₄, alcoxy en C₁-C₄, aryle en C₆-C₁₂ ou un atome d'halogène, ayant 6 à 24 atomes de carbone ou des hétéroarènes monocycliques, des hétéroarènes condensés ou des composés arène-hétéroarène condensés non substitués ou substitués avec un groupe alkyle en C₁-C₄, alcoxy en C₁-C₄, ou un atome d'halogène, ayant 4 - 22 atomes de carbone et 1 - 3 hétéroatomes choisis parmi O, S et N et
L_{4,} L₅ et L₆ représentent un ligand non photolabile choisi parmi H₂O, NH₃, un groupe alcanol ou alcanethiol non substitué ou substitué avec du fluor, des éthers aliphatiques, des thioéthers, des sulfoxydes ou des sulfones ayant 2 - 8 atomes de carbone, le diméthylformamide et la N-méthylpyrrolidone;
m, o, p, q, r et s : 1
z₁-z₆ 0,
z₇ -1 et
L₇ un anion non coordinant;
ou un composé du ruthénium ou de l'osmium de formule
[L₁Me(L₈)₅]²⁺[Y₁^{x-}]_{2/x} (X),
dans laquelle
L₁ représente N₂, un groupe alkylnitrile en C₁-C₄, benzonitrile ou benzylnitrile;
L₈ représente NH₃ ou une amine avec 1 à 12 atomes de carbone,
Y₁ un anion non coordinant et
x le nombre 1 ou 2.
(b) un dérivé du molybdène (VI) ou du tungstène (VI), qui a au moins deux groupes méthyle ou deux groupes méthyle monosubstitués liés au métal, le substituant ne contenant pas d'atome d'hydrogène en position α; ou
(c) contient un dérivé du titane (IV), niobium (V), tantale (V), molybdène (VI) ou tungstène (VI), dans lequel un groupe silylméthyle et au moins un atome d'halogène sont liés au métal; ou
(d) contient un dérivé du niobium (V) ou du tantale (V), qui a au moins deux groupes méthyle ou deux groupes méthyle monosubstitués liés au métal, le substituant ne contenant pas d'atome d'hydrogène en position α; ou
(e) un dérivé du titane (IV), qui a au moins deux groupes méthyle ou deux groupes méthyle monosubstitués liés au métal, le substituant ne contenant pas d'atome d'hydrogène en position α; ou
(f) un dérivé du ruthénium ou de l'osmium, qui contient au moins un groupe phosphine, au moins un ligand photolabile, et éventuellement des ligands neutres liés à l'atome de métal, dans lequel 2 à 5 ligands sont liés en tout, et les anions d'acide pour l'équilibrage de la charge; ou
(g) contient un dérivé cationique bivalent du ruthénium ou de l'osmium, avec un atome de métal, auquel sont liés 1 à 3 ligands phosphine avec dans le cas du dérivé du ruthénium des substituants exigeants sur le plan stérique, éventuellement des ligands neutres non photolabiles et des anions pour l'équilibrage de la charge

2. Composition selon la revendication 1, caractérisée en ce qu'il s'agit pour le noyau cyclooléfine sous tension de systèmes cycliques monocycliques ou polycycliques condensés et/ou pontés.

3. Composition selon la revendication 2, caractérisée en ce les systèmes cycliques polycycliques condensés et/ou pontés contiennent deux à 6 cycles.

4. Composition selon la revendication 2, caractérisée en ce les noyaux cycliques individuels contiennent 3 à 16 chaînons par cycle.

5. Composition selon la revendication 2, caractérisée en ce les noyaux cycliques individuels contiennent 4 à 12 chaînons par cycle.

6. Composition selon la revendication 2, caractérisée en ce les noyaux cycliques individuels contiennent 5 à 8 chaînons par cycle.

7. Composition selon la revendication 1, caractérisée en ce les groupes cycloalcényle correspondent à la formule A 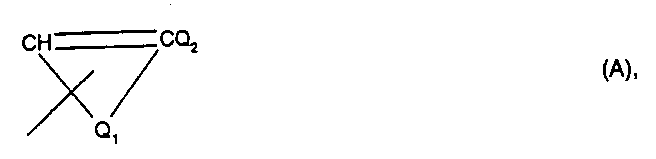 dans laquelle
Q₁ est un groupe avec au moins un atome de carbone, qui forme ensemble avec le groupe -CH=CQ₂- un cycle alicyclique à 3 chaînons, qui contient éventuellement un ou plusieurs hétéroatomes choisis parmi le silicium, le phosphore, l'oxygène, l'azote et le soufre; et qui est non substitué ou substitué avec un atome d'halogène, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, alkyle en C₁-C₂₀, hydroxyalkyle en C₁-C₂₀, halogénoalkyle en C₁-C₂₀, cyanoalkyle en C₁-C₆, cycloalkyle en C₃-C₈, aryle en C₆-C₁₆, aralkyle en C₇-C₁₆, hétérocycloalkyle en C₃-C₆, hétéroaralkyle en C₃-C₁₆ ou R₄-X-; ou dans lequel deux atomes de carbone voisins sont substitués avec -CO-O-CO- ou -CO-NR₅-CO-, ou dans lequel éventuellement est condensé à deux atomes de carbone voisins du noyau alicyclique un cycle alicyclique, aromatique ou hétéroaromatique, qui est non substitué ou substitué avec un atome d'halogène, un groupe -CN, -NO₂, R₆R₇R₈Si-(O)ᵤ-, -COOM, -SO₃M, -PO₃M, -COO(M₁)_{1/2}, -SO₃(M₁)_{1/2},-PO₃(M₁)_{1/2}, alkyle en C₁-C₂₀, halogénoalkyle en C₁-C₂₀, hydroxyalkyle en C₁-C₂₀, cyanoalkyle en C₁-C₆, cycloalkyle en C₃-C₈, aryle en C₆-C₁₆, aralkyle en C₇-C₁₆, hétérocycloalkyle en C₃-C₆, hétéroaryle en C₃-C₁₆, hétéroaralkyle en C₄-C₁₆ ou R₁₃-X₁-;
X et X₁ représentent indépendamment l'un de l'autre -O-, -S-, -CO-, -SO-, -SO₂-, -O-C(O)-, -C(O)-O-, -C(O)-NR₅-, -NR₁₀-C(O)-, -SO₂-O- ou -O-SO₂-;
R₁, R₂ et R₃ signifient indépendamment l'un de l'autre un groupe alkyle en C₁-C₁₂, perfluoroalkyle en C₁-C₁₂, phényle ou benzyle;
R₄ et R₁₃ signifient indépendamment un groupe alkyle en C₁-C₂₀, halogénoalkyle en C₁-C₂₀, hydroxyalkyle en C₁-C₂₀, cycloalkyle en C₃-C₈, aryle en C₆-C₁₆, aralkyle en C₇-C₁₆;
R₅ et R₁₀ représentent indépendamment l'un de l'autre un atome d'hydrogène, un groupe alkyle en C₁-C₁₂, phényle ou benzyle, dans lequel les groupes alkyle sont de leur côté non substitués ou substitués avec un groupe alcoxy en C₁-C₁₂ ou cycloalkyle en C₃-C₈;
R₆, R₇ et R₈ signifient indépendamment l'un de l'autre un groupe alkyle en C₁-C₁₂, perfluoroalkyle en C₁-C₁₂, phényle ou benzyle;
M représente un métal alcalin et M₁ un métal alcalino-terreux; et
u représente 0 ou 1;
dans laquelle le cycle alicyclique formé avec Q₁ contient éventuellement d'autres doubles liaisons non aromatiques;
Q₂ représente un atome d'hydrogène, un groupe alkyle en C₁-C₂₀, halogénoalkyle en C₁-C₂₀, alcoxy en C₁-C₁₂, un atome d'halogène, un groupe -CN, R₁₁-X₂-;
R₁₁ représente un groupe alkyle en C₁-C₂₀, halogénoalkyle en C₁-C₂₀, hydroxyalkyle en C₁-C₂₀, cycloalkyle en C₃-C₈, aryle en C₆-C₁₆ ou aralkyle en C₇-C₁₆;
X₂ est un groupe -C(O)-O- ou -C(O)-NR₁₂-;
R₁₂ représente un atome d'hydrogène, un groupe alkyle en C₁-C₁₂, phényle ou benzyle;
dans laquelle les groupes précités cycloalkyle, hétérocycloalkyle, aryle, hétéroaryle, aralkyle et hétéroaralkyle sont non substitués ou substitués avec un groupe alkyle en C₁-C₁₂, alcoxy en C₁-C₁₂, -NO₂, -CN ou un atome d'halogène, et dans laquelle les hétéroatomes des groupes hétérocycloalkyle, hétéroaryle et hétéroaralkyle précités sont choisis parmi un atome -O-, -S-, un groupe -NR₉- et -N=; et
R₉ représente un atome d'hydrogène, un groupe alkyle en C₁-C₁₂, phényle ou benzyle.

8. Composition selon la revendication 7, caractérisée en ce que le groupe de formule A représente un noyau alicyclique, que Q₁ forme ensemble avec le groupe -CH=CQ₂-, qui présente 3 à 8 atomes de cycle, et dans laquelle il peut s'agir d'un système cyclique monocyclique, ou d'un système condensé bicyclique, tricyclique ou tétracyclique.

9. Composition selon la revendication 7, caractérisée en ce que dans le groupe de formule A
Q₁ est un groupe avec au moins un atome de carbone, qui forme avec le groupe -CH=CQ₂- un cycle alicyclique de 3 à 20 chaînons, qui contient éventuellement un ou plusieurs hétéroatomes choisis parmi le silicium, l'oxygène, l'azote et le soufre; et qui est non substitué ou substitué avec un atome d'halogène, =O, -CN, -NO₂, R₁R₂R₃Si(O)ᵤ, -COOM, -SO₃M, -PO₃M, -COO(M₁)_{1/2}, -SO₃(M₁)_{1/2}, -PO₃(M₁)_{1/2}, alkyle en C₁-C₁₂, halogénoalkyle en C₁-C₁₂, hydroxyalkyle en C₁-C₁₂, cyanoalkyle en C₁-C₄, cycloalkyle en C₃-C₈, aryle en C₆-C₁₆, aralkyle en C₇-C₁₂, hétérocycloalkyle en C₃-C₆, hétéroaralkyle en C₃-C₁₂ ou -R₄-X; ou dans lequel éventuellement sont substitués deux atomes de carbone voisins dans ce groupe Q₁ avec -CO-O-CO- ou -CO-NR₅-CO-; ou dans lequel éventuellement est condensé à deux atomes de carbone voisins un cycle alicyclique, aromatique ou hétéroaromatique, qui est non substitué ou substitué avec un atome d'halogène, un groupe -CN, -NO₂, R₆R₇R₈Si-, -COOM, -SO₃M, -PO₃M, -COO(M₁)_{1/2}, -SO₃(M₁)_{1/2}, -PO₃(M₁)_{1/2}, alkyle en C₁-C₁₂, halogénoalkyle en C₁-C₁₂, hydroxyalkyle en C₁-C₁₂, cyanoalkyle en C₁-C₄, cycloalkyle en C₃-C₆, aryle en C₆-C₁₂, aralkyle en C₇-C₁₂, hétérocycloalkyle en C₃-C₆, hétéroaryle en C₃-C₁₂, hétéroaralkyle en C₄-C₁₂ ou R₁₃-X₁;
X et X₁ représentent indépendamment l'un de l'autre -O-, -S-, -CO-, -SO-, -SO₂-, -O-C(O)-, -C(O)-O-, -C(O)-NR₅-, -NR₁₀-C(O)-, -SO₂-O- ou -O-SO₂-;
R₁, R₂ et R₃ signifient indépendamment l'un de l'autre un groupe alkyle en C₁-C₆, perfluoroalkyle en C₁-C₆, phényle ou benzyle;
M représente un métal alcalin et M₁ un métal alcalino-terreux;
R₄ et R₁₃ signifient indépendamment un groupe alkyle en C₁-C₁₂, halogénoalkyle en C₁-C₁₂, hydroxyalkyle en C₁-C₁₂, cycloalkyle en C₃-C₈, aryle en C₆-C₁₂, aralkyle en C₇-C₁₂;
R₅ et R₁₀ représentent indépendamment l'un de l'autre un atome d'hydrogène, un groupe alkyle en C₁-C₆, phényle ou benzyle, dans lequel les groupes alkyle sont de leur côté non substitués ou substitués avec un groupe alcoxy en C₁-C₆ ou cycloalkyle en C₃-C₆;
R₆, R₇ et R₈ signifient indépendamment l'un de l'autre un groupe alkyle en C₁-C₆, perfluoroalkyle en C₁-C₆, phényle ou benzyle;
u représente 0 ou 1;
dans lequel le cycle alicyclique formé avec Q₁ contient éventuellement d'autres doubles liaisons non aromatiques;
Q₂ représente un atome d'hydrogène, un groupe alkyle en C₁-C₁₂, halogénoalkyle en C₁-C₁₂, alcoxy en C₁-C₆, un atome d'halogène, un groupe -CN, R₁₁-X₂-;
R₁₁ représente un groupe alkyle en C₁-C₁₂, halogénoalkyle en C₁-C₁₂, hydroxyalkyle en C₁-C₁₂, cycloalkyle en C₃-C₆, aryle en C₆-C₁₂ ou aralkyle en C₇-C₁₂;
X₂ est un groupe -C(O)-O- ou -C(O)-NR₁₂-; et
R₁₂ représente un atome d'hydrogène, un groupe alkyle en C₁-C₆, phényle ou benzyle;
dans lequel les groupes cycloalkyle, hétérocycloalkyle, aryle, hétéroaryle, aralkyle et hétéroaralkyle sont non substitués ou substitués avec un groupe alkyle en C₁-C₆, alcoxy en C₁-C₆, -NO₂, -CN ou halogène, et dans lequel les hétéroatomes des groupes hétérocycloalkyle, hétéroaryle et hétéroaralkyle sont choisis parmi un atome -O-, -S-, un groupe -NR₉- et -N=; et
R₉ représente un atome d'hydrogène, un groupe alkyle en C₁-C₆, phényle ou benzyle.

10. Composition selon la revendication 7, caractérisée en ce que dans le groupe de formule A
Q₁ est un groupe avec au moins un atome de carbone, qui forme avec le groupe -CH=CQ₂- un cycle alicyclique de 3 à 10 chaînons, qui contient éventuellement un hétéroatome choisi parmi le silicium, l'oxygène, l'azote et le soufre, et qui est non substitué ou substitué avec un atome d'halogène, -CN, -NO₂, R₁R₂R₃Si-, -COOM, -SO₃M, -PO₃M, -COO(M₁)_{1/2}, -SO₃(M₁)_{1/2}, -PO₃(M₁)_{1/2}, alkyle en C₁-C₆, halogénoalkyle en C₁-C₆, hydroxyalkyle en C₁-C₆, cyanoalkyle en C₁-C₄, cycloalkyle en C₃-C₆, phényle, benzyle ou R₄-X-; ou dans lequel éventuellement est condensé à deux atomes de carbone voisins un cycle alicyclique, aromatique ou hétéroaromatique, qui est non substitué ou substitué avec un atome d'halogène, un groupe -CN, -NO₂, R₆R₇R₈Si-, -COOM, -SO₃M, -PO₃M, -COO(M₁)_{1/2}, -SO₃(M₁)_{1/2}, -PO₃(M₁)_{1/2}, alkyle en C₁-C₆, halogénoalkyle en C₁-C₆, hydroxyalkyle en C₁-C₆, cyanoalkyle en C₁-C₄, cycloalkyle en C₃-C₆, phényle, benzyle ou R₁₃-X₁-;
R₁, R₂ et R₃ signifient indépendamment l'un de l'autre un groupe alkyle en C₁-C₄, perfluoroalkyle en C₁-C₄, phényle ou benzyle;
M représente un métal alcalin et M₁ un métal alcalino-terreux;
R₄ et R₁₃ signifient indépendamment l'un de l'autre un groupe alkyle en C₁-C₆, halogénoalkyle en C₁-C₆, hydroxyalkyle en C₁-C₆ ou cycloalkyle en C₃-C₆.
X et X₁ représentent indépendamment l'un de l'autre -O-, -S-, -CO-, -SO- ou -SO₂-;
R₆, R₇ et R₈ représentent indépendamment l'un de l'autre un groupe alkyle en C₁-C₄, perfluoroalkyle en C₁-C₄, phényle ou benzyle; et
Q₂ représente un atome d'hydrogène.

11. Composition selon la revendication 1, caractérisée en ce qu'il s'agit pour le groupe cycloalcényle du groupe cyclopropényle, cyclobutényle, cyclopentényle, cycloheptényle, cyclooctényle, cyclo-pentadiényle, cyclohexadiényle, cycloheptadiényle, cyclo-octadiényle et norbornényle ou de dérivés du norbornényle, substitué ou non substitué avec un groupe alkyle en C₁-C₄.

12. Composition selon la revendication 11, caractérisée en ce que le composé de norbornényle correspond à la formule B 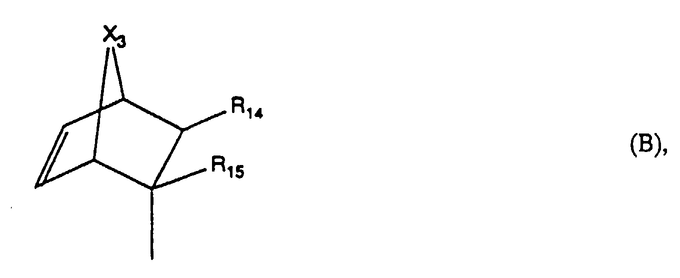 dans laquelle
X₃ représente -CHR₁₆-, un atome d'oxygène ou de soufre;
R₁₄ et R₁₅ représentent indépendamment l'un de l'autre un atome d'hydrogène, un groupe -CN, trifluorométhyle, (CH₃)₃Si-O-, (CH₃)₃Si- ou -COOR₁₇; et
R₁₆ et R₁₇ représentent indépendamment l'un de l'autre un atome d'hydrogène, un groupe alkyle en C₁-C₁₂, phényle ou benzyle
ou à la formule C 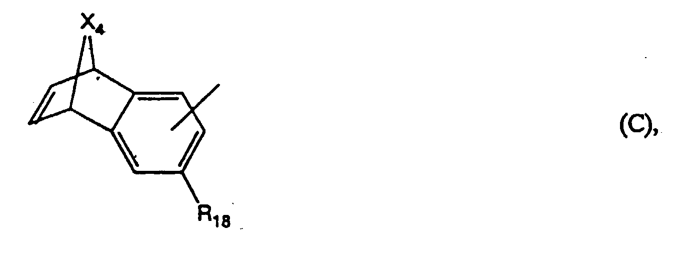 dans laquelle
X₄ représente -CHR₁₉-, un atome d'oxygène ou de soufre;
R₁₉ représente un atome d'hydrogène, un groupe alkyle en C₁-C₁₂, phényle ou benzyle; et
R₁₈ représente un atome d'hydrogène, un groupe alkyle en C₁-C₆ ou un atome d'halogène.

13. Composition selon la revendication 1, caractérisée en ce que le composé cycloalcényle est le norbornényle de formule D ou le méthylnorbornényle de formule E

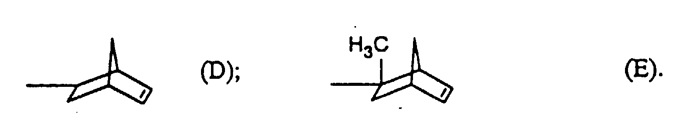

14. Composition selon la revendication 1, caractérisée en ce qu'il s'agir pour le groupement pontant bivalent d'un groupe hydrocarboné bivalent, éventuellement interrompu par -O-, ayant 1 à 100 atomes de carbone, qui est lié directement ou par l'intermédiaire d'un groupe éther, thioéther, amine, ester, amide, uréthanne ou urée au squelette polymère et qui est lié directement ou par l'intermédiaire d'un groupe éther, thioéther, amine, ester, amide, uréthanne ou urée à la cyclooléfine; ou en ce que le groupement pontant peut être un groupe éther, thioéther, amine, ester, amide, uréthanne ou urée.

15. Composition selon la revendication 1, caractérisée en ce que le groupement pontant bivalent correspond à la formule F,
-(X₁₀₀)_{g}-(R₀₁)ₕ-(X₁₀₁)- (F)
dans laquelle
g, h et i représentent indépendamment les uns des autres 0 ou 1, et g et i ne sont pas 0 en même temps;
X₁₀₀ et X₁₀₁ représentent indépendamment l'un de l'autre -O-, -S-, -NH-, -N-( alkyle en C₁-C₄), -C(O)O-, -O(O)C-, -NH(O)C-, -C(O)-NH-, -N-( alkyle en C₁-C₄) -(O) C-, -C(O)-N( alkyle en C₁-C₄) -, -O-C(O)-O-, -NH-C-(O)-O-,
-N-( alkyle en C₁-C₄)-O-C(O)-O- ou -O-C(O)-N-( alkyle en C₁-C₄); et
R₀₁ représente une simple liaison, un groupe alkylène en C₁-C₁₈, polyoxaalkylène avec 2 à 12 motifs oxaalkylène et 2 à 6 atomes de carbone dans le groupe alkylène, cycloalkylène en C₅-C₈ non substitué ou substitué avec un groupe alkyle en C₁-C₄ ou alcoxy en C₁-C₄, cycloalkylène en C₅-C₈-CH₂- non substitué ou substitué avec un groupe alkyle en C₁-C₄ ou alcoxy en C₁-C₄, -CH₂-(cycloalkylène en C₅-C₈)-CH₂- non substitué ou substitué avec un groupe alkyle en C₁-C₄ ou alcoxy en C₁-C₄, hétérocycloalkylène non substitué ou substitué avec un groupe alkyle en C₁-C₄ ou alcoxy en C₁-C₄, ayant 5 ou 6 chaînons dans le cycle et des hétéroatomes choisis parmi -O-, -S- et -N-, phénylène, benzylène ou xylylène non substitué ou substitué avec un groupe alkyle en C₁-C₄ ou alcoxy en C₁-C₄, ou hétéroarylène non substitué ou substitué avec un groupe alkyle en C₁-C₄ ou alcoxy en C₁-C₄, ayant 5 ou 6 chaînons dans le cycle et des hétéroatomes choisis parmi -O-, -S- et -N-.

16. Composition selon la revendication 15, caractérisée en ce que R₀₁ représente en tant qu'alkylène un groupe alkylène en C₁-C₁₂.

17. Composition selon la revendication 15, caractérisée en ce que R₀₁ contient comme polyoxaalkylène 2 à 6 motifs oxaalkylène ayant 2 ou 3 atomes de carbone dans le groupe.

18. Composition selon la revendication 15, caractérisée en ce que R₀₁ représente comme cycloalkylène et dans les groupes contenant le cycloalkylène un groupe cycloalkylène en C₅ ou C₆.

19. Composition selon la revendication 15, caractérisée en ce que R₀₁ représente comme hétérocycloalkylène et hétéroarylène de préférence un groupe cycloalkylène à 5 ou 6 chaînons avec un hétéroatome choisi entre N et O.

20. Composition selon la revendication 15, caractérisée en ce que R₀₁ représente un groupe alkylène en C₂-C₁₂, polyoaxaalkylène avec 2 à 6 motifs oxaalkylène et 2 atomes de carbone dans le groupe oxaalkylène, un groupe cyclopentylène, cyclohexylène, cyclohexylène-CH₂-, -CH₂-cyclohexylène-CH₂-, phénylène, benzylène ou xylylène, non substitué ou substitué avec un groupe alkyle en C₁-C₄ ou alcoxy en C₁-C₄.

21. Composition selon la revendication 1, caractérisée en ce que le groupement pontant est le groupe 1,4-C₆H₄-[O-(O)C]₂-, -C(O)-O-(alkylène en C₂-C₆)-O-(O)C- ou -C(O)-O-CH₂-.

22. Composition selon la revendication 1, caractérisée en ce qu'il s'agit pour les polymères d'homo ou de copolymères, dans lesquels les éléments de structure avec un groupe cycloalcényle sous tension lié au motif monomère par un groupement pontant bivalent sont contenus à au moins 1% en mole, par rapport au polymère.

23. Composition selon la revendication 22, caractérisée en ce que les éléments de structure avec un groupe cycloalcényle sous tension lié au motif monomère par un groupement pontant bivalent sont contenus à au moins 5% en mole.

24. Composition selon la revendication 22, caractérisée en ce qu'elle contient 5 à 100% en mole d'éléments de structure.

25. Composition selon la revendication 1, caractérisée en ce que le nombre de motifs de structure de répétition se monte dans le polymère à 2 à 10000.

26. Composition selon la revendication 1, caractérisée en ce que le squelette polymère dérive de polymères, qui sont fonctionnalisés avec -OH, NH₂, -NH(alkyle en C₁-C₄), -C(O)OH, -C(O)-NH₂ ou -C(O)-NH(alkyle en C₁-C₄).

27. Composition selon la revendication 1, caractérisée en ce que le squelette polymère est formé de polymères choisis parmi les homo et copolymères d'alcools oléfiniquement insaturés, les homo et copolymères de l'alcool vinylique, des homo et copolymères d'acides carboxyliques insaturés, les homo et copolymères d'hydroxystyrène ou d'aminostyrène ou d'acides styrène-sulfoniques ou carboxyliques, les homo et copolymères de butadiène hydroxylé, des homo et copolymères de vinylpyrrolidone, de polysiloxanes avec des chaînes hydroxy- ou aminoalkyle, et les homo et copolymères d'éthers de diglycidyle et de diols, ou de polysaccharides.

28. Composition selon la revendication 1, caractérisée en ce que le polymère contient 1 à 100% en mole, par rapport au polymère, d'éléments de structure de formule G, 99 à 0% en mole d'éléments de structure de formule H, et 100 à 0% en mole d'éléments de structure de formule I, 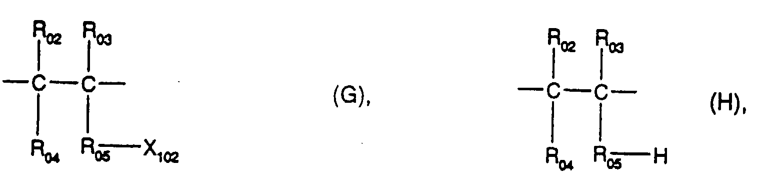 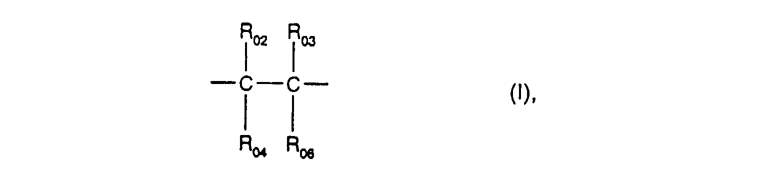 formules dans lesquelles
les R₀₂ représentent indépendamment les uns des autres un atome d'hydrogène, de fluor, de chlore, un groupe CN ou alkyle en C₁-C₁₂,
les R₀₃ représentent indépendamment les uns des autres un atome d'hydrogène, de fluor, de chlore, un groupe CN ou alkyle en C₁-C₁₂,
les R₀₄ représentent indépendamment les uns des autres un atome d'hydrogène, de fluor, un groupe alkyle en C₁-C₁₂, -COOH, -C(O)O-alkyle en C₁-C₁₂-C(O)-NH₂ ou -C(O)-NH-alkyle en C₁-C₁₂;
R₀₅ représente un groupement pontant divalent;
R₀₆ représente un atome d'hydrogène, de fluor, un groupe alkyle en C₁-C₁₂, alcoxy en C₁-C₁₂, alkyle en C₁-C₄ non substitué ou substitué avec Cl, Br, alcoxy en C₁-C₄, -C(O)O-alkyle en C₁-C₁₂, -C(O)-NH₂, C(O)-NH-alkyle en C₁-C₁₂, phényle substitué par -SO₃H ou -SO₃-alkyle en C₁-C₁₂, -C(O)OH, -C(O)O-hydroxyalkyle en C₁-C₁₂, -C(O)O-alkyle en C₁-C₁₂, -C(O)NH₂ ou -C(O)NH-alkyle en C₁-C₁₂:
R₀₄ et R₀₆ représentent ensemble -O-CH₂-O- ou -O- alkylidène en C₂-C₁₂-O-; et
X₁₀₂ représente un groupe de formule I.

29. Composition selon la revendication 28, caractérisée en ce qu'il s'agit pour X₁₀₂ du norbornényle, qui est non substitué ou substitué avec un groupe alkyle en C₁-C₄.

30. Composition selon la revendication 28, caractérisée en ce que dans les formules B et C les R₀₂ représentent H, les R₀₃ indépendamment les uns des autres H ou un groupe méthyle, les R₀₄ représentent H, -COOH ou -C(O)O-alkyle en C₁-C₄, les R₀₆ représentent p-C₆H₄-O-, -C(O)O-alkylène en C₂-C₆-O-C(O)- ou -C(O)O-CH₂-, et X₁₀₂ un groupe de formule A.

31. Composition selon la revendication 29, caractérisée en ce que dans les formules B et C les R₀₂ représentent H ou méthyle, les R₀₃ H ou méthyle, les R₀₄ représentent H, les R₀₆ représentent -(CH₂)_{d}-O-C(O)- avec d égal à un nombre entier de 1 à 12, -(CH₂)_{d}-O-(CₑH₂ₑ-O-)_{f}C(O)- avec e égal à un nombre entier de 2 à 6, et f égal à un nombre entier de 1 à 12, et X₁₀₂ un groupe de formule A.

32. Composition selon la revendication 1, caractérisée en ce qu'il s'agit pour le polymère de polyépoxydes avec des éléments de structure de répétition choisis parmi les éléments de structure de formules J, K, L et M,
-CH₂-CH(OH)-CH₂-O-R₀₉-O-CH₂-CH(O-R₀₁₀-X₁₀₂)-CH₂-O- (J),
-R₀₆-O- (K),
-CH₂-CH(OH)-CH₂-O-R₀₇-O-CH₂-CH(OH)-CH₂-O- (L),
-R₀₈-O- (M),
avec la condition qu'au moins des éléments de structure des formules J et K soient présents, formules dans lesquelles R₀₇ et R₀₈ représentent indépendamment l'un de l'autre un groupe bivalent d'un éther diglycidylique diminué des groupes glycidyloxy et R₀₆ et R₀₈ indépendamment l'un de l'autre sont un groupe bivalent d'un diol diminué des groupes hydroxyle, R₀₁₀ représente un groupement pontant bivalent, et X₁₀₂ représente un groupe de formule A selon la revendication 7.

33. Composition selon la revendication 32, caractérisée en ce que, par rapport à 1 mol du polymère, celui-ci peut contenir respectivement jusqu'à 50% en mole des éléments de structure des formules J et K dans le polymère.

34. Composition selon la revendication 32, caractérisée en ce que R₀₆ et R₀₈ représentent indépendamment l'un de l'autre un groupe alkylène en C₂-C₁₈, polyoxaalkylène avec 2 à 50 motifs oxaalkylène et 2 à 6 atomes de carbone dans le groupe oxyalkylène, cycloalkylène en C₃-C₁₂, cycloalkylène en C₅-C₈-CH₂-, -CH₂-(cycloalkylène en C₅-C₈)-CH₂-, arylène en C₆-C₁₄, bisphénylène, benzylène, xylylène, -C₆H₄-X₀₁-C₆H₄- avec X₀₁ égal à O, S, SO, SO₂, CO, CO₂, NH, N(alkyle en C₁-C₄), alkylidène avec 1 à 18 atomes de carbone ou cycloalkylidène en C₅-C₇.

35. Composition selon la revendication 32, caractérisée en ce que R₀₆ et R₀₈ représentent indépendamment l'un de l'autre un groupe alkylène en C₂-C₁₈, polyoxaalkylène avec 2 à 50 motifs oxaalkylène et 2 à 6 atomes de carbone dans le groupe oxyalkylène, cycloalkylène en C₃-C₁₂, cycloalkylène en C₅-C₈-CH₂-, -CH₂-(cycloalkylène en C₅-C₈)-CH₂-, arylène en C₆-C₁₄, bisphénylène, benzylène, xylylène, -C₆H₄-X₀₁-C₆H₄- avec X₀₁ égal à O, S, SO, SO₂, CO, CO₂, NH, N(alkyle en C₁-C₄), alkylidène avec 1 à 18 atomes de carbone ou cycloalkylidène en C₅-C₇.

36. Composition selon la revendication 32, caractérisée en ce que X₁₀₂ représente un groupe norbornényle ou 1-méthyl-norbornén-1-yle.

37. Composition selon la revendication 32, caractérisée en ce que les groupements pontants bivalents R₀₁₀ sont un groupe de formule -(CₑH₂ₑ-O-)_{f}C(O)- avec e égal à O ou à un nombre entier de 2 à 6, et f égal à un nombre de 1 à 12.

38. Composition selon la revendication 1, caractérisée en ce que les cyclooléfines comonomères sous tension correspondent à la formule I' 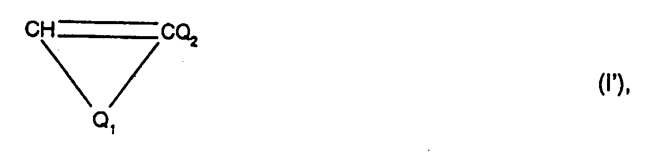 dans laquelle
Q1 est un groupe avec au moins un atome de carbone, qui forme ensemble avec le groupe -CH=CQ₂- un cycle alicyclique à 3 chaînons, qui contient éventuellement un ou plusieurs hétéroatomes choisis parmi le silicium, le phosphore, l'oxygène, l'azote et le soufre; et qui est non substitué ou substitué avec un atome d'halogène, =O, -CN, -NO₂, R₁R₂R₃Si-(O)ᵤ-, -COOM, -SO₃M, -PO₃M, -COO(M₁)_{1/2}, -SO₃(M₁)_{1/2}, -PO₃(M₁)_{1/2}, alkyle en C₁-C₂₀, hydroxyalkyle en C₁-C₂₀, halogénoalkyle en C₁-C₂₀, cyanoalkyle en C₁-C₆, cycloalkyle en C₃-C₈, aryle en C₆-C₁₆, aralkyle en C₇-C₁₆, hétérocycloalkyle en C₃-C₆, hétéroaralkyle en C₃-C₁₆ ou R₄-X-; ou dans lequel deux atomes de carbone voisins sont substitués avec -CO-O-CO- ou -CO-NR₅-CO-, ou dans lequel éventuellement est condensé à deux atomes de carbone voisins du noyau alicyclique un cycle alicyclique, aromatique ou hétéroaromatique, qui est non substitué ou substitué avec un atome d'halogène, un groupe -CN, -NO₂, R₆R₇R₈Si-(O)ᵤ-, -COOM, -SO₃M, -PO₃M, -COO (M₁)_{1/2}, -SO₃(M₁)_{1/2}, -PO₃(M₁)_{1/2}, alkyle en C₁-C₂₀, halogénoalkyle en C₁-C₂₀, hydroxyalkyle en C₁-C₂₀, cyanoalkyle en C₁-C₆, cycloalkyle en C₃-C₈, aryle en C₆-C₁₆, aralkyle en C₇-C₁₆, hétérocycloalkyle en C₃-C₆, hétéroaryle en C₃-C₁₆, hétéroaralkyle en C₄-C₁₆ ou R₁₃-X₁-;
X et X₁ représentent indépendamment l'un de l'autre -O-, -S-, -CO-, -SO-, -SO₂-, -O-C(O)-, -C(O)-O-, -C(O)-NR₅-, -NR₁₀-C(O)-, -SO₂-O- ou -O-SO₂-;
R₁, R₂ et R₃ signifient indépendamment l'un de l'autre un groupe alkyle en C₁-C₁₂, perfluoroalkyle en C₁-C₁₂, phényle ou benzyle;
R₄ et R₁₃ signifient indépendamment un groupe alkyle en C₁-C₂₀, halogénoalkyle en C₁-C₂₀, hydroxyalkyle en C₁-C₂₀, cycloalkyle en C₃-C₈, aryle en C₆-C₁₆, aralkyle en C₇-C₁₆;
R₅ et R₁₀ représentent indépendamment l'un de l'autre un atome d'hydrogène, un groupe alkyle en C₁-C₁₂, phényle ou benzyle, dans lequel les groupes alkyle sont de leur côté non substitués ou substitués avec un groupe alcoxy en C₁-C₁₂ ou cycloalkyle en C₃-C₈;
R₆, R₇ et R₈ signifient indépendamment l'un de l'autre un groupe alkyle en C₁-C₁₂, perfluoroalkyle en C₁-C₁₂, phényle ou benzyle;
M représente un métal alcalin et M₁ un métal alcalino-terreux; et
u représente 0 ou 1;
dans laquelle le cycle alicyclique formé avec Q₁ contient éventuellement d'autres doubles liaisons non aromatiques;
Q₂ représente un atome d'hydrogène, un groupe alkyle en C₁-C₂₀, halogénoalkyle en C₁-C₂₀, alcoxy en C₁-C₁₂, un atome d'halogène, un groupe -CN, R₁₁-X₂-;
R₁₁ représente un groupe alkyle en C₁-C₂₀, halogénoalkyle en C₁-C₂₀, hydroxyalkyle en C₁-C₂₀, cycloalkyle en C₃-C₈, aryle en C₆-C₁₆ ou aralkyle en C₇-C₁₆;
X₂ est un groupe -C(O)-O- ou -C(O)-NR₁₂-;
R₁₂ représente un atome d'hydrogène, un groupe alkyle en C₁-C₁₂, phényle ou benzyle;
dans laquelle les groupes précités cycloalkyle, hétérocycloalkyle, aryle, hétéroaryle, aralkyle et hétéroaralkyle sont non substitués ou substitués avec un groupe alkyle en C₁-C₁₂, alcoxy en C₁-C₁₂, -NO₂, -CN ou un atome d'halogène, et dans laquelle les hétéroatomes des groupes hétérocycloalkyle, hétéroaryle et hétéroaralkyle précités sont choisis parmi un atome -O-, -S-, un groupe -NR₉- et -N=; et
R₉ représente un atome d'hydrogène, un groupe alkyle en C₁-C₁₂, phényle ou benzyle.

39. Composition selon la revendication 1, caractérisée en ce qu'elle contient des cyclooléfines comonomères polyfonctionnelles sous tension, qui correspondent à la formule (f1),
(T)ₙ-U (f1),
dans laquelle T représente le groupe d'une cyclooléfine sous tension, U représente une simple liaison ou un groupement pontant de valence n, et n représente un nombre entier de 2 à 8.

40. Composition selon la revendication 39, caractérisée en ce que les groupes T dans la formule (fl) correspondent à la formule (f2) 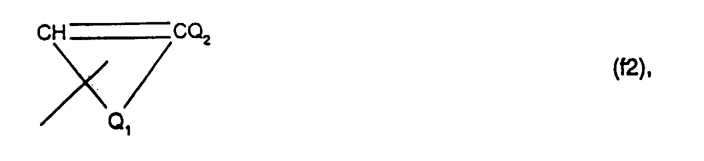 dans laquelle Q₁ et Q₂ ont les significations données à la revendication 7.

41. Composition selon la revendication 39, caractérisée en ce qu'il s'agit pour le groupe T du norbornényle de formule (nr4)

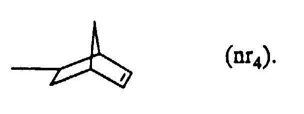

42. Composition selon la revendication 39, caractérisée en ce que U représente
(a) un groupements pontant bivalent de formule (f5),
-X₅-R₀₂₈-X₆- (f5)
dans laquelle
X₅ et X₆ représentent indépendamment l'un de l'autre une simple liaison, -O-, -CH₂-O, -C(O)O-, -O(O)C-,
-CH₂-O(O)C-, -C(O)-NR₀₂₉-, -R₀₂₉N- (O)C-, -NH-C-(O)-NR₀₂₉-, -O-C(O)-NH-, -CH₂-O-C(O)-NH-, ou -NH-C(O)-O-, et
R₀₂₈ représente un groupe alkylène en C₂-C₁₈, cycloalkylène en C₅-C₈ non substitué ou substitué avec un groupe alkyle en C₁-C₄ ou alcoxy en C₁-C₄, arylène en C₆-C₁₈ ou aralkylène en C₇-C₁₉ non substitué ou substitué avec un groupe alkyle en C₁-C₄ ou alcoxy en C₁-C₄, ou polyoxaalkylène avec 2 à 12 motifs oxaalkylène et 2 à 6 atomes de carbone dans le groupe alkylène, et
R₀₂₉ est un atome d'hydrogène ou un groupe alkyle en C₁-C₆.
(b) un groupement pontant trivalent de formule (f6) 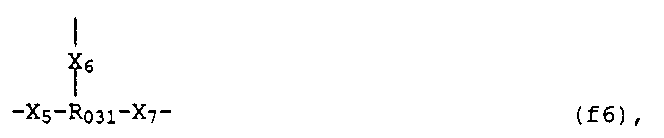 dans laquelle
X₅, X₆ et X₇ représentent -O-, -CH₂-O-, -C(O)O-, -O(O)C-, -CH₂-O(O)C-, -C(O)-NR₀₂₉-, -R₀₂₉N-(O)C-, -NH-C(O)-NR₀₂₉-, -O-C(O)-NH-, CH₂-O-C(O)-NH- ou -NH-C(O)O-, et
R₀₃₁ représente un groupe hydrocarboné aliphatique trivalent avec 3 à 20 atomes de carbone, un groupe cycloaliphatique trivalent non substitué ou substitué avec un groupe alkyle en C₁-C₄, ou alcoxy en C₁-C₄, ayant 3 à 8 atomes de carbone dans le cycle, ou un groupe aromatique trivalent non substitué ou substitué avec un groupe alkyle en C₁-C₄, ou alcoxy en C₁-C₄, ayant 6 à 18 atomes de carbone, un groupe araliphatique trivalent non substitué ou substitué avec un groupe alkyle en C₁-C₄, ou alcoxy en C₁-C₄, ayant 7 à 19 atomes de carbone, ou un groupe hétéroaromatique trivalent non substitué ou substitué avec un groupe alkyle en C₁-C₄, ou alcoxy en C₁-C₄, ayant 3 à 13 atomes de carbone et 1 à 3 hétéroatomes choisis parmi -O-, -N- et -S-, et
R₀₃₁ représente un atome d'hydrogène ou un groupe alkyle en C₁-C₆; ou
(c) un groupement pontant tétravalent de formule (f7), 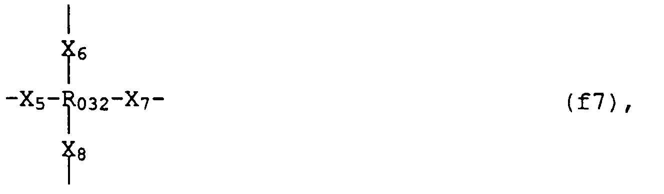 dans laquelle
X₅, X₆, X₇ et X₈ représentent -C(O)O-, -CH₂-O(O)C-, ou -C(O)-NR₀₂₉-, et
R₀₃₂ représente un groupe hydrocarboné aliphatique tétravalent avec 4 à 20 atomes de carbone, un groupe cycloaliphatique tétravalent non substitué ou substitué avec un groupe alkyle en C₁-C₄, ou alcoxy en C₁-C₄, ayant 4 à 8 atomes de carbone dans le cycle, ou un groupe aromatique tétravalent non substitué ou substitué avec un groupe alkyle en C₁-C₄, ou alcoxy en C₁-C₄, ayant 6 à 18 atomes de carbone, un groupe araliphatique tétravalent non substitué ou substitué avec un groupe alkyle en C₁-C₄, ou alcoxy en C₁-C₄, ayant 7 à 19 atomes de carbone, ou un groupe hétéroaromatique tétravalent non substitué ou substitué avec un groupe alkyle en C₁-C₄, ou alcoxy en C₁-C₄, ayant 3 à 13 atomes de carbone et 1 à 3 hétéroatomes choisis parmi -O-, -N- et -S-, et
R₀₂₉ représente un atome d'hydrogène ou un groupe alkyle en C₁-C₆.

43. Composition selon la revendication 1, caractérisée en ce qu'elle contient le catalyseur à un composant en une quantité de 0,001 à 20% en mole, par rapport à la quantité de monomère.

44. Composition selon la revendication 43, caractérisée en ce qu'elle contient le catalyseur à un composant en une quantité de 0,01 à 10% en mole, par rapport à la quantité de monomère.

45. Composition selon la revendication 43, caractérisée en ce qu'elle contient le catalyseur à un composant en une quantité de 0,01 à 5% en mole, par rapport à la quantité de monomère.

46. Composition selon la revendication 1, caractérisée en ce que les groupes méthyle monosubstitués correspondent à la formule XI
-CH₂-R (XI),
dans laquelle R représente un atome d'hydrogène, un groupe -CF₃, -SiR₃₈R₃₉R₄₀, -CR₄₁R₄₂R₄₃, aryle en C₆-C₁₆ ou hétéroaryle en C₄-C₁₅ non substitué ou substitué avec un groupe alkyle en C₁-C₆ ou alcoxy en C₁-C₆ ayant 1 à 3 hétéroatomes choisis parmi O, S et N; et
R₃₈, R₃₉ et R₄₀ représentent indépendamment les uns des autres un groupe alkyle en C₁-C₁₂, cycloalkyle en C₅ ou C₆ ou phényle ou benzyle non substitué ou substitué avec un groupe alkyle en C₁-C₆ ou alcoxy C₁-C₆; et
R₄₁, R₄₂ et R₄₃ représentent indépendamment les uns des autres un groupe alkyle en C₁-C₁₀, qui est non substitué ou substitué avec un groupe alcoxy en C₁-C₁₀, ou R₄₁ et R₄₂ ont cette signification et R₄₃ représente un groupe, aryle en C₆-C₁₀ ou hétéroaryle en C₄-C₉, qui est non substitué ou substitué avec un groupe alkyle en C₁-C₆ ou alcoxy en C₁-C₆.

47. Composition selon la revendication 1, caractérisée en ce que le composé de molybdène ou de tungstène correspond à une des formules XII à XIIc 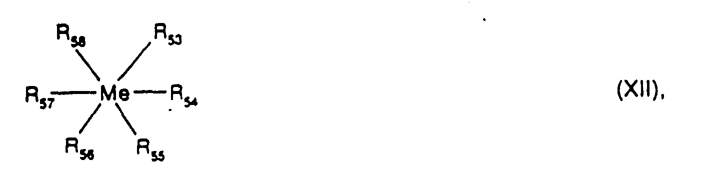 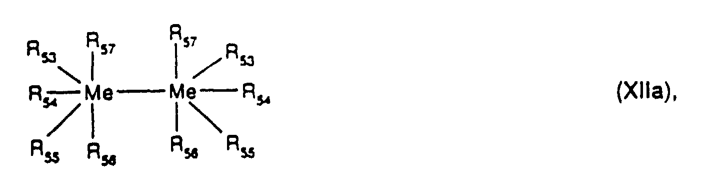 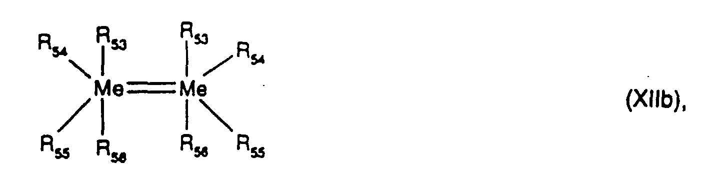 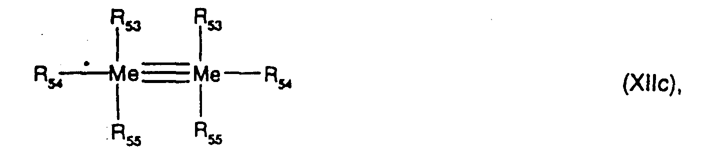 dans lesquelles
Me représente Mo(VI) ou W(VI);
au moins deux des groupes R₅₃ à R₅₈ représentent un groupe -CH₂-R de formule XI selon la revendication 50;
respectivement deux des groupes restants de R₅₃ à R₆₈ représentent =O ou =NR₄₄ et R₄₄ représente un groupe alkyle en C₁-C₁₈, linéaire ou ramifié, non substitué ou substitué avec un groupe alcoxy en C₁-C₆, cycloalkyle en C₅ ou C₆ non substitué ou substitué avec un groupe alkyle en C₁-C₆, alcoxy en C₁-C₆ ou un atome d'halogène, phényle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃, ou un atome d'halogène, ou benzyle ou phényléthyle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃ ou un atome d'halogène, et/ou
les groupes restants de R₅₃ à R₆₈ représentent un groupe amino secondaire avec 2 à 18 atomes de carbone, R₄₅O- ou R₄₅S-, un atome d'halogène, un groupe cyclopentadiényle ou biscyclopentadiényle ponté ou un ligand neutre, formules dans lesquelles R₄₅ représente un groupe alkyle en C₁-C₁₈, linéaire ou ramifié, non substitué ou substitué avec un groupe alcoxy en C₁-C₆, cycloalkyle en C₅ ou C₆ non substitué ou substitué avec un groupe alkyle en C₁-C₆, alcoxy en C₁-C₆ ou un atome d'halogène, phényle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃, ou un atome d'halogène, ou benzyle ou phényléthyle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃ ou un atome d'halogène.

48. Composition selon la revendication 1, caractérisée en ce que le groupe diméthylsilyle correspond à la formule XIV
-CH₂-SiR₃₈R₃₉R₄₀ (XIV),
dans laquelle
R₃₈, R₃₉ et R₄₀ représentent indépendamment les uns des autres un groupe alkyle en C₁-C₁₈, cycloalkyle en C₅ ou C₆ ou phényle ou benzyle non substitué ou substitué avec un groupe alkyle en C₁-C₆ ou alcoxy en C₁-C₆.

49. Composition selon la revendication 1, caractérisée en ce que le composé de titane, niobium, tantale, molybdène ou de tungstène correspond à une des formules XV, XVa ou XVb 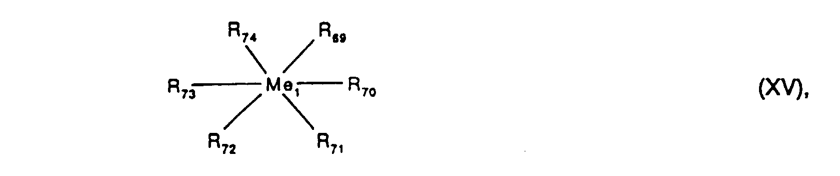 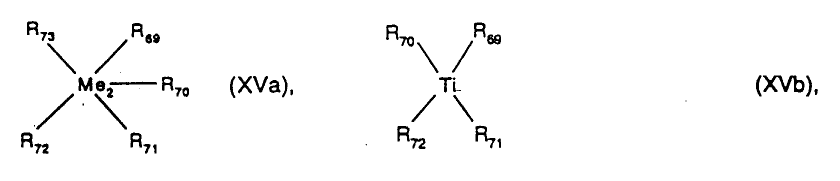 dans lesquelles
Me₁ représente Mo(VI) ou W(VI);
Me₂ représente Nb(V) ou Ta(V);
un des groupes R₆₉ à R₇₄ représente un groupe -CH₂-SiR₃₈R₃₉R₄₀ de formule XIV selon la revendication 52;
au moins un des groupes R₆₉ à R₇₄ représente F, Cl ou Br;
R₃₈, R₃₉ et R₄₀ représentent indépendamment entre eux un groupe alkyle en C₁-C₆, cycloalkyle en C₁ ou C₆, ou phényle ou benzyle non substitué ou substitué avec un groupe alkyle en C₁-C₆ ou alcoxy en C₁-C₆;
dans la formule XV deux ou respectivement deux dans la formule XV et deux dans la formule XVa des groupes restants de R₆₉ à R₇₄ représentent respectivement en même temps =O ou =N-R₄₄ et R₄₄ représente un groupe alkyle en C₁-C₁₈, linéaire ou ramifié, non substitué ou substitué avec un groupe alcoxy en C₁-C₆, cycloalkyle en C₅ ou C₆ non substitué avec un groupe alkyle en C₁-C₆, alcoxy en C₁-C₆ ou un atome d'halogène, phényle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃, ou un atome d'halogène, ou benzyle ou phényléthyle non substitué ou substitué par un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃ ou un atome d'halogène, et
les groupes restants représentent des groupes amino secondaires avec 2 à 18 atomes de carbone, R₄₅O- ou R₄₅S-, un atome d'halogène, un groupe cyclopentadiényle ou biscyclopentadiényle ponté ou un ligand neutre non substitué ou substitué, dans lesquels les groupes R₄₅ représentent indépendamment les uns des autres un groupe alkyle en C₁-C₁₈, linéaire ou ramifié, non substitué ou substitué avec un groupe alcoxy en C₁-C₆ ou un atome d'halogène ou un groupe cycloalkyle en C₅ ou C₆ non substitué ou substitué avec un groupe alkyle en C₁-C₆, alcoxy en C₁-C₆ ou un atome d'halogène, phényle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃, ou un atome d'halogène, ou benzyle ou phényléthyle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃, ou
dans les formule XV, XVa et XVb les groupes restants représentent indépendamment les uns des autres un groupe amino secondaire avec 2 à 18 atomes de carbone, R₄₅O- ou R₄₅S-, un atome d'halogène, un groupe cyclopentadiényle non substitué ou substitué, ou biscyclopentadiényle ponté ou un ligand neutre, formules dans lesquelles dans lesquels les groupes R₄₅ représentent indépendamment les uns des autres un groupe alkyle en C₁-C₁₈, linéaire ou ramifié, non substitué ou substitué avec un groupe alcoxy en C₁-C₆ ou un atome d'halogène ou un groupe cycloalkyle en C₅ ou C₆ non substitué avec un groupe alkyle en C₁-C₆, alcoxy en C₁-C₆ ou un atome d'halogène, phényle non substitué ou substitué avec un groupe alkyle en C₁-C₆, alcoxy en C₁-C₆, alcoxy en C₁-C₆-méthyle, alcoxy en C₁-C₆-éthyle, di(alkyle en C₁-C₆)amino, di(alkyle en C₁-C₆)amino- alkyle en C₁-C₃, ou un atome d'halogène, ou benzyle ou phényléthyle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃ ou un atome d'halogène.

50. Composition selon la revendication 1, caractérisée en ce que le composé de niobium ou de tantale correspond à la formule XVIII 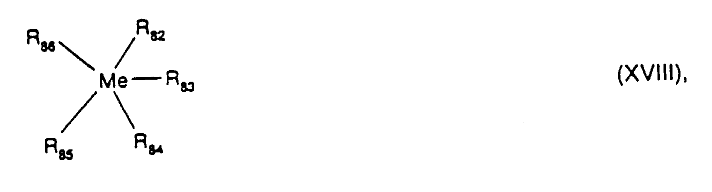 dans laquelle
Me représente Nb(V) ou Ta(V),
au moins deux, de préférence 2 ou 3, des groupes R₈₂ à R₈₆ représentent un groupe -CH₂-R de formule XI selon la revendication 50;
deux des groupes restants de R₈₂ à R₈₆ représentent =O ou =N-R₄₄, et R₄₄ représente un groupe alkyle en C₁-C₁₈, linéaire ou ramifié, non substitué ou substitué avec un groupe alcoxy en C₁-C₆, cycloalkyle en C₅ ou C₆ non substitué avec un groupe alkyle en C₁-C₆, alcoxy en C₁-C₆ ou un atome d'halogène, phényle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃, ou un atome d'halogène, ou benzyle ou phényléthyle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)aminoalkyle en C₁-C₃ ou un atome d'halogène, et/ou
les groupes restants de R₈₂ à R₈₆ représentent un groupe amino secondaire avec 2 à 18 atomes de carbone, R₄₅O- ou R₄₅S-, un atome d'halogène, un groupe cyclopentadiényle ou biscyclopentadiényle ponté ou un ligand neutre,
dans lesquels les groupes R₄₅ représentent indépendamment les uns des autres un groupe alkyle en C₁-C₁₈, linéaire ou ramifié, non substitué ou substitué avec un groupe alcoxy en C₁-C₆ ou un atome d'halogène ou un groupe cycloalkyle en C₅ ou C₆ non substitué ou substitué avec un groupe alkyle en C₁-C₆, alcoxy en C₁-C₆ ou un atome d'halogène, phényle non substitué ou substitué avec un groupe alkyle en C₁-C₆, alcoxy en C₁-C₆, alcoxyméthyle en C₁-C₆, alcoxyéthyle en C₁-C₆ ou un atome d'halogène, ou benzyle ou phényléthyle non substitué ou substitué avec un groupe alkyle en C₁-C₆, alcoxy en C₁-C₆, alcoxyméthyle en C₁-C₆, alcoxyéthyle en C₁-C₆ ou un atome d'halogène.

51. Composition selon la revendication 1, caractérisée en ce que le composé de titane (IV) correspond à la formule XX 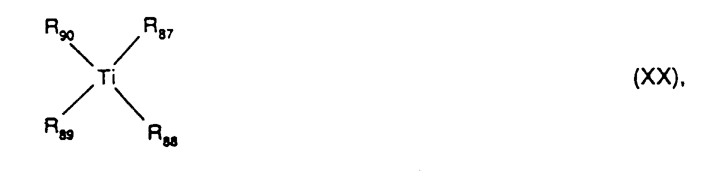 dans laquelle
au moins deux des groupes R₈₇ à R₉₀ représentent un groupe -CH₂-R de formule XI selon la revendication 50; et
les groupes restants R₈₇ à R₉₀ représentent un groupe amino secondaire avec 2 à 18 atomes de carbone, R₄₅O-, R₄₅S-, un atome d'halogène, un groupe cyclopentadiényle ou biscyclopentadiényle ponté ou un ligand neutre, dans lesquels les groupes R₄₅ représentent indépendamment les uns des autres un groupe alkyle en C₁-C₁₈, linéaire ou ramifié, non substitué ou substitué avec un groupe alcoxy en C₁-C₆ ou un atome d'halogène ou un groupe cycloalkyle en C₅ ou C₆ non substitué avec un groupe alkyle en C₁-C₆, alcoxy en C₁-C₆ ou un atome d'halogène, phényle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)aminoalkyle en C₁-C₃, ou un atome d'halogène, ou benzyle ou phényléthyle non substitué ou substitué avec un groupe alkyle en C₁-C₆, alcoxy en C₁-C₆, alcoxyméthyle en C₁-C₆, alcoxyéthyle en C₁-C₆, di(alkyle en C₁-C₆)amino, di(alkyle en C₁-C₆)amino-alkyle en C₁-C₃ ou un atome d'halogène.

52. Composition selon la revendication 1, caractérisée en ce que les ligands phosphine correspondent aux formules XXIII ou XXIIIa
PR₉₁R₉₂R₉₃ (XXIII),
R₉₁R₉₂P-Z₁-PR₉₁R₉₂ (XXIIIa),
dans lesquelles
R₉₁, R₉₂ et R₉₃ représentent indépendamment les uns des autres un atome d'hydrogène, un groupe alkyle en C₁-C₂₀, alcoxy en C₁-C₂₀, cycloalkyle ou cycloalcoxy en C₄-C₁₂ non substitué ou substitué avec un groupe alkyle en C₁-C₆, halogénoalkyle en C₁-C₆ ou alcoxy en C₁-C₆, aryle en C₆-C₁₆ ou aryloxy en C₆-C₁₆, ou aralkyle en C₇-C₁₆ ou aralkyloxy en C₇-C₁₆ non substitué ou substitué avec un groupe alkyle en C₁-C₆, halogénoalkyle en C₁-C₆ ou alcoxy en C₁-C₆; les groupes R₉₂ et R₉₃ représentent ensemble un groupe tétra ou pentaméthylène, ou tétra ou pentaméthylènedioxyle, non substitué ou substitué avec un groupe alkyle en C₁-C₆, halogénoalkyle en C₁-C₆ ou alcoxy en C₁-C₆ou un groupe tétra ou pentaméthylène ou tétra ou pentaméthylènedioxyle non substitué ou substitué avec un groupe alkyle en C₁-C₆, halogénoalkyle en C₁-C₆ ou alcoxy en C₁-C₆, et condensé avec 1 ou 2 groupes 1,2-phénylène, ou tétraméthylènedioxyle non substitué ou substitué avec un groupe alkyle en C₁-C₆, halogénoalkyle en C₁-C₆ ou alcoxy en C₁-C₆, et condensé en positions 1,2 et 3,4 avec un groupe 1,2-phénylène, et R₉₃ a la signification indiquée précédemment; et
Z₁ représente un groupe alkylène en C₂-C_{12,} linéaire ou ramifié, non substitué ou substitué avec un groupe alcoxy en C₁-C₄, 1,2- ou 1,3-cycloalkylène non substitué ou substitué avec un groupe alkyle en C₁-C₄ ou alcoxy en C₁-C₄ ou, ayant 4 à 8 atomes de carbone, ou 1,2- ou 1,3-hétérocycloalkylène non substitué ou substitué avec un groupe alkyle en C₁-C₄ ou alcoxy en C₁-C₄ ayant 5 ou 6 chaînons par cycle et un hétéroatome choisi entre O ou N.

53. Composition selon la revendication 1, caractérisée en ce que le composé de ruthénium ou d'osmium correspond à une des formules XXV à XXVf
(R₉₄R₉₅R₉₆P)L₈Me²⁺(Z¹⁻)₂ (XXV),
(R₉₄R₉₅R₉₆P)₂L₉Me²⁺(Z¹⁻)₂ (XXVa),
(R₉₄R₉₅R₉₆P)L₉L₁₀Me²⁺(Z¹⁻)₂ (XXVb),
(R₉₄R₉₅R₉₆P)₃L₉Me²⁺(Z¹⁻)₂ (XXVc),
(R₉₄R₉₅R₉₆P)L₉L₉Me²⁺(Z¹⁻)₂ (XXVd),
(R₉₄R₉₅R₉₆P)L₈L₁₀Me²⁺(Z¹⁻)₂ (XXVe),
(R₉₄R₉₅R₉₆P)L₈(L₉)ₘMe²⁺(Z¹⁻)₂ (XXVf),
dans lesquelles
Me représente Ru ou Os;
Z dans les formules XXV à XXVe représente H⁻, un groupe cyclopentdiényle, Cl⁻, Br⁻, BF₄⁻, PF₆⁻, SbF₆⁻, AsF₆⁻, CF₃SO₃⁻, C₆H₅-SO₃⁻, 4-méthyl-C₆H₅-SO₃⁻, 2,6-diméthyl-C₆H₅-SO₃⁻, 2,4,6-triméthyl-C₆H₅-SO₃⁻ et 4-CF₃-C₆H₅-SO₃⁻ et dans la formule XXVf H⁻, un groupe cyclopentdiényle, BF₄⁻, PF₆⁻, SbF₆⁻, AsF₆⁻, CF₃SO₃⁻, C₆H₅-SO₃⁻, 4-méthyl-C₆H₅-SO₃⁻, 2,6-diméthyl-C₆H₅-SO₃⁻, 2,4,6-triméthyl-C₆H₅-SO₃⁻ ou 4-CF₃-C₆H₅-SO₃⁻;
R₉₄, R₉₅ et R₉₆ représentent indépendamment les uns des autres un groupe alkyle en C₁-C₆, cyclopentyle ou cyclohexyle ou cyclopentyloxy ou cyclohexyloxy non substitué ou substitué avec 1 à 3 groupes alkyle en C₁-C₄, ou phényle ou phényloxy ou benzyle ou benzyloxy non substitué ou substitué avec 1 à 3 groupes alkyle en C₁-C₄;
L₈ représente un groupe arène en C₆-C₁₆ ou hétéroarène en C₅-C₁₆ non substitué ou substitué avec 1 à 3 groupes alkyle en C₁-C₄, alcoxy en C₁-C₄, -OH, -F ou Cl;
L₉ représente un groupe alkyle en C₁-C₆-CN, benzonitrile ou benzylnitrile; et
L₁₀ est H₂O ou un groupe alcanol en C₁-C₆.

54. Composition selon la revendication 1, caractérisée en ce que le composé de ruthénium ou d'osmium correspond à une des formules XXVI, XXVIa, XXVIb, XXVIc et XXVId
Me^{2⊕}(L₁₁)₂(L₁₂)(Y₁^{⊖})₂ (XXVI),
Me^{2⊕}(L₁₁)₃(Y₁^{⊖})₂ (XXVIa),
Me^{2⊕} (L₁₁)₂L₁₃(Y₁^{⊖}) (XXVIb),
Me^{2⊕}(L₁₁)₃L₁₄(Y₁^{⊖})₂ (XXVIc),
Me^{2⊕}L₁₁(L₁₂)₃(Y₁^{⊖})₂ (XXVId),
dans lesquelles
Me représente Ru ou Os;
Y₁ l'anion d'un acide monofonctionnel;
L₁₁ une phosphine de formule XXIII ou XXIIIa selon la revendication 56,
L₁₂ un ligand neutre;
L₁₃ représente un groupe cyclopentadiényle non substitué ou substitué avec un groupe alkyle en C₁-C₄,; et
L₁₄ représente CO.

55. Procédé de préparation de composés de polymérisation réticulés selon la revendication 1 par polymérisation par métathèse, caractérisé en ce qu'à partir d'une composition constituée
(a) d'une quantité catalytique d'un catalyseur à un composant pour la polymérisation par métathèse et
(b) d'au moins un polymère avec des groupes cycloalcénylène sous tension liés chimiquement dans le squelette de base, seul ou en mélange avec des cyclooléfines sous tension,
(c) on réalise la polymérisation par chauffage,
(d) on réalise la polymérisation par irradiation,
(e) on réalise la polymérisation par chauffage et irradiation,
(f) on active le catalyseur à un composant par chauffage de courte durée et on termine la polymérisation par irradiation, ou
(g) on active le catalyseur à un composant par irradiation de courte durée et on termine la polymérisation par chauffage.

56. Procédé selon la revendication 58, caractérisé en ce qu'on le réalise à une température de 20 à 300°C.
